(19) Europäisches Patentamt
European Patent Office
Office européen des brevets

(11) EP 4 462 126 A1

(12) EUROPEAN PATENT APPLICATION
published in accordance with Art. 153(4) EPC

(43) Date of publication:
**13.11.2024 Bulletin 2024/46**

(21) Application number: **22915227.7**

(22) Date of filing: **30.12.2022**

(51) International Patent Classification (IPC):
***G01N 35/00*** *(2006.01)* ***A61B 5/153*** *(2006.01)*

(52) Cooperative Patent Classification (CPC):
**A61B 5/153; G01N 35/00**

(86) International application number:
**PCT/CN2022/144177**

(87) International publication number:
**WO 2023/125980 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.12.2021 PCT/CN2021/143911**

(71) Applicant: **Shenzhen Mindray Bio-Medical Electronics Co., Ltd.**
**Shenzhen, Guangdong 518057 (CN)**

(72) Inventors:
- **QI, Huan**
  **Shenzhen, Guangdong 518057 (CN)**
- **ZHANG, Xiaomei**
  **Shenzhen, Guangdong 518057 (CN)**
- **PAN, Shiyao**
  **Shenzhen, Guangdong 518057 (CN)**
- **LI, Jin**
  **Shenzhen, Guangdong 518057 (CN)**
- **WU, Chuanjian**
  **Shenzhen, Guangdong 518057 (CN)**
- **YE, Yi**
  **Shenzhen, Guangdong 518057 (CN)**

(74) Representative: **KIPA AB**
**Drottninggatan 11**
**252 21 Helsingborg (SE)**

# (54) BLOOD CELL ANALYZER, METHOD, AND USE OF INFECTION MARKER PARAMETER

(57) Embodiments relate to a blood cell analyzer, a method, and a use of an infection marker parameter. The blood cell analyzer includes a sample aspiration device that is used for aspirating a blood sample of a subject to be tested, a sample preparation device that is used for preparing a test sample, an optical detection device that is used for testing the test sample to obtain optical information, and a processor. The processor is configured to: obtain from first optical information of a first test sample a first leukocyte parameter of a first target particle population in the first test sample; obtain from second optical information of a second test sample a second leukocyte parameter of a second target particle population in the second test sample, the first and/or second leukocyte parameters including a cell characteristic parameter; and on the basis of the first leukocyte parameter and the second leukocyte parameter, obtain an infection marker parameter for evaluating an infection state of the subject, and output the infection marker parameter. Thus, an accurate and effective infection marker parameter can be quickly provided to a user, thereby effectively assisting the user to evaluate the infection state of the subject.

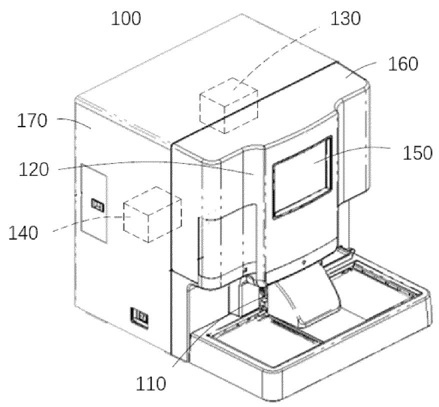

FIG. 1

EP 4 462 126 A1

## Description

### TECHNICAL FIELD

The disclosure relates to the field of in vitro diagnostics, and in particular to a blood cell analyzer, a method for evaluating an infection status of a subject, and the use of an infection marker parameter in evaluating an infection status of a subject.

### BACKGROUND

Infectious diseases are common clinical diseases, among which sepsis is a serious infectious disease. The incidence of sepsis is high, with more than 18 million severe sepsis cases worldwide every year. Sepsis is dangerous and has a high case fatality rate, with about 14,000 people dying from its complications worldwide every day. According to foreign epidemiological surveys, the case fatality rate of sepsis has exceeded that of myocardial infarction, and has become a main cause of death for non-heart disease patients in intensive care units. In recent years, despite advances in anti-infective treatment and organ function support technologies, the case fatality rate of sepsis is still as high as 30% to 70%. Treatment of sepsis is expensive and consumes a lot of medical resources, which seriously affects the quality of human life and has posed a huge threat to human health.

To this end, clinicians need to diagnose whether a patient is infected in time and find pathogen in order to make an effective treatment plan. Therefore, how to quickly and early screen and diagnose infectious diseases has become an urgent problem to be solved in clinical laboratories.

For rapid differential diagnosis of infectious diseases, existing solutions in the industry and their disadvantages are as follows:

1. Microbial culture: Microbial culture is considered to be the most reliable gold standard. It enables direct culture and detection of bacteria in clinical specimens such as body fluid or blood, so as to interpret type and drug resistance of bacteria, thereby providing direct guidance for clinical drug use. However, this microbial culture method has a long turnaround time, specimens are easily contaminated and false negative rate is high, which cannot meet requirements of rapid and accurate clinical results.
2. Detection of inflammatory markers such as C-reactive protein (CRP), procalcitonin (PCT) and serum amyloid A (SAA): Inflammatory factors such as CRP, PCT and SAA are widely used in auxiliary diagnosis of infectious diseases due to their good sensitivity. However, respective specificity of these inflammatory markers is weak, and additional examination fees would occur, which increases financial burden on patients. In addition, CRP and PCT may be interfered by specific diseases and cannot correctly reflect infection status of patients. For example, CRP is generated in liver, and a level of CRP in infected patients with liver injury is normal, which may lead to false negatives.
3. Serum antigen and antibody detection: Serum antigen and antibody detection may identify specific virus types, but it has limited effect on situations where type of pathogen is not clear, and detection cost is high, necessitating additional fees for the examination, thereby increasing financial burden on patients.
4. Blood routine test: Blood routine test may indicate occurrence of infection and identify infection types to a certain extent. However, blood routine WBC\Neu% currently used in clinical practice is affected by many aspects, such as being easily affected by other non-infectious inflammatory responses, normal physiological fluctuations of body, etc., and cannot accurately and timely reflect patient's condition, and has poor diagnostic and therapeutic value in infectious diseases.

### SUMMARY

In order to at least partially solve the above-mentioned technical problems, an object of the disclosure is to provide a blood cell analyzer, a method for evaluating an infection status of a subject, and a use of an infection marker parameter in evaluating an infection status of a subject, which can obtain an infection marker parameter with high diagnostic efficacy from original signals obtained during blood routine test process, thereby providing a user with accurate and effective prompt information based on the infection marker parameter, so as to prompt the infection status of the subject.

In order to achieve the above object of the disclosure, a first aspect of the disclosure provides a blood cell analyzer including:

a sample aspiration device configured to aspirate a blood sample to be tested of a subject;
a sample preparation device configured to prepare a first test sample containing a part of the blood sample to be tested, a first hemolytic agent, and a first staining agent for leukocyte classification and to prepare a second test sample containing another part of the blood sample to be tested, a second hemolytic agent and a second staining agent for identifying nucleated red blood cells;

an optical detection device comprising a flow cell, a light source and an optical detector, wherein the flow cell is configured to allow the first test sample and the second test sample to pass therethrough respectively, the light source is configured to respectively irradiate with light the first test sample and the second test sample passing through the flow cell, and the optical detector is configured to detect first optical information and second optical information generated by the first test sample and second test sample under irradiation when passing through the flow cell respectively; and

a processor configured to:

calculate at least one first leukocyte parameter of at least one first target particle population in the first test sample from the first optical information,

calculate at least one second leukocyte parameter of at least one second target particle population in the second test sample from the second optical information, wherein at least one of the first leukocyte parameter and the second leukocyte parameter comprises a cell characteristic parameter,

calculate an infection marker parameter for evaluating an infection status of the subject based on the at least one first leukocyte parameter and the at least one second leukocyte parameter, and

output the infection marker parameter.

In order to achieve the above object of the disclosure, a second aspect of the disclosure further provides a method for evaluating an infection status of a subject, including:

collecting a blood sample to be tested from the subject;

preparing a first test sample containing a part of the blood sample to be tested, a first hemolytic agent, and a first staining agent for leukocyte classification, and preparing a second test sample containing another part of the blood sample to be tested, a second hemolytic agent and a second staining agent for identifying nucleated red blood cells;

passing particles in the first test sample through an optical detection region of the flow cell irradiated with light one by one to obtain first optical information generated by the particles in the first test sample after being irradiated with light;

passing particles in the second test sample through the optical detection region irradiated with light one by one to obtain second optical information generated by the particles in the second test sample after being irradiated with light;

calculating at least one first leukocyte parameter of at least one first target particle population in the first test sample from the first optical information and calculating at least one second leukocyte parameter of at least one second target particle population in the second test sample from the second optical information, wherein at least one of the first leukocyte parameter and the second leukocyte parameter comprises a cell characteristic parameter;

calculating an infection marker parameter based on the at least one first leukocyte parameter and the at least one second leukocyte parameter; and

outputting the infection marker parameter.

In order to achieve the above object of the disclosure, a third aspect of the disclosure further provides a use of an infection marker parameter in evaluating an infection status of a subject, wherein the infection marker parameter is obtained by:

calculating at least one first leukocyte parameter of at least one first target particle population obtained by flow cytometry detection of a first test sample containing a part of a blood sample to be tested from the subject, a first hemolytic agent, and a first staining agent for leukocyte classification;

calculating at least one second leukocyte parameter of at least one second target particle population obtained by flow cytometry detection of a second test sample containing another part of the blood sample to be tested, a second hemolytic agent, and a second staining agent for identifying nucleated red blood cells, wherein at least one of the first leukocyte parameter and the second leukocyte parameter comprises a cell characteristic parameter; and

calculating the infection marker parameter based on the at least one first leukocyte parameter and the at least one second leukocyte parameter.

In the technical solutions provided in the various aspects of the disclosure, a first leukocyte parameter obtained from a first detection channel for leukocyte classification and a second leukocyte parameter obtained from a second detection channel for identifying nucleated red blood cells are combined as an infection marker parameter, wherein at least one of the first leukocyte parameter and the second leukocyte parameter comprises a cell characteristic parameter. Therefore, it is possible to assist doctors quickly, accurately, and efficiently in predicting or diagnosing infectious diseases. In particular, prompt information indicating an infection status of a subject can be effectively provided based on the infection marker parameter.

BRIEF DESCRIPTION OF THE DRAWINGS

FIG. 1 is a schematic diagram of a structure of a blood cell analyzer according to some embodiments of the disclosure.
FIG. 2 is a schematic diagram of a structure of an optical detection device according to some embodiments of the disclosure.
FIG. 3 is an SS-FL two-dimensional scattergram of a first test sample according to some embodiments of the disclosure.
FIG. 4 is an SS-FS two-dimensional scattergram of a first test sample according to some embodiments of the disclosure.
FIG. 5 is an SS-FS-FL three-dimensional scattergram of a first test sample according to some embodiments of the disclosure.
FIG. 6 is an FL-FS two-dimensional scattergram of a second test sample according to some embodiments of the disclosure.
FIG. 7 is an SS-FS two-dimensional scattergram of a second test sample according to some embodiments of the disclosure.
FIG. 8 is an SS-FS-FL three-dimensional scattergram of a second test sample according to some embodiments of the disclosure.
FIG. 9 shows cell characteristic parameters of neutrophil population in a first test sample according to some embodiments of the disclosure.
FIG. 10 shows cell characteristic parameters of leukocyte population in a second test sample according to some embodiments of the disclosure.
FIG. 11 is a schematic flowchart for monitoring a progression in an infection status of a patient according to some embodiments of the disclosure.
FIG. 12 is a scattergram of a first test sample with abnormality according to some embodiments of the disclosure.
FIG. 13 is a scattergram of a second test sample with abnormality according to some embodiments of the disclosure.
FIG. 14 shows scattergrams before and after logarithmic processing according to some embodiments of the disclosure.
FIG. 15 is a schematic flowchart of a method for evaluating an infection status of a subject according to some embodiments of the disclosure.
FIG. 16 is an ROC curve in the case of early prediction of sepsis according to some embodiments of the disclosure.
FIG. 17 is an ROC curve in the case of severe infection identification according to some embodiments of the disclosure.
FIG. 18 is an ROC curve in the case of diagnosis of sepsis according to some embodiments of the disclosure.
FIG. 19 is a graph of numerical variations of infection marker parameters for monitoring a progression in severe infection according to some embodiments of the disclosure.
FIG. 20 is a graph of numerical variations of infection marker parameters for monitoring a progression in sepsis according to some embodiments of the disclosure.
FIGS. 21A-21D visually show detection results of efficacy on sepsis using a combination of the two parameters "N_WBC_FL_W" and "D_Neu_FL_W" as the infection marker parameter. FIG. 21A shows the two-parameter combination assay values before antibiotic treatment and after 5 days of antibiotic treatment for each patient in the effective and ineffective groups. FIG. 21B shows a box and whisker plot of patients in the effective and ineffective groups. FIG. 21C shows a comparison of the mean values of the two-parameter combination before antibiotic treatment and after 5 days of antibiotic treatment in the effective group, and a comparison of the mean values of the two-parameter combination before antibiotic treatment and after 5 days of antibiotic treatment in the ineffective group. FIG. 21D shows the ROC curve of the detection of efficacy on sepsis using the two-parameter combination.
FIGS. 22A-22D visually show detection results of efficacy on sepsis using a combination of the two parameters "N_WBC_FL_W" and "D_Neu_FL_CV" as the infection marker parameter. FIG. 22A shows the two-parameter combination assay values before antibiotic treatment and after 5 days of antibiotic treatment for each patient in the effective and ineffective groups. FIG. 22B shows a box and whisker plot of patients in the effective and ineffective groups. FIG. 22C shows a comparison of the mean values of the two-parameter combination before antibiotic treatment and after 5 days of antibiotic treatment in the effective group, and a comparison of the mean values of the two-parameter combination before antibiotic treatment and after 5 days of antibiotic treatment in the ineffective group. FIG. 22D shows the ROC curve of the detection of efficacy on sepsis using the two-parameter combination.
FIG. 23 shows an algorithm calculation step of the area parameter D_NEU_FLSS_Area of neutrophil population according to some embodiments of the disclosure.

FIG. 24 is an ROC curve in the case of diagnosis of sepsis according to example 10 of the disclosure.

DESCRIPTION OF THE PREFERRED EMBODIMENTS

The technical solutions of embodiments of the disclosure will be described below clearly and comprehensively in conjunction with accompanying drawings of embodiments of the disclosure. Apparently, the embodiments described are merely some of, rather than all of, the embodiments of the disclosure. Based on the embodiments of the disclosure, all the other embodiments which would have been obtained by those of ordinary skill in the art without any creative efforts shall fall within the protection scope of the disclosure.

In order to facilitate subsequent description, some terms involved in the following are briefly explained as follows herein.

1) Scattergram: it is a two-dimensional or three-dimensional diagram generated by a blood cell analyzer, with two-dimensional or three-dimensional feature information about a plurality of particles distributed thereon, wherein X coordinate axis, Y coordinate axis and Z coordinate axis of the scatter diagram each represent a characteristic of each particle. For example, in a scattergram, X coordinate axis represents forward scatter intensity, Y coordinate axis represents fluorescence intensity, and Z coordinate axis represents side scatter intensity. The term "scattergram" used in the disclosure refers not only to a distribution map of at least two sets of data in a rectangular coordinate system in the form of data points, but also to an array of data, that is, is not limited by its graphical presentation form.

2) particle population/cell population: it is distributed in a certain region of a scattergram, and is a particle cluster formed by a plurality of particles having identical cell characteristics, such as leukocyte (including all types of leukocytes) population, and leukocyte subpopulation, such as neutrophil population, lymphocyte population, monocyte population, eosinophil population, or basophil population.

3) Blood ghosts: they are fragmented particles obtained by dissolving red blood cells and blood platelets in blood with a hemolytic agent.

4) ROC curve: it is receiver operating characteristic curve, which is a curve plotted based on a series of different binary classifications (discrimination thresholds), with true positive rate as ordinate and false positive rate as abscissa, and ROC_AUC represents an area enclosed by ROC curve and horizontal coordinate axis. ROC curve is plotted by setting a number of different critical values for continuous variables, calculating a corresponding sensitivity and specificity at each critical value, and then plotting a curve with sensitivity as vertical coordinate and 1-specificity as horizontal coordinate. Because ROC curve is composed of multiple critical values representing their respective sensitivity and specificity, a best diagnostic threshold value for a certain diagnostic method can be selected with the help of ROC curve. The closer the ROC curve is to the upper left corner, the higher the test sensitivity and the lower the misjudgment rate, the better the performance of the diagnosis method. It can be seen that the point on the ROC curve closest to the upper left corner of the ROC curve has the largest sum of sensitivity and specificity, and the value corresponding to this point or its adjacent points is often used as a diagnostic reference value (also known as a diagnostic threshold or a determination threshold or a preset condition or a preset range).

Currently, a blood cell analyzer generally counts and classifies leukocytes through a DIFF channel and/or a WNB channel. The blood cell analyzer performs a four-part differential of leukocytes via the DIFF channel, and classifies leukocytes into four types of leukocytes: lymphocytes (Lym), monocytes (Mon), neutrophils (Neu), and eosinophils (Eos). The blood cell analyzer identifies nucleated red blood cells through the WNB channel, and can obtain a nucleated red blood cell count, a leukocyte count, and a basophil count at the same time. A combination of the DIFF channel and the WNB channel results in a five-part differential of leukocytes, including five types of leukocytes: lymphocytes (Lym), monocytes (Mon), neutrophils (Neu), eosinophils (Eos), and basophils (Baso).

The blood cell analyzer used in the disclosure implements classification and counting of particles in a blood sample through a flow cytometry technique combined with a laser scattering method and a fluorescence staining method. Here, the principle of testing a blood sample by the blood cell analyzer may be, for example: first, a blood sample is aspirated and treated with a hemolytic agent and a fluorescent dye, wherein red blood cells are destroyed and dissolved by the hemolytic agent, while white blood cells will not be dissolved, but the fluorescent dye can enter white blood cell nucleus with the help of the hemolytic agent and then is bound with nucleic acid substance of the nucleus; and then, particles in the sample are made to pass through a detection aperture irradiated by a laser beam one by one. When the laser beam irradiates the particles, properties (such as volume, degree of staining, size and content of cell contents, density of cell nucleus) of the particles themselves may block or change a direction of the laser beam, thereby generating scattered light at various angles that corresponds to their properties, and the scattered light can be received by a signal detector to obtain relevant information about structure and composition of the particles. Forward-scattered light (FS) reflects a number and a volume of particles, side-scattered light (SS) reflects a complexity of a cell internal structure (such as intracellular particle or nucleus), and fluorescence (FL) reflects a content of nucleic acid substance in a cell. The use of the light information can implement differential and counting of the particles in the sample.

FIG. 1 is a schematic diagram of a structure of a blood cell analyzer according to some embodiments of the disclosure. The blood cell analyzer 100 includes a sample aspiration device 110, a sample preparation device 120, an optical detection device 130, and a processor 140. The blood cell analyzer 100 further has a liquid circuit system (not shown) for connecting the sample aspiration device 110, the sample preparation device 120, and the optical detection device 130 for liquid transport between these devices.

The sample aspiration device 110 is configured to aspirate a blood sample of a subject to be tested.

In some embodiments, the sample aspiration device 110 has a sampling needle (not shown) for aspirating a blood sample to be tested. In addition, the sample aspiration device 110 may further include, for example, a driving device configured to drive the sampling needle to quantitatively aspirate the blood sample to be tested through a needle nozzle of the sampling needle. The sample aspiration device 110 can transport the aspirated blood sample to the sample preparation device 120.

The sample preparation device 120 is configured to prepare a first test sample containing a part of the blood sample to be tested, a first hemolytic agent, and a first staining agent for leukocyte classification; and a second test sample containing another part of the blood sample to be tested, a second hemolytic agent and a second staining agent for identifying nucleated red blood cells.

In embodiments of the disclosure, the hemolytic agent herein is used to lyse red blood cells in blood to break the red blood cells into fragments, with morphology of leukocytes substantially unchanged.

In some embodiments, the hemolytic agent may be any one or a combination of a cationic surfactant, a non-ionic surfactant, an anionic surfactant, and an amphiphilic surfactant. In other embodiments, the hemolytic agent may include at least one of alkyl glycosides, triterpenoid saponins and steroidal saponins. For example, the hemolytic agent may be selected from octyl quinoline bromide, octyl isoquinoline bromide, decyl quinoline bromide, decyl isoquinoline bromide, dodecyl quinoline bromide, dodecyl isoquinoline bromide, tetradecyl quinoline bromide, tetradecyl isoquinoline bromide, octyl trimethyl ammonium chloride, octyl trimethyl ammonium bromide, decyl trimethyl ammonium chloride, decyl trimethyl ammonium bromide, dodecyl trimethyl ammonium chloride, dodecyl trimethyl ammonium bromide, tetradecyl trimethyl ammonium chloride and tetradecyl trimethyl ammonium bromide; dodecyl alcohol polyethylene oxide (23) ether, hexadecyl alcohol polyethylene oxide (25) ether, hexadecyl alcohol polyethylene oxide (30) ether, etc.

In some embodiments, the first hemolytic agent is different from the second hemolytic agent, in particular, the first hemolytic agent lyses red blood cells to a greater degree than the second hemolytic agent lyses red blood cells.

In embodiments of the disclosure, the first staining agent is a fluorescent dye used to achieve leukocyte differential count, for example, a fluorescent dye that can achieve differential count of leukocytes in a blood sample into at least three leukocyte subpopulations (monocytes, lymphocytes, and neutrophils). The second staining agent is different from the first staining agent and the second staining agent is a fluorescent dye capable of identifying nucleated red blood cells (capable of distinguishing nucleated red blood cells from leukocytes) in a blood sample.

In some embodiments, the first staining agent may include a membrane-specific dye or a mitochondrial-specific dye, for more details, reference may be made to the PCT patent application WO 2019/206300 A1 filed by the applicant on April 26, 2019, which is incorporated herein by reference in its entirety.

In other embodiments, the first staining agent may include a cationic cyanine compound, for more details thereof, reference may be made to Chinese Patent Application CN 101750274 A filed by the Applicant on September 28, 2019, the entire disclosure of which is incorporated herein by reference.

Reagents currently commercially available for leukocyte four-part differential may be also used in terms of the first hemolytic agent and the first staining agent of the disclosure, such as M-60LD and M-6FD. Commercially available reagents for identifying nucleated red blood cells may be also used in terms of the second hemolytic agent and the second staining agent of the disclosure, such as M-6LN and M-6FN.

In some embodiments, the sample preparation device 120 may include at least one reaction cell and a reagent supply device (not shown). The at least one reaction cell is configured to receive the blood sample to be tested aspirated by the sample aspiration device 110, and the reagent supply device supplies treatment reagents (including the hemolytic agent, the first staining agent, a second staining agent, etc.) to the at least one reaction cell, so that the blood sample to be tested aspirated by the sample aspiration device 110 is mixed, in the reaction cell, with the treatment reagents supplied by the reagent supply device to prepare a test sample (including the first test sample and the second test sample).

For example, the at least one reaction cell may include a first reaction cell and a second reaction cell, and the reagent supply device may include a first reagent supply portion and a second reagent supply portion. The sample aspiration device 110 is configured to respectively dispense the aspirated blood sample to be tested in part to the first reaction cell and the second reaction cell. The first reagent supply portion is configured to supply the first hemolytic agent and the first staining agent to the first reaction cell, so that part of the blood sample to be tested that is dispensed to the first reaction cell is mixed and reacts with the first hemolytic agent and the first staining agent so as to prepare the first test sample. The second reagent supply portion is configured to supply the second hemolytic agent and the second staining agent to the second reaction cell, so that the part of the test blood sample that is dispensed to the second reaction cell is mixed and reacts with the second hemolytic agent and the second staining agent so as to prepare the second test sample.

The optical detection device 130 includes a flow cell, a light source and an optical detector, the flow cell is configured to allow for the first test sample and the second test sample to pass therethrough respectively, the light source is configured to respectively irradiate with light the first test sample and the second test sample passing through the flow cell, and the optical detector is configured to detect first optical information and second optical information generated by the first test sample and second test sample under irradiation when passing through the flow cell respectively.

It will be understood herein that the first detection channel for leukocyte classification (also referred to as DIFF channel) refers to the detection by the optical detection device 130 of the first test sample prepared by the sample preparation device 120, and the second detection channel for identifying nucleated red blood cells (also referred to as WNB channel) refers to the detection by the optical detection device 130 of the second test sample prepared by the sample preparation device 120.

Herein, the flow cell refers to a cell that focuses flow and is suitable for detecting light scattering signals and fluorescence signals. When a particle, such as a blood cell, passes through a detection aperture of the flow cell, the particle scatters, to various directions, an incident light beam from the light source directed to the detection aperture. An optical detector may be provided at one or more different angles relative to the incident light beam, to detect light scattered by the particle to obtain scattered light signals. Since different particles have different light scattering properties, the light scattering signals can be used to distinguish between different particle clusters. Specifically, light scattering signals detected in the vicinity of the incident beam are often referred to as forward light scattering signals or small-angle light scattering signals. In some embodiments, forward light scattering signals can be detected at an angle of about 1° to about 10° from the incident beam. In some other embodiments, forward light scattering signals can be detected at an angle of about 2° to about 6° from the incident beam. Light scattering signals detected at about 90° from the incident beam are commonly referred to as side light scattering signals. In some embodiments, side light scattering signals can be detected at an angle of about 65° to about 115° from the incident beam. Typically, fluorescence signals from a blood cell stained with a fluorescent dye are also generally detected at about 90° from the incident beam.

In some embodiments, the optical detector may include a forward scattered light detector for detecting forward scatter signals, a side scattered light detector for detecting side scatter signals, and a fluorescence detector for detecting fluorescence signals. Accordingly, the first optical information may include forward scatter signals, side scatter signals, and fluorescent signals of the particles in the first test sample, and the second optical information may include forward scatter signals, side scatter signals, and fluorescent signals of the particles in the second test sample.

FIG. 2 shows a specific example of the optical detection apparatus 130. The optical test apparatus 130 is provided with a light source 101, a beam shaping assembly 102, a flow cell 103 and a forward-scattered light detector 104 which are sequentially arranged in a straight line. On one side of the flow cell 103, a dichroscope 106 is arranged at an angle of 45° to the straight line. Part of lateral light emitted by particles in the flow cell 103 is transmitted through the dichroscope 106 and is captured by a fluorescence detector 105 arranged behind the dichroscope 106 at an angle of 45° to the dichroscope 106; and the other part of the lateral light is reflected by the dichroscope 106 and is captured by a side-scattered light detector 107 arranged in front of the dichroscope 106 at an angle of 45° to the dichroscope 106.

The processor 140 is configured to process and operate data to obtain a required result. For example, the processor may be configured to generate a two-dimensional scattergram or a three-dimensional scattergram based on various collected light signals, and perform particle analysis using a method of gating on the scattergram. The processor 140 may also be configured to perform visualization processing on an intermediate operation result or a final operation result, and then display same by a display apparatus 150. In embodiments of the disclosure, the processor 140 is configured to implement methods and steps which will be described in detail below.

In embodiments of the present disclosure, the processor includes, but is not limited to, a central processing unit (CPU), a micro controller unit (MCU), a field-programmable gate array (FPGA), a digital signal processor (DSP) and other devices for interpreting computer instructions and processing data in computer software. For example, the processor is configured to execute each computer application program in a computer-readable storage medium, so that the blood cell analyzer 100 preforms a corresponding detection process and analyzes, in real time, optical information or optical signals detected by the optical detection device 130.

In addition, the blood cell analyzer 100 may further include a first housing 160 and a second housing 170. The display apparatus 150 may be, for example, a user interface. The optical detection apparatus 130 and the processor 140 are provided inside the second housing 170. The sample preparation apparatus 120 is provided, for example, inside the first housing 160, and the display apparatus 150 is provided, for example, on an outer surface of the first housing 160 and configured to display test results from the blood cell analyzer.

As mentioned in the BACKGROUND, blood routine tests realized by using the blood cell analyzer can indicate occurrence of infection and identify infection types, but blood routine WBC/Neu% currently used in clinical practice is affected by many aspects and cannot accurately and timely reflect patient condition. Moreover, sensitivity and specificity of the existing technology in diagnosis and treatment of bacterial infection and sepsis are poor.

On this basis, by in-depth research of original signal characteristics of blood routine tests of a large number of blood samples from infected patients, the inventors of the disclosure accidentally found that a leukocyte parameter, especially a cell characteristic parameter, of the DIFF channel and a leukocyte parameters, especially a cell characteristic parameters, of the WNB channel can be combined to obtain an infection marker parameter for highly effective evaluation of an infection status of a subject. Herein, embodiments of the disclosure provide a solution that combines a leukocyte parameter of the DIFF channel and a leukocyte parameter of the WNB channel to obtain an infection marker parameter for effectively evaluating an infection status. Although wishing not to be bound by theory, the inventors of the disclosure found through in-depth research that both neutrophils and monocytes in a patient sample are valuable in reflecting infection degree, and combining characteristics of two particle populations can better reflect infection degree. Second, the leukocyte classification channel, namely the DIFF channel distinguishes leukocytes more finely, and is generally considered to be easier to find characteristics. However, the WNB channel and the DIFF channel are different in reagents used, degree of cell treatment, and staining preferences of fluorescent dyes for nucleic acids (the dyes in the DIFF channel are generally bound to nuclear, while the dyes in the WNB channel are generally bound to cytoplasmic), which may lead to different cell characteristic signals. Combination of the two channels may have a synergistic effect. Based on such research findings, the inventors of the disclosure propose through extensive clinical validation a method that combines a leukocyte parameter of the DIFF channel and a leukocyte parameter of the WNB channel to obtain an infection marker parameter for effectively evaluating an infection status.

Accordingly, the processor 140 is configured to:

obtain at least one first leukocyte parameter of at least one first target particle population in the first test sample from the first optical information;

obtain at least one second leukocyte parameter of at least one second target particle population in the second test sample from the second optical information, wherein at least one of the first leukocyte parameter and the second leukocyte parameter comprises a cell characteristic parameter;

calculate an infection marker parameter for evaluating an infection status of the subject based on the at least one first leukocyte parameter and the at least one second leukocyte parameter; and

output the infection marker parameter.

Preferably, both the first leukocyte parameter and the second leukocyte parameter include a cell characteristic parameter. That is, the first leukocyte parameter includes a cell characteristic parameter of the first target particle population, and the second leukocyte parameter includes a cell characteristic parameter of the second target particle population. Thus, an infection marker parameter with further improved diagnostic efficacy can be provided.

It should be understood herein that a cell characteristic parameter of a particle population or cell population does not include a cell count or a classification parameter of the cell population, but includes a characteristic parameter reflecting cell characteristics such as volume, internal granularity, and internal nucleic acid content of cells in the cell population.

Certainly, in other embodiments, it is also possible that the first leukocyte parameter includes a cell characteristic parameter of the first target particle population, and the second leukocyte parameter includes a classification parameter or a count parameter of the second target particle population. Alternatively, the first leukocyte parameter includes a classification parameter or a count parameter of the first target particle population, and the second leukocyte parameter includes a cell characteristic parameter of the second target particle population.

Preferably herein, the processor 140 may be further configured to combine the at least one first leukocyte parameter and the at least one second leukocyte parameter as the infection marker parameter using a linear function, i.e., to calculate the infection marker parameter by following formula:

$$Y=A*X1+B*X2+C$$

where Y represents the infection marker parameter, X1 represents the first leukocyte parameter, X2 represents the second leukocyte parameter, and A, B, and C are constants. Functional relationships between characteristics can be obtained by, for example, linear discriminant analysis (LDA). The linear discriminant analysis is an induction of Fisher's linear discriminant method, which uses statistics, pattern recognition, and machine learning methods to characterize or distinguish two types of events (e.g., with or without sepsis, bacterial or viral infection, infectious or non-infectious inflammation, effective or ineffective treatment for sepsis) by finding a linear combination of characteristics of the two types of events and obtaining one-dimensional data by linearly combining multi-dimensional data. The coefficient of the linear combination can ensure that the degree of discrimination of the two types of events is maximized. The resulting linear combination can be used to classify subsequent events.

Certainly, in other embodiments, the at least one first leukocyte parameter and the at least one second leukocyte parameter may also be combined as the infection marker parameter by a nonlinear function, which is not specifically limited in the disclosure.

Those skilled in the art will appreciate that in other embodiments, the first leukocyte parameter and the second leukocyte parameter may be used in combination to be compared with their respective thresholds to obtain the infection marker parameter, instead of calculating the two leukocyte parameters by a function. For example, diagnostic thresholds are set for the two parameters: threshold 1 and threshold 2, and then diagnostic efficacy of "parameter 1 ≥ threshold 1 or parameter 2 ≥ threshold 2" is analyzed, and diagnostic efficacy of "parameter 1 ≥ threshold 1 and parameter 2 ≥ threshold 2" is analyzed.

In other embodiments, the infection marker parameter may be calculated from the leukocyte parameters and other blood cell parameters, i.e., the infection marker parameter may be calculated from at least one leukocyte parameter and at least one other blood cell parameter. The other blood cell parameter may be a classification or count parameter for platelets (PLTs), nucleated red blood cells (NRBCs), or reticulocytes (RETs), or may be a concentration of hemoglobin.

Further, in some embodiments, leukocytes in the first test sample can be classified, based on the first optical information, at least as monocyte population, neutrophil population and lymphocyte population, and in particular as monocyte population, neutrophil population, lymphocyte population and eosinophil population.

In one specific example, as shown in FIGS. 3 to 5, the leukocytes in the first test sample can be classified into monocyte population Mon, neutrophil population Neu, lymphocyte population Lym, and eosinophil population Eos based on forward scatter signals (or forward scatter intensity) FS, side scatter signals (or side scatter intensity) SS, and fluorescence signals (or fluorescence intensity) FL in the first optical information. FIG. 3 is a two-dimensional scattergram generated based on the side scatter signals SS and the fluorescent signals FL in the first optical information, FIG. 4 is a two-dimensional scattergram generated based on the forward scatter signals FS and the side scatter signals SS in the first optical information, and FIG. 5 is a three-dimensional scattergram generated based on the forward scatter signals FS, the side scatter signals SS and the fluorescent signals FL in the first optical information.

Accordingly, in some embodiments, the at least one first target particle population may include at least one cell population of the monocyte population Mon, the neutrophil population Neu, and the lymphocyte population Lym in the first test sample, i.e., the at least one first leukocyte parameter may include one or more parameters of cell characteristic parameters of the monocyte population Mon, the neutrophil population Neu, and the lymphocyte population Lym in the first test sample. Preferably, the at least one first target particle population may include at least one cell population of the monocyte population Mon and the neutrophil population Neu in the first test sample, i.e., the at least one first leukocyte parameter may include one or more parameters, e.g., one or two or more parameters of cell characteristic parameters of the monocyte population Mon and the neutrophil population Neu in the first test sample.

In other embodiments, the at least one first leukocyte parameter may also include a classification parameter or a count parameter of the monocyte population Mon, the neutrophil population Neu, and the lymphocyte population Lym in the first test sample.

Alternatively or additionally, in some embodiments, leukocyte population WBC (including all types of leukocytes) in the second test sample can be identified based on the second optical information, while neutrophil population Neu and lymphocyte population Lym in the leukocytes in the second test sample can also be identified, as shown in FIGS. 6 to 8. FIG. 6 is a two-dimensional scattergram generated based on forward scatter signals FS and fluorescent signals FL in the second optical information, FIG. 7 is a two-dimensional scattergram generated based on forward scatter signals FS and side scatter signals SS in the second optical information, and FIG. 8 is a three-dimensional scattergram generated based on the forward scatter signals FS, the side scatter signals SS and the fluorescent signals FL in the second optical information.

Accordingly, in some embodiments, the at least one second target particle population may include at least one cell population of the lymphocyte population Lym, the neutrophil population Neu, and the leukocyte population Wbc in the first test sample, i.e., the at least one second leukocyte parameter includes one or more parameters of cell characteristic parameters of the lymphocyte population Lym, the neutrophil population Neu, and the leukocyte population Wbc in the second test sample. Preferably, the at least one second target particle population may include at least one cell population of the neutrophil population Neu and the leukocyte population Wbc in the first test sample, i.e., the at least one second leukocyte parameter may include one or more parameters of cell characteristic parameters of the neutrophil population Neu and the leukocyte population Wbc in the second test sample.

In other embodiments, the at least one second leukocyte parameter may also comprise a classification parameter or a count parameter of the neutrophil population Neu or a count parameter of the leukocyte population Wbc in the second test sample.

In some preferred embodiments, the at least one first leukocyte parameter may include one or more parameters of cell characteristic parameters of the monocyte population Mon and the neutrophil population Neu in the first test sample; and the at least one second leukocyte parameter may include one or more parameters of cell characteristic parameters of the neutrophil population Neu and the leukocyte population Wbc in the second test sample. In studying the original signals during blood routine test process of a large number of samples from subjects, the inventors found that combining a cell characteristic parameter of monocyte population Mon and/or neutrophil population Neu of the DIFF channel with a cell characteristic parameter of neutrophil population Neu and/or leukocyte population Wbc of the WNB channel can provide a more diagnostically effective infection marker parameter.

Further preferably, the at least one first leukocyte parameter may include one or more parameters of cell characteristic parameters of the monocyte population Mon in the first test sample; and the at least one second leukocyte parameter may include one or more parameters of cell characteristic parameters of the leukocyte population Wbc in the second test sample.

In some embodiments, the at least one first leukocyte parameter may include one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of the first target particle population, and an area of a distribution region of the first target particle population in a two-dimensional scattergram generated by two light intensities selected from forward scatter intensity, side scatter intensity and fluorescence intensity, and a volume of a distribution region of the first target particle population in a three-dimensional scattergram generated by forward scatter intensity, side scatter intensity and fluorescence intensity, for example, the volume of the space occupied by leukocyte population in FIG. 8.

In some specific examples, the at least one first leukocyte parameter may include one or more, e.g. one or two parameters of following parameters: a forward scatter intensity distribution width D_MON_FS_W, a forward scatter intensity distribution center of gravity D_MON_FS_P, a forward scatter intensity distribution coefficient of variation D_MON_FS_CV, a side scatter intensity distribution width D_MON_SS_W, a side scatter intensity distribution center of gravity D_MON_SS_P, a side scatter intensity distribution coefficient of variation D_MON_SS_CV, a fluorescence intensity distribution width D_MON_FL_W, a fluorescence intensity distribution center of gravity D_MON_FL_P, and a fluorescence intensity distribution coefficient of variation D_MON_FL_CV of monocyte population in the first test sample, and an area D_MON_FLFS_Area (an area of distribution region of monocyte population in a two-dimensional scattergram generated by forward scatter intensity and fluorescence intensity), a D_MON_FLSS_Area (an area of a distribution region of monocyte population in a two-dimensional scattergram generated by side scatter intensity and fluorescence intensity), and D_MON_SSFS_Area (an area of a distribution region of monocyte population in a two-dimensional scattergram generated forward scatter intensity and side scatter intensity) of a distribution region of monocyte population in a two-dimensional scattergram generated by two light intensities selected from forward scatter intensity, side scatter intensity and fluorescence intensity, and a volume of a distribution region of monocyte population in a three-dimensional scattergram generated by forward scatter intensity, side scatter intensity and fluorescence intensity; a forward scatter intensity distribution width D_NEU_FS_W, a forward scatter intensity distribution center of gravity D_NEU_FS_P, a forward scatter intensity distribution coefficient of variation D_NEU_FS_CV, a side scatter intensity distribution width D_NEU_SS_W, a side scatter intensity distribution center of gravity D_NEU_SS_P, a side scatter intensity distribution coefficient of variation D_NEU_SS_CV, a fluorescence intensity distribution width D_NEU_FL_W, a fluorescence intensity distribution center of gravity D_NEU_FL_P, and a fluorescence intensity distribution coefficient of variation D_NEU_FL_CV of neutrophil population in the first test sample, and an area D_NEU_FLFS_Area (an area of distribution region of neutrophil population in a two-dimensional scattergram generated by forward scatter intensity and fluorescence intensity), a D_NEU_FLSS_Area (an area of a distribution region of neutrophil population in a two-dimensional scattergram generated by side scatter intensity and fluorescence intensity), and D_NEU_SSFS_Area (an area of a distribution region of neutrophil population in a two-dimensional scattergram generated forward scatter intensity and side scatter intensity) of a distribution region of neutrophil population in a two-dimensional scattergram generated by two light intensities selected from forward scatter intensity, side scatter intensity and fluorescence intensity, and a volume of a distribution region of neutrophil population in a three-dimensional scattergram generated by forward scatter intensity, side scatter intensity and fluorescence intensity; and a forward scatter intensity distribution width D_LYM_FS_W, a forward scatter intensity distribution center of gravity D_LYM_FS_P, a forward scatter intensity distribution coefficient of variation D_LYM_FS_CV, a side scatter intensity distribution width D_LYM_SS_W, a side scatter intensity distribution center of gravity D_LYM_SS_P, a side scatter intensity distribution coefficient of variation D_LYM_SS_CV, a fluorescence intensity distribution width D_LYM_FL_W, a fluorescence intensity distribution center of gravity D_LYM_FL_P, and a fluorescence intensity distribution coefficient of variation D_LYM_FL_CV of lymphocyte population in the first test sample, and an area D_LYM_FLFS_Area (an area of distribution region of lymphocyte population in a two-dimensional scattergram generated by forward scatter intensity and fluorescence intensity), a D_LYM_FLSS_Area (an area of a distribution region of lymphocyte population in a two-dimensional scattergram generated by side scatter intensity and fluorescence intensity), and D_LYM_SSFS_Area (an area of a distribution region of lymphocyte population in a two-dimensional scattergram generated forward scatter intensity and side scatter intensity) of a distribution region of lymphocyte population in a two-dimensional scattergram generated by two light intensities selected from forward scatter intensity, side scatter intensity and fluorescence intensity, and a volume of a distribution region of lymphocyte population in a three-dimensional scattergram generated by forward scatter intensity, side scatter intensity and fluorescence intensity.

Preferably, the at least one first leukocyte parameter may include one or more, e.g. one or two parameters of following parameters: a forward scatter intensity distribution width D_MON_FS_W, a forward scatter intensity distribution center of gravity D_MON_FS_P, a forward scatter intensity distribution coefficient of variation D_MON_FS_CV, a side scatter intensity distribution width D_MON_SS_W, a side scatter intensity distribution center of gravity D_MON_SS_P, a side scatter intensity distribution coefficient of variation D_MON_SS_CV, a fluorescence intensity distribution width D_MON_FL_W, a fluorescence intensity distribution center of gravity D_MON_FL_P, and a fluorescence intensity distribution coefficient of variation D_MON_FL_CV of monocyte population in the first test sample, and areas D_MON_FLFS_Area, D_MON_FLSS_Area and D_MON_SSFS_Area of a distribution area of monocyte population in a two-dimensional scattergram generated by two light intensities selected from forward scatter intensity, side scatter intensity and fluorescence intensity, and a volume of a distribution area of monocyte population in a three-dimensional scattergram generated by forward scatter intensity, side scatter intensity and fluorescence intensity; and a forward scatter intensity distribution width D_NEU_FS_W, a forward scatter intensity distribution center of gravity D_NEU_FS_P, a forward scatter intensity distribution coefficient of variation D_NEU_FS_CV, a side scatter intensity distribution width D_NEU_SS_W, a side scatter intensity distribution center of gravity D_NEU_SS_P, a side scatter intensity distribution coefficient of variation D_NEU_SS_CV, a fluorescence intensity distribution width D_NEU_FL_W, a fluorescence intensity distribution center of gravity D_NEU_FL_P, and a fluorescence intensity distribution coefficient of variation D_NEU_FL_CV of neutrophil population in the first test sample, and areas D_NEU_FLFS_Area, D_NEU_FLSS_Area, and D_NEU_SSFS_Area of a distribution area of neutrophil population in a two-dimensional scattergram generated by two light intensities selected from forward scatter intensity, side scatter intensity and fluorescence intensity, and a volume of a distribution area of neutrophil population in a three-dimensional scattergram generated by forward scatter intensity, side scatter intensity and fluorescence intensity.

In other embodiments, the at least one first leukocyte parameter may also include a classification parameter Mon% or a count parameter Mon # of the monocyte population Mon or a classification parameter Neu% or a count parameter Neu # of the neutrophil population Neu or a classification parameter Lym% or a count parameter Mon # of the lymphocyte population Lym in the first test sample.

The meanings of the distribution width, the distribution center of gravity, the coefficient of variation, and the area or volume of the distribution area are explained herein with reference to FIG. 9, wherein FIG. 9 shows cell characteristic parameters of the neutrophil population in the first test sample according to some embodiments of the disclosure.

As shown in FIG. 9, D_NEU_FL_W represents the fluorescence intensity distribution width of the neutrophil population in the first test sample, wherein D_NEU_FL_W is equal to the difference between the fluorescence intensity distribution upper limit S1 of the neutrophil population and the fluorescence intensity distribution lower limit S2 of the neutrophil population. D_NEU_FL_P represents the center of gravity of the fluorescence intensity distribution of the neutrophil population in the first test sample, that is, the average position of the neutrophil population in the FL direction, wherein D_NEU_FL_P is calculated by the following formula:

$$\mathrm{D_NEU_FL_P} = \frac{\sum_1^N FL(i)}{N}$$

where FL (i) is fluorescence intensity of the i-th neutrophil. D_NEU_FL_CV represents the coefficient of variation of the fluorescence intensity distribution of the neutrophil population in the first test sample, where D_NEU_FL_CV is equal to D_NEU_FL_W divided by D_NEU_FL_P.

In addition, D_NEU_FLSS_Area represents the area of the distribution region of the neutrophil population in the first test sample in the scattergram generated by the side scatter intensity and fluorescence intensity. As shown in FIG. 9, C1 represents the contour distribution curve of the neutrophil population, for example, the total number of positions within the contour distribution curve C1 may be recorded as the area of the neutrophil population. Those skilled in the art can understand that it is easy to obtain the contour distribution curve of the particle cluster by using a classification algorithm of a usual blood analyzer or image processing technology.

As will be appreciated herein, for definitions of other first leukocyte parameters, reference may be made to the embodiments shown in FIG. 9 in a corresponding manner.

Alternatively or additionally, in some embodiments, the at least one second leukocyte parameter may include one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of the second target particle population, and an area of a distribution region of the second target particle population in a two-dimensional scattergram generated by two light intensities selected from forward scatter intensity, side scatter intensity and fluorescence intensity, and a volume of a distribution region of the second target particle population in a three-dimensional scattergram generated by forward scatter intensity, side scatter intensity, and fluorescence intensity.

In some specific examples, the at least one second leukocyte parameter may include one or more, e.g. one or two parameters of following parameters: a forward scatter intensity distribution width N_NEU_FS_W, a forward scatter intensity distribution center of gravity N_NEU_FS_P, a forward scatter intensity distribution coefficient of variation N_NEU_FS_CV, a side scatter intensity distribution width N_NEU_SS_W, a side scatter intensity distribution center of gravity N_NEU_SS_P, a side scatter intensity distribution coefficient of variation N_NEU_SS_CV, a fluorescence intensity distribution width N_NEU_FL_W, a fluorescence intensity distribution center of gravity N_NEU_FL_P, and a fluorescence intensity distribution coefficient of variation N_NEU_FL_CV of neutrophil population in the second test sample, and an area N_NEU_FLFS_Area (an area of distribution region of neutrophil population in a two-dimensional scattergram generated by forward scatter intensity and fluorescence intensity), a N_NEU_FLSS_Area (an area of a distribution region of neutrophil population in a two-dimensional scattergram generated by side scatter intensity and fluorescence intensity), and N_NEU_SSFS_Area (an area of a distribution region of neutrophil population in a two-dimensional scattergram generated forward scatter intensity and side scatter intensity) of a distribution region of neutrophil population in a two-dimensional scattergram generated by two light intensities selected from forward scatter intensity, side scatter intensity and fluorescence intensity, and a volume of a distribution region of neutrophil population in a three-dimensional scattergram generated by forward scatter intensity, side scatter intensity and fluorescence intensity; and a forward scatter intensity distribution width N_WBC_FS_W, a forward scatter intensity distribution center of gravity N_WBC_FS_P, a forward scatter intensity distribution coefficient of variation N_WBC_FS_CV, a side scatter intensity distribution width N_WBC_SS_W, a side scatter intensity distribution center of gravity N_WBC_SS_P, a side scatter intensity distribution coefficient of variation N_WBC_SS_CV, a fluorescence intensity distribution width N_WBC_FL_W, a fluorescence intensity distribution center of gravity N_WBC_FL_P, and a fluorescence intensity distribution coefficient of variation N_WBC_FL_CV of leukocyte population in the second test sample, and an area N_WBC_FLFS_Area (an area of distribution region of leukocyte population in a two-dimensional scattergram generated by forward scatter intensity and fluorescence intensity), a N_WBC_FLSS_Area (an area of a distribution region of leukocyte population in a two-dimensional scattergram generated by side scatter intensity and fluorescence intensity), and N_WBC_SSFS_Area (an area of a distribution region of leukocyte population in a two-dimensional scattergram generated forward scatter intensity and side scatter intensity) of a distribution region of leukocyte population in a two-dimensional scattergram generated by two light intensities selected from forward scatter intensity, side scatter intensity and fluorescence intensity, and a volume of a distribution region of leukocyte population in a three-dimensional scattergram generated by forward scatter intensity, side scatter intensity and fluorescence intensity.

In other embodiments, the at least one second leukocyte parameter may also include a count parameter WBC # of leukocyte population in the second test sample.

Similar to FIG. 9, FIG. 10 shows cell characteristic parameters of the leukocyte population in the second test sample according to some embodiments of the disclosure.

As shown in FIG. 10, N_WBC_FS_W represents the forward scatter intensity distribution width of the leukocyte population in the second test sample, wherein N_WBC_FS_W is equal to the difference between the forward scatter intensity distribution upper limit of the leukocyte population and the forward scatter intensity distribution lower limit of the leukocyte population. N_WBC_FS_P represents the forward scatter intensity distribution center of gravity of the leukocyte population in the second test sample, that is, the average position of the leukocytes in the FS direction, wherein N_WBC_FS_P is calculated by the following formula:

$$\text{N_WBC_FS_P} = \frac{\sum_1^N FS(i)}{N}$$

where FS (i) is forward scatter intensity of the i-th leukocyte. N_WBC_FS_CV represents the forward scatter intensity distribution coefficient of variation of the leukocyte population in the second test sample, where N_WBC_FS_CV is equal to N_WBC_FS_W divided by N_WBC_FS_P.

In addition, N_WBC_FLFS_Area represents the area of the distribution region of the leukocyte population in the second test sample in the scattergram generated by the forward scatter intensity and the fluorescence intensity.

In some embodiments, as shown in FIG. 10, C2 represents a contour distribution curve of the leukocyte population, for example, the total number of positions within the contour distribution curve C2 may be recorded as the area of the leukocyte population. Those skilled in the art can understand that it is easy to obtain the contour distribution curve of the particle cluster by using a classification algorithm of a usual blood analyzer or image processing technology.

In other embodiments, D_NEU_FLSS_Area may also be implemented by the following algorithmic steps (FIG. 23):

randomly selecting a particle P1 from the neutrophil (NEU) particle population, and finding a particle P2 that is farthest from P1;
constructing a vector V1 (P1-P2), and taking P1 as the starting point of the vector, finding another particle P3 in the neutrophil (NEU) particle population, and constructing a vector V2 (P1-P3) such that the vector V2 (P1-P3) has a maximum angle with the vector V1 (P1-P2);
then, taking P1 as the starting point of the vector, finding another particle P4 in the neutrophil (NEU) particle population, and constructing a vector V3 (P1-P4) such that the vector V3 (P1-P4) has a maximum angle with the vector V1 (P1-P2);
by analogy, obtaining a group of particles P1, P2, P3, P4, ... Pn on the outermost side of the neutrophil (NEU) particle population, respectively;
fitting the particle points P1, P2, P3, P4, ... Pn by using an ellipse, and obtaining the major axis a and minor axis b of this ellipse;
the D_NEU_FLSS_Area is a product of the major axis a and the minor axis b.

Similarly, the volume parameters of the distribution region of the neutrophil population in the three-dimensional scattergram generated by the forward scatter intensity, the side scatter intensity, and the fluorescence intensity can also be obtained by corresponding calculations.

As will be appreciated herein, for definitions of other second leukocyte parameters, reference may be made to the embodiments shown in FIGS. 10 and 23 in a corresponding manner.

Those skilled in the art can understand that it is possible to use an overall distribution characteristic of a scattergram of a certain particle cluster, such as a forward scatter intensity distribution width of the entire leukocyte population, or to use a characteristic of a distribution of particles in some areas of a certain particle cluster, such as a distribution area of a portion with a higher density in the middle of neutrophil population, or an area that is different from neutrophil or lymphocyte particle cluster of a normal human scattergram.

In some embodiments, the processor 140 may be further configured to: output prompt information indicating that the infection marker parameter is abnormal when a value of the infection marker parameter is beyond a preset range. For example, when the value of the infection marker parameter is abnormally elevated, an upward pointing arrow may be outputted to indicate the abnormal elevation.

Alternatively, processor 140 may be further configured to output the preset range.

In some embodiments, the processor 140 may be further configured to: output prompt information indicating the infection status of the subject based on the infection marker parameter. For example, the processor 140 may be configured to output the prompt information to a display device for display. The display device herein may be the display device 150 of the blood cell analyzer 100, or another display device in communication with the processor 140. For example, the processor 140 may output the prompt information to a display device on the user (doctor) side through the hospital information management system.

Some application scenarios of the infection marker parameter provided in the disclosure are described next, but the disclosure is not limited thereto.

In some embodiments, the infection marker parameter may be used for performing on the subject an early prediction of sepsis, a diagnosis of sepsis, an identification between common infection and severe infection, a monitoring of the infection status, an analysis of sepsis prognosis, an identification between bacterial infection and viral infection, an identification between non-infectious inflammation and infectious inflammation, or an evaluation of therapeutic effect on sepsis based on the infection marker parameter. For example, the processor 140 may be further configured to perform on the subject an early prediction of sepsis, a diagnosis of sepsis, an identification between common infection and severe infection, a monitoring of the infection status, an analysis of sepsis prognosis, an identification between bacterial infection and viral infection, an identification between non-infectious inflammation and infectious inflammation, or an evaluation of therapeutic effect on sepsis based on the infection marker parameter.

Sepsis is a serious infectious disease with a high incidence and case fatality rate. Every hour of delay in treatment, the mortality rate of patients increases by 7%. Therefore, early warning of sepsis is particularly important. Early identification and early warning of sepsis can increase the precious diagnosis and treatment time for patients and greatly improve the survival rate.

To this end, in an application scenario of early prediction of sepsis, the processor 140 may be configured to output prompt information indicating that the subject is likely to progress to sepsis within a certain period of time after the blood sample to be tested is collected, when the infection marker parameter satisfies a first preset condition.

In some embodiments, the certain period of time is not greater than 48 hours, i.e., the embodiments of the disclosure can predict up to two days in advance whether the subject is likely to progress to sepsis. For example, the certain period of time is between 24 hours and 48 hours, that is, the embodiments of the disclosure may predict one to two days in advance whether the subject is likely to progress to sepsis. Preferably, the certain period of time is not greater than 24 hours.

Herein, the first preset condition may be, for example, that the value of the infection marker parameter is greater than a preset threshold. The preset threshold can be determined based on a specific combination of parameters and the blood cell analyzer.

Herein, the infection marker parameter may be calculated by combining the various parameters listed in Table 1 for early prediction of sepsis.

Table 1 Parameter combinations for early prediction of sepsis

| First leukocyte parameter | Second leukocyte parameter | First leukocyte parameter | Second leukocyte parameter | First leukocyte parameter | Second leukocyte parameter |
|---|---|---|---|---|---|
| D_Mon_FS_P | N_WBC_FLFS _Area | D_Neu_FL_W | N_WBC_FS_P | Lym# | N_WBC_FLFS _Area |
| D_Mon_FS_P | N_WBC_FLSS _Area | D_Neu_FL_W | N_WBC_FS_W | Lym# | N_WBC_FLSS _Area |
| D_Mon_FS_P | N_WBC_FS_P | D_Neu_FL_W | N_WBC_FL_P | Lym# | N_WBC_FS_P |
| D_Mon_FS_P | N_WBC_FS_W | D_Neu_FL_W | N_WBC_FL_W | Lym# | N_WBC_FS_W |
| D_Mon_FS_P | N_WBC_FL_P | D_Neu_FL_W | N_WBC_SS_P | Lym# | N_WBC_FL_P |
| D_Mon_FS_P | N_WBC_FL_W | D_Neu_FL_W | N_WBC_SS_W | Lym# | N_WBC_FL_W |
| D_Mon_FS_P | N_WBC_SS_P | D_Neu_FL_W | N_WBC_SSFS _Area | Lym# | N_WBC_SS_P |
| D_Mon_FS_P | N_WBC_SS_W | D_Neu_SS_P | N_WBC_FLFS _Area | Lym# | N_WBC_SS_W |
| D_Mon_FS_P | N_WBC_SSFS _Area | D_Neu_SS_P | N_WBC_FLSS _Area | Lym# | N_WBC_SSFS _Area |
| D_Mon_FS_P | WBC# | D_Neu_SS_P | N_WBC_FS_P | Lym% | N_WBC_FLFS _Area |
| D_Mon_FS_W | N_WBC_FLFS _Area | D_Neu_SS_P | N_WBC_FS_W | Lym% | N_WBC_FLSS _Area |
| D_Mon_FS_W | N_WBC_FLSS _Area | D_Neu_SS_P | N_WBC_FL_P | Lym% | N_WBC_FS_P |
| D_Mon_FS_W | N_WBC_FS_P | D_Neu_SS_P | N_WBC_FL_W | Lym% | N_WBC_FS_W |
| D_Mon_FS_W | N_WBC_FS_W | D_Neu_SS_P | N_WBC_SS_P | Lym% | N_WBC_FL_P |
| D_Mon_FS_W | N_WBC_FL_P | D_Neu_SS_P | N_WBC_SS_W | Lym% | N_WBC_FL_W |
| D_Mon_FS_W | N_WBC_FL_W | D_Neu_SS_P | N_WBC_SSFS _Area | Lym% | N_WBC_SS_P |
| D_Mon_FS_W | N_WBC_SS_P | D_Neu_SS_P | WBC# | Lym% | N_WBC_SS_W |
| D_Mon_FS_W | N_WBC_SS_W | D_Neu_SS_W | N_WBC_FLFS _Area | Lym% | N_WBC_SSFS _Area |
| D_Mon_FS_W | N_WBC_SSFS _Area | D_Neu_SS_W | N_WBC_FLSS _Area | Mon# | N_WBC_FLFS _Area |
| D_Mon_FS_W | WBC# | D_Neu_SS_W | N_WBC_FS_P | Mon# | N_WBC_FLSS _Area |
| D_Mon_FL_P | N_WBC_FLFS _Area | D_Neu_SS_W | N_WBC_FS_W | Mon# | N_WBC_FS_P |
| D_Mon_FL_P | N_WBC_FLSS _Area | D_Neu_SS_W | N_WBC_FL_P | Mon# | N_WBC_FS_W |
| D_Mon_FL_P | N_WBC_FS_P | D_Neu_SS_W | N_WBC_FL_W | Mon# | N_WBC_FL_P |
| D_Mon_FL_P | N_WBC_FS_W | D_Neu_SS_W | N_WBC_SS_P | Mon# | N_WBC_FL_W |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Mon_FL_P | N_WBC_FL_P | D_Neu_SS_W | N_WBC_SS_W | Mon# | N_WBC_SS_P |
| D_Mon_FL_P | N_WBC_FL_W | D_Neu_SS_W | N_WBC_SSFS _Area | Mon# | N_WBC_SS_W |
| D_Mon_FL_P | N_WBC_SS_P | D_Neu_FLSS_ Area | N_WBC_FLFS _Area | Mon# | N_WBC_SSFS _Area |
| D_Mon_FL_P | N_WBC_SS_W | D_Neu_FLSS_ Area | N_WBC_FLSS _Area | Mon% | N_WBC_FLFS _Area |
| D_Mon_FL_P | N_WBC_SSFS _Area | D_Neu_FLSS_ Area | N_WBC_FS_P | Mon% | N_WBC_FLSS _Area |
| D_Mon_FL_P | WBC# | D_Neu_FLSS_ Area | N_WBC_FS_W | Mon% | N_WBC_FS_P |
| D_Mon_FL_W | N_WBC_FLFS _Area | D_Neu_FLSS_ Area | N_WBC_FL_P | Mon% | N_WBC_FS_W |
| D_Mon_FL_W | N_WBC_FLSS _Area | D_Neu_FLSS_ Area | N_WBC_FL_W | Mon% | N_WBC_FL_P |
| D_Mon_FL_W | N_WBC_FS_P | D_Neu_FLSS_ Area | N_WBC_SS_P | Mon% | N_WBC_FL_W |
| D_Mon_FL_W | N_WBC_FS_W | D_Neu_FLSS_ Area | N_WBC_SS_W | Mon% | N_WBC_SS_P |
| D_Mon_FL_W | N_WBC_FL_P | D_Neu_FLSS_ Area | N_WBC_SSFS _Area | Mon% | N_WBC_SS_W |
| D_Mon_FL_W | N_WBC_FL_W | D_Neu_FS_P | N_WBC_FL_W | Mon% | N_WBC_SSFS _Area |
| D_Mon_FL_W | N_WBC_SS_P | D_Neu_FS_P | N_WBC_SS_P | Neu# | N_WBC_FLFS _Area |
| D_Mon_FL_W | N_WBC_SS_W | D_Neu_FS_P | N_WBC_SS_W | Neu# | N_WBC_FLSS _Area |
| D_Mon_FL_W | N_WBC_SSFS _Area | D_Neu_FS_P | N_WBC_SSFS _Area | Neu# | N_WBC_FS_P |
| D_Mon_FL_W | WBC# | D_Neu_FS_P | WBC# | Neu# | N_WBC_FS_W |
| D_Mon_SS_P | N_WBC_FLFS _Area | D_Neu_FS_W | N_WBC_FLFS _Area | Neu# | N_WBC_FL_P |
| D_Mon_SS_P | N_WBC_FLSS _Area | D_Neu_FS_W | N_WBC_FLSS _Area | Neu# | N_WBC_FL_W |
| D_Mon_SS_P | N_WBC_FS_P | D_Neu_FS_W | N_WBC_FS_P | Neu# | N_WBC_SS_P |
| D_Mon_SS_P | N_WBC_FS_W | D_Neu_FS_W | N_WBC_FS_W | Neu# | N_WBC_SS_W |
| D_Mon_SS_P | N_WBC_FL_P | D_Neu_FS_W | N_WBC_FL_P | Neu# | N_WBC_SSFS _Area |
| D_Mon_SS_P | N_WBC_FL_W | D_Neu_FS_W | N_WBC_FL_W | Neu% | N_WBC_FLFS _Area |
| D_Mon_SS_P | N_WBC_SS_P | D_Neu_FS_W | N_WBC_SS_P | Neu% | N_WBC_FLSS _Area |
| D_Mon_SS_P | N_WBC_SS_W | D_Neu_FS_W | N_WBC_SS_W | Neu% | N_WBC_FS_P |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Mon_SS_P | N_WBC_SSFS _Area | D_Neu_FS_W | N_WBC_SSFS _Area | Neu% | N_WBC_FS_W |
| D_Mon_SS_P | WBC# | D_Neu_FS_W | WBC# | Neu% | N_WBC_FL_P |
| D_Mon_SS_W | N_WBC_FLFS _Area | D_Neu_FL_P | N_WBC_FLFS _Area | Neu% | N_WBC_FL_W |
| D_Mon_SS_W | N_WBC_FLSS _Area | D_Neu_FL_P | N_WBC_FLSS _Area | Neu% | N_WBC_SS_P |
| D_Mon_SS_W | N_WBC_FS_P | D_Neu_FL_P | N_WBC_FS_P | Neu% | N_WBC_SS_W |
| D_Mon_SS_W | N_WBC_FS_W | D_Neu_FL_P | N_WBC_FS_W | Neu% | N_WBC_SSFS _Area |
| D_Mon_SS_W | N_WBC_FL_P | D_Neu_FL_P | N_WBC_FL_P | D_Mon_FL_W | N_NEU_FS_W |
| D_Mon_SS_W | N_WBC_FL_W | D_Neu_FL_P | N_WBC_FL_W | D_Neu_FL_W | N_NEU_SS_C V |
| D_Mon_SS_W | N_WBC_SS_P | D_Neu_FL_P | N_WBC_SS_P | D_Neu_FL_W | N_NEU_FS_W |
| D_Mon_SS_W | N_WBC_SS_W | D_Neu_FL_P | N_WBC_SS_W | D_Mon_FL_W | N_NEU_FS_C V |
| D_Mon_SS_W | N_WBC_SSFS _Area | D_Neu_FL_P | N_WBC_SSFS _Area | D_Mon_FL_W | N_NEU_SS_W |
| D_Neu_FS_P | N_WBC_FLFS _Area | D_Neu_FL_P | WBC# | D_Neu_FL_P | N_NEU_SS_W |
| D_Neu_FS_P | N_WBC_FLSS _Area | D_Neu_FL_W | N_WBC_FLFS _Area | D_Neu_FL_W | N_NEU_FLSS_ Area |
| D_Neu_FS_P | N_WBC_FS_P | D_Neu_FL_W | N_WBC_FLSS _Area | D_Mon_SS_P | N_NEU_SS_W |
| D_Neu_FS_P | N_WBC_FS_W | D_Mon_SS_W | N_NEU_SS_C V | D_Mon_FL_P | N_NEU_SS_W |
| D_Neu_FS_P | N_WBC_FL_P | D_Mon_SS_W | N_NEU_SS_W | D_Neu_FL_W | N_NEU_FLFS_ Area |
| D_Neu_FL_W | N_NEU_SS_W | D_Mon_SS_W | N_NEU_FS_W | D_Neu_FL_W | N_NEU_FL_W |
| D_Mon_SS_W | N_NEU_FL_P | D_Mon_SS_W | N_NEU_FS_C V | D_Mon_SS_W | N_NEU_FL_W |

Preferably, combination of D_Mon_SS_W and N_WBC_FL_W can be used to calculate the infection marker parameter for early prediction of sepsis.

The clinical symptoms in the early stage of sepsis are similar to those of common/severe infectious diseases, and patients with sepsis are easily misdiagnosed as common/severe infectious diseases, thereby delaying the timing of treatment. Therefore, the differential diagnosis of sepsis is particularly important.

To this end, in an application scenario of diagnosis of sepsis, the processor 140 may be configured to output prompt information indicating that the subject has sepsis when the infection marker parameter satisfies a second preset condition. Herein, the second preset condition may likewise be that the value of the infection marker parameter is greater than a preset threshold. The preset threshold can be determined based on a specific combination of parameters and the blood cell analyzer.

Herein, the infection marker parameter may be calculated by combining the various parameters listed in Table 2 for diagnosis of sepsis.

Table 2 Parameter combinations for diagnosis of sepsis

| First leukocyte parameter | Second leukocyte parameter | First leukocyte parameter | Second leukocyte parameter | First leukocyte parameter | Second leukocyte parameter |
|---|---|---|---|---|---|
| D_Lym_FLSS_ Area | N_WBC_FL_W | D_Neu_FL_P | N_WBC_SS_C V | D_Neu_FS_W | N_WBC_FS_W |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Lym_FLSS_ Area | N_WBC_SS_P | D_Neu_FL_P | N_WBC_FLSS _Area | D_Neu_FS_W | N_WBC_FS_P |
| D_Lym_FLSS_ Area | N_WBC_SS_W | D_Neu_FL_P | N_WBC_FLFS _Area | D_Neu_FS_W | N_WBC_FLSS _Area |
| D_Lym_FLSS_ Area | N_WBC_FS_W | D_Neu_FL_P | N_WBC_SS_P | D_Neu_FS_W | N_WBC_FS_C V |
| D_Lym_FLSS_ Area | N_WBC_FL_P | D_Neu_FL_P | N_WBC_SSFS _Area | D_Neu_FS_W | N_WBC_FLFS _Area |
| D_Lym_FLSS_ Area | N_WBC_FS_C V | D_Neu_FL_P | N_WBC_FL_P | D_Neu_FS_W | N_WBC_SS_C V |
| D_Lym_FLSS_ Area | N_WBC_FLSS _Area | D_Neu_FL_P | N_WBC_FS_P | D_Neu_FS_W | N_WBC_SSFS _Area |
| D_Lym_FLSS_ Area | N_WBC_FLFS _Area | D_Neu_FL_P | N_WBC_FL_C V | D_Neu_FS_W | N_WBC_FL_C V |
| D_Lym_FLSS_ Area | N_WBC_SS_C V | D_Neu_FL_W | N_WBC_FL_W | D_Neu_FLFS_ Area | N_WBC_FL_P |
| D_Lym_FLSS_ Area | N_WBC_FS_P | D_Neu_FL_W | N_WBC_FL_P | D_Neu_FLFS_ Area | N_WBC_FL_W |
| D_Lym_FLSS_ Area | N_WBC_SSFS _Area | D_Neu_FL_W | N_WBC_FS_W | D_Neu_FLFS_ Area | N_WBC_SS_P |
| D_Lym_FLSS_ Area | N_WBC_FL_C V | D_Neu_FL_W | N_WBC_FS_C V | D_Neu_FLFS_ Area | N_WBC_SS_W |
| D_Lym_FLFS_ Area | N_WBC_FL_W | D_Neu_FL_W | N_WBC_FLSS _Area | D_Neu_FLFS_ Area | N_WBC_FS_W |
| D_Lym_FLFS_ Area | N_WBC_SS_W | D_Neu_FL_W | N_WBC_FLFS _Area | D_Neu_FLFS_ Area | N_WBC_FS_P |
| D_Lym_FLFS_ Area | N_WBC_FS_C V | D_Neu_FL_W | N_WBC_SS_W | D_Neu_FLFS_ Area | N_WBC_FL_C V |
| D_Lym_FLFS_ Area | N_WBC_SS_P | D_Neu_FL_W | N_WBC_SS_C V | D_Neu_FLFS_ Area | N_WBC_SSFS _Area |
| D_Lym_FLFS_ Area | N_WBC_FS_W | D_Neu_FL_W | N_WBC_SSFS _Area | D_Neu_FLFS_ Area | N_WBC_FLFS _Area |
| D_Lym_FLFS_ Area | N_WBC_FL_P | D_Neu_FL_W | N_WBC_SS_P | D_Neu_FLFS_ Area | N_WBC_FLSS _Area |
| D_Lym_FLFS_ Area | N_WBC_FLSS _Area | D_Neu_FL_W | N_WBC_FS_P | D_Neu_FLFS_ Area | N_WBC_SS_C V |
| D_Lym_FLFS_ Area | N_WBC_FLFS _Area | D_Neu_FL_W | N_WBC_FL_C V | D_Neu_FLFS_ Area | N_WBC_FS_C V |
| D_Lym_FLFS_ Area | N_WBC_SS_C V | D_Neu_FLSS_ Area | N_WBC_FL_P | D_Neu_SS_C V | N_WBC_FL_W |
| D_Lym_FLFS_ Area | N_WBC_SSFS _Area | D_Neu_FLSS_ Area | N_WBC_FL_W | D_Neu_SS_C V | N_WBC_SS_P |
| D_Lym_FLFS_ Area | N_WBC_FS_P | D_Neu_FLSS_ Area | N_WBC_SS_P | D_Neu_SS_C V | N_WBC_FL_P |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Lym_FLFS_ Area | N_WBC_FL_C V | D_Neu_FLSS_ Area | N_WBC_SS_W | D_Neu_SS_C V | N_WBC_SS_W |
| D_Mon_FL_P | N_WBC_FS_W | D_Neu_FLSS_ Area | N_WBC_FS_P | D_Neu_SS_C V | N_WBC_FS_W |
| D_Mon_FL_P | N_WBC_FL_W | D_Neu_FLSS_ Area | N_WBC_FS_W | D_Neu_SS_C V | N_WBC_FS_P |
| D_Mon_FL_P | N_WBC_FS_C V | D_Neu_FLSS_ Area | N_WBC_FL_C V | D_Neu_SS_C V | N_WBC_FS_C V |
| D_Mon_FL_P | N_WBC_SS_W | D_Neu_FLSS_ Area | N_WBC_FS_C V | D_Neu_SS_C V | N_WBC_FLSS _Area |
| D_Mon_FL_P | N_WBC_SS_P | D_Neu_FLSS_ Area | N_WBC_SS_C V | D_Neu_SS_C V | N_WBC_FLFS _Area |
| D_Mon_FL_P | N_WBC_FL_P | D_Neu_FLSS_ Area | N_WBC_SSFS _Area | D_Neu_SS_C V | N_WBC_SS_C V |
| D_Mon_FL_P | N_WBC_FLSS _Area | D_Neu_FLSS_ Area | N_WBC_FLFS _Area | D_Neu_SS_C V | N_WBC_SSFS _Area |
| D_Mon_FL_P | N_WBC_FLFS _Area | D_Neu_FLSS_ Area | N_WBC_FLSS _Area | D_Neu_SS_C V | N_WBC_FL_C V |
| D_Mon_FL_P | N_WBC_FS_P | D_Neu_FS_C V | N_WBC_FL_W | D_Neu_SS_P | N_WBC_FL_W |
| D_Mon_FL_P | N_WBC_SS_C V | D_Neu_FS_C V | N_WBC_SS_P | D_Neu_SS_P | N_WBC_FL_P |
| D_Mon_FL_P | N_WBC_SSFS _Area | D_Neu_FS_C V | N_WBC_FL_P | D_Neu_SS_P | N_WBC_SS_P |
| D_Mon_FL_P | N_WBC_FL_C V | D_Neu_FS_C V | N_WBC_SS_W | D_Neu_SS_P | N_WBC_FS_W |
| D_Mon_FL_W | N_WBC_FL_W | D_Neu_FS_C V | N_WBC_FS_W | D_Neu_SS_P | N_WBC_SS_W |
| D_Mon_FL_W | N_WBC_SS_P | D_Neu_FS_C V | N_WBC_FS_P | D_Neu_SS_P | N_WBC_FS_C V |
| D_Mon_FL_W | N_WBC_FL_P | D_Neu_FS_C V | N_WBC_FLSS _Area | D_Neu_SS_P | N_WBC_FLSS _Area |
| D_Mon_FL_W | N_WBC_FS_W | D_Neu_FS_C V | N_WBC_FS_C V | D_Neu_SS_P | N_WBC_FS_P |
| D_Mon_FL_W | N_WBC_SS_W | D_Neu_FS_C V | N_WBC_FLFS _Area | D_Neu_SS_P | N_WBC_SS_C V |
| D_Mon_FL_W | N_WBC_FS_C V | D_Neu_FS_C V | N_WBC_SS_C V | D_Neu_SS_P | N_WBC_FLFS _Area |
| D_Mon_FL_W | N_WBC_FS_P | D_Neu_FS_P | N_WBC_FL_W | D_Neu_SS_P | N_WBC_SSFS _Area |
| D_Mon_FL_W | N_WBC_FLSS _Area | D_Neu_FS_P | N_WBC_SS_P | D_Neu_SS_P | N_WBC_FL_C V |
| D_Mon_FL_W | N_WBC_SS_C V | D_Neu_FS_P | N_WBC_SS_W | D_Neu_SS_W | N_WBC_FL_W |
| D_Mon_FL_W | N_WBC_FLFS _Area | D_Neu_FS_P | N_WBC_FL_P | D_Neu_SS_W | N_WBC_FL_P |
| D_Mon_FL_W | N_WBC_FL_C V | D_Neu_FS_P | N_WBC_FS_W | D_Neu_SS_W | N_WBC_SS_P |
| D_Mon_FL_W | N_WBC_SSFS _Area | D_Neu_FS_P | N_WBC_FS_P | D_Neu_SS_W | N_WBC_FS_W |
| D_Mon_FS_P | N_WBC_FL_W | D_Neu_FS_P | N_WBC_FS_C V | D_Neu_SS_W | N_WBC_SS_W |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Mon_FS_P | N_WBC_SS_P | D_Neu_FS_P | N_WBC_FLSS _Area | D_Neu_SS_W | N_WBC_FS_C V |
| D_Mon_FS_P | N_WBC_FL_P | D_Neu_FS_P | N_WBC_SS_C V | D_Neu_SS_W | N_WBC_FLSS _Area |
| D_Mon_FS_P | N_WBC_SS_W | D_Neu_FS_P | N_WBC_FLFS _Area | D_Neu_SS_W | N_WBC_FS_P |
| D_Mon_FS_P | N_WBC_FS_W | D_Neu_FS_W | N_WBC_FL_W | D_Neu_SS_W | N_WBC_FLFS _Area |
| D_Mon_FS_P | N_WBC_FS_C V | D_Neu_FS_W | N_WBC_SS_P | D_Neu_SS_W | N_WBC_SS_C V |
| D_Mon_FS_P | N_WBC_FS_P | D_Neu_FS_W | N_WBC_FL_P | D_Neu_SS_W | N_WBC_SSFS _Area |
| D_Mon_FS_P | N_WBC_FLSS _Area | D_Neu_FS_W | N_WBC_SS_W | D_Neu_SS_W | N_WBC_FL_C V |
| D_Mon_FS_P | N_WBC_SS_C V | D_Mon_SS_W | N_NEU_FLFS_ Area | D_Mon_SS_P | N_NEU_FS_C V |
| D_Mon_FS_P | N_WBC_FLFS _Area | D_Mon_SS_W | N_NEU_FLSS_ Area | D_Mon_SS_P | N_NEU_SS_W |
| D_Mon_FS_P | N_WBC_SSFS _Area | D_Mon_SS_W | N_NEU_FS_C V | D_Neu_SS_C V | N_NEU_FL_W |
| D_Mon_FS_P | N_WBC_FL_C V | D_Mon_SS_W | N_NEU_FS_W | D_Neu_FL_W | N_NEU_SS_P |
| D_Mon_FS_W | N_WBC_FL_W | D_Neu_FLSS_ Area | N_NEU_FL_P | D_Mon_FL_W | N_NEU_SS_W |
| D_Mon_FS_W | N_WBC_FL_P | D_Mon_SS_W | N_NEU_SS_W | D_Mon_FL_P | N_NEU_FLFS_ Area |
| D_Mon_FS_W | N_WBC_SS_P | D_Neu_FL_W | N_NEU_FL_W | D_Mon_FS_P | N_NEU_FL_W |
| D_Mon_FS_W | N_WBC_SS_W | D_Mon_SS_W | N_NEU_SS_C V | D_Neu_FL_W | N_NEU_FS_P |
| D_Mon_FS_W | N_WBC_FS_W | D_Neu_FL_W | N_NEU_FL_P | D_Neu_FLSS_ Area | N_NEU_SS_P |
| D_Mon_FS_W | N_WBC_FS_C V | D_Neu_FL_P | N_NEU_FL_W | D_Mon_FL_P | N_NEU_FS_W |
| D_Mon_FS_W | N_WBC_FLSS _Area | D_Neu_FL_W | N_NEU_FLFS_ Area | D_Mon_FL_W | N_NEU_SS_P |
| D_Mon_FS_W | N_WBC_FS_P | D_Neu_FL_C V | N_NEU_FL_P | D_Neu_FS_W | N_NEU_FL_W |
| D_Mon_FS_W | N_WBC_FLFS _Area | D_Mon_SS_W | N_NEU_SSFS_ Area | D_Neu_FS_P | N_NEU_FL_W |
| D_Mon_FS_W | N_WBC_SS_C V | D_Neu_FLFS_ Area | N_NEU_FL_P | D_Neu_FL_C V | N_NEU_FLFS_ Area |
| D_Mon_FS_W | N_WBC_FL_C V | D_Neu_FL_P | N_NEU_FLFS_ Area | D_Neu_FS_C V | N_NEU_FL_W |
| D_Mon_FS_W | N_WBC_SSFS _Area | D_Neu_FL_P | N_NEU_FS_C V | D_Neu_FLSS_ Area | N_NEU_SS_W |
| D_Mon_SS_P | N_WBC_FL_W | D_Neu_FL_W | N_NEU_FS_W | D_Mon_FL_W | N_NEU_SSFS_ Area |
| D_Mon_SS_P | N_WBC_FS_W | D_Neu_FL_W | N_NEU_FS_C V | D_Neu_FLFS_ Area | N_NEU_FL_W |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Mon_SS_P | N_WBC_SS_W | D_Neu_FL_W | N_NEU_FLSS_ Area | D_Mon_SS_P | N_NEU_SS_C V |
| D_Mon_SS_P | N_WBC_FL_P | D_Mon_SS_W | N_NEU_SS_P | D_Neu_SS_W | N_NEU_FLFS_ Area |
| D_Mon_SS_P | N_WBC_SS_P | D_Neu_FL_P | N_NEU_FS_W | D_Neu_FLSS_ Area | N_NEU_FS_W |
| D_Mon_SS_P | N_WBC_FS_C V | D_Neu_FL_W | N_NEU_SS_W | D_Neu_FLSS_ Area | N_NEU_FLFS_ Area |
| D_Mon_SS_P | N_WBC_FLSS _Area | D_Mon_SS_W | N_NEU_FL_C V | D_Mon_FL_P | N_NEU_FLSS_ Area |
| D_Mon_SS_P | N_WBC_SS_C V | D_Neu_FL_P | N_NEU_SS_C V | D_Neu_FLSS_ Area | N_NEU_FS_C V |
| D_Mon_SS_P | N_WBC_FLFS _Area | D_Neu_FL_P | N_NEU_FLSS_ Area | D_Mon_FS_W | N_NEU_FLSS_ Area |
| D_Mon_SS_P | N_WBC_FS_P | D_Mon_FL_W | N_NEU_FL_P | D_Neu_FL_C V | N_NEU_FS_W |
| D_Mon_SS_P | N_WBC_SSFS _Area | D_Mon_FS_W | N_NEU_FL_P | D_Neu_FL_C V | N_NEU_FLSS_ Area |
| D_Mon_SS_P | N_WBC_FL_C V | D_Neu_FL_W | N_NEU_SS_C V | D_Mon_FL_P | N_NEU_FS_C V |
| D_Mon_SS_W | N_WBC_FL_W | D_Mon_SS_W | N_NEU_FS_P | D_Neu_SS_W | N_NEU_FLSS_ Area |
| D_Mon_SS_W | N_WBC_FS_W | D_Mon_SS_P | N_NEU_FL_P | D_Neu_FLFS_ Area | N_NEU_FL_C V |
| D_Mon_SS_W | N_WBC_FS_C V | D_Mon_SS_P | N_NEU_FL_W | D_Mon_FS_W | N_NEU_FLFS_ Area |
| D_Mon_SS_W | N_WBC_FL_P | D_Neu_FL_P | N_NEU_SS_W | D_Neu_FLSS_ Area | N_NEU_FLSS_ Area |
| D_Mon_SS_W | N_WBC_FLSS _Area | D_Neu_FL_P | N_NEU_FL_P | D_Neu_SS_W | N_NEU_FS_W |
| D_Mon_SS_W | N_WBC_SS_W | D_Neu_FL_W | N_NEU_SSFS_ Area | D_Neu_SS_P | N_NEU_FLFS_ Area |
| D_Mon_SS_W | N_WBC_SS_C V | D_Neu_SS_C V | N_NEU_FL_P | D_Neu_FLSS_ Area | N_NEU_FS_P |
| D_Mon_SS_W | N_WBC_FLFS _Area | D_Mon_FL_W | N_NEU_FL_W | D_Neu_FL_P | N_NEU_SS_P |
| D_Mon_SS_W | N_WBC_SSFS _Area | D_Neu_SS_W | N_NEU_FL_P | D_Neu_FLSS_ Area | N_NEU_SS_C V |
| D_Mon_SS_W | N_WBC_SS_P | D_Neu_FS_C V | N_NEU_FL_P | D_Mon_FS_P | N_NEU_FLFS_ Area |
| D_Mon_SS_W | N_WBC_FL_C V | D_Neu_SS_P | N_NEU_FL_P | D_Neu_FL_W | N_NEU_FL_C V |
| D_Mon_SS_W | N_WBC_FS_P | D_Neu_FS_W | N_NEU_FL_P | D_Neu_SS_C V | N_NEU_FLFS_ Area |
| D_Neu_FL_C V | N_WBC_FL_W | D_Mon_FL_W | N_NEU_FLFS_ Area | D_Neu_SS_P | N_NEU_FS_W |
| D_Neu_FL_C V | N_WBC_FL_P | D_Neu_FLSS_ Area | N_NEU_FL_C V | D_Neu_SS_P | N_NEU_FLSS_ Area |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Neu_FL_C V | N_WBC_SS_P | D_Neu_FL_P | N_NEU_SSFS_ Area | D_Neu_FLSS_ Area | N_NEU_SSFS_ Area |
| D_Neu_FL_C V | N_WBC_FS_W | D_Mon_FS_P | N_NEU_FL_P | D_Neu_FLFS_ Area | N_NEU_SS_P |
| D_Neu_FL_C V | N_WBC_SS_W | D_Mon_FL_W | N_NEU_FS_W | D_Neu_FL_C V | N_NEU_SS_W |
| D_Neu_FL_C V | N_WBC_FS_C V | D_Neu_FL_C V | N_NEU_FL_W | D_Mon_FL_W | N_NEU_SS_C V |
| D_Neu_FL_C V | N_WBC_FLSS _Area | D_Neu_SS_W | N_NEU_FL_W | D_Neu_SS_W | N_NEU_SS_W |
| D_Neu_FL_C V | N_WBC_FS_P | D_Mon_FS_W | N_NEU_FL_W | D_Neu_SS_W | N_NEU_FS_C V |
| D_Neu_FL_C V | N_WBC_FLFS _Area | D_Mon_FL_P | N_NEU_FL_P | D_Mon_FS_P | N_NEU_FS_W |
| D_Neu_FL_C V | N_WBC_SS_C V | D_Neu_SS_P | N_NEU_FL_W | D_Neu_SS_C V | N_NEU_FS_W |
| D_Neu_FL_C V | N_WBC_SSFS _Area | D_Mon_SS_P | N_NEU_FLFS_ Area | D_Mon_SS_P | N_NEU_SSFS_ Area |
| D_Neu_FL_C V | N_WBC_FL_C V | D_Neu_FS_P | N_NEU_FL_P | D_Mon_FS_P | N_NEU_FLSS_ Area |
| D_Neu_FL_P | N_WBC_FL_W | D_Mon_FL_W | N_NEU_FLSS_ Area | D_Neu_SS_C V | N_NEU_FLSS_ Area |
| D_Neu_FL_P | N_WBC_FS_C V | D_Mon_FL_P | N_NEU_FL_W | D_Mon_FS_W | N_NEU_SS_W |
| D_Neu_FL_P | N_WBC_FS_W | D_Mon_SS_P | N_NEU_FLSS_ Area | D_Neu_SS_P | N_NEU_FS_C V |
| D_Neu_FL_P | N_WBC_SS_W | D_Mon_SS_P | N_NEU_FS_W | D_Neu_FL_C V | N_NEU_SS_P |
| D_Mon_SS_W | N_NEU_FL_P | D_Mon_FL_W | N_NEU_FS_C V | D_Mon_FL_W | N_NEU_FS_P |
| D_Mon_SS_W | N_NEU_FL_W | D_Neu_FLSS_ Area | N_NEU_FL_W | | |

Preferably, combination of D_Mon_SS_W and N_WBC_FL_W can be used to calculate the infection marker parameter for diagnosis of sepsis.

Patients with bacterial infection can be divided into common infection and severe infection according to their infection severity and organ function status. The clinical treatment methods and nursing measures of the two infections are different. Therefore, the identification between common infection and severe infection can help doctors identify patients with life-threatening diseases and allocate medical resources more reasonably.

To this end, in an application scenario of identification between common infection and severe infection, the processor 140 may be configured to output prompt information indicating that the subject has severe infection when the infection marker parameter satisfies a third preset condition. Herein, the third preset condition may likewise be that the value of the infection marker parameter is greater than a preset threshold. The preset threshold can be determined based on a specific combination of parameters and the blood cell analyzer.

Herein, the infection marker parameter may be calculated by combining the various parameters listed in Table 3 for identification between common infection and severe infection. In Table 3, for eosinophil population in the first test sample, D_EOS_FS_W is a forward scatter intensity distribution width, D_EOS_FS_P is a forward scatter intensity distribution center of gravity, D_EOS_SS_W is a side scatter intensity distribution width, D_EOS_SS_P is a side scatter intensity distribution center of gravity, D_EOS_FL_W is a fluorescence intensity distribution width, and D_EOS_FL_P is a fluorescence intensity distribution center of gravity.

Table 3 Parameter combinations for identification between common infection and severe infection

| First leukocyte parameter | Second leukocyte parameter | First leukocyte parameter | Second leukocyte parameter | First leukocyte parameter | Second leukocyte parameter |
|---|---|---|---|---|---|
| D_Mon_SS_W | N_WBC_FL_W | D_Lym_FLFS_ Area | N_WBC_SS_W | D_Mon_FS_P | N_WBC_SS_P |
| D_Neu_FL_W | N_WBC_FL_W | D_Neu_FLFS_ Area | N_WBC_FS_W | D_Neu_FL_C V | N_WBC_SS_P |
| D_Neu_FLSS_ Area | N_WBC_FL_W | D_Mon_FL_P | N_WBC_FS_C V | D_Mon_FL_P | N_WBC_SS_C V |
| D_Neu_FL_C V | N_WBC_FL_W | D_Eos_FL_W | N_WBC_FLFS _Area | D_Neu_FL_P | N_WBC_FS_P |
| D_Mon_FL_W | N_WBC_FL_W | D_Neu_FL_P | N_WBC_SSFS _Area | D_Neu_SS_P | N_WBC_SS_C V |
| D_Neu_FLFS_ Area | N_WBC_FL_W | D_Mon_FS_P | N_WBC_FS_W | D_Neu_FL_C V | N_WBC_FS_C V |
| D_Eos_SS_P | N_WBC_FL_W | D_Mon_FL_W | N_WBC_SSFS _Area | D_Neu_SS_W | N_WBC_SS_P |
| D_Eos_FL_P | N_WBC_FL_W | D_Neu_FLSS_ Area | N_WBC_FS_C V | D_Mon_FS_W | N_WBC_FS_C V |
| D_Neu_FL_P | N_WBC_FL_W | D_Mon_FL_P | N_WBC_SS_W | D_Lym_FLSS_ Area | N_WBC_SS_P |
| D_Eos_SS_W | N_WBC_FL_W | D_Neu_FL_P | N_WBC_SS_P | D_Eos_FL_P | N_WBC_SS_P |
| D_Neu_SS_P | N_WBC_FL_W | D_Neu_FL_C V | N_WBC_FS_W | D_Neu_FL_W | N_WBC_FL_C V |
| D_Mon_FS_P | N_WBC_FL_W | D_Neu_SS_P | N_WBC_FS_W | D_Mon_FL_P | N_WBC_SSFS _Area |
| D_Eos_FS_W | N_WBC_FL_W | D_Neu_FLFS_ Area | N_WBC_FL_C V | D_Lym_FLSS_ Area | N_WBC_FS_C V |
| D_Mon_FS_W | N_WBC_FL_W | D_Neu_FLFS_ Area | N_WBC_FS_C V | D_Mon_FS_W | N_WBC_SS_P |
| D_Eos_FS_P | N_WBC_FL_W | D_Lym_FLFS_ Area | N_WBC_SSFS _Area | D_Neu_FS_P | N_WBC_SS_P |
| D_Neu_FLSS_ Area | N_WBC_FL_P | D_Eos_FS_P | N_WBC_FS_W | D_Neu_SS_C V | N_WBC_SS_P |
| D_Eos_FL_W | N_WBC_FL_W | D_Neu_SS_W | N_WBC_FS_W | D_Neu_FS_W | N_WBC_SS_P |
| D_Neu_FLFS_ Area | N_WBC_FL_P | D_Neu_FLSS_ Area | N_WBC_FL_C V | D_Neu_FS_C V | N_WBC_SS_P |
| D_Neu_SS_W | N_WBC_FL_W | D_Neu_FLSS_ Area | N_WBC_SS_C V | D_Eos_FL_W | N_WBC_SS_P |
| D_Lym_FLFS_ Area | N_WBC_FL_W | D_Eos_FL_P | N_WBC_FS_W | D_Lym_FLFS_ Area | N_WBC_SS_C V |
| D_Mon_FL_P | N_WBC_FL_W | D_Neu_FLFS_ Area | N_WBC_SS_C V | D_Neu_FS_P | N_WBC_FS_C V |
| D_Neu_FS_W | N_WBC_FL_W | D_Lym_FLSS_ Area | N_WBC_SS_W | D_Eos_FS_P | N_WBC_FS_C V |
| D Lym FLSS_ Area | N_WBC_FL_W | D_Eos_SS_W | N_WBC_FS_W | D_Eos_SS_P | N_WBC_SS_P |
| D_Neu_FS_P | N_WBC_FL_W | D_Mon_FS_W | N_WBC_FS_W | D_Eos_SS_W | N_WBC_SS_P |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Mon_SS_W | N_WBC_FL_P | D_Neu_SS_C V | N_WBC_FS_W | D_Eos_FS_W | N_WBC_FS_C V |
| D_Neu_FS_C V | N_WBC_FL_W | D_Neu_SS_P | N_WBC_SS_W | D_Neu_SS_C V | N_WBC_FS_C V |
| D_Neu_SS_C V | N_WBC_FL_W | D_Neu_FS_C V | N_WBC_FS_W | D_Neu_FS_W | N_WBC_FS_C V |
| D_Mon_SS_W | N_WBC_FLSS _Area | D_Mon_FL_W | N_WBC_SS_C V | D_Eos_SS_W | N_WBC_FS_C V |
| D_Lym_FLFS_ Area | N_WBC_FLSS _Area | D_Mon_FL_W | N_WBC_FS_P | D_Mon_FL_P | N_WBC_FS_P |
| D_Mon_SS_W | N_WBC_FLFS _Area | D_Neu_FS_W | N_WBC_FS_W | D_Neu_FS_C V | N_WBC_FS_C V |
| D_Neu_FL_W | N_WBC_FLSS _Area | D_Eos_FL_W | N_WBC_FS_W | D_Neu_SS_P | N_WBC_SSFS _Area |
| D_Neu_FL_W | N_WBC_FLFS _Area | D_Neu_FS_P | N_WBC_FS_W | D_Mon_FL_W | N_WBC_FL_C V |
| D_Neu_FL_W | N_WBC_FL_P | D_Eos_SS_P | N_WBC_FS_W | D_Neu_SS_W | N_WBC_SS_C V |
| D_Mon_FL_W | N_WBC_FLSS _Area | D_Neu_FL_W | N_WBC_FS_P | D_Eos_FL_W | N_WBC_FS_C V |
| D_Neu_FL_P | N_WBC_FLSS _Area | D_Neu_FLSS_ Area | N_WBC_SSFS _Area | D_Eos_FL_P | N_WBC_FS_C V |
| D Lym FLFS_ Area | N_WBC_FLFS _Area | D_Neu_FLSS_ Area | N_WBC_FS_P | D_Mon_FS_P | N_WBC_SS_C V |
| D_Mon_SS_W | N_WBC_FS_C V | D_Neu_FLFS_ Area | N_WBC_FS_P | D_Eos_SS_P | N_WBC_FS_C V |
| D_Mon_SS_W | N_WBC_FS_W | D_Eos_FS_W | N_WBC_FS_W | D_Neu_FL_P | N_WBC_FL_C V |
| D_Neu_FL_P | N_WBC_FLFS _Area | D_Mon_FS_P | N_WBC_SS_W | D_Neu_SS_W | N_WBC_SSFS _Area |
| D_Mon_FL_W | N_WBC_FLFS _Area | D_Neu_FS_C V | N_WBC_SS_W | D_Mon_FS_W | N_WBC_SS_C V |
| D_Mon_FL_W | N_WBC_FL_P | D_Mon_FS_P | N_WBC_FS_C V | D_Mon_FS_P | N_WBC_SSFS _Area |
| D_Eos_FS_W | N_WBC_FL_P | D_Lym_FLSS_ Area | N_WBC_FS_W | D_Eos_FS_P | N_WBC_FS_P |
| D_Eos_SS_W | N_WBC_FL_P | D_Neu_SS_W | N_WBC_SS_W | D_Neu_FS_P | N_WBC_SS_C V |
| D_Eos_SS_P | N_WBC_FL_P | D_Neu_SS_C V | N_WBC_SS_W | D_Neu_SS_P | N_WBC_FS_P |
| D_Lym_FLSS_ Area | N_WBC_FLSS _Area | D_Neu_FL_C V | N_WBC_SS_W | D_Eos_FS_W | N_WBC_FS_P |
| D_Neu_FL_C V | N_WBC_FL_P | D_Eos_FS_P | N_WBC_SS_W | D_Eos_SS_W | N_WBC_FS_P |
| D_Eos_FL_P | N_WBC_FL_P | D_Neu_FS_W | N_WBC_SS_W | D_Lym_FLSS_ Area | N_WBC_SSFS _Area |
| D_Mon_FL_P | N_WBC_FLSS _Area | D Lym FLFS_ Area | N_WBC_SS_P | D_Neu_FL_C V | N_WBC_SSFS _Area |
| D_Eos_FS_P | N_WBC_FL_P | D_Eos_FL_P | N_WBC_SS_W | D_Eos_FL_P | N_WBC_FS_P |
| D_Mon_SS_W | N_WBC_SS_W | D_Neu_FLFS_ Area | N_WBC_SSFS _Area | D_Mon_FS_P | N_WBC_FS_P |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Mon_FL_P | N_WBC_FLFS _Area | D_Neu_SS_P | N_WBC_FS_C V | D_Neu_FL_C V | N_WBC_SS_C V |
| D_Eos_FL_W | N_WBC_FL_P | D_Mon_FS_W | N_WBC_SS_W | D_Eos_FL_W | N_WBC_FS_P |
| D_Neu_SS_P | N_WBC_FL_P | D_Neu_FS_P | N_WBC_SS_W | D_Lym_FLSS_ Area | N_WBC_SS_C V |
| D_Mon_FS_W | N_WBC_FL_P | D_Eos_SS_P | N_WBC_SS_W | D_Eos_SS_P | N_WBC_FS_P |
| D_Mon_SS_W | N_WBC_SS_C V | D_Mon_FL_P | N_WBC_SS_P | D_Neu_SS_C V | N_WBC_SS_C V |
| D_Neu_FLSS_ Area | N_WBC_FLSS _Area | D_Eos_FS_P | N_WBC_SS_P | D_Neu_SS_W | N_WBC_FS_P |
| D_Neu_FL_W | N_WBC_FS_W | D_Eos_FS_W | N_WBC_SS_P | D_Neu_FS_C V | N_WBC_SS_C V |
| D_Neu_FLFS_ Area | N_WBC_FLSS _Area | D_Eos_FL_W | N_WBC_SS_W | D_Mon_FS_W | N_WBC_SSFS _Area |
| D_Mon_FS_P | N_WBC_FLSS _Area | D_Neu_SS_P | N_WBC_SS_P | D_Neu_FS_W | N_WBC_SS_C V |
| D_Mon_FS_P | N_WBC_FL_P | D_Neu_SS_W | N_WBC_FS_C V | D_Neu_FL_C V | N_WBC_FS_P |
| D_Mon_FL_W | N_WBC_FS_W | D_Eos_SS_W | N_WBC_SS_W | D_Eos_FS_P | N_WBC_SSFS _Area |
| D_Neu_SS_P | N_WBC_FLSS _Area | D_Eos_FS_W | N_WBC_SS_W | D_Lym_FLSS_ Area | N_WBC_FS_P |
| D_Neu_FL_P | N_WBC_FL_P | D_Neu_FL_W | N_WBC_SS_P | D_Eos_FS_P | N_WBC_SS_C V |
| D_Neu_FL_W | N_WBC_FS_C V | D_Mon_SS_P | N_WBC_FL_W | D_Neu_FS_P | N_NEU_FL_W |
| D_Mon_SS_W | N_WBC_SSFS _Area | D_Mon_SS_W | N_NEU_FL_W | D_Mon_SS_P | N_NEU_FS_C V |
| D_Mon_SS_W | N_WBC_SS_P | D_Mon_SS_W | N_NEU_FL_P | D_Neu_FS_W | N_NEU_FL_W |
| D_Neu_SS_W | N_WBC_FL_P | D_Mon_SS_W | N_NEU_FLFS_ Area | D_Neu_FLFS_ Area | N_NEU_FL_W |
| D_Neu_FL_P | N_WBC_FS_W | D_Mon_SS_W | N_NEU_FLSS_ Area | D_Neu_SS_C V | N_NEU_FL_P |
| D Lym FLSS_ Area | N_WBC_FLFS _Area | D_Neu_FLSS_ Area | N_NEU_FL_P | D_Mon_SS_P | N_WBC_FS_W |
| D_Neu_FL_C V | N_WBC_FLSS _Area | D_Neu_FL_W | N_NEU_FL_W | D_Neu_FL_P | N_NEU_SSFS_ Area |
| D_Neu_FLSS_ Area | N_WBC_FLFS _Area | D_Mon_SS_W | N_NEU_FS_W | D_Mon_SS_P | N_NEU_SS_W |
| D_Neu_FS_W | N_WBC_FL_P | D_Neu_FL_P | N_NEU_FL_W | D_Mon_FS_P | N_NEU_FL_P |
| D_Mon_FS_W | N_WBC_FLSS _Area | D_Neu_FLFS_ Area | N_NEU_FL_P | D_Mon_SS_P | N_WBC_FLFS _Area |
| D_Neu_FS_C V | N_WBC_FL_P | D_Mon_SS_W | N_NEU_FS_C V | D_Neu_FLSS_ Area | N_NEU_FL_C V |
| D_Mon_FL_P | N_WBC_FL_P | D_Mon_SS_W | N_NEU_SS_W | D_Neu_FS_W | N_NEU_FL_P |
| D_Neu_SS_W | N_WBC_FLSS _Area | D_Mon_SS_W | N_NEU_SS_C V | D_Mon_FL_P | N_NEU_FL_P |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Neu_FL_P | N_WBC_SS_W | D_Neu_FL_W | N_NEU_FLFS_ Area | D_Mon_SS_P | N_WBC_SS_C V |
| D_Neu_FS_P | N_WBC_FLSS _Area | D_Neu_FL_P | N_NEU_FLFS_ Area | D_Mon_FL_W | N_NEU_SSFS_ Area |
| D_Mon_FL_P | N_WBC_FS_W | D_Neu_FL_W | N_NEU_FL_P | D_Neu_FS_P | N_NEU_FL_P |
| D_Neu_FL_W | N_WBC_SS_W | D_Mon_SS_P | N_NEU_FL_W | D_Neu_FL_C V | N_NEU_FLFS_ Area |
| D_Mon_FS_P | N_WBC_FLFS _Area | D_Mon_SS_W | N_NEU_SSFS_ Area | D_Mon_FL_W | N_NEU_SS_P |
| D_Neu_FLFS_ Area | N_WBC_FLFS _Area | D_Neu_FL_C V | N_NEU_FL_P | D_Mon_FS_W | N_NEU_FLSS_ Area |
| D_Eos_SS_W | N_WBC_FLSS _Area | D_Mon_FL_W | N_NEU_FL_W | D_Mon_FS_W | N_NEU_FLFS_ Area |
| D_Mon_FL_W | N_WBC_FS_C V | D_Mon_FL_W | N_NEU_FL_P | D_Neu_SS_W | N_NEU_FLFS_ Area |
| D_Neu_FL_P | N_WBC_FS_C V | D_Mon_SS_P | N_WBC_FL_P | D_Mon_FL_P | N_NEU_FS_W |
| D_Eos_FL_P | N_WBC_FLSS _Area | D_Mon_FL_W | N_NEU_FLFS_ Area | D_Neu_SS_P | N_NEU_FLFS_ Area |
| D_Neu_SS_P | N_WBC_FLFS _Area | D_Neu_FL_P | N_NEU_FS_W | D_Neu_FLFS_ Area | N_NEU_FL_C V |
| D_Neu_FS_C V | N_WBC_FLSS _Area | D_Neu_FL_P | N_NEU_FS_C V | D_Mon_FS_P | N_NEU_FLFS_ Area |
| D_Eos_FS_W | N_WBC_FLSS _Area | D_Neu_FL_W | N_NEU_FLSS_ Area | D_Mon_FL_P | N_NEU_FLSS_ Area |
| D_Neu_FS_W | N_WBC_FLSS _Area | D_Neu_FL_P | N_NEU_FLSS_ Area | D_Neu_FLSS_ Area | N_NEU_FLFS_ Area |
| D_Mon_SS_W | N_WBC_FL_C V | D_Mon_SS_W | N_NEU_SS_P | D_Mon_SS_P | N_NEU_SS_C V |
| D_Neu_SS_C V | N_WBC_FLSS _Area | D_Neu_FL_W | N_NEU_FS_W | D_Neu_FLSS_ Area | N_NEU_SS_P |
| D_Mon_SS_W | N_WBC_FS_P | D_Mon_SS_P | N_NEU_FL_P | D_Mon_SS_P | N_WBC_FS_C V |
| D_Eos_FS_P | N_WBC_FLSS _Area | D_Mon_FS_W | N_NEU_FL_W | D_Neu_FLSS_ Area | N_NEU_SS_W |
| D Lym FLFS_ Area | N_WBC_FL_P | D_Mon_SS_W | N_NEU_FL_C V | D_Neu_SS_W | N_NEU_FLSS_ Area |
| D_Neu_FL_C V | N_WBC_FLFS _Area | D_Mon_FS_W | N_NEU_FL_P | D_Neu_SS_C V | N_NEU_FLFS_ Area |
| D_Neu_SS_W | N_WBC_FLFS _Area | D_Neu_FL_W | N_NEU_SS_W | D_Neu_FL_C V | N_NEU_FLSS_ Area |
| D_Neu_FL_P | N_WBC_SS_C V | D_Mon_FL_W | N_NEU_FS_W | D_Neu_SS_P | N_NEU_FLSS_ Area |
| D_Eos_SS_P | N_WBC_FLSS _Area | D_Neu_FL_W | N_NEU_FS_C V | D_Neu_FLSS_ Area | N_NEU_FS_W |
| D Lym FLSS_ Area | N_WBC_FL_P | D_Mon_SS_P | N_NEU_FLFS_ Area | D_Neu_FLFS_ Area | N_NEU_FLFS_ Area |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Neu_FS_P | N_WBC_FL_P | D_Mon_FL_W | N_NEU_FLSS_ Area | D_Neu_FLSS_ Area | N_NEU_FLSS_ Area |
| D_Neu_SS_C V | N_WBC_FL_P | D_Neu_SS_P | N_NEU_FL_W | D_Neu_FLFS_ Area | N_NEU_SS_P |
| D_Mon_FS_W | N_WBC_FLFS _Area | D_Neu_SS_W | N_NEU_FL_W | D_Neu_FL_W | N_NEU_SS_P |
| D_Neu_FLFS_ Area | N_WBC_SS_W | D_Neu_FL_P | N_NEU_SS_W | D_Mon_FS_P | N_NEU_FLSS_ Area |
| D_Neu_FS_C V | N_WBC_FLFS _Area | D_Neu_FL_C V | N_NEU_FL_W | D_Neu_FS_P | N_NEU_FLFS_ Area |
| D_Mon_FL_W | N_WBC_SS_P | D_Mon_SS_W | N_NEU_FS_P | D_Neu_SS_W | N_NEU_FS_W |
| D_Eos_SS_W | N_WBC_FLFS _Area | D_Mon_SS_P | N_NEU_FLSS_ Area | D_Mon_FL_W | N_NEU_SS_C V |
| D_Eos_FL_W | N_WBC_FLSS _Area | D_Neu_FL_P | N_NEU_SS_C V | D_Neu_SS_P | N_NEU_FS_W |
| D_Neu_FS_P | N_WBC_FLFS _Area | D_Mon_FL_P | N_NEU_FL_W | D_Neu_FL_C V | N_NEU_FS_W |
| D_Neu_FLFS_ Area | N_WBC_SS_P | D_Mon_FL_W | N_NEU_FS_C V | D_Neu_FS_C V | N_NEU_FLFS_ Area |
| D_Eos_FS_W | N_WBC_FLFS _Area | D_Neu_FLSS_ Area | N_NEU_FL_W | D_Neu_FS_W | N_NEU_FLFS_ Area |
| D_Eos_FL_P | N_WBC_FLFS _Area | D_Mon_SS_P | N_WBC_FLSS _Area | D_Neu_FLSS_ Area | N_NEU_FS_C V |
| D_Mon_FL_W | N_WBC_SS_W | D_Mon_FS_P | N_NEU_FL_W | D_Neu_FL_W | N_NEU_FS_P |
| D_Neu_FL_W | N_WBC_SSFS _Area | D_Neu_FL_W | N_NEU_SS_C V | D_Neu_FLFS_ Area | N_NEU_SS_W |
| D Lym FLFS_ Area | N_WBC_FS_W | D_Neu_SS_W | N_NEU_FL_P | D_Mon_FL_W | N_NEU_FS_P |
| D_Neu_FS_W | N_WBC_FLFS _Area | D_Neu_FL_P | N_NEU_FL_P | D_Mon_FL_P | N_NEU_FS_C V |
| D Lym FLFS_ Area | N_WBC_FS_C V | D_Mon_SS_P | N_WBC_SS_W | D_Mon_FS_W | N_NEU_FS_W |
| D_Neu_FLSS_ Area | N_WBC_SS_W | D_Mon_SS_P | N_NEU_FS_W | D_Mon_FS_P | N_NEU_FS_W |
| D_Neu_FLSS_ Area | N_WBC_SS_P | D_Neu_SS_C V | N_NEU_FL_W | D_Mon_FS_W | N_NEU_SS_W |
| D_Neu_SS_C V | N_WBC_FLFS _Area | D_Neu_SS_P | N_NEU_FL_P | D_Mon_SS_P | N_NEU_SSFS_ Area |
| D_Neu_FL_W | N_WBC_SS_C V | D_Mon_FL_P | N_NEU_FLFS_ Area | D_Neu_SS_C V | N_NEU_FLSS_ Area |
| D_Neu_FLSS_ Area | N_WBC_FS_W | D_Neu_FS_C V | N_NEU_FL_P | D_Neu_FLFS_ Area | N_NEU_FLSS_ Area |
| D_Eos_FS_P | N_WBC_FLFS _Area | D_Mon_FL_W | N_NEU_SS_W | D_Neu_FLSS_ Area | N_NEU_FS_P |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Eos_SS_P | N_WBC_FLFS _Area | D_Neu_FL_W | N_NEU_SSFS_ Area | D_Neu_FS_C V | N_NEU_FL_W |

Preferably, combination of D_Mon_SS_W and N_WBC_FL_W can be used to calculate the infection marker parameter for identification between common infection and severe infection.

In the application scenario of infection monitoring, the subject is an infected patient (that is, a patient with infectious inflammation), especially a patient with severe infection or sepsis, for example, the subject is a patient with severe infection or sepsis in an intensive care unit. Sepsis is a serious infectious disease with high incidence and case fatality rate. The condition of patients with sepsis fluctuates greatly and requires daily monitoring to prevent patients from deterioration that might go untreated in a timely manner. Therefore, it is very important to determine progress and treatment effect of sepsis patients with clinical symptoms combined with laboratory test results.

To this end, the processor 140 may be configured to monitor a progression in the infection status of the subject based on infection marker parameters.

In some embodiments, the processor 140 may be further configured to monitor a progression in the infection status of the subject by:

obtaining multiple values of the infection marker parameter, which are obtained by multiple tests, in particular at least three tests of a blood sample from the subject at different time points; and
determining whether the infection status of the subject has improved or not according to a changing trend of the multiple values of the infection marker parameter obtained by the multiple tests.

In specific examples, the processor 140 may be further configured to: when the multiple values of the infection marker parameter obtained by the multiple tests gradually tends to decrease, output prompt information indicating that the infection status of the subject is improving; and when the multiple values of the infection marker parameter obtained by the multiple tests gradually increases, output prompt information indicating that the infection status of the subject is aggravated. The multiple tests herein can be continuous detections every day, or they can be regularly spaced multiple tests.

For example, values of the infection marker parameter of a patient are obtained for several consecutive days, such as 7 days, after the patient is diagnosed to have sepsis. When these values of the infection marker parameter show a downward trend, the infection status of the patient is considered to be improving, and a prompt of improvement is given.

In other embodiments, the processor 140 may also be further configured to prompt the progression in the infection status of the subject by:

obtaining a current value of the infection marker parameter obtained by a current detection of a current blood sample from the subject, and obtaining a prior value of the infection marker parameter obtained by a previous detection of a previous blood sample from the subject, such as a prior value obtained in a blood routine test on the previous day; and
monitoring the progression in the infection status of the subject based on a comparison of the prior value of the infection marker parameter with a first threshold and a comparison of the prior value of the infection marker parameter with the current value of the infection marker parameter.

In a specific example, as shown in FIG. 11, the processor 140 may be further configured to, when the prior value of the infection marker parameter is greater than or equal to the first threshold:

if the current value of the infection marker parameter (i.e., the current result in FIG. 11) is greater than the prior value of the infection marker parameter (i.e., the previous result in FIG. 11) and the difference between the two is greater than a second threshold, output prompt information indicating that the condition of the subject is aggravated;
if the current value of the infection marker parameter is less than the prior value of the infection marker parameter and the difference between the two is greater than the second threshold, and the current value of the infection marker parameter is less than the first threshold, output prompt information indicating that the condition of the subject is improving and the degree of infection is decreasing;
if the current value of the infection marker parameter is less than the prior value of the infection marker parameter and the difference between the two is greater than the second threshold, but the current value of the infection marker parameter is greater than or equal to the first threshold, output prompt information indicating that the condition of the subject is improving but the infection is still heavy or skip outputting any prompt information; and
if the difference between the current value of the infection marker parameter and the prior value of the infection marker parameter is not greater than the second threshold, output prompt information indicating that the condition of the subject has not improved significantly and the infection is still heavy or skip outputting any prompt information.

Further, as shown in FIG. 11, the processor 140 may be configured to: when the prior value of the infection marker parameter is less than the first threshold:

if the current value of the infection marker parameter is less than the prior value of the infection marker parameter and the difference between the two is greater than the second threshold, output prompt information indicating that the condition of the subject is improving and the degree of infection is decreasing;
if the current value of the infection marker parameter is greater than the prior value of the infection marker parameter and the difference between the two is greater than the second threshold, and the current value of the infection marker parameter is greater than the first threshold, output prompt information indicating that the condition of the subject is aggravated and the infection is relatively serious;
if the current value of the infection marker parameter is greater than the prior value of the infection marker parameter and the difference between the two is greater than the second threshold, but the current value of the infection marker parameter is less than the first threshold, output prompt information indicating fluctuations in the condition of the subject or possible aggravation of the infection or skip outputting any prompt information; and
if the difference between the current value of the infection marker parameter and the prior value of the infection marker parameter is not greater than the second threshold, output prompt information indicating that the infection of the subject is not aggravated or skip outputting any prompt information.

In the embodiment shown in FIG. 11, when the infection marker parameter is used to monitor a progression in an infection status of a patient with severe infection, the first threshold may be a preset threshold for determining whether the patient has severe infection. And when the infection marker parameter is used to monitor a progression in an infection status of a patient with sepsis, the first threshold may be a preset threshold for determining whether the patient has sepsis.
Herein, for example, combination of D_Mon_SS_W and N_WBC_FL_W is preferably used to calculate the infection marker parameter for infection monitoring.
In the application scenario of analysis of sepsis prognosis, the subject is a sepsis patient who has received treatment. In this regard, the processor 140 may be further configured to determine whether sepsis prognosis of the subject is good based on the infection marker parameter. For example, when the value of the infection marker parameter is greater than a preset threshold, sepsis prognosis of the subject is determined to be good. The preset threshold can be determined based on a specific combination of parameters and the blood cell analyzer.
Herein, for example, combination of D_Mon_SS_W and N_WBC_FL_W is preferably used to calculate the infection marker parameter for determining whether sepsis prognosis of the subject is good or not.
Infectious diseases can be divided into different types of infection such as bacterial infection, viral infection, and fungal infection, among which bacterial infection and viral infection are the most common. While the clinical symptoms of the two infections are roughly the same, the treatments are completely different, so the type of infection needs to be identified to choose the correct treatment method. To this end, the processor 140 may be further configured to determine whether the subject's infection type is a viral infection or a bacterial infection based on the infection marker parameter.
Herein, for example, the infection marker parameter may be calculated by combining the various parameters listed in Table 4 for identification between bacterial infection and viral infection.

Table 4 Parameter combinations for identification between bacterial infection and viral infection

| First leukocyte parameter | Second leukocyte parameter | First leukocyte parameter | Second leukocyte parameter | First leukocyte parameter | Second leukocyte parameter |
|---|---|---|---|---|---|
| D Lym FLFS_ Area | N_WBC_FLFS _Area | D_Mon_FL_W | N_WBC_FS_W | D_Lym_FS_P | N_WBC_FL_W |
| D Lym FLFS_ Area | N_WBC_FLSS _Area | D_Neu_SS_P | N_WBC_FL_W | D_Neu_SS_W | N_WBC_FLFS _Area |
| D_Neu_FLSS_ Area | N_WBC_FS_P | D_Neu_SS_P | N_WBC_FS_W | D_Mon_SS_P | N_WBC_FS_W |
| D_Neu_FLSS_ Area | N_WBC_FL_P | D_Neu_FLFS_ Area | N_WBC_FLFS _Area | D_Mon_FL_P | N_WBC_FL_W |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Neu_FLSS_ Area | N_WBC_FS_W | D_Mon_FL_P | N_WBC_FL_P | D_Lym_FL_C V | N_WBC_FL_W |
| D Lym FLFS_ Area | N_WBC_FS_W | D_Neu_FL_P | N_WBC_FL_P | D_Neu_FS_C V | N_WBC_FS_W |
| D_Neu_FLFS_ Area | N_WBC_FL_P | D_Mon_SS_W | N_WBC_FL_W | D_Neu_FL_C V | N_WBC_FLFS _Area |
| D_Neu_FLSS_ Area | N_WBC_FL_W | D_Neu_FL_P | N_WBC_FS_W | D_Lym_SS_C V | N_WBC_FS_W |
| D_Neu_FLSS_ Area | N_WBC_FS_C V | D_Neu_FS_C V | N_WBC_FL_P | D_Lym_FS_P | N_WBC_FS_W |
| D Lym FLFS_ Area | N_WBC_SSFS _Area | D_Lym_FS_C V | N_WBC_FL_P | D_Lym_SS_W | N_WBC_FS_W |
| D_Neu_FLSS_ Area | N_WBC_SS_W | D_Neu_FS_P | N_WBC_FL_P | D_Mon_FS_P | N_WBC_FS_W |
| D_Neu_FLSS_ Area | N_WBC_SS_P | D_Neu_FL_W | N_WBC_FL_W | D_Lym_FL_W | N_WBC_FS_W |
| D_Neu_FLFS_ Area | N_WBC_FS_P | D_Neu_SS_W | N_WBC_FL_W | D_Neu_FL_P | N_WBC_FLFS _Area |
| D_Neu_FLSS_ Area | N_WBC_FLSS _Area | D_Neu_FS_W | N_WBC_FL_P | D_Lym_FL_P | N_WBC_FS_W |
| D_Neu_FLSS_ Area | N_WBC_SS_C V | D_Lym_SS_C V | N_WBC_FL_P | D_Neu_FS_P | N_WBC_FS_W |
| D_Neu_FLSS_ Area | N_WBC_FLFS _Area | D_Neu_FL_C V | N_WBC_FL_W | D_Neu_SS_P | N_WBC_FLSS _Area |
| D_Neu_FLSS_ Area | N_WBC_SSFS _Area | D_Lym_SS_W | N_WBC_FL_P | D_Neu_FS_W | N_WBC_FS_W |
| D_Neu_FL_C V | N_WBC_FS_P | D_Neu_SS_C V | N_WBC_FL_P | D_Lym_FS_C V | N_WBC_FS_W |
| D_Neu_FLSS_ Area | N_WBC_FL_C V | D_Mon_FS_C V | N_WBC_FL_P | D_Lym_SS_P | N_WBC_FS_W |
| D Lym FLFS_ Area | N_WBC_FL_W | D_Lym_FS_W | N_WBC_FL_P | D_Mon_FS_W | N_WBC_FS_W |
| D Lym FLFS_ Area | N_WBC_FS_C V | D_Lym_FL_W | N_WBC_FL_P | D_Mon_SS_C V | N_WBC_SS_P |
| D_Neu_FLFS_ Area | N_WBC_FL_W | D_Mon_FS_W | N_WBC_FL_P | D_Lym_FS_C V | N_WBC_FL_W |
| D_Mon_SS_C V | N_WBC_FS_P | D_Neu_SS_C V | N_WBC_FS_W | D_Mon_FS_C V | N_WBC_FL_W |
| D_Lym_FS_P | N_WBC_FS_P | D_Mon_FS_P | N_WBC_FL_P | D_Mon_FS_W | N_WBC_FL_W |
| D_Neu_FL_W | N_WBC_FS_P | D_Mon_SS_P | N_WBC_FL_P | D_Lym_FS_W | N_WBC_FS_W |
| D_Mon_SS_W | N_WBC_FS_P | D_Lym_FLFS_ Area | N_WBC_SS_C V | D_Neu_FS_C V | N_WBC_FL_W |
| D Lym FLSS_ Area | N_WBC_FLFS _Area | D_Mon_SS_W | N_WBC_SSFS _Area | D_Mon_FS_C V | N_WBC_FS_W |
| D_Neu_FLFS_ Area | N_WBC_FS_W | D_Neu_FL_W | N_WBC_SS_W | D_Mon_FL_P | N_WBC_FS_W |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Mon_SS_W | N_WBC_FLFS _Area | D_Mon_FL_W | N_WBC_FL_W | D_Neu_FL_P | N_WBC_FLSS _Area |
| D_Lym_FL_P | N_WBC_FL_P | D_Neu_SS_W | N_WBC_FLSS _Area | D_Neu_SS_P | N_WBC_FLFS _Area |
| D_Mon_FL_C V | N_WBC_FS_P | D_Lym_FL_C V | N_WBC_FS_W | D_Mon_SS_W | N_WBC_SS_P |
| D_Lym_FLSS_ Area | N_WBC_FLSS _Area | D_Neu_FLFS_ Area | N_WBC_SS_W | D_Neu_SS_C V | N_WBC_FL_W |
| D_Mon_SS_C V | N_WBC_FL_P | D_Mon_FL_W | N_WBC_FLFS _Area | D_Neu_FL_P | N_WBC_FL_W |
| D_Mon_SS_C V | N_WBC_FLFS _Area | D_Neu_SS_P | N_WBC_FL_P | D_Mon_FL_C V | N_WBC_SS_P |
| D_Lym_FLSS_ Area | N_WBC_FS_P | D_Lym_FLFS_ Area | N_WBC_SS_P | D_Lym_FS_W | N_WBC_FL_W |
| D_Neu_FS_P | N_WBC_FS_P | D_Mon_SS_C V | N_WBC_FS_W | D_Neu_FS_P | N_WBC_FL_W |
| D_Lym_FLFS_ Area | N_WBC_FL_P | D_Mon_SS_W | N_WBC_FL_P | D_Neu_FL_W | N_WBC_SS_P |
| D_Neu_FL_W | N_WBC_FS_W | D_Neu_FLFS_ Area | N_WBC_FL_C V | D_Neu_FL_C V | N_WBC_FLSS _Area |
| D_Lym_FL_P | N_WBC_FS_P | D_Lym_FS_W | N_WBC_FS_P | D_Mon_SS_P | N_WBC_FL_W |
| D_Lym_FLFS_ Area | N_WBC_FS_P | D_Mon_FL_C V | N_WBC_FLFS _Area | D_Neu_FS_W | N_WBC_FL_W |
| D_Lym_FS_P | N_WBC_FL_P | D_Neu_SS_W | N_WBC_FS_P | D_Lym_SS_P | N_WBC_FL_W |
| D_Mon_FL_C V | N_WBC_FL_P | D_Lym_SS_C V | N_WBC_FS_P | D_Mon_FS_P | N_WBC_FL_W |
| D_Mon_FL_W | N_WBC_FS_P | D_Lym_FS_C V | N_WBC_FS_P | D_Mon_SS_W | N_WBC_SS_W |
| D_Neu_FS_C V | N_WBC_FS_P | D_Lym_FL_W | N_WBC_FS_P | D_Lym_FL_W | N_WBC_FL_W |
| D_Mon_SS_W | N_WBC_FLSS _Area | D_Neu_FL_P | N_WBC_FS_P | D_Lym_SS_C V | N_WBC_FL_W |
| D_Mon_SS_C V | N_WBC_FL_W | D_Mon_SS_P | N_WBC_FS_P | D_Neu_SS_C V | N_WBC_FLFS _Area |
| D_Lym_SS_P | N_WBC_FS_P | D_Mon_FL_P | N_WBC_FS_P | D_Neu_FL_W | N_WBC_SS_C V |
| D_Lym_FLSS_ Area | N_WBC_FS_W | D_Neu_FL_C V | N_WBC_FS_W | D_Neu_SS_C V | N_WBC_FLSS _Area |
| D_Neu_FL_W | N_WBC_FLFS _Area | D_Neu_SS_C V | N_WBC_FS_P | D_Neu_FL_W | N_WBC_SSFS _Area |
| D_Neu_FLFS_ Area | N_WBC_SS_P | D_Mon_FS_P | N_WBC_FS_P | D_Lym_FLSS_ Area | N_WBC_SS_W |
| D Lym FLSS_ Area | N_WBC_FL_P | D_Mon_FS_C V | N_WBC_FS_P | D_Lym_FS_C V | N_WBC_FLFS _Area |
| D Lym FLSS_ Area | N_WBC_FL_W | D_Mon_FS_W | N_WBC_FS_P | D_Mon_FS_W | N_WBC_FLFS _Area |
| D_Mon_SS_W | N_WBC_FS_W | D_Neu_FS_W | N_WBC_FS_P | D_Lym_SS_W | N_WBC_FL_W |
| D_Mon_FL_C V | N_WBC_FL_W | D_Lym_SS_P | N_WBC_FL_P | D_Mon_SS_W | N_WBC_FS_C V |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Neu_FL_W | N_WBC_FLSS _Area | D_Neu_FLFS_ Area | N_WBC_SS_C V | D_Lym_FS_W | N_WBC_FLFS _Area |
| D_Lym_FL_C V | N_WBC_FS_P | D_Neu_SS_W | N_WBC_FL_P | D_Mon_FS_C V | N_WBC_FLFS _Area |
| D_Lym_FLFS_ Area | N_WBC_SS_W | D_Mon_FL_C V | N_WBC_FS_W | D_Mon_SS_W | N_WBC_FL_C V |
| D_Neu_SS_P | N_WBC_FS_P | D_Neu_FLFS_ Area | N_WBC_FS_C V | D_Lym_FLSS_ Area | N_WBC_SSFS _Area |
| D_Lym_SS_W | N_WBC_FS_P | D_Lym_FLSS_ Area | N_WBC_SS_P | D_Lym_FL_P | N_WBC_FL_W |
| D_Neu_FLFS_ Area | N_WBC_SSFS _Area | D_Mon_FL_W | N_WBC_FLSS _Area | D_Lym_FL_C V | N_WBC_FL_P |
| D_Neu_FL_W | N_WBC_FL_P | D_Mon_FL_W | N_WBC_FL_P | D_Neu_SS_W | N_WBC_FS_W |
| D_Mon_SS_C V | N_WBC_FLSS _Area | D_Neu_FLFS_ Area | N_WBC_FLSS _Area | D_Mon_FL_C V | N_WBC_FLSS _Area |
| D_Neu_FL_C V | N_WBC_FL_P | | | | |

Preferably, combination of D_Mon_SS_W and N_WBC_FL_W can be used to calculate the infection marker parameter for identification between bacterial infection and viral infection.

In addition, inflammation is divided into infectious inflammation caused by pathogenic microbial infection, and non-infectious inflammation caused by physical factors, chemical factors, or tissue necrosis. The clinical symptoms of the two types of inflammation are roughly the same, and symptoms such as redness and fever will appear, but the treatment methods of the two types of inflammation are not exactly the same, so it is clinically necessary to identify what factors cause the patient's inflammatory response in order to treat the patient symptomatically.

To this end, the processor 140 may be further configured to determine whether the subject has an infectious inflammation or a non-infectious inflammation based on the infection marker parameter. For example, when the value of the infection marker parameter is greater than a preset threshold, it is determined that the subject is suffering from an infectious inflammation. The preset threshold can be determined based on a specific combination of parameters and the blood cell analyzer.

Herein, for example, the infection marker parameter may be calculated by combining the various parameters listed in Table 5 for identification between infectious inflammation and non-infectious inflammation.

Table 5 Parameter combinations for identification between infectious inflammation and non-infectious inflammation

| First leukocyte parameter | Second leukocyte parameter | First leukocyte parameter | Second leukocyte parameter | First leukocyte parameter | Second leukocyte parameter |
|---|---|---|---|---|---|
| D_Mon_SS_W | N_WBC_FL_W | D_Mon_SS_P | N_WBC_FL_W | D_Mon_FS_P | N_WBC_FL_W |
| D_Neu_FL_W | N_WBC_FL_W | D_Mon_SS_W | N_WBC_SS_C V | D_Neu_FLFS_ Area | N_WBC_FL_W |
| D_Mon_SS_W | N_WBC_SS_W | D_Lym_FLSS_ Area | N_WBC_FL_W | D_Mon_FL_P | N_WBC_FL_W |
| D_Mon_FS_W | N_WBC_FL_W | D_Neu_SS_P | N_WBC_FL_W | D_Mon_SS_W | N_WBC_FL_P |
| D_Neu_FL_C V | N_WBC_FL_W | D_Neu_SS_C V | N_WBC_FL_W | D_Lym_FLFS_ Area | N_WBC_FL_W |
| D_Neu_FLSS_ Area | N_WBC_FL_W | D_Mon_SS_W | N_WBC_FS_W | D_Neu_FS_C V | N_WBC_FL_W |
| D_Neu_SS_W | N_WBC_FL_W | D_Neu_FL_P | N_WBC_FL_W | D_Neu_FS_W | N_WBC_FL_W |

(continued)

| First leukocyte parameter | Second leukocyte parameter | First leukocyte parameter | Second leukocyte parameter | First leukocyte parameter | Second leukocyte parameter |
|---|---|---|---|---|---|
| D_Mon_FL_W | N_WBC_FL_W | D_Mon_SS_W | N_WBC_FS_CV | D_Neu_FS_P | N_WBC_FL_W |

Preferably, combination of D_Mon_SS_W and N_WBC_FL_W can be used to calculate the infection marker parameter for identification between infectious inflammation and non-infectious inflammation.

After a doctor conducts consultation and physical examination on a patient, he usually has one or several preliminary disease diagnoses. Then differential diagnoses or definitive diagnoses of the disease is carried out through laboratory tests, imaging examinations and other means. Therefore, it can be said that the doctor orders a laboratory test with purpose. In other words, when the doctor orders a laboratory test, he has already clarified which scenario the parameter should be applied to. Here's an example: for a fever patient in a general outpatient clinic without symptoms of organ damage, the doctor initially determined that it is a common infection, not a severe infection or sepsis. However, for specific drugs to be prescribed, it needs to be clear whether it is a viral infection or a bacterial infection, so a blood routine test is prescribed. When results come out, attention will be paid to whether the parameter is greater than a threshold of "bacterial infection VS viral infection" rather than a threshold of "diagnosis of sepsis". Therefore, the infection marker parameter outputted in the disclosure are clinically used as a reference for doctors, and are not for diagnostic purposes.

Some embodiments for further ensuring the reliability of diagnosis or prompt based on the infection marker parameter will be described next, although it will be understood that embodiments of the disclosure are not limited thereto.

In order to avoid the first leukocyte parameter and the second leukocyte parameter for calculating the infection marker parameter itself interfering with the reliability of diagnosis or prompt, in some embodiments, the processor 140 may be further configured to either skip outputting the value of the infection marker parameter (i.e., screen the value of the infection marker parameter) or output the value of the infection marker parameter and simultaneously output prompt information indicating that the value of the infection marker parameter is unreliable, when the preset characteristic parameter of at least one of the first target particle population and the second target particle population satisfies a fourth preset condition.

When the processor 140 is further configured to output the prompt information indicating the infection status of the subject based on the infection marker parameter, if the preset characteristic parameter of at least one of the first target particle population and the second target particle population satisfies a fourth preset condition, the processor 140 does not output prompt information indicating the infection status of the subject, or outputs prompt information indicating the infection status of the subject and outputs additional information indicating that the prompt information is unreliable.

In some specific examples, the processor 140 may be configured to skip outputting the value of the infection marker parameter, or output the value of the infection marker parameter and simultaneously output prompt information indicating that the value of the infection marker parameter is unreliable, when a total number of particles of at least one of the first target particle population and the second target particle population is less than a preset threshold.

That is to say, when the total number of particles in the target particle population is less than the preset threshold, that is, the number of particles in the target particle population is small, and the amount of information characterized by the particles is limited, the calculation result of the infection marker parameter may not be reliable. For example, as shown in FIG. 12(a), a total number of particles of leukocyte population in the first test sample is too low, which may cause the infection marker parameter calculated from the first leukocyte parameter of the leukocyte population to be unreliable. For another example, as shown in FIG. 13(a), a total number of particles of leukocyte population in the second test sample is too low, which may cause the infection marker parameter calculated from the second leukocyte parameter of the leukocyte population to be unreliable.

Herein, for example, it is possible to determine whether the preset characteristic parameter of the first target particle population is abnormal, for example, whether a total number of particles of the first target particle population is lower than a preset threshold, based on the first optical information. Similarly, for example, it is possible to determine whether the preset characteristic parameter of the second target particle population is abnormal, for example, whether a total number of particles of the second target particle population is lower than a preset threshold, based on the second optical information.

In other examples, the processor 140 may be configured to skip outputting the value of the infection marker parameter, or output the value of the infection marker parameter and simultaneously output prompt information indicating that the value of the infection marker parameter is unreliable, when at least one of the first target particle population and the second target particle population overlap with another particle populations.

For example, as shown in FIG. 12(b), there is an overlap between monocyte population and lymphocyte population in the first test sample, which may lead to unreliable calculation of the infection marker parameter from the first leukocyte parameter of the monocyte population or the lymphocyte population. For another example, as shown in FIG. 13 (b), neutrophil population in the second test sample overlaps with other particles, which may cause the infection marker parameter calculated from the second leukocyte parameter of the neutrophil population to be unreliable. Herein, for example, it is possible to determine whether the first target particle population overlaps with another particle population based on the first optical information. Similarly, for example, it is possible to determine whether the second target particle population overlaps with another particle population based on the second optical information.

Similarly, when the processor 140 is further configured to output prompt information indicating the infection status of the subject based on the infection marker parameter, if a total number of particles of at least one of the first target particle population and the second target particle population is less than a preset threshold, and/or at least one of if the first target particle population and the second target particle population overlaps with another particle population, the processor 140 does not output prompt information indicating the infection status of the subject, or outputs prompt information indicating the infection status of the subject and outputs additional information indicating that the prompt information is unreliable.

In addition, a disease status of the subject, as well as abnormal cells in the blood of the subject, may also affect the diagnosis or prompt efficacy of the infection marker parameters. To this end, processor 140 may be further configured to: determine the reliability of the infection marker parameter based on whether the subject has a specific disease and/or based on the presence of predefined types of abnormal cells (e.g., blast cells, abnormal lymphocytes, and naive granulocytes) in the blood sample to be tested.

In some specific examples, the processor 140 may be configured to skip outputting the value of the infection marker parameter, or output the value of the infection marker parameter and simultaneously output prompt information indicating that the value of the infection marker parameter is unreliable, when the subject suffers from a hematological disorder or there are abnormal cells, especially blast cells, in the blood sample to be tested. It will be appreciated that an abnormal hemogram of a subject with a hematological disorder result in unreliable diagnosis or prompt based on this infection marker parameter.

Processor 140 may, for example, determine whether the subject suffers from a hematological disorder based on the subject’s identity information.

For example, the processor 140 may be configured to determine whether abnormal cells, in particular blast cells, are present in the blood sample to be tested based on the first optical information and/or the second optical information.

In some embodiments, the processor 140 may further be configured to perform data processing, such as de-noising (impurity particles) (as shown in FIGS. 12 (c), 13 (c)) or logarithmic processing (as shown in FIG. 14) on the first leukocyte parameter and the second leukocyte parameter prior to calculating the infection marker parameter, in order to more accurately calculate the infection marker parameter, e.g. to avoid signal variations caused by different instruments, or different reagents.

The manner in which the processor 140 assigns a priority for each set of infection marker parameters will be described below in conjunction with some of following embodiments.

In some embodiments, the processor 140 may be further configured to: assign a priority for each set of infection marker parameters based on at least one of infection diagnostic efficacy, parametric stability, and parametric limitations.

Preferably herein, the processor 140 may be further configured to: assign a priority for each set of infection marker parameters based at least on the infection diagnostic efficacy. For example, the processor 140 may assign a priority for each set of infection marker parameters based only on infection diagnostic efficacy. For still another example, the processor 140 may assign a priority for each set of infection marker parameters based on infection diagnostic efficacy and parametric stability; For yet another example, the processor 140 may assign a priority for each set of infection marker parameters based on infection diagnostic efficacy, parametric stability, and parametric limitations.

In some embodiments, the set of infection marker parameters of the disclosure may be used for evaluation of a variety of infection statuses, for example, performing on the subject an early prediction of sepsis, a diagnosis of sepsis, an identification between common infection and severe infection, a monitoring of infection status, an analysis of sepsis prognosis, an identification between bacterial infection and viral infection, an evaluation of therapeutic effect on sepsis, or an identification between non-infectious inflammation and infectious inflammation based on the infection marker parameter. Correspondingly, taking the identification scenario between common infection and severe infection as an example, the diagnostic efficacy on the infection includes a diagnostic efficacy for the identification between common infection and severe infection. For example, when the sets of infection marker parameters of the disclosure are set only for evaluation of one infection status, for example, only for severe infection identification, each set of infection marker parameters may be assigned a priority based on the diagnostic efficacy for the evaluation of infection status, for example, severe infection identification.

As some implementations, the processor 140 may be further configured to: assign a priority for each set of infection marker parameters according to an area ROC_AUC enclosed by ROC curve of each set of infection marker parameters and the horizontal coordinate axis, wherein the larger the ROC_AUC, the higher the priority of the corresponding set of infection marker parameters. In this case, the ROC curve is a receiver operating characteristic curve drawn with the true positive rate as the ordinate and the false positive rate as the abscissa. The ROC_AUC of each set of infection marker parameters may reflect the infection diagnostic efficacy of the set of infection marker parameters.

In some embodiments, the parametric stability includes at least one of numerical repeatability, aging stability, temperature stability and inter-machine consistency. The numerical repeatability refers to numerical consistency of a set of infection marker parameters used when a same test blood sample is tested for multiple times using a same instrument in a short period of time under a same environment; the aging stability refers to numerical stability of a set of infection marker parameters used when a same test blood sample is tested using a same instrument at different time points under a same environment; the temperature stability refers to numerical stability of a set of infection marker parameters used when a same test blood sample is tested using a same instrument under different temperature environments; and the inter-machine consistency refers to numerical consistency of a set of infection marker parameters used when a same test blood sample is tested using different instruments under a same environment.

In some examples, if a same test blood sample is tested for multiple times using a same instrument in a short period of time under a same environment, the higher the numerical consistency of the set of infection marker parameters used, that is, the higher the numerical repeatability, the higher the priority of the set of infection marker parameters.

Alternatively or additionally, if a same test blood sample is tested using a same instrument at different time points under a same environment, the higher the numerical stability of the set of infection marker parameters used (that is, the smaller the numerical fluctuation degree), that is, the higher the aging stability, the higher the priority of the set of infection marker parameters.

Alternatively or additionally, if a same test blood sample is tested using a same instrument under different temperature environments, the higher the numerical stability of the set of infection marker parameters used (that is, the smaller the numerical fluctuation degree), that is, the higher the temperature stability, the higher the priority of the set of infection marker parameters.

Alternatively or additionally, when a same test blood sample is tested using different instruments under a same environment, the higher the numerical consistency of the set of infection marker parameters used, that is, the higher the inter-machine consistency, the higher the priority of the set of infection marker parameters.

In some embodiments, the parametric limitation refers to the range of subjects to which the infection marker parameter is applicable. In some examples, if the range of subjects to which the set of infection marker parameters is applicable is larger, it means that the parametric limitation of the set of infection marker parameters is smaller, and correspondingly, the priority of the set of infection marker parameters is higher.

In some embodiments, the priorities of the plurality of sets of infection marker parameters obtained by the processor 140 are preset, for example, based on at least one of the infection diagnostic efficacy, the parametric stability and the parametric limitations. Here, the processor 140 may assign a priority for each set of infection marker parameters based on the preset. For example, the priorities of the plurality of sets of infection marker parameters may be stored in a memory in advance, and the processor 140 may invoke the priorities of the pluralities of sets of infection marker parameters from the memory.

Next, the manner in which the processor 140 calculates a credibility of a set of infection marker parameters will be further described in conjunction with some of following embodiments.

The inventors of the disclosure have found through research that there may be abnormal classification results and/or abnormal cells in the blood sample of the subject, resulting in unreliability of the set of infection marker parameters used. Accordingly, the blood analyzer provided in the disclosure can calculate respective credibility for the obtained plurality of sets of infection marker parameters in order to screen out a more reliable set of infection marker parameters from the plurality of sets of infection marker parameters based on respective priority and credibility of each set of infection marker parameters.

In some embodiments, the processor 140 may be configured to calculate respective credibility for each set of infection marker parameters as follows:

calculating respective credibility of each set of infection marker parameters according to a classification result of at least one target particle population used to obtain said set of infection marker parameters and/or according to abnormal cells in the blood sample to be tested.

In some embodiments, the classification result may include at least one of a count value of the target particle population, a count value percentage of the target particle population to another particle population, and a degree of overlap (also referred to as a degree of adhesion) between the target particle population and its adjacent particle population. For example, the degree of overlap between the target particle population and its adjacent particle population may be determined by the distance between the center of gravity of the target particle population and the center of gravity of its adjacent particle population. For example, if a total number of particles of the target particle population, that is, the count value, is less than a preset threshold, that is, the particles of the target particle population are few, and the amount of information characterized by the particles is limited, at this time, the set of infection marker parameters obtained through relevant parameters of the target particle population may be unreliable, so the credibility of the set of infection marker parameters is relatively low.

Next, the manner in which the processor 140 screens a set of infection marker parameters will be further described in conjunction with some embodiments.

In an embodiment of the disclosure, the processor 140 may be configured to calculate respective credibility for all of the sets of infection marker parameters in the plurality of sets of infection marker parameters at a time, and then select at least one set of infection marker parameters from all of the sets of infection marker parameters based on the respective priority and credibility of all of the sets of infection marker parameters and output their parameter values.

In other embodiments, the processor 140 may be configured to perform following steps to screen a set of infection marker parameters and output its parameter values:

calculating a plurality of first leukocyte parameters of at least one first target particle population in the first test sample from the first optical information and a plurality of second leukocyte parameters of at least one second target particle population in the second test sample from the second optical information;
obtaining a plurality of sets of infection marker parameters for evaluating the infection status of the subject based on the plurality of first leukocyte parameters and the plurality of second leukocyte parameters;
assigning a priority for each set of infection marker parameters of the plurality of sets of infection marker parameters;
calculating a credibility of each set of infection marker parameters of the plurality of sets of infection marker parameters, selecting at least one set of infection marker parameters from the plurality of sets of infection marker parameters based on respective priority and credibility of the plurality of sets of infection marker parameters so as to obtain the infection marker parameter; or according to respective priority of the plurality of sets of infection marker parameters, successively calculating respective credibility of the plurality of sets of infection marker parameters and determining whether the credibility reaches a corresponding credibility threshold, and when the credibility of a current set of infection marker parameters reaches the corresponding credibility threshold, obtaining the infection marker parameter based on said set of infection marker parameters and stopping calculation and determination.

In some embodiments, the processor 140 may be further configured to: when the parameter value of the selected set of infection marker parameters is greater than an infection positive threshold, output an alarm prompt.

Herein, for example, each set of infection marker parameters may be normalized to ensure that infection positivity thresholds of each of the infection marker parameters are consistent.

In other embodiments, the processor 140 may be further configured to: calculate a credibility of each set of infection marker parameters of the plurality of sets of infection marker parameters, and determine whether the credibility of each set of infection marker parameters reaches a corresponding credibility threshold;

use the set(s) of infection marker parameters, whose respective credibility reaches the corresponding credibility threshold among the plurality of sets of infection marker parameters as candidate set(s) of infection marker parameters; and
select at least one candidate set of infection marker parameters from the candidate set(s) of infection marker parameters according to respective priority of the candidate set(s) of infection marker parameters, preferably select a set of infection marker parameters with the highest priority, so as to obtain the infection marker parameter.

In some embodiments, the processor may be further configured to: calculate a plurality of first leukocyte parameters of at least one first target particle population in the first test sample from the first optical information and a plurality of second leukocyte parameters of at least one second target particle population in the second test sample from the second optical information,

obtain a plurality of sets of infection marker parameters for evaluating the infection status of the subject based on the plurality of first leukocyte parameters and the plurality of second leukocyte parameters,
calculate a credibility of each set of infection marker parameters of the plurality of sets of infection marker parameters, and select at least one set of infection marker parameters from the plurality of sets of infection marker parameters based on respective credibility of the plurality of sets of infection marker parameters, so as to obtain the infection marker parameter.

In some embodiments, the processor may be further configured to:
for each set of infection marker parameters, calculate a credibility of said set of infection marker parameters based on a classification result of at least one target particle population used to obtain said set of infection marker parameters and/or based on abnormal cells in the blood sample to be tested.

The classification result may include, for example, at least one of a count value of the target particle population, a count value percentage of the target particle population to another particle population, and a degree of overlap between the target particle population and its adjacent particle population.

Further, the processor is further configured to:
when the parameter value of the selected set of infection marker parameters is greater than the infection positive threshold, output an alarm prompt.

In other embodiments, the processor 140 may be further configured to: determine whether the blood sample to be tested has an abnormality that affects the evaluation of the infection status based on the first optical information and the second optical information;

when it is determined that the blood sample to be tested has an abnormality that affects the evaluation of the infection status, obtain at least one first leukocyte parameter of at least one first target particle population unaffected by the abnormality from the first optical information, and obtain at least one second leukocyte parameter of at least one second target particle population unaffected by the abnormality from the second optical information, respectively, obtain the infection marker parameter based on the at least one first leukocyte parameter and the at least one second leukocyte parameter.

In one example, if it is determined that there is an abnormal classification result affecting the evaluation of the infection status in the blood sample to be tested, for example, there is an overlap between the monocyte population and the neutrophil population in the blood sample to be tested, a plurality of parameters of other cell populations (such as the lymphocyte population) other than the monocyte population and the neutrophil population can be obtained from the optical information, and an infection marker parameter for evaluating the infection status of the subject can be obtained from the plurality of parameters of the other cell populations.

In another example, if it is determined that there are abnormal cells, such as blast cells, affecting the evaluation of the infection status in the blood sample to be tested, a plurality of parameters of other cell populations other than cell populations affected by the blast cells can be obtained from the optical information, and an infection marker parameter for evaluating the infection status of the subject can be obtained from the plurality of parameters of the other cell populations.

Next, the manner in which the processor 140 controls a retest will be further described in conjunction with some embodiments.

In some embodiments, the processor may be further configured to obtain a respective leukocyte count of the first test sample and the second test sample based on the first optical information and the second optical information before calculating at least one first leukocyte parameter of at least one first target particle population in the first test sample from the first optical information and at least one second leukocyte parameter of at least one second target particle population in the second test sample from the second optical information, and output a retest instruction to retest the blood sample of the subject when any one of the leukocyte counts is less than a preset threshold, wherein a measurement amount of the sample to be retested based on the retest instruction is greater than a measurement amount of the sample to be tested to obtain the optical information; and
the processor is further configured to calculate at least another first leukocyte parameter of at least another first target particle population in the first test sample from first optical information obtained by the retest, and at least another second leukocyte parameter of at least another second target particle population in the second test sample from second optical information obtained by the retest, and to obtain an infection marker parameter for evaluating the infection status of the subject based on the at least another first leukocyte parameter and the at least another second leukocyte parameter.

The disclosure further provides yet another blood analyzer, including a sample aspiration device, a sample preparation device, an optical detection device, and a processor.

The sample aspiration device is configured to aspirate a blood sample to be tested of a subject.

The sample preparation device is configured to prepare a first test sample containing a part of the blood sample to be tested, a first hemolytic agent, and a first staining agent for leukocyte classification, and to prepare a second test sample containing another part of the blood sample to be tested, a second hemolytic agent and a second staining agent for identifying nucleated red blood cells.

The optical detection device includes a flow cell, a light source and an optical detector, wherein the flow cell is configured to allow for the first test sample and the second test sample to pass therethrough respectively, the light source is configured to respectively irradiate with light the first test sample and the second test sample passing through the flow cell, and the optical detector is configured to detect first optical information and second optical information generated by the first test sample and second test sample under irradiation when passing through the flow cell respectively.

The processor is configured to:

receive a mode setting instruction,
when the mode setting instruction indicates that a blood routine test mode is selected, control the measurement device to perform an optical measurement on a respective first measurement amount of the first test sample and the second test sample to obtain first optical information of the first test sample and second optical information of the second test sample, respectively, and obtain and output blood routine parameters based on said first optical information and said second optical information,

when the mode setting instruction indicates that a sepsis test mode is selected, control the measurement device to perform an optical measurement on a respective second measurement amount of the first test sample and the second test sample, the respective second measurement amount being greater than the respective first measurement amount, to obtain first optical information of the first test sample and second optical information of the second test sample, respectively, calculate at least one first leukocyte parameter of at least one first target particle population in the first test sample from said first optical information, calculate at least one second leukocyte parameter of at least one second target particle population in the second test sample from said second optical information, obtain an infection marker parameter for evaluating an infection status of the subject based on the at least one first leukocyte parameter and the at least one second leukocyte parameter, and output the infection marker parameter.

Embodiments of the disclosure also provide a method for evaluating an infection status of a subject. As shown in FIG. 15, the method 200 includes the steps of:

S210: collecting a blood sample to be tested from the subject;

S220: preparing a first test sample containing a part of the blood sample to be tested, a first hemolytic agent, and a first staining agent for leukocyte classification; and preparing a second test sample containing another part of the blood sample to be tested, a second hemolytic agent and a second staining agent for identifying nucleated red blood cells;

S230: passing particles in the first test sample through an optical detection region irradiated with light one by one to obtain first optical information generated by the particles in the first test sample after being irradiated with light;

S240: passing particles in the second test sample through the optical detection region irradiated with light one by one to obtain second optical information generated by the particles in the second test sample after being irradiated with light;

S250: obtaining at least one first leukocyte parameter of at least one first target particle population in the first test sample from the first optical information and obtaining at least one second leukocyte parameter of at least one second target particle population in the second test sample from the second optical information, wherein at least one of the first leukocyte parameter and the second leukocyte parameter comprises a cell characteristic parameter;

S260: calculating an infection marker parameter based on the at least one first leukocyte parameter and the at least one second leukocyte parameter; and

S270: evaluating the infection status of the subject based on the infection marker parameter.

The method 200 provided in the embodiments of the disclosure is implemented, in particular, by the blood cell analyzer 100 described above in the embodiments of the disclosure.

Further, the at least one first leukocyte parameter may include one or more of cell characteristic parameters of monocyte population, neutrophil population, and lymphocyte population in the first test sample; and/or the at least one second leukocyte parameter may include one or more of cell characteristic parameters of monocyte population, neutrophil population, and leukocyte population in the second test sample.

Preferably, the at least one first leukocyte parameter may include one or more of cell characteristic parameters of monocyte population and neutrophil population in the first test sample, and the at least one second leukocyte parameter may include one or more of cell characteristic parameters of monocyte population, neutrophil population, and leukocyte population in the second test sample.

In some embodiments, the at least one first leukocyte parameter may include one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of the first target particle population, and an area of a distribution region of the first target particle population in a two-dimensional scattergram generated by two light intensities selected from forward scatter intensity, side scatter intensity and fluorescence intensity, and a volume of a distribution region of the first target particle population in a three-dimensional scattergram generated by forward scatter intensity, side scatter intensity and fluorescence intensity; and/or the at least one second leukocyte parameter may include one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of the second target particle population, and an area of a distribution region of the second target particle population in a two-dimensional scattergram generated by two light intensities selected from forward scatter intensity, side scatter intensity and fluorescence intensity, and a volume of a distribution region of the second target particle population in a three-dimensional scattergram generated by forward scatter intensity, side scatter intensity and fluorescence intensity.

In some embodiments, the method may further include: performing on the subject an early prediction of sepsis, a diagnosis of sepsis, an identification between common infection and severe infection, a monitoring of infections, an analysis of sepsis prognosis, an identification between bacterial infection and viral infection, or an identification between non-infectious inflammation and infectious inflammation based on the infection marker parameter.

In some embodiments, the method may further include: outputting prompt information indicating the infection status of the subject.

In some embodiments, step S270 may include: when the infection marker parameter satisfies a first preset condition, outputting prompt information indicating that the subject is likely to progress to sepsis within a certain period of time after the blood sample to be tested is collected. Preferably, the certain period of time is not greater than 48 hours, in particular not greater than 24 hours.

In some embodiments, step S270 may include: when the infection marker parameter satisfies a second preset condition, outputting prompt information indicating that the subject has sepsis.

In some embodiments, step S270 may include: when the infection marker parameter satisfies a third preset condition, outputting prompt information indicating that the subject has severe infection.

In some embodiments, the subject is an infected patient, in particular a patient suffering from severe infection or sepsis. Correspondingly, step S270 may include: monitoring a progression in the infection status of the subject according to the infection marker parameter.

In some specific examples, monitoring a progression in the infection status of the subject based on the infection marker parameters includes:

obtaining multiple values of the infection marker parameter obtained by multiple tests, in particular at least three tests of a blood sample from the subject at different time points;

determining whether the infection status of the subject is improving or not according to a changing trend of the multiple values of the infection marker parameter obtained by the multiple tests, preferably, when the multiple values of the infection marker parameter obtained by the multiple tests gradually tend to decrease, outputting prompt information indicating that the infection status of the subject is improving.

In other examples, monitoring a progression in the infection status of the subject based on the infection marker parameter includes:

obtaining a current value of the infection marker parameter obtained by a current detection of a current blood sample from the subject and obtaining a prior value of the infection marker parameter obtained by a previous detection of a previous blood sample from the subject; and

monitoring the progression in the infection status of the subject based on a comparison of the prior value of the infection marker parameter with a first threshold and a comparison of the prior value of the infection marker parameter with the current value of the infection marker parameter.

In addition, the subject may be a treated septic patient. Correspondingly, step S270 may include: determining whether sepsis prognosis of the subject is good or not according to the infection marker parameter.

In some embodiments, step S270 may include: determining whether an infection type of the subject is a viral infection or a bacterial infection according to the infection marker parameter.

In some embodiments, step S270 may include: determining whether the subject has an infectious inflammation or a non-infectious inflammation according to the infection marker parameter.

In some embodiments, the method may further comprise: when a preset characteristic parameter of at least one of the first target particle population and the second target particle population satisfies a fourth preset condition, such as when a total number of particles of at least one of the first target particle population and the second target particle population is less than a preset threshold and/or when at least one of the first target particle population and the second target particle population overlaps with another particle population, skipping outputting the value of the infection marker parameter, or outputting the value of the infection marker parameter and simultaneously outputting prompt information indicating that the value of the infection marker parameter is unreliable.

Alternatively or additionally, the method may further include: when the subject suffers from a hematological disorder or there are abnormal cells, especially blast cells, in the blood sample to be tested, such as when it is determined that there are abnormal cells, especially blast cells, in the blood sample to be tested based on the first optical information and/or the second optical information, skipping outputting a value of the infection marker parameter, or outputting a value of the infection marker parameter and simultaneously outputting prompt information indicating that the value of the infection marker parameter is unreliable.

For further embodiments and advantages of the method 200 provided by the embodiments of the disclosure, reference may be made to the above description of the blood cell analyzer 100 provided by the embodiments of the disclosure, in particular the description of methods and steps performed by the processor 140, which will not be described here in detail.

Embodiments of the disclosure also provide a use of an infection marker parameter in evaluating an infection status of a subject, wherein the infection marker parameter is obtained by:

calculating at least one first leukocyte parameter of at least one first target particle population obtained by flow cytometry detection of a first test sample containing a part of a blood sample to be tested from the subject, a first hemolytic agent, and a first staining agent for leukocyte classification;
calculating at least one second leukocyte parameter of at least one second target particle population obtained by flow cytometry detection of a second test sample containing another part of the blood sample to be tested, a second hemolytic agent, and a second staining agent for identifying nucleated red blood cells, wherein at least one of the first leukocyte parameter and the second leukocyte parameter comprises a cell characteristic parameter; and
calculating the infection marker parameter based on the at least one first leukocyte parameter and the at least one second leukocyte parameter.

For further embodiments and advantages of the use of the infection marker parameters provided by the embodiments of the disclosure in evaluating an infection status of a subject, reference may be made to the above description of the blood cell analyzer 100 provided by the embodiments of the disclosure, and in particular the description of methods and steps performed by the processor 140, which will not be repeated herein.

Next, the disclosure and its advantages will be further explained with some specific examples.

True positive rate%, false positive rate%, true negative rate%, and false negative rate% of the embodiments of the disclosure are calculated by the following formulas:

$$\text{True positive rate\%} = \text{TP}/(\text{TP} + \text{FN}) \times 100\%;$$

$$\text{True negative rate\%} = \text{TN}/(\text{FP} + \text{TN}) \times 100\%;$$

$$\text{False positive rate\%} = 1\text{-true negative rate\%};$$

and

$$\text{False negative rate\%} = 1\text{-true positive rate\%};$$

wherein TP is the number of true positive individuals, FP is the number of false positive individuals, TN is the number of true negative individuals, and FN is the number of false negative individuals.

Example 1 Early prediction of sepsis

152 blood samples were subjected to blood routine tests respectively by using BC-6800 Plus blood cell analyzer produced by SHENZHEN MINDRAY BIO-MEDICAL ELECTRONICS CO., LTD. and using the supporting hemolytic agents M-60LD, M-6LN and staining agents M-6FD, M-6FN of SHENZHEN MINDRAY BIO-MEDICAL ELECTRONICS CO., LTD., scattergrams of WNB channel and DIFF channel were obtained, and early prediction of sepsis was performed according to the method provided in the embodiments of the disclosure. The next day, among these samples, 87 blood samples were clinically diagnosed as positive samples with sepsis and 65 blood samples were negative samples (without progressing to sepsis).

Inclusion criteria for these 152 cases: adult ICU patients with acute infection or with suspected acute infection. Exclusion criteria: pregnant people, myelosuppressed people on chemotherapy, people on immunosuppressant treatment, patients with hematologic diseases.

For the donors of the sepsis samples: they have a suspicious or definite infection site, a positive laboratory culture result, and organ failure; they have suspicious or confirmed acute infection, and SOFA score ≥ 2, where the suspected infection has any of following (1) - (3) and has no deterministic results for (4); or has any one of following (1) - (3) and (5).

(1) Acute (within 72 hours) fever or hypothermia;

(2) Increased or decreased total number of leukocytes;
(3) Increased CRP and IL-6;
(4) Increased PCT, SAA and HBP;
(5) Presence of suspicious infection sites.

The SOFA scoring criteria are shown in the Table A below:

Table A SOFA score calculation method

| Organ | Variable | Score 0 | Score 1 | Score 2 | Score 3 | Score 4 |
|---|---|---|---|---|---|---|
| Respiratory system | $PaO_2/FiO_2$/mmHg | ≥400 | <400 | <300 | <200 | <100 |
| Blood system | PLT/(×10•$L^{-1}$) | ≥150 | <150 | <100 | <50 | <20 |
| Liver | Bilirubin/(mg • $dL^{-1}$) | <1.2 | 1.2~1.9 | 2.0~3.4 | 3.5~4.9 | ≥5.0 |
| Central nervous system | Glasgow Score | 15 | 13~14 | 10~12 | 6~9 | <6 |
| Kidney | Creatinine/(mg • $dL^{-1}$) | <1.2 | 1.2~1.9 | 2.0~3.4 | 3.5~4.9 | ≥5.0 |
| | Urine volume/(mL • $d^{-1}$) | ≥500 | - | - | <500 | <200 |
| Circulation | Mean arterial pressure/mmHg | ≥70 | <70 | - | - | - |
| | Dopamine/(μg • $kg^{-1}$ • $min^{-1}$) | - | - | ≤5 | >5 | >15 |
| | Dobutamine | | | Any dose | | |
| | Epinephrine /(μg • $kg^{-1}$ • min $^{-1}$) | - | - | - | ≤0.1 | >0.1 |
| | Norepinephrine /(μg •kg • $kg^{-1}$ • $min^{-1}$) | - | - | - | ≤0.1 | >0.1 |
| Note mmHg -0.133 kPa. | | | | | | |

Table 6 shows infection marker parameters used and their corresponding diagnostic efficacy, and FIGS. 16 show ROC curves corresponding to the infection marker parameters in Table 6. In Table 6:

$$\text{Combination parameter 1} = 0.028849 * D_Mon_SS_W + 0.002448 * N_WBC_SS_W - 5.72185;$$

$$\text{Combination parameter 2} = 0.02523 * D_Mon_SS_W + 0.002796 * N_WBC_FL_W - 7.43236.$$

.

Table 6 Efficacy of different infection marker parameters for early prediction of sepsis risk

| Infection marker parameter | ROC_AUC | Determination threshold | False positive rate | True positive rate | True negative rate | False negative rate |
|---|---|---|---|---|---|---|
| Combination parameter 1 | 0.7512 | >0.1779 | 23.1% | 69% | 76.9% | 31% |
| Combination parameter 2 | 0.7376 | >0.1297 | 32.3% | 75.9% | 67.7% | 24.1% |

In addition, Table 7-1 shows respective efficacy of using other infection marker parameters for early prediction of sepsis risk in this example, wherein, each infection marker parameter is calculated by function Y = A * X1 + B * X2 + C based on the first leukocyte parameter and the second leukocyte parameter in Table 7-1, where Y represents the infection marker parameter, X1 represents the first leukocyte parameter, X2 represents the second leukocyte parameter, and A, B, and C are constants.

Table 7-1 Efficacy of other infection marker parameters for early prediction of sepsis risk

| First leukocyte parameter | Second leukocyte parameter | ROC_AUC | Determination threshold | False positive rate% | True positive rate% | True negative rate% | False negative rate% | A | B | C |
|---|---|---|---|---|---|---|---|---|---|---|
| D_Mon_S S_W | N_NEU_S s_cv | 0.7425 | >0.1322 | 29.2 | 74.7 | 70.8 | 25.3 | 0.0397 94 | 3.4117 55 | -6.882 46 |
| D_Mon_S S_W | N_WBC_F S_W | 0.7408 | >0.0964 | 32.3 | 70.1 | 67.7 | 29.9 | 0.0272 44 | 0.006 22 | -8.249 11 |
| D_Neu_F L_W | N_WBC_F L_W | 0.7385 | >0.1246 | 36.9 | 73.6 | 63.1 | 26.4 | 0.0135 29 | 0.003 014 | -8.536 62 |
| D_Mon_S S_W | N_NEU_S S_W | 0.7365 | >0.2297 | 21.5 | 65.5 | 78.5 | 34.5 | 0.0319 6 | 0.002 128 | -5.249 46 |
| D_Neu_F L_W | N_WBC_F S_W | 0.7323 | >0.198 | 29.2 | 65.5 | 70.8 | 34.5 | 0.0141 61 | 0.006 782 | -9.434 71 |
| D_Mon_F L_P | N_WBC_F S_W | 0.7307 | >0.1938 | 26.2 | 66.7 | 73.8 | 33.3 | 0.0018 18 | 0.007 122 | -8.423 92 |
| D_Mon_F L_W | N_WBC_F S_W | 0.7305 | >0.1536 | 27.7 | 69 | 72.3 | 31 | 0.0063 74 | 0.006 998 | -9.304 36 |
| D_Neu_F L_W | N_WBC_S S_W | 0.7303 | >-0.0378 | 36.9 | 78.2 | 63.1 | 21.8 | 0.0158 91 | 0.002 791 | -7.069 04 |
| D_Mon_S S_W | N_NED_F S_W | 0.7279 | >0.3064 | 20 | 62.1 | 80 | 37.9 | 0.0353 14 | 0.003 12 | -4.974 78 |
| D_Mon_S S_W | N_NEU_F S_CV | 0.7271 | >0.356 | 18.5 | 60.9 | 81.5 | 39.1 | 0.0374 76 | 4.542 769 | -5.2011 8 |
| D_Neu_S S_W | N_WBC_F L_W | 0.727 | >0.1333 | 36.9 | 74.7 | 63.1 | 25.3 | 0.0088 23 | 0.003 131 | -8.150 55 |
| D Neu F L_P | N_WBC_S S_W | 0.7259 | >0.0522 | 30.8 | 77 | 69.2 | 23 | 0.0072 93 | 0.002 756 | -6.996 73 |
| D_Mon_F L_W | N_WBC_S S_W | 0.7256 | >0.0688 | 35.4 | 73.6 | 64.6 | 26.4 | 0.0052 51 | 0.002 56 | -5.541 04 |

Table 7-2. Efficacy of PCT (procalcitonin) in the prior art and parameters of the DIFF channel alone for early prediction of sepsis risk

| Infection marker parameter | ROC_AUC | Determination threshold | False positive rate | True positive rate | True negative rate | False negative rate |
|---|---|---|---|---|---|---|
| PCT (procalcitonin); | 0.634 | >2 | 14.0% | 39.7% | 86.0% | 60.3% |
| D_Neu_SS_W | 0.613 | >253 | 47.7% | 67.8% | 52.3% | 32.2% |
| D_Neu_FL_W | 0.633 | >205 | 47.7% | 72.4% | 52.3% | 27.6% |
| D_Neu_FS_W | 0.543 | >559 | 32.3% | 48.3% | 67.7% | 51.7% |

From comparison between Table 7-2 and Tables 6 and 7-1, it can be seen that combination of a parameter of the WNB channel with a parameter of the DIFF channel has better diagnostic performance in prediction of sepsis than PCT or the DIFF channel alone. D_Neu_SS_W in the table refers to side scatter intensity distribution width of neutrophil population in the DIFF channel scattergram; D_Neu_FL_W refers to fluorescence intensity distribution width of neutrophil population in the DIFF channel scattergram; D_Neu_FS_W refers to forward scatter intensity distribution width of neutrophil population in the DIFF channel scattergram.

Table 7-3. Illustration of the statistical methods and testing methods used in this example by taking 2 parameters as examples

| Infection marker parameter | Positive sample Mean ± SD | Negative sample Mean ± SD | F value | P value |
|---|---|---|---|---|
| Combination parameter 1 | 6.34 ± 0.92 | 5.68 ± 0.64 | 27.16 | < 0.0001 |
| Combination parameter 2 | 8.10 ± 0.85 | 7.35 ± 0.89 | 27.52 | < 0.0001 |

As can be seen from Table 7-3, these parameters are analyzed by Welch test, and there is a significant statistical difference between the two groups ($p < 0.0001$.)

As can be seen from Tables 6 and 7-1, 7-2, 7-3, the infection marker parameters provided in the disclosure can be used to predict risk of sepsis effectively one day in advance.

Example 2 Identification between common infection and severe infection

1,528 blood samples were subjected to blood routine tests by using the BC-6800 Plus blood cell analyzer produced by SHENZHEN MINDRAY BIO-MEDICAL ELECTRONICS CO., LTD. in accordance with steps similar to example 1 of the disclosure, and identification of severe infection was performed based on scattergrams by using the aforementioned method. Among them, there were 756 severe infection samples, that is, positive samples, and 792 non-severe infection samples, that is, negative samples.

Inclusion criteria for 1548 donors in this example: adult ICU patients with acute infection or with suspected acute infection. Exclusion criteria: pregnant people, myelosuppressed people on chemotherapy, people on immunosuppressant treatment, patients with hematologic diseases.

For the donors of the severe infection samples: they have a suspicious or definite infection site, a positive laboratory culture result, and organ failure, which met any one or more of followings:

(1) Presence of evidence of systemic, extensive, and coelomic disseminated infection
(2) Presence of life-threatening special site infections
(3) Abnormal organ function index caused by at least one infection

Others were non-severe infection samples.

Table 8 shows infection marker parameters used and their corresponding diagnostic efficacy, and FIGS. 17 show ROC curves corresponding to the infection marker parameters in Table 8. In Table 8:

$$\text{Combination parameter 1} = 0.006064 * N_WBC_FL_W + 0.054716 * D_Mon_SS_W - 16.1568;$$

Combination parameter 2 = 0.006662 * N_WBC_FL_W + 0.000248 * D_Mon_FS_W -14.6388;

Combination parameter 3 = 0.006651 * N_NEU_FL_W + 0.014098 * D_NEU_FL_P -15.8676.

Table 8 Efficacy of different infection marker parameters for diagnosis of severe infection

| Infection marker parameter | ROC_AUC | Determination threshold | False positive rate | True positive rate | True negative rate | False negative rate |
|---|---|---|---|---|---|---|
| Combination parameter 1 | 0.9023 | >-0.3964 | 17.8% | 83.2% | 82.2% | 16.8% |
| Combination parameter 2 | 0.8784 | >-0.3668 | 20.1% | 80.8% | 79.9% | 19.2% |
| Combination parameter 3 | 0.8575 | >-0.1588 | 19.2% | 74.5% | 80.8 | 25.5% |

True positive means that prompt results obtained in this example indicate severe infection, which is consistent with patient's clinical condition; False positive means that prompt results obtained in this example indicate severe infection, but actual condition of patient is common infection; True negative means that prompt results obtained in this example indicate common infection, which is consistent with patient's clinical condition; False negativity means that prompt results obtained in this example indicate common infection, but actual condition of patient is severe infection.

In addition, Tables 9-1 to 9-4 show respective efficacy of using other infection marker parameters for diagnosis of severe infection in this example, wherein, each infection marker parameter is calculated by the function Y = A * X1 + B * X2 + C based on the first leukocyte parameter and the second leukocyte parameter in Tables 9-1 to 9-4, where Y represents the infection marker parameter, X1 represents the first leukocyte parameter, X2 represents the second leukocyte parameter, and A, B, and C are constants.

Table 9-1. Efficacy of combination parameter containing N_WBC_FL_W for diagnosis of severe infection

| First leukocyte parameter | Second leukocyte parameter | ROC_AUC | Determination threshold | False positive rate% | True positive rate% | True negative rate% | False negative rate% | A | B | C |
|---|---|---|---|---|---|---|---|---|---|---|
| D_Neu_F L_W | N_WBC_ FL_W | 0.8866 | >-0.3581 | 18.6 | 80.3 | 81.4 | 19.7 | 0.006 155 | 0.011 275 | - 14.01 23 |
| D_Neu_F L_CV | N_WBC_ FL_W | 0.8841 | >-0.481 | 21.1 | 82.7 | 78.9 | 17.3 | 0.006 576 | 8.329 066 | - 16.18 88 |
| D_Mon_F L_W | N_WBC_ FL_W | 0.8812 | >-0.1639 | 16 | 78.3 | 84 | 21.7 | 0.006 315 | 0.008 236 | - 15.36 57 |
| D_Mon_S S_P | N_WBC_ FL_W | 0.8809 | >-0.352 | 19 | 81.1 | 81 | 18.9 | 0.006 438 | 0.028 702 | - 18.25 53 |
| D_Neu_F LSS_Area | N_WBC_ FL_W | 0.8791 | >-0.3623 | 21.1 | 82.8 | 78.9 | 17.2 | 0.004 781 | 0.002 156 | - 10.92 74 |
| D_Neu_F LFS_Area | N_WBC_ FL_W | 0.875 | >-0.1548 | 16 | 77.5 | 84 | 22.5 | 0.005 07 | 0.001 359 | - 11.089 4 |
| D_Neu_F L_P | N_WBC_ FL_W | 0.8749 | >-0.2889 | 19 | 79.5 | 81 | 20.5 | 0.005 838 | 0.006 502 | - 13.98 81 |
| D_Neu_S S_W | N_WBC_ FL_W | 0.8742 | >-0.2539 | 18.2 | 78.9 | 81.8 | 21.1 | 0.006 479 | 0.008 24 | - 14.34 38 |
| D_Mon_F L_P | N_WBC_ FL_W | 0.8726 | >-0.2969 | 18.1 | 78.3 | 81.9 | 21.7 | 0.006 972 | - 0.000 45 | - 12.61 46 |
| D_Neu_S S_CV | N_WBC_ FL_W | 0.8725 | >-0.171 | 17.7 | 77.7 | 82.3 | 22.3 | 0.006 575 | 4.814 511 | - 15.79 61 |
| D_Neu_S S_P | N_WBC_ FL_W | 0.8724 | >-0.199 | 17.3 | 78.2 | 82.7 | 21.8 | 0.006 137 | 0.007 508 | - 14.25 27 |
| D_Mon_F S_P | N_WBC_ FL_W | 0.8723 | >-0.3625 | 20.3 | 79.9 | 79.7 | 20.1 | 0.006 849 | 0.001 618 | - 14.89 66 |
| D_Neu_F S_W | N_WBC_ FL_W | 0.8716 | >-0.2292 | 17.6 | 77.4 | 82.4 | 22.6 | 0.006 715 | 0.002 412 | - 13.92 87 |
| D_Neu_F S_CV | N_WBC_ FL_W | 0.8711 | >-0.2125 | 17.7 | 77.3 | 82.3 | 22.7 | 0.006 702 | 3.245 86 | - 13.59 04 |
| D_Neu_F S_P | N_WBC_ FL_W | 0.8679 | >-0.2831 | 19.6 | 78.2 | 80.4 | 21.8 | 0.006 331 | 0.000 225 | - 12.23 02 |

Table 9-2. Efficacy of combination parameter containing D_Mon_SS_W for diagnosis of severe infection

| First leukocyte parameter | Second leukocyte parameter | ROC_AUC | Determination threshold | False positive rate% | True positive rate% | True negative rate% | False negative rate% | A | B | C |
|---|---|---|---|---|---|---|---|---|---|---|
| D_Mon_S S_W | N_NEU_ FL_W | 0.877 | >-0.4557 | 22.8 | 82.3 | 77.2 | 17.7 | 0.006 263 | 0.065 878 | - 14.48 57 |
| D_Mon_S S_W | N_WBC_ FL_P | 0.8747 | >-0.1673 | 17.4 | 77.9 | 82.6 | 22.1 | 0.003 315 | 0.060 114 | - 10.73 6 |
| D_Mon_S S_W | N_NEU_ FL_P | 0.873 | >-0.242 | 19.3 | 78.8 | 80.7 | 21.2 | 0.003 077 | 0.062 445 | - 11.008 9 |
| D_Mon_S S_W | N_NEU_ FLFS_Ar ea | 0.8669 | >-0.3273 | 21.7 | 78.6 | 78.3 | 21.4 | 0.000 648 | 0.069 493 | - 10.99 58 |
| D_Mon_S S_W | N_WBC_ FLSS_Ar ea | 0.8663 | >-0.3456 | 20.6 | 77.9 | 79.4 | 22.1 | 0.000 313 | 0.073 768 | - 10.69 4 |
| D_Mon_S S_W | N_NEU_ FLSS_Ar ea | 0.8649 | >-0.353 | 20.9 | 79.1 | 79.1 | 20.9 | 0.000 349 | 0.070 327 | - 10.05 36 |
| D_Mon_S S_W | N_WBC_ FLFS_Ar ea | 0.8635 | >-0.105 | 14.7 | 72.3 | 85.3 | 27.7 | 0.000 522 | 0.074 554 | - 11.654 9 |
| D_Mon_S S_W | N_NEU_ FS_W | 0.8576 | >-0.2952 | 20.4 | 77.3 | 79.6 | 22.7 | 0.006 992 | 0.068 313 | - 10.55 51 |
| D_Mon_S S_W | N_WBC_ FS_W | 0.8559 | >-0.3843 | 20.4 | 78.3 | 79.6 | 21.7 | 0.007 784 | 0.064 77 | - 13.30 39 |
| D_Mon_S S_W | N_NEU_ FS_CV | 0.8559 | >-0.3734 | 22.6 | 79.2 | 77.4 | 20.8 | 10.54 807 | 0.070 964 | - 11.014 2 |
| D_Mon_S S_W | N_WBC_ SS_W | 0.8558 | >-0.252 | 16.5 | 74.3 | 83.5 | 25.7 | 0.003 174 | 0.067 737 | - 10.39 31 |
| D_Mon_S S_W | N_NEU_ SS_W | 0.8557 | >-0.445 | 22.7 | 78.8 | 77.3 | 21.2 | 0.003 172 | 0.071 791 | - 10.27 06 |
| D_Mon_S S_W | N_WBC_ SS_CV | 0.8544 | >-0.2973 | 19.2 | 76 | 80.8 | 24 | 5.237 768 | 0.076 77 | - 12.99 34 |
| D_Mon_S S_W | N_NEU_ SS_CV | 0.8524 | >-0.3445 | 21.4 | 77.9 | 78.6 | 22.1 | 4.824 761 | 0.081 532 | - 12.20 69 |
| D_Mon_S S_W | N_WBC_ FS_CV | 0.8502 | >-0.3639 | 20.2 | 77.3 | 79.8 | 22.7 | 9.753 849 | 0.072 754 | - 13.76 27 |
| D_Mon_S S_W | N_NEU_ SSFS_Are a | 0.8431 | >-0.4203 | 24.7 | 78 | 75.3 | 22 | 0.000 428 | 0.073 138 | - 9.463 27 |
| D_Mon_S S_W | N_WBC_ SSFS_Are a | 0.8348 | >-0.2771 | 22.2 | 74 | 77.8 | 26 | 0.000 305 | 0.076 832 | - 9.572 92 |
| D_Mon_S S_W | N_WBC_ SS_P | 0.8337 | >-0.2582 | 20.6 | 72.7 | 79.4 | 27.3 | 0.005 995 | 0.063 736 | - 12.62 12 |
| D_Mon_S S_W | N_NEU_ SS_P | 0.8327 | >-0.2768 | 21.2 | 73.1 | 78.8 | 26.9 | 0.005 324 | 0.063 842 | - 11.975 5 |
| D_Mon_S S_W | N_NEU_ FL_CV | 0.8295 | >-0.3435 | 24.6 | 75.9 | 75.4 | 24.1 | - 0.952 87 | 0.078 455 | - 6.185 05 |
| D_Mon_S S_W | N_WBC_ FS_P | 0.8274 | >-0.4621 | 28.4 | 80 | 71.6 | 20 | 0.007 994 | 0.068 9 | - 16.44 34 |
| D_Mon_S S_W | N_WBC_ FL_CV | 0.8273 | >-0.3501 | 25 | 75.6 | 75 | 24.4 | - 0.077 26 | 0.079 117 | - 6.909 66 |
| D_Mon_S S_W | N_NEU_ FS_P | 0.8244 | >-0.3081 | 23 | 74.7 | 77 | 25.3 | 0.007 754 | 0.072 245 | - 17.51 43 |

Table 9-3. Efficacy of combination parameter containing N_WBC_FL_P for diagnosis of severe infection

| First leukocyte parameter | Second leukocyte parameter | ROC_AUC | Determination threshold | False positive rate% | True positive rate% | True negative rate% | False negative rate% | A | B | C |
|---|---|---|---|---|---|---|---|---|---|---|
| D_Mon_S S_W | N_WBC_ FL_P | 0.8747 | >-0.1673 | 17.4 | 77.9 | 82.6 | 22.1 | 0.003 315 | 0.060 114 | - 10.73 6 |
| D_Neu_F LSS_Area | N_WBC_ FL_P | 0.862 | >-0.2008 | 20.8 | 79.5 | 79.2 | 20.5 | 0.003 607 | 0.003 742 | - 9.4113 7 |
| D_Neu_F LFS_Area | N_WBC_ FL_P | 0.8566 | >-0.3476 | 23.3 | 80 | 76.7 | 20 | 0.003 852 | 0.003 189 | - 10.15 62 |
| D_Neu_F L_W | N_WBC_ FL_P | 0.8457 | >-0.311 | 22.3 | 77.7 | 77.7 | 22.3 | 0.003 244 | 0.013 542 | - 8.341 45 |
| D_Neu_F L_CV | N_WBC_ FL_P | 0.8421 | >-0.2634 | 22.7 | 77.4 | 77.3 | 22.6 | 0.003 741 | 9.638 562 | - 10.65 56 |
| D_Mon_F L_W | N_WBC_ FL_P | 0.8402 | >-0.2299 | 23.1 | 77.3 | 76.9 | 22.7 | 0.003 613 | 0.010 817 | - 10.60 14 |
| D_Mon_F S_W | N_WBC_ FL_P | 0.8359 | >-0.2267 | 23.7 | 77.3 | 76.3 | 22.7 | 0.003 998 | 0.008 165 | - 9.567 73 |
| D_Mon_S S_P | N_WBC_ FL_P | 0.8358 | >-0.1223 | 20.3 | 73.7 | 79.7 | 26.3 | 0.003 644 | 0.032 198 | - 12.95 82 |
| D_Neu_S S_W | N_WBC_ FL_P | 0.8225 | >-0.2913 | 26.3 | 78.5 | 73.7 | 21.5 | 0.003 586 | 0.009 954 | - 8.588 54 |
| D_Neu_F L_P | N_WBC_ FL_P | 0.8222 | >-0.168 | 21.3 | 73 | 78.7 | 27 | 0.003 22 | 0.007 339 | - 8.772 89 |
| D_Neu_S S_P | N_WBC_ FL_P | 0.821 | >-0.2353 | 25.1 | 76.7 | 74.9 | 23.3 | 0.003 619 | 0.009 555 | - 9.494 41 |
| D_Neu_F S_CV | N_WBC_ FL_P | 0.8195 | >-0.1996 | 23.2 | 75.7 | 76.8 | 24.3 | 0.003 86 | 5.883 423 | - 8.261 45 |
| D_Neu_S S_CV | N_WBC_ FL_P | 0.8182 | >-0.1267 | 23.2 | 73 | 76.8 | 27 | 0.003 678 | 6.498 72 | - 10.77 21 |
| D_Mon_F S_P | N_WBC_ FL_P | 0.818 | >-0.2798 | 26.8 | 77.9 | 73.2 | 22.1 | 0.004 027 | 0.003 451 | - 11.064 3 |
| D_Neu_F S_W | N_WBC_ FL_P | 0.8164 | >-0.3431 | 28.1 | 79.7 | 71.9 | 20.3 | 0.003 832 | 0.003 245 | - 8.145 56 |
| D_Mon_F L_P | N_WBC_ FL_P | 0.8154 | >-0.1583 | 22.8 | 73.1 | 77.2 | 26.9 | 0.004 213 | - 0.000 47 | - 6.472 93 |
| D_Neu_F S_P | N_WBC_ FL_P | 0.8132 | >-0.1609 | 23.4 | 73.5 | 76.6 | 26.5 | 0.003 79 | - 0.000 8 | - 4.838 07 |

Table 9-4. Efficacy of other combination parameters for diagnosis of severe infection

| First leukocyte parameter | Second leukocyte parameter | ROC_A UC | Determina tion threshold | False positive rate% | True positive rate% | True negative rate% | False negativ e rate% | A | B | C |
|---|---|---|---|---|---|---|---|---|---|---|
| D_Neu_F LSS_Area | N_NEU_ FL_P | 0.863 | >-0.1786 | 19.7 | 78 | 80.3 | 22 | 0.003 43 | 0.003 896 | - 9.771 74 |
| D_Neu_F L_W | N_NEU_ FL_W | 0.8592 | >-0.3233 | 22.3 | 77 | 77.7 | 23 | 0.006 567 | 0.017 472 | - 12.96 65 |
| D_Neu_F LFS_Area | N_NEU_ FL_P | 0.8568 | >-0.0677 | 16.2 | 74.2 | 83.8 | 25.8 | 0.003 637 | 0.003 303 | - 10.47 86 |
| D_Neu_F L_W | N_NEU_ FLFS_Ar ea | 0.847 | >-0.4061 | 24.4 | 77.4 | 75.6 | 22.6 | 0.000 721 | 0.019 213 | - 9.668 91 |
| D_Neu_F L_P | N_NEU_ FLFS_Ar ea | 0.8461 | >-0.3724 | 25.1 | 80.6 | 74.9 | 19.4 | 0.000 726 | 0.014 216 | - 12.16 04 |
| D_Neu_F L_W | N_NEU_ FL_P | 0.8434 | >-0.2336 | 20.3 | 76.5 | 79.7 | 23.5 | 0.003 022 | 0.014 402 | - 8.615 45 |
| D_Mon_S S_P | N_NEU_ FL_W | 0.8432 | >-0.1453 | 20.1 | 73.1 | 79.9 | 26.9 | 0.006 667 | 0.041 582 | - 18.24 71 |
| D_Neu_F L_W | N_WBC_ FLFS_Ar ea | 0.8429 | >-0.2916 | 20.4 | 74.6 | 79.6 | 25.4 | 0.000 577 | 0.020 724 | - 10.20 58 |
| D_Neu_F L_CV | N_NEU_ FL_P | 0.8418 | >-0.287 | 22.9 | 77.9 | 77.1 | 22.1 | 0.003 551 | 10.67 266 | - 11.354 |
| D_Mon_F L_W | N_NEU_ FL_W | 0.8417 | >-0.212 | 21.6 | 75.9 | 78.4 | 24.1 | 0.006 336 | 0.010 853 | - 13.47 46 |
| D_Neu_F L_W | N_WBC_ FLSS_Ar ea | 0.8397 | >-0.4084 | 24.3 | 78.1 | 75.7 | 21.9 | 0.000 339 | 0.019 713 | - 8.905 01 |
| D_Mon_F L_W | N_NEU_ FL_P | 0.8372 | >-0.0805 | 20.2 | 74 | 79.8 | 26 | 0.003 338 | 0.011 402 | - 10.89 81 |
| D_Mon_F L_W | N_NEU_ FLFS_Ar ea | 0.8356 | >-0.2566 | 24.4 | 76.1 | 75.6 | 23.9 | 0.000 686 | 0.013 191 | - 10.85 02 |
| D_Neu_F L_P | N_NEU_ FS_W | 0.8353 | >-0.3584 | 24.7 | 78.2 | 75.3 | 21.8 | 0.008 876 | 0.014 396 | - 12.55 57 |
| D_Neu_F L_P | N_NEU_ FS_CV | 0.8351 | >-0.2879 | 22 | 75.7 | 78 | 24.3 | 14.38 314 | 0.015 833 | - 13.97 47 |
| D_Neu_F L_W | N_NEU_ FLSS_Ar ea | 0.8349 | >-0.2868 | 22.4 | 73.8 | 77.6 | 26.2 | 0.000 38 | 0.018 25 | - 8.240 24 |
| D_Neu_F L_P | N_NEU_ FLSS_Ar ea | 0.8347 | >-0.2304 | 20.5 | 74.5 | 79.5 | 25.5 | 0.000 387 | 0.013 528 | - 10.66 61 |
| D_Mon_F L_W | N_WBC_ FS_W | 0.8336 | >-0.1276 | 19.8 | 71.7 | 80.2 | 28.3 | 0.009 101 | 0.013 169 | - 14.56 59 |
| D_Neu_F L_W | N_WBC_ FS_W | 0.8327 | >-0.3245 | 20.4 | 74.5 | 79.6 | 25.5 | 0.009 065 | 0.016 171 | - 12.43 06 |
| D_Neu_F L_W | N_NEU_ FS_W | 0.832 | >-0.3847 | 24.8 | 76.5 | 75.2 | 23.5 | 0.008 276 | 0.017 86 | - 9.327 27 |
| D_Mon_S S_P | N_NEU_ FL_P | 0.8308 | >-0.1158 | 21.3 | 74.6 | 78.7 | 25.4 | 0.003 341 | 0.033 984 | - 13.34 46 |
| D_Mon_F S_W | N_NEU_ FL_W | 0.8295 | >-0.271 | 23.5 | 74.5 | 76.5 | 25.5 | 0.006 85 | 0.007 395 | - 12.22 61 |
| D_Mon_F S_W | N_NEU_ FL_P | 0.8292 | >-0.1114 | 20.9 | 73.9 | 79.1 | 26.1 | 0.003 68 | 0.008 389 | - 9.676 42 |
| D_Neu_F L_P | N_WBC_ FLFS_Ar ea | 0.8289 | >-0.1859 | 19.4 | 72.6 | 80.6 | 27.4 | 0.000 548 | 0.014 327 | - 12.10 12 |
| D_Neu_F L_W | N_WBC_ SS_W | 0.8278 | >-0.4859 | 25.2 | 77.8 | 74.8 | 22.2 | 0.003 521 | 0.015 834 | - 8.420 12 |

(continued)

| First leukocyte parameter | Second leukocyte parameter | ROC_A UC | Determina tion threshold | False positive rate% | True positive rate% | True negative rate% | False negativ e rate% | A | B | C |
|---|---|---|---|---|---|---|---|---|---|---|
| D_Neu_F L_W | N_NEU_ SS_W | 0.8276 | >-0.3089 | 19.9 | 72.9 | 80.1 | 27.1 | 0.003 566 | 0.017 976 | - 8.419 17 |
| D_Neu_F L_P | N_WBC_ FLSS_Ar ea | 0.8276 | >-0.2854 | 23.3 | 74.6 | 76.7 | 25.4 | 0.000 327 | 0.013 639 | - 10.81 91 |
| D_Mon_F L_W | N_NEU_ FS_W | 0.8275 | >-0.312 | 26.5 | 77.7 | 73.5 | 22.3 | 0.007 873 | 0.013 424 | - 10.90 33 |
| D_Mon_F L_W | N_WBC_ FLSS_Ar ea | 0.8274 | >-0.0778 | 18 | 70.4 | 82 | 29.6 | 0.000 318 | 0.013 752 | - 10.20 05 |
| D_Mon_F L_W | N_WBC_ FLFS_Ar ea | 0.8271 | >-0.1845 | 22 | 73.2 | 78 | 26.8 | 0.000 537 | 0.014 21 | - 11.376 3 |
| D_Neu_F L_W | N_NEU_ FS_CV | 0.8268 | >-0.3247 | 22.8 | 73.9 | 77.2 | 26.1 | 12.12 681 | 0.018 422 | - 9.561 85 |
| D_Mon_S S_P | N_NEU_ FLFS_Ar ea | 0.8267 | >-0.1947 | 23.7 | 73 | 76.3 | 27 | 0.000 692 | 0.044 145 | - 14.76 12 |
| D_Mon_F L_W | N_NEU_ FLSS_Ar ea | 0.8266 | >-0.1741 | 22.8 | 73.1 | 77.2 | 26.9 | 0.000 364 | 0.013 123 | - 9.700 52 |
| D_Neu_S S_P | N_NEU_ FL_W | 0.826 | >-0.192 | 24.6 | 74.1 | 75.4 | 25.9 | 0.006 346 | 0.010 697 | - 12.74 84 |
| D_Neu_S S_W | N_NEU_ FL_W | 0.8248 | >-0.1548 | 22.8 | 71.9 | 77.2 | 28.1 | 0.006 613 | 0.010 75 | - 12.06 43 |
| D_Neu_F L_P | N_NEU_ SS_W | 0.8246 | >-0.3529 | 22.3 | 74.4 | 77.7 | 25.6 | 0.003 776 | 0.013 899 | - 11.261 5 |
| D_Neu_F L_CV | N_NEU_ FL_W | 0.8246 | >-0.226 | 23.7 | 73.5 | 76.3 | 26.5 | 0.006 523 | 7.094 24 | - 12.35 3 |
| D_Neu_F L_P | N_WBC_ SS_W | 0.8243 | >-0.4338 | 24.6 | 76.8 | 75.4 | 23.2 | 0.003 629 | 0.012 031 | - 10.74 34 |
| D_Neu_F L_P | N_WBC_ FS_W | 0.8236 | >-0.3007 | 22.8 | 74.2 | 77.2 | 25.8 | 0.008 568 | 0.011 59 | - 13.83 7 |
| D_Mon_S S_P | N_NEU_ FLSS_Ar ea | 0.8231 | >-0.2953 | 27.2 | 75.8 | 72.8 | 24.2 | 0.000 379 | 0.046 279 | - 14.21 93 |
| D_Neu_F L_P | N_NEU_ SS_CV | 0.8229 | >-0.1872 | 19.5 | 71.7 | 80.5 | 28.3 | 6.800 533 | 0.018 677 | - 15.90 11 |
| D_Mon_F L_W | N_WBC_ SS_W | 0.8219 | >-0.3871 | 26.1 | 76.5 | 73.9 | 23.5 | 0.003 472 | 0.012 719 | - 10.33 29 |
| D_Mon_F L_P | N_NEU_ FL_W | 0.8208 | >-0.1206 | 21.6 | 71.1 | 78.4 | 28.9 | 0.007 258 | 0.004 25 | - 14.15 97 |
| D_Neu_F L_P | N_WBC_ SS_CV | 0.8196 | >-0.4009 | 24.1 | 76.3 | 75.9 | 23.7 | 6.589 091 | 0.015 708 | - 15.26 18 |
| D_Mon_F L_W | N_NEU_ FS_CV | 0.8195 | >-0.2412 | 25.5 | 75.7 | 74.5 | 24.3 | 11.510 76 | 0.013 678 | - 11.102 9 |
| D_Neu_F LSS_Area | N_NEU_ FL_W | 0.8191 | >-0.2132 | 24.1 | 73 | 75.9 | 27 | 0.004 234 | 0.002 088 | - 7.802 68 |
| D_Mon_S S_P | N_WBC_ FLSS_Ar ea | 0.8188 | >-0.1706 | 22.7 | 71.7 | 77.3 | 28.3 | 0.000 327 | 0.048 081 | - 14.80 27 |
| D_Mon_F S_P | N_NEU_ FL_W | 0.8169 | >-0.2987 | 26.8 | 74.7 | 73.2 | 25.3 | 0.006 961 | 0.004 495 | - 15.44 83 |
| D_Neu_F L_W | N_WBC_ SS_CV | 0.8168 | >-0.3825 | 23.5 | 74.1 | 76.5 | 25.9 | 5.626 382 | 0.019 233 | - 10.96 03 |
| D_Neu_F L_W | N_NEU_ SS_CV | 0.8166 | >-0.2366 | 20.1 | 70.7 | 79.9 | 29.3 | 5.503 921 | 0.022 04 | - 10.61 65 |

(continued)

| First leukocyte parameter | Second leukocyte parameter | ROC_A UC | Determina tion threshold | False positive rate% | True positive rate% | True negative rate% | False negativ e rate% | A | B | C |
|---|---|---|---|---|---|---|---|---|---|---|
| D_Neu_S S_W | N_NEU_ FL_P | 0.8162 | >-0.2416 | 26.1 | 76.3 | 73.9 | 23.7 | 0.003 314 | 0.010 275 | - 8.722 1 |
| D_Neu_F L_P | N_NEU_ FL_P | 0.815 | >-0.232 | 24.9 | 74.5 | 75.1 | 25.5 | 0.002 942 | 0.007 671 | - 8.9113 5 |
| D_Mon_S S_P | N_WBC_ SS_W | 0.8149 | >-0.3292 | 24.5 | 74.1 | 75.5 | 25.9 | 0.003 689 | 0.045 198 | - 14.92 91 |
| D_Neu_F L_W | N_WBC_ FS_CV | 0.8148 | >-0.2605 | 18.6 | 72.2 | 81.4 | 27.8 | 11.217 94 | 0.018 532 | - 12.56 71 |
| D_Mon_S S_P | N_NEU_ FS_W | 0.8148 | >-0.213 | 25.3 | 73.4 | 74.7 | 26.6 | 0.008 002 | 0.045 184 | - 14.97 61 |
| D_Neu_S S_CV | N_NEU_ FL_W | 0.8143 | >-0.2551 | 26.5 | 73.9 | 73.5 | 26.1 | 0.006 634 | 5.000 563 | - 12.82 52 |
| D_Neu_S S_P | N_NEU_ FL_P | 0.8141 | >-0.2255 | 25.3 | 75.9 | 74.7 | 24.1 | 0.003 342 | 0.009 786 | - 9.622 84 |
| D_Mon_F L_P | N_NEU_ FLFS_Ar ea | 0.8134 | >-0.2741 | 27.3 | 74.1 | 72.7 | 25.9 | 0.000 811 | 0.006 18 | - 12.04 53 |
| D_Neu_F S_CV | N_NEU_ FL_P | 0.8131 | >-0.1504 | 21.6 | 72.3 | 78.4 | 27.7 | 0.003 613 | 6.750 701 | - 8.672 96 |
| D_Mon_F L_W | N_NEU_ SS_W | 0.8121 | >-0.2771 | 24.9 | 73.3 | 75.1 | 26.7 | 0.003 259 | 0.013 168 | - 9.743 33 |
| D_Neu_F L_W | N_NEU_ SSFS_Are a | 0.812 | >-0.2945 | 22.8 | 72.1 | 77.2 | 27.9 | 0.000 533 | 0.019 999 | - 8.181 58 |
| D_Neu_F S_CV | N_NEU_ FL_W | 0.8117 | >-0.1 067 | 24.3 | 71.7 | 75.7 | 28.3 | 0.006 868 | - 0.759 29 | - 9.273 29 |
| D_Neu_F S_P | N_NEU_ FL_W | 0.8117 | >-0.2496 | 27.8 | 75.4 | 72.2 | 24.6 | 0.006 539 | 0.000 968 | - 10.75 4 |
| D_Mon_S S_P | N_NEU_ FS_CV | 0.8117 | >-0.3043 | 27.9 | 76.9 | 72.1 | 23.1 | 12.25 456 | 0.048 986 | - 16.13 89 |
| D_Neu_F S_W | N_NEU_ FL_W | 0.8114 | >-0.0868 | 23.5 | 71 | 76.5 | 29 | 0.006 827 | 0.000 384 | - 9.680 22 |
| D_Neu_F LFS_Area | N_NEU_ FL_W | 0.8113 | >-0.188 | 25 | 72.2 | 75 | 27.8 | 0.005 118 | 0.000 785 | - 8.020 74 |
| D_Mon_F L_W | N_WBC_ FS_CV | 0.8112 | >-0.1597 | 21.7 | 70.5 | 78.3 | 29.5 | 10.85 57 | 0.014 256 | - 14.33 82 |
| D_Neu_S S_CV | N_NEU_ FL_P | 0.8109 | >-0.2103 | 25.2 | 75 | 74.8 | 25 | 0.003 404 | 6.834 21 | - 11.072 |
| D_Mon_S S_P | N_WBC_ FS_W | 0.8109 | >-0.3446 | 26.8 | 74.5 | 73.2 | 25.5 | 0.008 882 | 0.040 207 | - 17.37 66 |
| D_Neu_F L_P | N_NEU_ SSFS_Are a | 0.8106 | >-0.206 | 21 | 71 | 79 | 29 | 0.000 559 | 0.015 026 | - 11.025 3 |
| D_Mon_S S_P | N_NEU_ SS_W | 0.8103 | >-0.3307 | 26 | 75.1 | 74 | 24.9 | 0.003 627 | 0.049 18 | - 15.16 08 |
| D_Mon_F S_P | N_NEU_ FL_P | 0.8099 | >-0.2574 | 27.3 | 76.6 | 72.7 | 23.4 | 0.003 693 | 0.003 842 | - 11.568 9 |
| D_Mon_S S_P | N_WBC_ FLFS_Ar ea | 0.8097 | >-0.1844 | 23.7 | 71.4 | 76.3 | 28.6 | 0.000 532 | 0.047 232 | - 15.42 35 |
| D_Neu_F LSS_Area | N_NEU_ FL_CV | 0.8094 | >-0.1944 | 25.2 | 73.6 | 74.8 | 26.4 | - 4.8116 4 | 0.004 872 | - 0.7611 6 |
| D_Neu_F S_W | N_NEU_ FL_P | 0.8093 | >-0.2058 | 24.4 | 73.5 | 75.6 | 26.5 | 0.003 573 | 0.003 697 | - 8.507 64 |

(continued)

| First leukocyte parameter | Second leukocyte parameter | ROC_A UC | Determina tion threshold | False positive rate% | True positive rate% | True negative rate% | False negativ e rate% | A | B | C |
|---|---|---|---|---|---|---|---|---|---|---|
| D_Mon_F L_P | N_NEU_ FL_P | 0.8066 | >-0.263 | 27.4 | 75.8 | 72.6 | 24.2 | 0.003 871 | - 0.000 39 | - 6.566 26 |
| D_Mon_S S_P | N_WBC_ SS_CV | 0.8065 | >-0.3191 | 26.3 | 74.3 | 73.7 | 25.7 | 6.141 848 | 0.056 137 | - 19.45 97 |
| D_Mon_F L_W | N_NEU_ SSFS_Are a | 0.8052 | >-0.275 | 27.2 | 74.1 | 72.8 | 25.9 | 0.000 491 | 0.014 523 | - 9.730 99 |
| D_Neu_F L_P | N_WBC_ FS_CV | 0.805 | >-0.1435 | 19.5 | 69.3 | 80.5 | 30.7 | 11.906 41 | 0.013 737 | - 15.47 11 |
| D_Neu_F S_P | N_NEU_ FL_P | 0.8045 | >-0.1663 | 24.2 | 73.1 | 75.8 | 26.9 | 0.003 508 | - 0.000 93 | - 4.664 97 |
| D_Neu_F L_CV | N_NEU_ FLFS_Ar ea | 0.8037 | >-0.1655 | 24.3 | 71.5 | 75.7 | 28.5 | 0.000 7 | 9.090 207 | - 9.504 83 |
| D_Mon_F L_W | N_WBC_ SS_CV | 0.8033 | >-0.3082 | 25.9 | 74 | 74.1 | 26 | 4.908 484 | 0.013 846 | - 11.823 3 |
| D_Neu_F LSS_Area | N_WBC_ SS_W | 0.8033 | >-0.182 | 22.7 | 69.6 | 77.3 | 30.4 | 0.002 46 | 0.002 824 | - 6.057 88 |
| D_Mon_F L_W | N_NEU_ SS_P | 0.8031 | >-0.2782 | 26.3 | 73.7 | 73.7 | 26.3 | 0.007 351 | 0.012 633 | - 14.21 31 |
| D_Mon_F L_W | N_WBC_ SS_P | 0.8028 | >-0.1695 | 24.2 | 71.2 | 75.8 | 28.8 | 0.008 032 | 0.012 54 | - 14.79 23 |
| D_Mon_F S_W | N_NEU_ FLSS_Ar ea | 0.8025 | >-0.1156 | 22.2 | 68 | 77.8 | 32 | 0.000 382 | 0.008 33 | - 7.305 22 |
| D_Neu_F L_CV | N_WBC_ FS_W | 0.8023 | >-0.2669 | 23 | 71.4 | 77 | 28.6 | 0.009 628 | 8.381 787 | - 13.31 34 |
| D_Mon_F L_P | N_WBC_ FS_W | 0.8022 | >-0.1931 | 21.7 | 70.3 | 78.3 | 29.7 | 0.010 5 | 0.005 153 | - 15.211 5 |
| D_Mon_F S_W | N_NEU_ FLFS_Ar ea | 0.8014 | >-0.3843 | 32.9 | 77.5 | 67.1 | 22.5 | 0.000 69 | 0.006 721 | - 7.672 48 |
| D_Neu_F LFS_Area | N_WBC_ SS_W | 0.8014 | >-0.3507 | 24.7 | 74.6 | 75.3 | 25.4 | 0.002 86 | 0.001 92 | - 6.286 57 |
| D_Neu_F LSS_Area | N_WBC_ FS_W | 0.8004 | >-0.1955 | 23.5 | 70.6 | 76.5 | 29.4 | 0.004 841 | 0.002 704 | - 7.243 25 |
| D_Neu_S S_W | N_NEU_ FLFS_Ar ea | 0.8003 | >-0.1806 | 25.8 | 71.7 | 74.2 | 28.3 | 0.000 682 | 0.010 459 | - 7.943 21 |

Table 9-5. Efficacy of PCT (procalcitonin) in the prior art and parameters of the DIFF channel alone for identification between common infection and severe infection

| Infection marker parameter | ROC_AUC | Determination threshold | False positive rate | True positive rate | True negative rate | False negative rate |
|---|---|---|---|---|---|---|
| PCT | 0.806 | >0.46 | 31.8% | 80.5% | 68.2% | 19.5% |
| D_Neu_SSC_W | 0.664 | >259.324 | 39.3% | 633.3% | 60.7% | 36.7% |
| D_Neu_SFL_W | 0.758 | >220.767 | 13.6% | 54.3% | 86.4% | 45.7% |
| D_Neu_FSC_W | 0.542 | >572.274 | 34.3% | 41.9% | 65.7% | 58.1% |

It has been reported in the prior art (Crouser E, Parrillo J, Seymour C et al. Improved Early Detection of Sepsis in the ED With a Novel Monocyte Distribution Width Biomarker. CHEST. 2017; 152 (3): 518-526) that, from blood routine test scattergram of DIFF channel of BCI blood analyzer, distribution width of neutrophils was used to identify between common infection and severe infection, and ROC_AUC was 0.79, determination threshold was > 20.5, false positive rate was 27%, true positive rate was 77.0%, true negative rate was 73%, and false negative rate was 23%. From the reported data, it was similar to MINDRAY's DIFF channel for identification between common infection and severe infection.

From comparison between Table 9-5 and Tables 8, 9-1, 9-2, 9-3, and 9-4, it can be seen that combination of a parameter of the WNB channel with a parameter of the DIFF channel is similar to or even better than PCT in prediction of sepsis, is possible to replace PCT marker, and realizes the use of blood routine test data to give prompt for identification between common infection and severe infection without additional cost; in addition, the combination has better diagnostic performance than parameters of the DIFF channel alone.

Table 9-6 Illustration of the statistical methods and testing methods used in this example by taking 3 parameters as examples

| Infection marker parameter | Positive sample Mean ± SD | Negative sample Mean ± SD | F value | P value |
|---|---|---|---|---|
| Combination parameter 1 | 17.62 ± 2.09 | 14.59 ± 1.33 | 1134.75 | < 0.0001 |
| Combination parameter 2 | 15.88 ± 1.88 | 13.29 ± 1.31 | 973.65 | < 0.0001 |
| Combination parameter 3 | 16.85 ± 1.70 | 14.79 ± 1.13 | 779.76 | < 0.0001 |

As can be seen from Table 9-6, these parameters are analyzed by Welch test, and there is a significant statistical difference between the two groups (p < 0.0001.)

As can be seen from Tables 8 and 9-1 to 9-6, the infection marker parameters provided in the disclosure can be used to effectively determine whether a subject has a severe infection.

Example 3 Diagnosis of sepsis

1,748 blood samples were subjected to blood routine tests by using tBC-6800 Plus blood cell analyzer produced by SHENZHEN MINDRAY BIO-MEDICAL ELECTRONICS CO., LTD. in accordance with the steps similar to example 1 of the disclosure, and diagnosis of sepsis was performed based on scattergrams by using the aforementioned method. Among them, there were 506 sepsis samples, that is, positive samples, and 1,242 non-sepsis samples, that is, negative samples.

Inclusion criteria for these 1,748 cases: adult ICU patients with acute infection or with suspected acute infection. Exclusion criteria: pregnant people, myelosuppressed people on chemotherapy, people on immunosuppressant treatment, patients with hematologic diseases.

Table 10 shows infection marker parameters used and their corresponding diagnostic efficacy, and FIGS. 18 show ROC curves corresponding to the infection marker parameters in Table 10. In Table 10:

$$\text{Combination parameter 1} = 0.006048 * \text{N_WBC_FL_W} + 0.068161 * \text{D_Mon_SS_W} - 18.54084598;$$

Combination parameter 2 = 0.006514 * N_WBC_FL_W + 0.00675 * D_NEU_SS_P-15.78556712.

Table 10 Efficacy of different infection marker parameters for diagnosis of sepsis

| Infection marker parameter | ROC_AUC | Determination threshold | False positive rate | True positive rate | True negative rate | False negative rate |
|---|---|---|---|---|---|---|
| Combination parameter 1 | 0.91 | > 17.7079 | 13.1% | 82.6% | 86.9% | 17.4% |
| Combination parameter 2 | 0.8804 | >14.7255 | 20.3% | 82.3% | 79.7% | 17.7% |

In addition, Table 11-1 shows respective efficacy of using other infection marker parameters for diagnosis of sepsis in this example, wherein, each infection marker parameter is calculated by the function Y = A * X1 + B * X2 + C based on the first leukocyte parameter and the second leukocyte parameter in Table 11-1, where Y represents the infection marker parameter, X1 represents the first leukocyte parameter, X2 represents the second leukocyte parameter, and A, B, and C are constants.

Table 11-1 Efficacy of other infection marker parameters for diagnosis of sepsis

| First leukocyte parameter | Second leukocyte parameter | ROC_AUC | Determination threshold | False positive rate% | True positive rate% | True negative rate% | False negative rate% | A | B | C |
|---|---|---|---|---|---|---|---|---|---|---|
| D_Neu_F L_W | N_WBC_ FL_W | 0.8994 | >-1.0173 | 15.5 | 81.1 | 84.5 | 18.9 | 0.006 233 | 0.018 065 | - 16.84 31 |
| D_Neu_F L_CV | N_WBC_ FL_W | 0.8928 | >-1.116 | 18.3 | 81.5 | 81.7 | 18.5 | 0.006 885 | 11.27 099 | - 19.29 99 |
| D_Mon_S S_W | N_WBC_ FL_P | 0.8876 | >-1.0991 | 19 | 82.6 | 81 | 17.4 | 0.003 439 | 0.074 523 | - 13.30 81 |
| D_Mon_S S_W | N_NEU_ FL_P | 0.8874 | >-1.1604 | 20.2 | 82.8 | 79.8 | 17.2 | 0.003 29 | 0.077 087 | - 13.79 33 |
| D_Neu_F L_P | N_WBC_ FL_W | 0.8872 | >-1.0099 | 17.8 | 81.7 | 82.2 | 18.3 | 0.005 924 | 0.010 672 | - 17.25 7 |
| D_Mon_S S_P | N_WBC_ FL_W | 0.8871 | >-0.7471 | 153 | 78 | 84.7 | 22 | 0.006 64 | 0.031 138 | - 20.311 3 |
| D_Mon_F S_W | N_WBC_ FL_W | 0.8851 | >-0.8985 | 16.7 | 78.8 | 83.3 | 21.2 | 0.006 979 | 0.006 889 | - 16.75 47 |
| D_Mon_F L_W | N_WBC_ FL_W | 0.8845 | >-1.0077 | 19.4 | 81.8 | 80.6 | 18.2 | 0.006 643 | 0.006 308 | - 16.27 91 |
| D_Mon_S S_W | N_NEU_ FL_W | 0.8844 | >-1.277 | 21.5 | 82.6 | 78.5 | 17.4 | 0.005 56 | 0.081 703 | - 16.03 18 |
| D_Neu_S S_W | N_WBC_ FL_W | 0.8841 | >-1.0529 | 19.8 | 82.1 | 80.2 | 17.9 | 0.006 811 | 0.008 579 | - 16.18 62 |
| D_Neu_S S_CV | N_WBC_ FL_W | 0.8839 | >-0.9007 | 16.7 | 79.1 | 83.3 | 20.9 | 0.006 896 | 6.718 376 | - 18.90 4 |
| D_Neu_F LSS_Area | N_WBC_ FL_W | 0.8822 | >-0.9546 | 17.6 | 80.4 | 82.4 | 19.6 | 0.005 086 | 0.002 032 | - 12.46 38 |
| D Neu F S_W | N_WBC_ FL_W | 0.8806 | >-1.0769 | 19.6 | 80.3 | 80.4 | 19.7 | 0.007 148 | 0.003 616 | - 16.55 46 |
| D_Neu_F S_CV | N_WBC_ FL_W | 0.8795 | >-1.0803 | 19.9 | 80.3 | 80.1 | 19.7 | 0.007 115 | 4.133 035 | - 15.77 77 |
| D_Mon_F S_P | N_WBC_ FL_W | 0.8791 | >-1.1843 | 21.1 | 81.6 | 78.9 | 18.4 | 0.007 162 | 0.001 719 | - 16.74 19 |
| D_Mon_F L_P | N_WBC_ FL_W | 0.8788 | >-1.1732 | 20.8 | 81.4 | 79.2 | 18.6 | 0.007 209 | 0.000 61 | - 15.20 17 |
| D_Neu_F S_P | N_WBC_ FL_W | 0.8767 | >-0.9263 | 18.3 | 78.4 | 81.7 | 21.6 | 0.006 773 | 0.000 985 | - 15.49 73 |
| D_Mon_S S_W | N_NEU_ FLFS_Ar ea | 0.876 | >-1.1631 | 19.6 | 77.8 | 80.4 | 22.2 | 0.000 6 | 0.086 016 | - 13.20 07 |
| D_Neu_F LFS_Area | N_WBC_ FL_W | 0.8754 | >-0.9934 | 19 | 79.2 | 81 | 20.8 | 0.005 662 | 0.000 746 | - 12.53 58 |
| D_Mon_S S_W | N_NEU_ FLSS_Ar ea | 0.875 | >-1.1488 | 19 | 78.8 | 81 | 21.2 | 0.000 331 | 0.086 917 | - 12.43 16 |
| D_Mon_S S_W | N_WBC_ FLSS_Ar ea | 0.8748 | >-1.2237 | 20 | 79 | 80 | 21 | 0.000 304 | 0.090 856 | - 13.20 77 |
| D_Mon_S S_W | N_WBC_ SS_CV | 0.8726 | >-1.3159 | 19.4 | 80.2 | 80.6 | 19.8 | 6.063 265 | 0.096 949 | - 16.92 14 |
| D_Mon_S S_W | N_NEU_ FS_CV | 0.8726 | >-1.2076 | 19.8 | 81 | 80.2 | 19 | 9.762 901 | 0.089 299 | - 13.37 96 |

(continued)

| First leukocyte parameter | Second leukocyte parameter | ROC_A UC | Determina tion threshold | False positive rate% | True positive rate% | True negative rate% | False negative rate% | A | B | C |
|---|---|---|---|---|---|---|---|---|---|---|
| D_Mon_S S_W | N_NEU_ FS_W | 0.8725 | >-1.2676 | 20.9 | 81.2 | 79.1 | 18.8 | 0.006 318 | 0.086 666 | - 12.83 68 |
| D_Neu_F LSS_Area | N_NEU_ FL_P | 0.8723 | >-0.9207 | 19.6 | 78.4 | 80.4 | 21.6 | 0.003 625 | 0.003 763 | - 11.032 2 |
| D_Mon_S S_W | N_WBC_ SS_W | 0.8722 | >-1.4138 | 21.6 | 81.6 | 78.4 | 18.4 | 0.003 649 | 0.085 253 | - 13.74 42 |
| D_Mon_S S_W | N_WBC_ FLFS_Ar ea | 0.8713 | >-1.241 | 20.5 | 77.2 | 79.5 | 22.8 | 0.000 489 | 0.092 121 | - 14.01 49 |
| D_Neu_F LSS_Area | N_WBC_ FL_P | 0.8712 | >-0.9946 | 21.6 | 80.6 | 78.4 | 19.4 | 0.003 739 | 0.003 558 | - 10.47 53 |
| D_Mon_S S_W | N_NEU_ ss_w | 0.8712 | >-1.3385 | 21.2 | 80.4 | 78.8 | 19.6 | 0.003 49 | 0.089 53 | - 13.35 74 |
| D Neu F L_W | N_NEU_ FL_W | 0.8701 | >-1.345 | 23.7 | 81.3 | 76.3 | 18.7 | 0.006 124 | 0.024 364 | - 14.96 72 |
| D_Mon_S S_W | N_WBC_ FS_W | 0.8695 | >-1.1585 | 17.2 | 78.2 | 82.8 | 21.8 | 0.007 544 | 0.084 099 | - 15.91 55 |
| D_Mon_S S_W | N_NEU_ SS_CV | 0.8694 | >-1.4874 | 25.3 | 85 | 74.7 | 15 | 5.173 945 | 0.100 605 | - 15.37 7 |
| D_Neu_F L_W | N_NEU_ FL_P | 0.8672 | >-1.19 | 22.4 | 79.9 | 77.6 | 20.1 | 0.003 301 | 0.021 184 | - 11.670 5 |
| D_Neu_F L_W | N_WBC_ FL_P | 0.867 | >-1.0311 | 19.5 | 77.1 | 80.5 | 22.9 | 0.003 436 | 0.020 168 | - 11.163 5 |
| D_Neu_F L_P | N_NEU_ FL_W | 0.8665 | >-1.22 | 24.1 | 81 | 75.9 | 19 | 0.006 285 | 0.018 046 | - 18.29 54 |
| D_Mon_S S_W | N_WBC_ FS_CV | 0.8642 | >-1.1979 | 18 | 78.2 | 82 | 21.8 | 9.157 572 | 0.093 966 | - 16.33 57 |
| D_Neu_F L_W | N_NEU_ FLFS_Ar ea | 0.8617 | >-1.2167 | 21.6 | 77.3 | 78.4 | 22.7 | 0.000 701 | 0.026 313 | - 12.16 38 |
| D Neu F L_CV | N_NEU_ FL_P | 0.8615 | >-1.2488 | 25.7 | 81.9 | 74.3 | 18.1 | 0.004 027 | 13.96 791 | - 14.76 5 |
| D_Mon_S S_W | N_NEU_ SSFS_Are a | 0.8613 | >-1.0606 | 17.7 | 76.6 | 82.3 | 23.4 | 0.000 417 | 0.091 707 | - 12.115 3 |
| D_Neu_F L_CV | N_WBC_ FL_P | 0.8604 | >-1.0298 | 21 | 77.3 | 79 | 22.7 | 0.004 134 | 12.62 1 | - 13.69 65 |
| D_Neu_F LFS_Area | N_WBC_ FL_P | 0.8576 | >-0.9456 | 21 | 77.6 | 79 | 22.4 | 0.004 071 | 0.002 691 | - 10.92 35 |
| D_Neu_F LFS_Area | N_NEU_ FL_P | 0.8573 | >-0.9667 | 20.3 | 77.8 | 79.7 | 22.2 | 0.003 909 | 0.002 857 | - 11.450 8 |
| D_Neu_F L_P | N_NEU_ FLFS_Ar ea | 0.8557 | >-1.1367 | 21.5 | 78.8 | 78.5 | 21.2 | 0.000 711 | 0.018 498 | - 15.115 4 |
| D_Neu_F L_W | N_WBC_ FLFS_Ar ea | 0.8557 | >-1.3038 | 22 | 78.5 | 78 | 21.5 | 0.000 579 | 0.028 425 | - 13.02 75 |
| D_Neu_F L_P | N_NEU_ FS_CV | 0.8552 | >-1.2513 | 23.7 | 80.5 | 76.3 | 19.5 | 14.84 882 | 0.020 594 | - 17.49 91 |

(continued)

| First leukocyte parameter | Second leukocyte parameter | ROC_A UC | Determina tion threshold | False positive rate% | True positive rate% | True negative rate% | False negative rate% | A | B | C |
|---|---|---|---|---|---|---|---|---|---|---|
| D_Neu_F L_W | N_NEU_ FS_W | 0.8549 | >-1.3124 | 23.4 | 78.5 | 76.6 | 21.5 | 0.008 028 | 0.025 485 | - 11.917 4 |
| D_Neu_F L_W | N_WBC_ FLSS_Ar ea | 0.8545 | >-1.3922 | 23.4 | 79.1 | 76.6 | 20.9 | 0.000 345 | 0.027 287 | - 11.747 6 |
| D Neu F L_W | N_WBC_ FS_W | 0.8538 | >-1.3762 | 21.6 | 78.1 | 78.4 | 21.9 | 0.009 253 | 0.024 443 | - 15.55 62 |
| D_Mon_S S_W | N_WBC_ SSFS_Are a | 0.8535 | >-1.2934 | 21.5 | 79 | 78.5 | 21 | 0.000 275 | 0.096 899 | - 12.16 55 |
| D_Neu_F L_W | N_NEU_ FS_CV | 0.8533 | >-1.4189 | 25.1 | 80.5 | 74.9 | 19.5 | 12.09 991 | 0.026 211 | - 12.33 54 |
| D_Neu_F L_W | N_NEU_ FLSS_Ar ea | 0.8527 | >-1.3684 | 25.3 | 79.5 | 74.7 | 20.5 | 0.000 374 | 0.025 465 | - 10.83 62 |
| D_Mon_S S_W | N_WBC_ SS_P | 0.8524 | >-1.2642 | 22.3 | 78 | 77.7 | 22 | 0.006 297 | 0.081 363 | - 15.59 77 |
| D_Mon_S S_W | N_NEU_ SS_P | 0.8523 | >-1.3456 | 23 | 78.4 | 77 | 21.6 | 0.005 979 | 0.081 072 | - 15.35 55 |
| D_Mon_F S_W | N_WBC_ FL_P | 0.8517 | >-1.0352 | 22.4 | 78.4 | 77.6 | 21.6 | 0.004 439 | 0.009 298 | - 11.736 5 |
| D Neu F L_P | N_NEU_ FS_W | 0.8511 | >-1.1791 | 22.2 | 78 | 77.8 | 22 | 0.008 827 | 0.019 008 | - 15.75 27 |
| D_Neu_F L_W | N_NEU_ ss_w | 0.8498 | >-1.3235 | 20.7 | 77.3 | 79.3 | 22.7 | 0.004 029 | 0.025 898 | - 11.830 6 |
| D_Neu_F L_W | N_WBC_ SS_W | 0.8495 | >-1.4893 | 23.1 | 79.3 | 76.9 | 20.7 | 0.004 056 | 0.023 7 | - 12.00 4 |
| D_Mon_F L_W | N_WBC_ FL_P | 0.8494 | >-1.1094 | 25.6 | 79.8 | 74.4 | 20.2 | 0.003 938 | 0.009 224 | - 11.433 9 |
| D_Mon_S S_W | N_WBC_ FS_P | 0.8491 | >-1.202 | 23 | 76.2 | 77 | 23.8 | 0.007 487 | 0.087 388 | - 18.45 85 |
| D_Mon_S S_W | N_NEU_ FL_CV | 0.8484 | >-1.3158 | 23.5 | 76.4 | 76.5 | 23.6 | 2.037 73 | 0.097 873 | - 8.097 62 |
| D_Mon_S S_P | N_WBC_ FL_P | 0.8481 | >-1.0269 | 22.8 | 77.8 | 77.2 | 22.2 | 0.003 973 | 0.035 668 | - 15.25 39 |
| D_Mon_S S_W | N_WBC_ FL_CV | 0.8477 | >-1.3203 | 24.1 | 78.2 | 75.9 | 21.8 | 0.710 73 | 0.098 561 | - 8.942 5 |
| D_Neu_F L_P | N_NEU_ SS_CV | 0.8475 | >-1.2996 | 23.6 | 78.5 | 76.4 | 21.5 | 7.894 246 | 0.024 443 | - 20.84 77 |
| D_Neu_F L_P | N_NEU_ FLSS_Ar ea | 0.8471 | >-1.2248 | 23.1 | 78.8 | 76.9 | 21.2 | 0.000 385 | 0.017 888 | - 13.73 85 |
| D_Mon_F L_W | N_NEU_ FL_P | 0.8471 | >-0.9984 | 24 | 77.4 | 76 | 22.6 | 0.003 713 | 0.010 014 | - 11.971 2 |
| D_Mon_F S_W | N_NEU_ FL_P | 0.8466 | >-1.0242 | 22.1 | 77.6 | 77.9 | 22.4 | 0.004 197 | 0.009 484 | - 12.04 43 |
| D_Neu_F L_W | N_NEU_ SS_CV | 0.8457 | >-1.3162 | 22.4 | 77.9 | 77.6 | 22.1 | 6.343 888 | 0.030 73 | - 14.49 43 |
| D_Mon_S S_W | N_NEU_ FS_P | 0.8454 | >-1.3649 | 25.4 | 78.4 | 74.6 | 21.6 | 0.006 29 | 0.092 498 | - 18.25 78 |
| D_Mon_S S_P | N_NEU_ FL_P | 0.8453 | >-0.949 | 22.2 | 76.6 | 77.8 | 23.4 | 0.003 736 | 0.037 738 | - 15.88 17 |
| D_Neu_F L_P | N_WBC_ FL_P | 0.8446 | >-1.0759 | 23.1 | 77.5 | 76.9 | 22.5 | 0.003 412 | 0.011 301 | - 11.962 6 |

(continued)

| First leukocyte parameter | Second leukocyte parameter | ROC_A UC | Determina tion threshold | False positive rate% | True positive rate% | True negative rate% | False negative rate% | A | B | C |
|---|---|---|---|---|---|---|---|---|---|---|
| D_Neu_F L_P | N_WBC_ SS_CV | 0.8445 | >-1.3188 | 21.8 | 77.1 | 78.2 | 22.9 | 8.059 918 | 0.021 806 | - 21.01 53 |
| D_Mon_S S_P | N_NEU_ FL_W | 0.8443 | >-1.1405 | 24.5 | 78.4 | 75.5 | 21.6 | 0.006 236 | 0.046 83 | - 19.81 52 |
| D Neu S S_CV | N_WBC_ FL_P | 0.8437 | >-0.9202 | 22.6 | 75.9 | 77.4 | 24.1 | 0.004 077 | 8.431 135 | - 13.79 51 |
| D_Neu_F L_W | N_WBC_ SS_CV | 0.8436 | >-1.55 | 25.5 | 79.9 | 74.5 | 20.1 | 6.761 731 | 0.028 19 | - 15.40 95 |
| D_Neu_F L_P | N_WBC_ SS_W | 0.8432 | >-1.198 | 18.9 | 74.4 | 81.1 | 25.6 | 0.004 232 | 0.017 038 | - 15.02 7 |
| D_Neu_F L_P | N_NEU_ SS_W | 0.8427 | >-1.3259 | 22.4 | 78.2 | 77.6 | 21.8 | 0.004 308 | 0.018 926 | - 15.36 29 |
| D_Neu_S S_W | N_WBC_ FL_P | 0.8427 | >-0.9314 | 22.4 | 76.7 | 77.6 | 23.3 | 0.003 987 | 0.010 662 | - 10.40 99 |
| D_Neu_F L_P | N_NEU_ FL_P | 0.8408 | >-1.0374 | 22.6 | 76.3 | 77.4 | 23.7 | 0.003 196 | 0.011 696 | - 12.27 84 |
| D_Neu_F L_P | N_WBC_ FS_W | 0.8403 | >-1.2124 | 20.7 | 76.2 | 79.3 | 23.8 | 0.008 785 | 0.016 814 | - 17.59 24 |
| D_Neu_F L_P | N_WBC_ FLSS_Ar ea | 0.8399 | >-1.0976 | 21.1 | 75.4 | 78.9 | 24.6 | 0.000 331 | 0.018 309 | - 14.13 07 |
| D_Neu_F L_W | N_NEU_ SSFS_Are a | 0.8397 | >-1.2551 | 21.1 | 75 | 78.9 | 25 | 0.000 559 | 0.027 897 | - 11.166 1 |
| D_Neu_S S_CV | N_NEU_ FL_P | 0.8393 | >-1.0185 | 24.7 | 77.1 | 75.3 | 22.9 | 0.003 867 | 9.028 487 | - 14.46 94 |
| D_Mon_F L_W | N_NEU_ FL_W | 0.8393 | >-1.09 | 24.7 | 79.8 | 75.3 | 20.2 | 0.005 963 | 0.010 218 | - 13.68 09 |
| D_Neu_S S_W | N_NEU_ FL_P | 0.8388 | >-0.9412 | 22.5 | 75.9 | 77.5 | 24.1 | 0.003 772 | 0.011 22 | - 10.77 98 |
| D_Neu_F S_CV | N_WBC_ FL_P | 0.8388 | >-1.0267 | 23.5 | 76.5 | 76.5 | 23.5 | 0.004 346 | 7.076 605 | - 10.40 95 |
| D_Neu_F L_P | N_WBC_ FLFS_Ar ea | 0.8387 | >-1.1885 | 22.2 | 77.4 | 77.8 | 22.6 | 0.000 546 | 0.019 092 | - 15.38 72 |
| D_Neu_F L_W | N_WBC_ FS_CV | 0.8385 | >-1.3704 | 21.1 | 77.5 | 78.9 | 22.5 | 11.464 21 | 0.027 592 | - 15.87 52 |
| D_Neu_S S_P | N_WBC_ FL_P | 0.8383 | >-1.1373 | 26.6 | 80.1 | 73.4 | 19.9 | 0.004 057 | 0.009 239 | - 11.068 6 |
| D_Neu_F S_W | N_WBC_ FL_P | 0.8378 | >-1.0437 | 24 | 77.5 | 76 | 22.5 | 0.004 349 | 0.004 522 | - 10.68 62 |
| D_Mon_F L_W | N_WBC_ FS_W | 0.8363 | >-1.02 | 20.5 | 75.4 | 79.5 | 24.6 | 0.009 378 | 0.013 367 | - 15.96 14 |
| D_Mon_F S_P | N_WBC_ FL_P | 0.836 | >-1.0517 | 24.4 | 76.8 | 75.6 | 23.2 | 0.004 444 | 0.003 677 | - 13.011 |
| D_Mon_F L_P | N_WBC_ FL_P | 0.835 | >-0.9617 | 22.5 | 75.8 | 77.5 | 24.2 | 0.004 58 | 0.000 327 | - 8.807 57 |
| D_Neu_F S_CV | N_NEU_ FL_P | 0.8345 | >-0.9313 | 21.2 | 75 | 78.8 | 25 | 0.004 165 | 8.264 515 | - 11.128 3 |
| D_Neu_S S_P | N_NEU_ FL_P | 0.8336 | >-1.078 | 25.2 | 77.7 | 74.8 | 22.3 | 0.003 836 | 0.009 648 | - 11.436 6 |
| D_Neu_F S_P | N_WBC_ FL_P | 0.8331 | >-0.9763 | 23.2 | 75.9 | 76.8 | 24.1 | 0.004 276 | 0.000 15 | - 7.735 02 |

(continued)

| First leukocyte parameter | Second leukocyte parameter | ROC_A UC | Determina tion threshold | False positive rate% | True positive rate% | True negative rate% | False negative rate% | A | B | C |
|---|---|---|---|---|---|---|---|---|---|---|
| D_Neu_F S_W | N_NEU_ FL_P | 0.8329 | >-1.0827 | 24.5 | 77.7 | 75.5 | 22.3 | 0.004 157 | 0.005 1 | - 11.328 8 |
| D_Mon_F L_W | N_NEU_ FLFS_Ar ea | 0.8318 | >-0.9648 | 21.9 | 76 | 78.1 | 24 | 0.000 661 | 0.012 601 | - 11.392 |
| D_Neu_F LSS_Area | N_NEU_ FL_CV | 0.8316 | >-1.1053 | 26.7 | 79 | 73.3 | 21 | 5.920 2 | 0.005 261 | - 1.213 1 |
| D_Mon_F L_W | N_WBC_ SS_W | 0.8308 | >-1.3144 | 26.2 | 78.8 | 73.8 | 21.2 | 0.004 1 | 0.012 632 | - 12.19 7 |
| D_Neu_F L_P | N_NEU_ SSFS_Are a | 0.8308 | >-1.139 | 21.1 | 75.4 | 78.9 | 24.6 | 0.000 591 | 0.019 953 | - 14.61 4 |
| D_Mon_F S_P | N_NEU_ FL_P | 0.8302 | >-1.0477 | 23.8 | 76.6 | 76.2 | 23.4 | 0.004 182 | 0.004 113 | - 13.77 67 |
| D_Mon_F L_W | N_NEU_ FS_W | 0.8299 | >-1.1096 | 25.7 | 79 | 74.3 | 21 | 0.007 585 | 0.013 281 | - 11.634 1 |
| D_Neu_F L_CV | N_NEU_ FL_W | 0.8299 | >-1.0876 | 23.1 | 74 | 76.9 | 26 | 0.006 271 | 10.31 215 | - 14.51 35 |
| D_Neu_S S_W | N_NEU_ FL_W | 0.8297 | >-1.0588 | 24.4 | 74.8 | 75.6 | 25.2 | 0.006 382 | 0.012 015 | - 13.08 03 |
| D_Mon_F S_W | N_NEU_ FL_W | 0.8297 | >-1.1369 | 24 | 77 | 76 | 23 | 0.006 705 | 0.008 313 | - 13.39 12 |
| D_Mon_F L_P | N_NEU_ FL_P | 0.8282 | >-0.8181 | 19.4 | 71.9 | 80.6 | 28.1 | 0.004 314 | 0.000 456 | - 9.148 72 |
| D_Mon_S S_P | N_WBC_ SS_W | 0.828 | >-1.4342 | 27.9 | 80 | 72.1 | 20 | 0.004 32 | 0.052 702 | - 18.49 36 |
| D_Neu_S S_P | N_NEU_ FL_W | 0.8273 | >-1.101 | 27.1 | 77.2 | 72.9 | 22.8 | 0.006 181 | 0.010 803 | - 13.54 18 |
| D_Mon_S S_P | N_NEU_ FLFS_Ar ea | 0.8273 | >-1.0466 | 23.4 | 73.5 | 76.6 | 26.5 | 0.000 673 | 0.050 184 | - 16.93 89 |
| D_Neu_F S_P | N_NEU_ FL_P | 0.8265 | >-0.8871 | 21.1 | 73.8 | 78.9 | 26.2 | 0.004 046 | 0.000 39 | - 7.5411 7 |
| D_Mon_F L_W | N_NEU_ FLSS Ar ea | 0.826 | >-0.9306 | 21.8 | 72.9 | 78.2 | 27.1 | 0.000 36 | 0.012 604 | - 10.40 58 |
| D_Mon_F L_P | N_NEU_ FL_W | 0.8254 | >-1.163 | 27.9 | 77.4 | 72.1 | 22.6 | 0.007 006 | 0.005 373 | - 15.86 76 |
| D_Neu_F L_W | N_WBC_ SSFS_Are a | 0.8251 | >-1.4028 | 25.3 | 77.7 | 74.7 | 22.3 | 0.000 404 | 0.029 31 | - 11.256 4 |
| D_Mon_S S_P | N_NEU_ FLSS_Ar ea | 0.825 | >-0.9721 | 20.8 | 71.1 | 79.2 | 28.9 | 0.000 378 | 0.052 422 | - 16.54 7 |
| D_Neu_F L_P | N_WBC_ FS_CV | 0.8248 | >-1.2942 | 24.4 | 77.5 | 75.6 | 22.5 | 12.39 054 | 0.019 545 | - 19.68 02 |
| D_Mon_S S_P | N_NEU_ FS_W | 0.8233 | >-1.0621 | 24 | 74.9 | 76 | 25.1 | 0.007 765 | 0.052 294 | - 17.36 72 |
| D_Mon_F L_W | N_NEU_ FS_CV | 0.8226 | >-1.0444 | 25 | 75.6 | 75 | 24.4 | 11.232 25 | 0.013 705 | - 11.963 6 |
| D_Mon_F L_W | N_WBC_ FLSS_Ar ea | 0.8225 | >-1.0583 | 22.8 | 76 | 77.2 | 24 | 0.000 317 | 0.013 52 | - 11.076 7 |

(continued)

| First leukocyte parameter | Second leukocyte parameter | ROC_AUC | Determination threshold | False positive rate% | True positive rate% | True negative rate% | False negative rate% | A | B | C |
|---|---|---|---|---|---|---|---|---|---|---|
| D_Neu_F LSS_Area | N_NEU_ FL_W | 0.8222 | >-1.2107 | 29.5 | 77.3 | 70.5 | 22.7 | 0.003 811 | 0.002 489 | - 8.561 46 |
| D_Mon_S S_P | N_NEU_ FS_CV | 0.8219 | >-1.1215 | 26.3 | 78 | 73.7 | 22 | 12.05 164 | 0.056 272 | - 18.63 33 |
| D_Neu_F L_W | N_WBC_ SS_P | 0.8217 | >-1.3487 | 26.6 | 76.7 | 73.4 | 23.3 | 0.007 251 | 0.020 7 | - 14.07 08 |
| D_Mon_S S_P | N_NEU_ ss_w | 0.8214 | >-1.1781 | 23.5 | 74.7 | 76.5 | 25.3 | 0.004 091 | 0.056 975 | -18.46 |
| D_Neu_S S_CV | N_NEU_ FL_W | 0.8198 | >-1.0679 | 24.5 | 74.4 | 75.5 | 25.6 | 0.006 421 | 7.600 687 | - 15.39 91 |
| D_Mon_S S_P | N_WBC_ FLSS_Ar ea | 0.8196 | >-0.9303 | 20 | 70.9 | 80 | 29.1 | 0.000 33 | 0.055 042 | - 17.36 13 |
| D_Mon_S S_P | N_WBC_ FS_W | 0.8194 | >-1.214 | 25.4 | 76.6 | 74.6 | 23.4 | 0.009 087 | 0.048 362 | - 20.39 74 |
| D_Neu_F L_W | N_NEU_ SS_P | 0.8191 | >-1.1666 | 19 | 70 | 81 | 30 | 0.006 579 | 0.020 223 | - 13.34 8 |
| D_Mon_S S_P | N_WBC_ SS_CV | 0.8191 | >-1.2256 | 24.1 | 75 | 75.9 | 25 | 7.079 22 | 0.066 537 | - 23.90 29 |
| D_Mon_F L_W | N_WBC_ FLFS_Ar ea | 0.819 | >-1.0842 | 23.9 | 76.2 | 76.1 | 23.8 | 0.000 518 | 0.014 127 | - 12.14 2 |
| D_Mon_F L_W | N_NEU_ ss_w | 0.819 | >-1.093 | 23.4 | 74.1 | 76.6 | 25.9 | 0.003 689 | 0.013 125 | - 11.251 1 |
| D_Neu_F LSS_Area | N_WBC_ SS_W | 0.8187 | >-0.9844 | 20.9 | 71.3 | 79.1 | 28.7 | 0.002 898 | 0.003 024 | - 7.851 44 |
| D_Neu_F L_W | N_WBC_ FS_P | 0.8187 | >-1.2762 | 27.1 | 75.5 | 72.9 | 24.5 | 0.009 348 | 0.023 145 | - 18.23 31 |
| D_Mon_F L_P | N_NEU_ FLFS_Ar ea | 0.8174 | >-1.016 | 23.7 | 71.3 | 76.3 | 28.7 | 0.000 818 | 0.007 426 | - 14.25 22 |
| D_Mon_F S_P | N_NEU_ FL_W | 0.8173 | >-1.1836 | 27.9 | 77.2 | 72.1 | 22.8 | 0.006 758 | 0.005 337 | - 17.23 28 |
| D Neu F L_CV | N_WBC_ FS_W | 0.8157 | >-1.3717 | 27.2 | 77.3 | 72.8 | 22.7 | 0.010 084 | 12.29 703 | - 16.63 23 |
| D_Neu_F LSS_Area | N_WBC_ FS_W | 0.8136 | >-1.1166 | 25.1 | 73.9 | 74.9 | 26.1 | 0.004 439 | 0.003 212 | - 8.304 77 |
| D_Mon_F L_P | N_WBC_ FS_W | 0.8131 | >-1.1276 | 23.4 | 74.3 | 76.6 | 25.7 | 0.0113 15 | 0.007 197 | - 18.99 17 |
| D_Neu_F L_W | N_NEU_ FS_P | 0.8129 | >-1.283 | 24.8 | 74.2 | 75.2 | 25.8 | 0.008 148 | 0.025 215 | - 18.29 75 |
| D_Neu_F LSS_Area | N_NEU_ SS_P | 0.8128 | >-1.1878 | 27 | 75.6 | 73 | 24.4 | 0.007 099 | 0.003 129 | - 12.36 19 |
| D_Mon_F L_P | N_NEU_ FS_W | 0.8127 | >-1.207 | 27.9 | 78.4 | 72.1 | 21.6 | 0.009 884 | 0.007 96 | - 15.02 76 |
| D_Mon_F L_W | N_NEU_ SS_P | 0.8121 | >-1.1147 | 25 | 73.1 | 75 | 26.9 | 0.008 665 | 0.012 283 | - 16.60 93 |

(continued)

| First leukocyte parameter | Second leukocyte parameter | ROC_AUC | Determination threshold | False positive rate% | True positive rate% | True negative rate% | False negative rate% | A | B | C |
|---|---|---|---|---|---|---|---|---|---|---|
| D_Neu_F LSS_Area | N_WBC_ SS_P | 0.8115 | >-1.1442 | 27 | 75.6 | 73 | 24.4 | 0.007 298 | 0.003 092 | - 12.37 57 |
| D_Neu_F S_W | N_NEU_ FL_W | 0.8115 | >-1.0753 | 26.1 | 74.4 | 73.9 | 25.6 | 0.006 766 | 0.001 431 | - 11.167 9 |
| D_Neu_F S_P | N_NEU_ FL_W | 0.8114 | >-1.106 | 27.9 | 76.6 | 72.1 | 23.4 | 0.006 572 | 0.001 466 | - 12.64 4 |
| D_Neu_F L_CV | N_NEU_ FLFS_Ar ea | 0.8109 | >-1.0692 | 24.8 | 73.6 | 75.2 | 26.4 | 0.000 699 | 12.37 201 | - 12.011 1 |
| D_Mon_F L_W | N_WBC_ SS_P | 0.8105 | >-1.0518 | 25 | 73.5 | 75 | 26.5 | 0.009 024 | 0.012 076 | - 16.71 41 |
| D_Mon_F L_W | N_WBC_ SS_CV | 0.8101 | >-1.2332 | 27.3 | 76.4 | 72.7 | 23.6 | 5.708 686 | 0.014 511 | - 14.07 18 |
| D_Neu_F S_CV | N_NEU_ FL_W | 0.81 | >-1.2581 | 29.5 | 77.9 | 70.5 | 22.1 | 0.006 805 | 0.233 302 | - 10.48 43 |
| D_Mon_F L_W | N_WBC_ FS_CV | 0.8094 | >-1.0864 | 24 | 73.5 | 76 | 26.5 | 10.68 75 | 0.015 282 | - 15.68 17 |
| D_Mon_S S_P | N_WBC_ FLFS_Ar ea | 0.8091 | >-1.2245 | 28.2 | 75.4 | 71.8 | 24.6 | 0.000 517 | 0.054 759 | - 17.92 42 |
| D_Neu_F LSS_Area | N_NEU_ SS_W | 0.8089 | >-1.2859 | 30 | 77.1 | 70 | 22.9 | 0.002 43 | 0.003 222 | 6.999 98 |
| D_Mon_F L_W | N_NEU_ SSFS_Are a | 0.8082 | >-1 | 23.4 | 71.7 | 76.6 | 28.3 | 0.000 499 | 0.014 601 | - 10.78 48 |
| D_Neu_F LFS_Area | N_NEU_ FL_W | 0.8077 | >-1.0361 | 25.6 | 73.5 | 74.4 | 26.5 | 0.005 423 | 0.000 446 | - 8.989 91 |
| D_Mon_S S_P | N_NEU_ SS_CV | 0.8074 | >-1.0736 | 22.7 | 73.1 | 77.3 | 26.9 | 5.928 033 | 0.068 886 | - 22.10 85 |
| D_Neu_F LSS_Area | N_WBC_ FS_P | 0.8066 | >-1.178 | 31.4 | 76.6 | 68.6 | 23.4 | 0.007 983 | 0.003 544 | - 14.59 05 |
| D_Neu_F LSS_Area | N_WBC_ SS_CV | 0.8065 | >-1.0801 | 24.5 | 72.3 | 75.5 | 27.7 | 3.964 123 | 0.003 727 | - 9.196 97 |
| D_Neu_S S_W | N_NEU_ FLFS_Ar ea | 0.8057 | >-1.001 | 24.3 | 72.2 | 75.7 | 27.8 | 0.000 679 | 0.012 134 | - 9.335 63 |
| D_Neu_F L_CV | N_WBC_ SS_W | 0.8056 | >-1.4401 | 29.2 | 78.1 | 70.8 | 21.9 | 0.004 38 | 10.88 806 | - 12.22 4 |
| D_Neu_F LSS_Area | N_NEU_ FS_W | 0.8048 | >-1.1459 | 27.9 | 73.7 | 72.1 | 26.3 | 0.003 812 | 0.003 202 | - 6.416 64 |
| D_Neu_F LSS_Area | N_NEU_ FLFS_Ar ea | 0.8046 | >-1.0165 | 25.4 | 71.5 | 74.6 | 28.5 | 0.000 35 | 0.002 898 | - 6.281 06 |
| D_Mon_F L_P | N_NEU_ FLSS_Ar ea | 0.8046 | >-1.0496 | 25.7 | 73.1 | 74.3 | 26.9 | 0.000 439 | 0.006 652 | - 12.21 29 |

(continued)

| First leukocyte parameter | Second leukocyte parameter | ROC_A UC | Determina tion threshold | False positive rate% | True positive rate% | True negative rate% | False negative rate% | A | B | C |
|---|---|---|---|---|---|---|---|---|---|---|
| D_Neu_F L_P | N_WBC_ SSFS_Are a | 0.8042 | >-1.1134 | 22.4 | 72.2 | 77.6 | 27.8 | 0.000 395 | 0.020 19 | - 14.18 76 |
| D_Neu_F LSS_Area | N_NEU_ FS_CV | 0.8038 | >-1.1144 | 26.6 | 73.1 | 73.4 | 26.9 | 5.820 004 | 0.003 438 | - 6.805 42 |
| D_Neu_F LSS_Area | N_WBC_ FL_CV | 0.8036 | >-1.1207 | 31 | 76.2 | 69 | 23.8 | 3.320 88 | 0.004 543 | - 1.339 39 |
| D_Mon_F S_W | N_NEU_ FLSS Ar ea | 0.8036 | >-1.0312 | 23.2 | 70.3 | 76.8 | 29.7 | 0.000 403 | 0.009 289 | - 8.886 18 |
| D_Neu_F L_CV | N_NEU_ FS_W | 0.8032 | >-1.1132 | 26.1 | 73.4 | 73.9 | 26.6 | 0.007 96 | 10.90 502 | - 11.238 3 |
| D_Neu_S S_W | N_WBC_ SS_W | 0.8027 | >-1.2872 | 27.2 | 77.5 | 72.8 | 22.5 | 0.004 361 | 0.010 895 | - 10.03 33 |
| D_Neu_F LSS_Area | N_WBC_ FLSS_Ar ea | 0.802 | >-0.9549 | 23 | 69.4 | 77 | 30.6 | 0.000 158 | 0.003 258 | - 6.1169 8 |
| D_Mon_F S_W | N_WBC_ SS_W | 0.8014 | >-1.2802 | 26.2 | 73.7 | 73.8 | 26.3 | 0.004 422 | 0.008 12 | - 10.20 44 |
| D_Neu_F L_CV | N_NEU_ FLSS_Ar ea | 0.8013 | >-1.0308 | 23.6 | 71.6 | 76.4 | 28.4 | 0.000 384 | 11.99 751 | - 10.83 03 |
| D_Mon_F L_P | N_NEU_ FS_CV | 0.8011 | >-1.0091 | 24 | 72.9 | 76 | 27.1 | 15.20 173 | 0.008 48 | - 15.97 41 |
| D_Neu_F LSS_Area | N_WBC_ FS_CV | 0.8008 | >-1.2195 | 27.7 | 74.7 | 72.3 | 25.3 | 4.626 539 | 0.003 853 | - 8.073 19 |
| D_Neu_F LFS_Area | N_WBC_ SS_W | 0.8008 | >-1.1966 | 23.8 | 74.7 | 76.2 | 25.3 | 0.003 581 | 0.001 594 | - 7.886 52 |
| D_Neu_S S_W | N_NEU_ FLSS_Ar ea | 0.8007 | >-0.9507 | 23.2 | 70.8 | 76.8 | 29.2 | 0.000 379 | 0.012 401 | - 8.495 14 |
| D_Neu_F LFS_Area | N_NEU_ FL_CV | 0.8007 | >-1.053 | 28.7 | 75.2 | 71.3 | 24.8 | - 6.374 2 | 0.004 33 | - 1.127 02 |
| D_Neu_F L_P | N_WBC_ SS_P | 0.8007 | >-1.2582 | 27.4 | 75.7 | 72.6 | 24.3 | 0.007 545 | 0.012 874 | - 15.88 6 |
| D_Mon_F S_W | N_NEU_ FLFS_Ar ea | 0.8005 | >-1.0596 | 25.9 | 71.9 | 74.1 | 28.1 | 0.000 708 | 0.007 638 | - 9.138 11 |
| D_Neu_F LSS_Area | N_WBC_ FLFS_Ar ea | 0.8004 | >-1.034 | 25.3 | 70.4 | 74.7 | 29.6 | 0.000 197 | 0.003 519 | - 6.158 78 |
| D_Neu_F LSS_Area | N_NEU_ FLSS_Ar ea | 0.8002 | >-0.9955 | 25.1 | 70.2 | 74.9 | 29.8 | 0.000 192 | 0.002 948 | - 5.819 29 |
| D_Neu_S S_W | N_NEU_ FS_W | 0.7999 | >-1.1267 | 27.5 | 75.1 | 72.5 | 24.9 | 0.008 147 | 0.012 478 | - 9.619 04 |

(continued)

| First leukocyte parameter | Second leukocyte parameter | ROC_A UC | Determina tion threshold | False positive rate% | True positive rate% | True negative rate% | False negative rate% | A | B | C |
|---|---|---|---|---|---|---|---|---|---|---|
| D_Mon_F L_W | N_WBC_ FS_P | 0.7996 | >-0.9917 | 26.8 | 72.1 | 73.2 | 27.9 | 0.0115 17 | 0.013 041 | - 21.47 38 |
| D_Mon_S S_P | N_WBC_ FS_CV | 0.7993 | >-1.0958 | 25.3 | 74.3 | 74.7 | 25.7 | 10.87 808 | 0.059 624 | - 22.16 99 |
| D_Mon_F L_P | N_WBC_ SS_W | 0.7993 | >-1.2303 | 24.9 | 73.7 | 75.1 | 26.3 | 0.004 766 | 0.005 559 | - 13.00 13 |
| D_Neu_S S_CV | N_WBC_ SS_W | 0.7993 | >-1.306 | 27 | 77.7 | 73 | 22.3 | 0.004 437 | 6.525 472 | - 11.927 5 |
| D_Neu_S S_P | N_NEU_ FLFS_Ar ea | 0.7993 | >-0.9962 | 25 | 72.6 | 75 | 27.4 | 0.000 671 | 0.010 013 | - 9.694 34 |
| D_Neu_F L_CV | N_WBC_ FLSS_Ar ea | 0.7991 | >-1.2238 | 28.1 | 74.2 | 71.9 | 25.8 | 0.000 349 | 14.06 772 | - 12.24 27 |
| D_Neu_S S_P | N_WBC_ SS_W | 0.799 | >-1.2466 | 27 | 76.8 | 73 | 23.2 | 0.004 342 | 0.010 102 | - 10.79 54 |
| D_Neu_S S_CV | N_WBC_ FS_W | 0.7986 | >-1.22 | 27.1 | 75.1 | 72.9 | 24.9 | 0.009 93 | 8.107 06 | - 16.59 04 |
| D_Neu_S S_W | N_WBC_ FS_W | 0.7983 | >-1.0944 | 23.8 | 72 | 76.2 | 28 | 0.009 593 | 0.010 5 | - 13.21 44 |
| D_Neu_F LSS_Area | N_NEU_ FS_P | 0.798 | >-1.0837 | 27.3 | 72.3 | 72.7 | 27.7 | 0.004 261 | 0.003 976 | - 10.78 39 |
| D_Neu_F L_P | N_NEU_ SS_P | 0.7973 | >-1.2479 | 27 | 74 | 73 | 26 | 0.006 908 | 0.012 347 | - 15.06 79 |
| D_Neu_F LSS_Area | N_NEU_ SS_CV | 0.797 | >-1.1672 | 29.5 | 72.7 | 70.5 | 27.3 | 2.413 163 | 0.003 912 | - 7.134 39 |
| D_Mon_F S_P | N_NEU_ FLFS_Ar ea | 0.7962 | >-1.0928 | 27.3 | 72.9 | 72.7 | 27.1 | 0.000 731 | 0.006 451 | - 14.76 68 |
| D_Neu_F L_W | N_NEU_ FL_CV | 0.7962 | >-1.2896 | 25 | 72 | 75 | 28 | - 1.560 62 | 0.026 894 | - 5.749 31 |
| D_Neu_S S_CV | N_NEU_ FLFS_Ar ea | 0.7961 | >-1.0462 | 26.7 | 73.2 | 73.3 | 26.8 | 0.000 696 | 9.155 654 | - 12.82 91 |
| D_Neu_F L_CV | N_WBC_ FLFS_Ar ea | 0.7957 | >-1.1784 | 26.3 | 74.6 | 73.7 | 25.4 | 0.000 562 | 14.56 917 | - 13.28 54 |
| D_Neu_S S_P | N_NEU_ FS_W | 0.7957 | >-1.0694 | 27.3 | 74 | 72.7 | 26 | 0.008 096 | 0.011 004 | - 10.28 17 |
| D_Mon_F S_P | N_WBC_ SS_W | 0.7952 | >-1.3366 | 27.4 | 75.6 | 72.6 | 24.4 | 0.004 574 | 0.007 12 | - 16.56 32 |
| D_Neu_S S_P | N_NEU_ FLSS_Ar ea | 0.7948 | >-0.9786 | 25.5 | 72.8 | 74.5 | 27.2 | 0.000 378 | 0.010 563 | - 9.042 77 |
| D_Neu_F L_W | N_WBC_ FL_CV | 0.7947 | >-1.2726 | 24.8 | 70 | 75.2 | 30 | - 0.683 58 | 0.027 16 | - 6.246 21 |
| D_Neu_F LSS_Area | N_NEU_ SSFS_Are a | 0.7937 | >-1.1362 | 29.4 | 73.3 | 70.6 | 26.7 | 0.000 133 | 0.003 802 | - 5.435 39 |
| D_Neu_F LFS_Area | N_NEU_ SS_P | 0.7929 | >-1.0953 | 23.4 | 70.7 | 76.6 | 29.3 | 0.008 814 | 0.002 01 | - 13.88 83 |

(continued)

| First leukocyte parameter | Second leukocyte parameter | ROC_A UC | Determina tion threshold | False positive rate% | True positive rate% | True negative rate% | False negative rate% | A | B | C |
|---|---|---|---|---|---|---|---|---|---|---|
| D_Neu_F L_CV | N_NEU_ ss_w | 0.7925 | >-1.3226 | 28.8 | 75 | 71.2 | 25 | 0.004 01 | 11.72 978 | - 11.466 6 |
| D_Mon_F L_W | N_NEU_ SS_CV | 0.7921 | >-1.1399 | 28.4 | 74.5 | 71.6 | 25.5 | 4.172 514 | 0.014 812 | - 11.706 6 |
| D Neu S S_W | N_NEU_ ss_w | 0.7919 | >-1.1055 | 24.3 | 71.2 | 75.7 | 28.8 | 0.004 | 0.012 586 | - 9.354 91 |
| D_Neu_S S_W | N_NEU_ FS_CV | 0.7917 | >-1.1661 | 29.5 | 75.9 | 70.5 | 24.1 | 12.23 375 | 0.013 991 | - 10.26 67 |
| D_Neu_S S_W | N_WBC_ FLSS_Ar ea | 0.7917 | >-1.0574 | 25.5 | 71.6 | 74.5 | 28.4 | 0.000 323 | 0.013 418 | - 8.922 46 |
| D_Neu_F L_CV | N_WBC_ SS_P | 0.7915 | >-1.2059 | 26.5 | 72.6 | 73.5 | 27.4 | 0.010 049 | 10.99 055 | - 17.83 48 |
| D_Neu_F LFS_Area | N_WBC_ SS_P | 0.7913 | >-1.1266 | 26.3 | 72.1 | 73.7 | 27.9 | 0.009 201 | 0.001 895 | - 13.97 37 |
| D_Neu_F LSS_Area | N_WBC_ SSFS_Are a | 0.7912 | >-0.9649 | 24.6 | 68.8 | 75.4 | 31.2 | -1.6E-05 | 0.004 295 | - 4.822 62 |
| D Neu S S_P | N_WBC_ FS_W | 0.7911 | >-0.934 | 21.8 | 69.4 | 78.2 | 30.6 | 0.009 045 | 0.008 567 | - 12.99 66 |
| D_Mon_F L_P | N_WBC_ FLSS_Ar ea | 0.7911 | >-1.1549 | 27.9 | 75.6 | 72.1 | 24.4 | 0.000 376 | 0.006 557 | - 12.311 8 |
| D_Mon_F S_P | N_WBC_ FS_W | 0.791 | >-1.0957 | 24 | 71.3 | 76 | 28.7 | 0.010 132 | 0.006 295 | - 19.01 88 |
| D_Mon_F S_P | N_NEU_ FS_W | 0.7908 | >-1.1017 | 26.9 | 74.1 | 73.1 | 25.9 | 0.008 476 | 0.007 386 | - 15.97 28 |
| D_Neu_S S_CV | N_NEU_ FS_W | 0.7902 | >-1.022 | 24.6 | 71.2 | 75.4 | 28.8 | 0.008 238 | 8.412 551 | - 12.40 72 |
| D_Mon_S S_P | N_NEU_ SSFS_Are a | 0.79 | >-1.0577 | 24.8 | 70.7 | 75.2 | 29.3 | 0.000 491 | 0.055 982 | - 16.57 08 |
| D_Neu_F L_P | N_WBC_ FS_P | 0.79 | >-1.074 | 24.5 | 70.4 | 75.5 | 29.6 | 0.008 979 | 0.014 814 | -19.6 |
| D_Mon_F S_P | N_NEU_ FLSS_Ar ea | 0.7898 | >-1.0859 | 27 | 72.9 | 73 | 27.1 | 0.000 405 | 0.007 154 | - 14.65 44 |
| D_Neu_F S_W | N_WBC_ SS_W | 0.7898 | >-1.2343 | 24.9 | 73 | 75.1 | 27 | 0.004 773 | 0.002 215 | - 8.918 78 |
| D_Mon_F S_W | N_WBC_ FS_W | 0.7898 | >-1.1322 | 26.9 | 72.3 | 73.1 | 27.7 | 0.009 587 | 0.006 307 | - 12.72 29 |
| D_Neu_F LFS_Area | N_WBC_ FS_W | 0.7897 | >-1.1053 | 24.9 | 72.1 | 75.1 | 27.9 | 0.006 441 | 0.001 394 | - 8.922 74 |
| D_Neu_S S_CV | N_NEU_ FLSS_Ar ea | 0.7897 | >-0.9049 | 21.5 | 68.6 | 78.5 | 31.4 | 0.000 386 | 8.934 066 | - 11.702 5 |
| D_Neu_F S_CV | N_WBC_ SS_W | 0.7896 | >-1.2877 | 27.3 | 75.7 | 72.7 | 24.3 | 0.004 781 | 1.028 409 | - 8.003 75 |
| D_Mon_F S_W | N_NEU_ ss_w | 0.7894 | >-1.1811 | 25.8 | 70.9 | 74.2 | 29.1 | 0.004 079 | 0.009 168 | - 9.473 65 |
| D_Neu_S S_P | N_NEU_ FS_CV | 0.7892 | >-1.08 | 28.2 | 74.6 | 71.8 | 25.4 | 12.79 512 | 0.013 308 | - 11.673 1 |

(continued)

| First leukocyte parameter | Second leukocyte parameter | ROC_A UC | Determina tion threshold | False positive rate% | True positive rate% | True negative rate% | False negative rate% | A | B | C |
|---|---|---|---|---|---|---|---|---|---|---|
| D_Neu_F L_CV | N_NEU_ SS_P | 0.7889 | >-1.2693 | 26.9 | 73 | 73.1 | 27 | 0.009 483 | 10.84 677 | - 17.35 06 |
| D_Mon_F L_W | N_NEU_ FS_P | 0.7889 | >-0.9475 | 25.7 | 68.7 | 74.3 | 31.3 | 0.010 538 | 0.014 423 | - 22.29 63 |
| D_Neu_F S_P | N_WBC_ SS_W | 0.7889 | >-1.1895 | 24.1 | 72.2 | 75.9 | 27.8 | 0.004 797 | 0.002 007 | - 11.205 5 |

Table 11-2. Efficacy of PCT (procalcitonin) in the prior art and parameters of the DIFF channel alone for diagnosis of sepsis

| Infection marker parameter | ROC_AUC | Determination threshold | False positive rate | True positive rate | True negative rate | False negative rate |
|---|---|---|---|---|---|---|
| PCT | 0.787 | 0.64 | 37.3% | 81.0% | 62.7% | 19.0% |
| D_Neu_SS_W | 0.687 | 252.764 | 45.4% | 74.1% | 54.6% | 25.9% |
| D_Neu_FL_W | 0.791 | 213.465 | 22.8% | 68.0% | 77.2% | 32.0% |
| D_Neu_FS_W | 0.545 | 586.385 | 22.6% | 32.2% | 77.4% | 67.8% |

Form comparison between Table 11-1, it can be seen that combination of a parameter of the WNB channel with a parameter of the DIFF channel is similar to or even better than PCT in diagnosis of sepsis, is possible to replace PCT marker, and realizes the use of blood routine test data to give prompt for sepsis without additional cost; in addition, the diagnostic efficacy of dual-channel combination is also better than that of parameters of the DIFF channel alone.

Table 11-3. Illustration of the statistical methods and testing methods used in this example by taking three parameters as examples

| Infection marker parameter | Positive sample group Mean ± SD | Negative sample group Mean ± SD | F value | P value |
|---|---|---|---|---|
| Combination parameter 1 | 19.47 ± 2.25 | 15.80 ± 1.76 | 1057.84 | < 0.0001 |
| Combination parameter 2 | 16.24 ± 1.89 | 13.53 ± 1.53 | 814.99 | < 0.0001 |
| Combination parameter 3 | 8.68 ± 1.94 | 6.70 ± 1.12 | 457.87 | < 0.0001 |

As can be seen from Table 11-3, these parameters are analyzed by Welch test, and there is a significant statistical difference between the two groups ($p < 0.0001$)

As can be seen from Tables 10 and 11-1, 11-2, and 11-3, the infection marker parameters provided in the disclosure can be used to effectively determine whether a subject has sepsis.

Example 4 Monitoring of severe infection

Blood samples from 50 patients with severe infection were subjected to consecutive blood routine tests by using the BC-6800 Plus blood cell analyzer produced by SHENZHEN MINDRAY BIO-MEDICAL ELECTRONICS CO., LTD. in accordance with the steps of example 1 of the disclosure, and monitoring a progression in severe infection was performed based on scattergrams by using the aforementioned method. The 50 patients with severe infection were grouped according to their condition on the 7th day after diagnosis of severe infection. If the degree of infection of a patient was improved and the condition was stable on the 7th day after diagnosis, the patient was comprised in improvement group (positive sample N = 26). If the degree of infection of a patient was not improved significantly, the patient was still in the stage of severe infection or the patient died, then the patient was comprised in aggravation group (negative sample N = 24). FIG. 19 shows a dynamic trend change graph of monitoring with a linear combination parameter of D_Mon_SS_W and N_WBC_FL_W, wherein the days after diagnosis of severe infection are taken as horizontal axis and the average values of the infection marker parameter values of the two groups of patients are taken as vertical axis.

As can be seen from FIG. 19, the infection marker parameters provided in the disclosure can be used to effectively monitor the progression in severe infection of the subject.

Example 5 Monitoring of sepsis condition

Blood samples from 76 patients with sepsis were subjected to consecutive blood routine tests by using the BC-6800 Plus blood cell analyzer produced by SHENZHEN MINDRAY BIO-MEDICAL ELECTRONICS CO., LTD. in accordance with the steps of example 1 of the disclosure, and monitoring a progression in sepsis condition based on scattergrams by using the aforementioned method. The 76 patients with sepsis were grouped according to their condition on the 7th day after the diagnosis of sepsis. If the degree of infection of a patient was improved and the condition was stable on the 7th day after diagnosis, the patient was comprised in improvement group (positive sample N = 55). If the degree of infection of a patient was not improved significantly, the patient was still in the stage of severe infection or the patient died, then the patient was comprised in aggravation group (negative sample N = 21). With the days after the diagnosis of sepsis as horizontal axis and the median of the infection marker parameter values of the two groups of patients as vertical axis, a dynamic trend change graph was established, as shown in Fig. 20, wherein, the infection marker parameter in this example is calculated from D_Mon_SS_W and N_WBC_FL_W by a linear combination.

As can be seen from FIG. 20, the infection marker parameters provided in the disclosure can be used to effectively monitor the progression of sepsis of the subject.

Example 6 Analysis of sepsis prognosis

270 blood samples were subjected to blood routine tests by using the BC-6800 Plus blood cell analyzer produced by SHENZHEN MINDRAY BIO-MEDICAL ELECTRONICS CO., LTD. in accordance with the steps of example 1 of the disclosure, and analysis of sepsis prognosis was performed based on scattergrams by using the aforementioned method. Among them, 68 positive samples died at 28 days, and 202 negative samples survived at 28 days. Table 12 shows infection marker parameters used and their corresponding diagnostic efficacy, wherein each infection marker parameter is calculated by the function Y = A * X1 + B * X2 + C based on the first leukocyte parameter and the second leukocyte parameter in Table 12, where Y represents the infection marker parameter, X1 represents the first leukocyte parameter, X2 represents the second leukocyte parameter, and A, B, and C are constants.

Table 12 Efficacy of different infection marker parameters for determining whether sepsis prognosis is good

| First leukocyte parameter | Second leukocyte parameter | ROC_AU C | Determinat ion threshold | False positive rate% | True positive rate% | True negative rate% | False negative rate% | A | B | C |
|---|---|---|---|---|---|---|---|---|---|---|
| D_Mon_S S_W | N_WBC_ FL_W | 0.8606 | >-1.2599 | 21.8 | 73.5 | 78.2 | 26.5 | 0.0879 47 | 0.006 687 | -23.514 |
| D_Lym_F L_CV | N_WBC_ FL_W | 0.8328 | >-1.1154 | 22.8 | 70.6 | 77.2 | 29.4 | 5.5746 95 | 0.005 469 | - 15.7054 |
| D_Lym_F L_W | N_WBC_ FL_W | 0.826 | >-1.2347 | 30.2 | 77.9 | 69.8 | 22.1 | 0.0081 34 | 0.005 515 | -15.551 |
| D_Mon_S S_P | N_WBC_ FL_W | 0.8221 | >-0.8948 | 16.8 | 67.6 | 83.2 | 32.4 | 0.0377 27 | 0.006 183 | - 22.4098 |
| D_Neu_F L_W | N_WBC_ FL_W | 0.8209 | >-1.0894 | 24.8 | 73.5 | 75.2 | 26.5 | 0.0109 62 | 0.006 195 | 16.7044 |
| D_Neu_F L_CV | N_WBC_ FL_W | 0.8184 | >-1.1399 | 26.7 | 79.4 | 73.3 | 20.6 | 8.2230 88 | 0.006 272 | -18.162 |
| D_Eos_S S_W | N_WBC_ FL_W | 0.8117 | >-0.9227 | 23.8 | 74.1 | 76.2 | 25.9 | 0.0005 84 | 0.006 525 | - 15.3593 |
| D_Lym_F S_P | N_WBC_ FL_W | 0.8114 | >-1.2665 | 29.2 | 76.5 | 70.8 | 23.5 | - 0.0105 2 | 0.005 993 | - 3.80726 |
| D_Mon_S S_W | N_WBC_ FLSS_Ar ea | 0.8103 | >-1.3499 | 29.2 | 76.5 | 70.8 | 23.5 | 0.0859 9 | 0.000 327 | - 14.2998 |
| D_Lym_F S_CV | N_WBC_ FL_W | 0.81 | >-1.3856 | 32.7 | 80.9 | 67.3 | 19.1 | 8.9490 03 | 0.005 912 | - 16.1519 |
| Baso# | N_WBC_ FL_W | 0.8098 | >-0.851 | 20.8 | 66.2 | 79.2 | 33.8 | - 22.520 2 | 0.006 445 | - 14.2098 |
| D_Mon_F S_P | N_WBC_ FL_W | 0.8096 | >-1.1168 | 23.8 | 72.1 | 76.2 | 27.9 | 0.0089 1 | 0.006 179 | - 25.5312 |
| Baso% | N_WBC_ FL_W | 0.8095 | >-0.8749 | 22.3 | 66.2 | 77.7 | 33.8 | -2.0111 | 0.006 224 | - 13.8159 |
| D_Neu_F L_P | N_WBC_ FL_W | 0.8089 | >-1.1683 | 28.7 | 76.5 | 71.3 | 23.5 | 0.0062 86 | 0.006 095 | - 16.9699 |
| Mon% | N_WBC_ FL_W | 0.8078 | >-1.3995 | 35.6 | 79.4 | 64.4 | 20.6 | -0.1239 | 0.006 496 | -13.973 |
| D_Mon_F L_W | N_WBC_ FL_W | 0.8073 | >-0.8314 | 19.3 | 66.2 | 80.7 | 33.8 | 0.0044 54 | 0.006 014 | - 15.6951 |
| Neu% | N_WBC_ FL_W | 0.8069 | >-0.8042 | 18.3 | 66.2 | 81.7 | 33.8 | 0.0416 22 | 0.006 233 | - 17.6681 |
| D_Neu_F LSS_Area | N_WBC_ FL_W | 0.8059 | >-1.1225 | 27.2 | 73.5 | 72.8 | 26.5 | 0.0015 79 | 0.005 69 | -14.669 |
| D_Lym_S S_CV | N_WBC_ FL_W | 0.8058 | >-0.7283 | 14.4 | 64.7 | 85.6 | 35.3 | 5.6196 85 | 0.005 84 | - 16.6512 |
| D_Mon_F S_W | N_WBC_ FL_W | 0.8054 | >-1.12 | 26.7 | 76.5 | 73.3 | 23.5 | 0.0068 16 | 0.006 058 | - 16.3406 |
| D_Eos_F L_P | N_WBC_ FL_W | 0.8053 | >-0.9463 | 22.3 | 70.5 | 77.7 | 29.5 | 0.0009 14 | 0.006 277 | -14.785 |
| D_Mon_F L_P | N_WBC_ FL_W | 0.805 | >-0.7778 | 18.3 | 64.7 | 81.7 | 35.3 | 0.0035 3 | 0.006 221 | -17.51 |
| Lym% | N_WBC_ FL_W | 0.804 | >-0.9032 | 22.3 | 69.1 | 77.7 | 30.9 | - 0.0467 6 | 0.006 131 | - 13.5281 |
| D_Lym_F S_W | N_WBC_ FL_W | 0.8039 | >-1.2917 | 32.2 | 76.5 | 67.8 | 23.5 | 0.0079 9 | 0.006 007 | - 15.8816 |

(continued)

| First leukocyte parameter | Second leukocyte parameter | ROC_AU C | Determinat ion threshold | False positive rate% | True positive rate% | True negative rate% | False negative rate% | A | B | C |
|---|---|---|---|---|---|---|---|---|---|---|
| D_Eos_F S_P | N_WBC_ FL_W | 0.8036 | >-0.8983 | 21.2 | 68.9 | 78.8 | 31.1 | 0.0004 36 | 0.006 308 | - 15.4408 |
| D_Mon_S S_W | N_WBC_ FLFS_Ar ea | 0.8033 | >-1.412 | 31.7 | 79.4 | 68.3 | 20.6 | 0.0884 1 | 0.000 567 | - 15.6824 |
| D_Lym_S S_P | N_WBC_ FL_W | 0.8015 | >-1.0152 | 24.8 | 70.6 | 75.2 | 29.4 | -0.024 | 0.006 212 | - 11.7769 |
| D Lym F LFS_Area | N_WBC_ FL_W | 0.8011 | >-1.0713 | 27.2 | 73.5 | 72.8 | 26.5 | - 0.0011 1 | 0.006 346 | - 14.0595 |
| D_Neu_F LFS_Area | N_WBC_ FL_W | 0.801 | >-0.9074 | 21.8 | 70.6 | 78.2 | 29.4 | 0.0009 11 | 0.005 769 | - 14.3513 |
| Mon# | N_WBC_ FL_W | 0.801 | >-1.1668 | 30.2 | 70.6 | 69.8 | 29.4 | - 0.7351 4 | 0.006 837 | - 14.8072 |
| D_Eos_S S_P | N_WBC_ FL_W | 0.8007 | >-0.8335 | 19.6 | 68.9 | 80.4 | 31.1 | 0.0001 57 | 0.006 263 | - 14.4568 |
| D_Neu_F S_P | N_WBC_ FL_W | 0.8002 | >-0.9162 | 24.8 | 70.6 | 75.2 | 29.4 | 0.0011 93 | 0.006 133 | -15.989 |
| D_Lym_S S_W | N_WBC_ FL_W | 0.7995 | >-0.815 | 19.3 | 69.1 | 80.7 | 30.9 | 0.0299 38 | 0.005 97 | - 15.2458 |
| Lym# | N_WBC_ FL_W | 0.7994 | >-1.0875 | 26.7 | 73.5 | 73.3 | 26.5 | -0.3634 1 | 0.006 37 | - 14.0515 |
| D Lym F LSS_Area | N_WBC_ FL_W | 0.7991 | >-1.0142 | 25.2 | 73.5 | 74.8 | 26.5 | -0.0021 7 | 0.006 5 | - 14.0277 |
| D_Neu_F S_W | N_WBC_ FL_W | 0.7984 | >-1.066 | 27.7 | 73.5 | 72.3 | 26.5 | 0.0042 79 | 0.006 188 | - 16.4415 |
| D_Neu_S S_CV | N_WBC_ FL_W | 0.7979 | >-1.0479 | 27.7 | 72.1 | 72.3 | 27.9 | 3.2729 82 | 0.006 129 | -16.292 |
| D_Neu_F S_CV | N_WBC_ FL_W | 0.7977 | >-1.1606 | 29.7 | 76.5 | 70.3 | 23.5 | 4.5083 81 | 0.006 199 | - 15.4875 |
| Neu# | N_WBC_ FL_W | 0.7973 | >-0.8825 | 21.3 | 69.1 | 78.7 | 30.9 | 0.0073 86 | 0.006 078 | - 13.8679 |
| D_Lym_F L_P | N_WBC_ FL_W | 0.7972 | >-1.1127 | 27.7 | 73.5 | 72.3 | 26.5 | -0.0044 9 | 0.006 227 | - 11.2204 |
| D_Eos_F S_W | N_WBC_ FL_W | 0.797 | >-1.0406 | 26 | 72.9 | 74 | 27.1 | 0.0004 62 | 0.006 311 | - 14.7782 |
| Eos% | N_WBC_ FL_W | 0.797 | >-0.9279 | 22.3 | 69.1 | 77.7 | 30.9 | 0.0077 5 | 0.006 162 | - 13.9409 |
| Eos# | N_WBC_ FL_W | 0.7961 | >-0.9162 | 23.3 | 70.6 | 76.7 | 29.4 | -0.3057 2 | 0.006 17 | - 13.9294 |
| D_Eos_F L_W | N_WBC_ FL_W | 0.7958 | >-0.9012 | 23.7 | 69.5 | 76.3 | 30.5 | 0.0010 41 | 0.006 243 | - 14.3788 |
| D_Neu_S S_P | N_WBC_ FL_W | 0.7958 | >-0.9274 | 23.3 | 70.6 | 76.7 | 29.4 | 0.0021 39 | 0.006 166 | -14.769 |
| D_Neu_S S_W | N_WBC_ FL_W | 0.7954 | >-0.9312 | 23.3 | 70.6 | 76.7 | 29.4 | 0.0031 63 | 0.006 15 | - 14.8107 |
| D_Lym_F L_CV | N_WBC_ FS_W | 0.795 | >-1.2767 | 25.7 | 75 | 74.3 | 25 | 6.4237 18 | 0.007 622 | - 12.6951 |
| D_Lym_F L_CV | N_WBC_ FL_P | 0.7937 | >-1.1965 | 20.8 | 69.1 | 79.2 | 30.9 | 6.9600 74 | 0.002 899 | - 10.4174 |

(continued)

| First leukocyte parameter | Second leukocyte parameter | ROC_AU C | Determinat ion threshold | False positive rate% | True positive rate% | True negative rate% | False negative rate% | A | B | C |
|---|---|---|---|---|---|---|---|---|---|---|
| D_Lym_F L_W | N_WBC_ FS_W | 0.7935 | >-1.2634 | 24.3 | 73.5 | 75.7 | 26.5 | 0.0110 4 | 0.008 497 | - 13.9222 |
| D_Mon_S S_W | N_WBC_ FS_CV | 0.7915 | >-1.0564 | 21.8 | 66.2 | 78.2 | 33.8 | 0.0822 77 | 11.670 98 | - 18.2243 |
| D_Mon_S S_W | N_WBC_ FL_P | 0.7892 | >-1.1522 | 25.7 | 73.5 | 74.3 | 26.5 | 0.0767 15 | 0.003 184 | - 14.3321 |
| D_Lym_F L_W | N_WBC_ FS_CV | 0.7879 | >-0.9858 | 20.3 | 70.6 | 79.7 | 29.4 | 0.0117 44 | 10.46 923 | -13.616 |
| D_Lym_F L_W | N_WBC_ SS_W | 0.7871 | >-1.1836 | 22.3 | 69.1 | 77.7 | 30.9 | 0.0100 14 | 0.002 149 | - 8.06118 |
| D_Mon_S S_W | N_WBC_ FS_W | 0.7868 | >-1.1491 | 24.8 | 73.5 | 75.2 | 26.5 | 0.0714 6 | 0.008 318 | - 16.6102 |
| D_Lym_F L_CV | N_WBC_ SS_W | 0.7865 | >-1.3948 | 26.7 | 70.6 | 73.3 | 29.4 | 6.3669 31 | 0.002 007 | - 7.86202 |
| D_Lym_F L_CV | N_WBC_ FS_CV | 0.7837 | >-1.1956 | 23.8 | 67.6 | 76.2 | 32.4 | 6.6752 2 | 8.742 634 | - 11.8234 |
| D_Mon_S S_W | N_WBC_ SS_CV | 0.7814 | >-1.1571 | 28.7 | 72.1 | 71.3 | 27.9 | 0.0836 68 | 4.409 634 | - 14.7734 |
| D_Lym_F L_CV | N_WBC_ FLFS_Ar ea | 0.7802 | >-1.4283 | 28.7 | 70.6 | 71.3 | 29.4 | 6.4801 54 | 0.000 398 | - 9.07784 |
| D_Lym_F L_W | N_WBC_ FLFS_Ar ea | 0.7802 | >-1.4868 | 36.1 | 80.9 | 63.9 | 19.1 | 0.0107 77 | 0.000 437 | - 9.68333 |

As can be seen from Table 12, the infection marker parameters provided in the disclosure can be used to effectively determine whether sepsis prognosis of the patient is good.

Example 7 Determination of infection type

491 blood samples were subjected to blood routine tests by using the BC-6800 Plus blood cell analyzer produced by SHENZHEN MINDRAY BIO-MEDICAL ELECTRONICS CO., LTD. in accordance with the steps of example 1 of the disclosure, and infection type was determined based on scattergrams by using the aforementioned method. Among them, there were 237 bacterial infection samples and 254 viral infection samples.

Inclusion criteria for these cases: adult ICU patients with acute infection or with suspected acute infection. Exclusion criteria: pregnant people, myelosuppressed people on chemotherapy, people on immunosuppressant treatment, patients with hematologic diseases.

For the bacterial infection samples: there were suspicious or definite infection sites, and the laboratory bacterial culture results were positive, that is, all of ①-(3) were satisfied

(1) Evidence of bacterial infection: (Meeting any of the following 1-4 was sufficient)

1. There was a definite infection site
2. Inflammatory markers (WBC, CRP and PCT) were elevated
3. Microbial culture showed positive result
4. Imaging findings suggested infection

(2) The change of SOFA score from baseline < 2
(3) The change of the clinically recognized organ failure index score < 2

For the virus infection samples: there were suspicious or definite infection sites, and the virus antigen or antibody test was positive. For example, meeting one of the following was sufficient:

(1) Influenza A virus or influenza B virus antibody test was positive
(2) Epstein-Barr virus antibody test was positive
(3) Cytomegalovirus antibody test was positive.

Table 13-1 shows infection marker parameters used and their corresponding diagnostic efficacy, wherein each infection marker parameter is calculated by the function Y = A * X1 + B * X2 + C based on the first leukocyte parameter and the second leukocyte parameter in Table 13-1, where Y represents the infection marker parameter, X1 represents the first leukocyte parameter, X2 represents the second leukocyte parameter, and A, B, and C are constants.

Table 13-1 Efficacy of different infection marker parameters for determination of infection type

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Lym_F LFS_Area | N_WBC_ FLFS_Ar ea | 0.94 | >-0.8889 | 11.8 | 88.6 | 88.2 | 11.4 | - 0.01081 | 0.000992 | - 5.44621 |
| D_Lym_F LFS_Area | N_WBC_ FLSS_Ar ea | 0.9327 | >-0.6815 | 10.6 | 87.3 | 89.4 | 12.7 | - 0.01083 | 0.000625 | - 3.55444 |
| D_Neu_F LSS_Area | N_WBC_ FS_P | 0.931 | >-0.8349 | 16.9 | 88.6 | 83.1 | 11.4 | 0.00538 3 | 0.020093 | -31.1783 |
| D_Neu_F LSS_Area | N_WBC_ FL_P | 0.9292 | >-0.6524 | 12.6 | 84.3 | 87.4 | 15.7 | 0.00559 8 | 0.004431 | -11.4072 |
| D_Neu_F LSS_Area | N_WBC_ FS_W | 0.9273 | >-0.7143 | 15 | 87.3 | 85 | 12.7 | 0.00503 2 | 0.00814 | -12.4981 |
| D_Lym_F LFS_Area | N_WBC_ FS_W | 0.9252 | >-1.0694 | 15.4 | 87.7 | 84.6 | 12.3 | -0.00848 | 0.014429 | -11.6523 |
| D_Neu_F LFS_Area | N_WBC_ FL_P | 0.922 | >-0.4743 | 15.4 | 83.9 | 84.6 | 16.1 | 0.00357 | 0.005179 | -11.6372 |
| D_Neu_F LSS_Area | N_WBC_ FL_W | 0.9219 | >-0.4697 | 11 | 81.4 | 89 | 18.6 | 0.00524 7 | 0.004156 | - 11.7592 |
| D_Neu_F LSS_Area | N_WBC_ FS_CV | 0.9183 | >-0.6593 | 14.6 | 84.3 | 85.4 | 15.7 | 0.00682 2 | 2.275526 | -7.36863 |
| D_Lym_F LFS_Area | N_WBC_SSFS_Are a | 0.9182 | >-1.0256 | 15.7 | 85.6 | 84.3 | 14.4 | - 0.01133 | 0.000889 | - 4.04886 |
| D_Neu_F LSS_Area | N_WBC_ SS_W | 0.9181 | >-0.6556 | 13 | 83.9 | 87 | 16.1 | 0.00666 2 | 0.001157 | -7.09088 |
| D_Neu_F LSS_Area | N_WBC_ SS_P | 0.9171 | >-0.6768 | 14.6 | 84.7 | 85.4 | 15.3 | 0.00613 8 | 0.004898 | -10.722 |
| D_Neu_F LFS_Area | N_WBC_ FS_P | 0.9167 | >-0.4572 | 15.4 | 84.7 | 84.6 | 15.3 | 0.00329 7 | 0.024191 | - 35.6109 |
| D_Neu_F LSS_Area | N_WBC_ FLSS_Ar ea | 0.9161 | >-0.707 | 14.6 | 86 | 85.4 | 14 | 0.00589 8 | 0.000209 | - 7.39519 |

(continued)

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Neu_F LSS_Area | N_WBC_ SS_CV | 0.9159 | >-0.6404 | 14.6 | 83.5 | 85.4 | 16.5 | 0.00702 | 0.990039 | - 6.96121 |
| D_Neu_F LSS_Area | N_WBC_ FLFS_Ar ea | 0.9143 | >-0.5075 | 10.2 | 81.8 | 89.8 | 18.2 | 0.00572 | 0.000362 | - 8.16872 |
| D_Neu_F LSS_Area | N_WBC_SSFS_Are a | 0.914 | >-0.6052 | 12.6 | 80.5 | 87.4 | 19.5 | 0.00718 3 | -1.7E-05 | -5.7561 |
| D_Neu_F L_CV | N_WBC_ FS_P | 0.9081 | >-0.636 | 18.5 | 86 | 81.5 | 14 | 12.525 | 0.027375 | - 42.3848 |
| D_Neu_F LSS_Area | N_WBC_ FL_CV | 0.9078 | >-0.3909 | 11.8 | 80.9 | 88.2 | 19.1 | 0.00735 5 | -8.86812 | 4.44885 7 |
| D_Lym_F LFS_Area | N_WBC_ FL_W | 0.9067 | >-0.6585 | 13 | 82.6 | 87 | 17.4 | - 0.00791 | 0.005434 | - 6.79755 |
| D_Lym_F LFS_Area | N_WBC_ FS_CV | 0.9066 | >-0.455 | 12.2 | 80.1 | 87.8 | 19.9 | -0.0103 | 19.21994 | - 10.9759 |
| D_Neu_F LFS_Area | N_WBC_ FL_W | 0.9062 | >-0.1087 | 9.8 | 76.7 | 90.2 | 23.3 | 0.00313 2 | 0.00518 | - 12.5138 |
| D_Mon_S S_CV | N_WBC_ FS_P | 0.9062 | >-0.4657 | 15.4 | 83.7 | 84.6 | 16.3 | 20.4581 1 | 0.025024 | - 41.5346 |
| D_Lym_F S_P | N_WBC_ FS_P | 0.904 | >-0.6191 | 16.9 | 85.6 | 83.1 | 14.4 | - 0.01607 | 0.031791 | - 25.9365 |
| D_Neu_F L_W | N_WBC_ FS_P | 0.9021 | >-0.5232 | 20.5 | 83.5 | 79.5 | 16.5 | 0.01252 7 | 0.024034 | - 34.7503 |
| D_Mon_S S_W | N_WBC_ FS_P | 0.9011 | >-0.6295 | 21.3 | 86.7 | 78.7 | 13.3 | 0.04321 8 | 0.023875 | - 35.3885 |
| D_Lym_F LSS_Area | N_WBC_ FLFS_Ar ea | 0.9 | >-0.3445 | 13.8 | 83.5 | 86.2 | 16.5 | - 0.01798 | 0.000907 | - 2.94212 |
| D_Neu_F LFS_Area | N_WBC_ FS_W | 0.8984 | >-0.341 | 14.2 | 79.7 | 85.8 | 20.3 | 0.00248 1 | 0.011381 | - 14.2527 |
| D_Mon_S S_W | N_WBC_ FLFS_Ar ea | 0.8983 | >-0.1603 | 9.4 | 78.1 | 90.6 | 21.9 | 0.07134 4 | 0.000702 | -12.641 |
| D_Lym_F L_P | N_WBC_ FL_P | 0.8981 | >-0.6575 | 19.7 | 83.9 | 80.3 | 16.1 | - 0.01482 | 0.00687 | - 0.27979 |
| D_Mon_F L_CV | N_WBC_ FS_P | 0.8978 | >-0.4054 | 14.2 | 82 | 85.8 | 18 | 12.7621 7 | 0.025792 | - 40.0201 |
| D_Lym_F LSS_Area | N_WBC_ FLSS_Ar ea | 0.8977 | >-0.1882 | 11 | 81.4 | 89 | 18.6 | - 0.01926 | 0.000594 | - 1.08748 |

(continued)

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Mon_S S_CV | N_WBC_ FL_P | 0.8969 | >-0.5512 | 17.7 | 79.8 | 82.3 | 20.2 | 22.1886 2 | 0.005142 | - 16.8168 |
| D_Mon_S S_CV | N_WBC_ FLFS_Ar ea | 0.8959 | >-0.3162 | 13.8 | 83.3 | 86.2 | 16.7 | 28.2254 8 | 0.00078 | - 18.7996 |
| D_Lym_F LSS_Area | N_WBC_ FS_P | 0.8956 | >-0.6364 | 20.5 | 85.6 | 79.5 | 14.4 | - 0.00649 | 0.025702 | - 32.1834 |
| D_Neu_F S_P | N_WBC_ FS_P | 0.8953 | >-0.6479 | 19.7 | 86.9 | 80.3 | 13.1 | -0.00481 | 0.030386 | -31.3701 |
| D_Lym_F LFS_Area | N_WBC_ FL_P | 0.8949 | >-0.6833 | 15 | 81.8 | 85 | 18.2 | -0.00631 | 0.004118 | -4.00251 |
| D_Neu_F L_W | N_WBC_ FS_W | 0.8936 | >-0.5008 | 14.2 | 80.5 | 85.8 | 19.5 | 0.01333 2 | 0.012927 | - 16.1884 |
| D_Lym_F L_P | N_WBC_ FS_P | 0.8925 | >-0.4622 | 15.7 | 81.4 | 84.3 | 18.6 | - 0.00805 | 0.02935 | - 33.5141 |
| D_Lym_F LFS_Area | N_WBC_ FS_P | 0.8923 | >-0.9058 | 21.3 | 84.7 | 78.7 | 15.3 | -0.0059 | 0.017621 | - 21.2924 |
| D_Lym_F S_P | N_WBC_ FL_P | 0.8923 | >-0.4145 | 15.4 | 80.1 | 84.6 | 19.9 | -0.01666 | 0.006452 | 7.07883 4 |
| D_Mon_F L_CV | N_WBC_ FL_P | 0.8923 | >-0.6379 | 20.9 | 87.1 | 79.1 | 12.9 | 13.9475 9 | 0.005286 | -14.3344 |
| D_Mon_F L_W | N_WBC_ FS_P | 0.8917 | >-0.6479 | 22 | 85.8 | 78 | 14.2 | 0.00641 6 | 0.02519 | - 36.3937 |
| D_Neu_F S_CV | N_WBC_ FS_P | 0.889 | >-0.4143 | 15.4 | 80.1 | 84.6 | 19.9 | 14.0230 1 | 0.028229 | - 42.1749 |
| D_Mon_S S_W | N_WBC_ FLSS_Ar ea | 0.8889 | >-0.2962 | 15 | 79.4 | 85 | 20.6 | 0.06869 7 | 0.000411 | -10.715 |
| D_Mon_S S_CV | N_WBC_ FL_W | 0.8876 | >-0.4417 | 18.9 | 84.5 | 81.1 | 15.5 | 21.2304 9 | 0.005557 | -18.5 |
| D_Lym_S S_P | N_WBC_ FS_P | 0.8872 | >-0.6034 | 20.9 | 84.7 | 79.1 | 15.3 | - 0.03778 | 0.030004 | -36.343 |
| D_Lym_F LSS_Area | N_WBC_ FS_W | 0.8872 | >-0.4247 | 12.6 | 79.2 | 87.4 | 20.8 | - 0.01283 | 0.015261 | - 11.5881 |
| D_Neu_F L_W | N_WBC_ FLFS_Ar ea | 0.8871 | >-0.3953 | 16.1 | 77.5 | 83.9 | 22.5 | 0.02192 6 | 0.00073 | - 11.7534 |
| D_Neu_F LFS_Area | N_WBC_ SS_P | 0.8868 | >-0.2536 | 18.9 | 80.1 | 81.1 | 19.9 | 0.00343 2 | 0.008565 | - 13.4636 |
| D_Lym_F LSS_Area | N_WBC_ FL_P | 0.8856 | >-0.5609 | 16.9 | 80.9 | 83.1 | 19.1 | - 0.00993 | 0.005384 | - 5.13247 |
| D_Lym_F LSS_Area | N_WBC_ FL_W | 0.8849 | >-0.391 | 15.4 | 77.1 | 84.6 | 22.9 | - 0.01419 | 0.006394 | -6.9456 |

(continued)

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Mon_S S_W | N_WBC_ FS_W | 0.8845 | >-0.4378 | 13.8 | 76.8 | 86.2 | 23.2 | 0.04445 9 | 0.012578 | - 16.6262 |
| D_Mon_F L_CV | N_WBC_ FL_W | 0.8844 | >-0.4475 | 20.1 | 80.7 | 79.9 | 19.3 | 14.4012 1 | 0.005877 | - 16.9535 |
| D_Neu_F L_W | N_WBC_ FLSS_Ar ea | 0.8844 | >-0.2761 | 11.4 | 75.8 | 88.6 | 24.2 | 0.02144 3 | 0.000442 | - 10.0446 |
| D_Lym_F L_CV | N_WBC_ FS_P | 0.8842 | >-0.5288 | 20.5 | 81.4 | 79.5 | 18.6 | 2.33174 6 | 0.026518 | - 36.5529 |
| D_Lym_F LFS_Area | N_WBC_ SS_W | 0.8836 | >-0.9261 | 18.9 | 81.4 | 81.1 | 18.6 | -0.0092 | 0.003698 | -1.7308 |
| D_Neu_S S_P | N_WBC_ FS_P | 0.8834 | >-0.5231 | 20.9 | 82.2 | 79.1 | 17.8 | 0.01304 5 | 0.024711 | - 37.6209 |
| D_Lym_S S_W | N_WBC_ FS_P | 0.8831 | >-0.4959 | 19.3 | 82.2 | 80.7 | 17.8 | - 0.03194 | 0.030096 | - 38.3842 |
| D_Neu_F LFS_Area | N_WBC_ SSFS_Are a | 0.883 | >-0.041 | 17.3 | 80.1 | 82.7 | 19.9 | 0.00402 7 | 2.71E-05 | - 4.42473 |
| D_Neu_F L_W | N_WBC_ FL_P | 0.8829 | >-0.4862 | 16.5 | 79.2 | 83.5 | 20.8 | 0.00986 7 | 0.004959 | - 9.79585 |
| D_Mon_S S_CV | N_WBC_ FLSS_Ar ea | 0.8828 | >-0.3145 | 15.4 | 82.4 | 84.6 | 17.6 | 26.8588 4 | 0.000459 | - 16.3656 |
| D_Neu_F L_CV | N_WBC_ FL_P | 0.8826 | >-0.44 | 15.4 | 80.9 | 84.6 | 19.1 | 7.78827 7 | 0.005255 | - 11.7845 |
| D_Neu_F LFS_Area | N_WBC_ SS_W | 0.8825 | >-0.1686 | 14.2 | 80.9 | 85.8 | 19.1 | 0.00373 1 | 0.002383 | - 7.17301 |
| D_Mon_F L_W | N_WBC_ FLFS_Ar ea | 0.8821 | >-0.4803 | 19.3 | 82 | 80.7 | 18 | 0.01293 5 | 0.000808 | - 13.4542 |
| D_Neu_S S_P | N_WBC_ FL_P | 0.8821 | >-0.6348 | 20.1 | 80.5 | 79.9 | 19.5 | 0.01824 7 | 0.005215 | - 14.5956 |
| D_Lym_F LFS_Area | N_WBC_ SS_P | 0.882 | >-0.7411 | 18.9 | 79.7 | 81.1 | 20.3 | - 0.00804 | 0.008948 | - 7.38305 |
| D_Mon_S S_CV | N_WBC_ FS_W | 0.8818 | >-0.5319 | 16.5 | 79 | 83.5 | 21 | 18.8528 3 | 0.013001 | - 20.9341 |
| D_Mon_S S_W | N_WBC_ FL_P | 0.8816 | >-0.6626 | 19.3 | 81.5 | 80.7 | 18.5 | 0.04613 9 | 0.004839 | -11.284 |
| D_Neu_F LFS_Area | N_WBC_ FL_CV | 0.8803 | >-0.2639 | 18.5 | 80.9 | 81.5 | 19.1 | 0.00443 9 | -9.42462 | 6.56707 4 |
| D_Lym_F S_W | N_WBC_ FS_P | 0.8799 | >-0.466 | 20.9 | 80.9 | 79.1 | 19.1 | - 0.00228 | 0.02855 | - 37.4346 |
| D_Mon_F L_CV | N_WBC_ FLFS Ar ea | 0.8797 | >-0.4327 | 18.9 | 82.8 | 81.1 | 17.2 | 17.8915 2 | 0.000809 | - 15.7028 |
| D_Neu_S S_W | N_WBC_ FS_P | 0.8796 | >-0.5691 | 20.9 | 82.2 | 79.1 | 17.8 | 0.01171 7 | 0.024718 | - 35.9998 |

(continued)

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Lym_S S_CV | N_WBC_ FS_P | 0.8791 | >-0.5285 | 23.2 | 83.1 | 76.8 | 16.9 | - 2.02792 | 0.028441 | - 36.7747 |
| D_Lym_F S_CV | N_WBC_ FS_P | 0.879 | >-0.4122 | 18.9 | 78 | 81.1 | 22 | 0.71337 1 | 0.027471 | -36.807 |
| D_Lym_F L_W | N_WBC_ FS_P | 0.879 | >-0.6159 | 25.2 | 84.3 | 74.8 | 15.7 | 0.00071 5 | 0.027386 | - 36.7596 |
| D_Neu_F L_P | N_WBC_ FS_P | 0.8788 | >-0.6544 | 25.6 | 86 | 74.4 | 14 | 0.00259 1 | 0.026384 | - 36.3565 |
| D_Mon_S S_P | N_WBC_ FS_P | 0.8787 | >-0.4895 | 21.7 | 81.6 | 78.3 | 18.4 | 0.00465 5 | 0.027561 | - 37.6856 |
| D_Mon_F L_P | N_WBC_ FS_P | 0.8786 | >-0.5423 | 21.7 | 82.9 | 78.3 | 17.1 | - 0.00187 | 0.029345 | - 37.2465 |
| D_Neu_F L_CV | N_WBC_ FS_W | 0.8785 | >-0.4268 | 14.6 | 77.1 | 85.4 | 22.9 | 8.87993 2 | 0.014067 | - 18.6557 |
| D_Neu_S S_CV | N_WBC_ FS_P | 0.8783 | >-0.5133 | 20.5 | 81.4 | 79.5 | 18.6 | 3.41182 1 | 0.026893 | -38.315 |
| D_Mon_F S_P | N_WBC_ FS_P | 0.8781 | >-0.387 | 18.5 | 77.4 | 81.5 | 22.6 | - 0.00013 | 0.028299 | -37.528 |
| D_Mon_F S_CV | N_WBC_ FS_P | 0.878 | >-0.3979 | 19.3 | 78.5 | 80.7 | 21.5 | 2.59947 6 | 0.028121 | - 38.2097 |
| D_Mon_F S_W | N_WBC_ FS_P | 0.8778 | >-0.4189 | 19.7 | 78.5 | 80.3 | 21.5 | 0.00133 7 | 0.027978 | - 37.8152 |
| D_Neu_F S_W | N_WBC_ FS_P | 0.8778 | >-0.527 | 20.9 | 83.5 | 79.1 | 16.5 | 0.00309 5 | 0.027374 | - 38.3886 |
| D_Lym_S S_P | N_WBC_ FL_P | 0.876 | >-0.4322 | 17.3 | 78.8 | 82.7 | 21.2 | - 0.04259 | 0.006148 | - 5.37734 |
| D_Neu_F LFS_Area | N_WBC_ SS_CV | 0.8759 | >0.0006 | 13 | 76.3 | 87 | 23.7 | 0.00399 8 | 2.048553 | -6.5897 |
| D_Neu_S S_W | N_WBC_ FL_P | 0.8759 | >-0.5069 | 18.9 | 76.7 | 81.1 | 23.3 | 0.01486 2 | 0.005118 | - 11.7704 |
| D_Mon_F L_CV | N_WBC_ FS_W | 0.8748 | >-0.6536 | 19.3 | 82.8 | 80.7 | 17.2 | 12.8832 7 | 0.013791 | - 19.9027 |
| D_Neu_F LFS_Area | N_WBC_ FS_CV | 0.8747 | >-0.159 | 18.1 | 79.7 | 81.9 | 20.3 | 0.00357 | 6.183721 | - 8.46435 |
| D_Lym_F LSS_Area | N_WBC_ SS_P | 0.8741 | >-0.6173 | 21.3 | 86 | 78.7 | 14 | - 0.01515 | 0.012552 | - 9.72071 |
| D_Mon_F L_W | N_WBC_ FLSS_Ar ea | 0.8739 | >-0.279 | 13 | 77.3 | 87 | 22.7 | 0.01246 8 | 0.000484 | - 11.4101 |
| D_Mon_F L_W | N_WBC_ FL_P | 0.8739 | >-0.6044 | 20.5 | 82 | 79.5 | 18 | 0.00602 4 | 0.005059 | - 10.4665 |
| D_Lym_F L_P | N_WBC_ FL_W | 0.8737 | >-0.2582 | 16.5 | 76.7 | 83.5 | 23.3 | - 0.01078 | 0.006932 | - 4.95533 |
| D_Lym_F L_CV | N_WBC_ FL_P | 0.8731 | >-0.5091 | 17.7 | 79.7 | 82.3 | 20.3 | 3.31869 4 | 0.005405 | - 10.0617 |
| D_Neu_S S_W | N_WBC_ FS_W | 0.8726 | >-0.3303 | 17.3 | 78.4 | 82.7 | 21.6 | 0.01726 4 | 0.013786 | - 18.6744 |

(continued)

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Mon_F L_CV | N_WBC_ FLSS Ar ea | 0.8723 | >-0.5334 | 19.7 | 81.5 | 80.3 | 18.5 | 17.3656 | 0.000486 | - 13.6411 |
| D_Neu_F LFS_Area | N_WBC_ FLSS_Ar ea | 0.8717 | >-0.1425 | 18.1 | 78 | 81.9 | 22 | 0.00281 6 | 0.000272 | - 6.22717 |
| D_Mon_F L_W | N_WBC_ FS_W | 0.8714 | >-0.4997 | 16.5 | 77.3 | 83.5 | 22.7 | 0.00779 6 | 0.013568 | - 17.3995 |
| D_Neu_S S_P | N_WBC_ FL_W | 0.871 | >-0.471 | 22.4 | 79.2 | 77.6 | 20.8 | 0.01878 6 | 0.00567 | - 16.9303 |
| D_Neu_S S_P | N_WBC_ FS_W | 0.8708 | >-0.4403 | 19.3 | 78.4 | 80.7 | 21.6 | 0.01728 8 | 0.013663 | - 20.2568 |
| D_Neu_F LFS_Area | N_WBC_ FLFS_Ar ea | 0.8707 | >-0.1975 | 19.3 | 79.2 | 80.7 | 20.8 | 0.00265 4 | 0.000471 | - 7.25839 |
| D_Mon_F L_P | N_WBC_ FL_P | 0.8703 | >-0.1495 | 13.8 | 73.9 | 86.2 | 26.1 | - 0.00385 | 0.006213 | - 5.77232 |
| D_Neu_F L_P | N_WBC_ FL_P | 0.8699 | >-0.4377 | 16.1 | 78 | 83.9 | 22 | 0.00439 9 | 0.005254 | - 10.1293 |
| D_Mon_S S_W | N_WBC_ FL_W | 0.869 | >-0.4418 | 19.7 | 80.3 | 80.3 | 19.7 | 0.03968 5 | 0.005232 | - 12.7025 |
| D_Neu_F L_P | N_WBC_ FS_W | 0.8688 | >-0.4826 | 18.1 | 78 | 81.9 | 22 | 0.00865 1 | 0.01356 | - 17.9134 |
| D_Neu_F S_CV | N_WBC_ FL_P | 0.8686 | >-0.4534 | 18.5 | 78.8 | 81.5 | 21.2 | 6.03794 5 | 0.005507 | - 10.4633 |
| D_Lym_F S_CV | N_WBC_ FL_P | 0.868 | >-0.4371 | 16.5 | 78.8 | 83.5 | 21.2 | 5.47868 1 | 0.005497 | - 9.94298 |
| D_Neu_F S_P | N_WBC_ FL_P | 0.8671 | >-0.4873 | 18.9 | 79.7 | 81.1 | 20.3 | - 0.00146 | 0.005613 | - 5.90617 |
| D_Neu_F L_W | N_WBC_ FL_W | 0.8669 | >-0.3764 | 18.5 | 77.1 | 81.5 | 22.9 | 0.00931 5 | 0.00532 | - 11.5864 |
| D_Neu_S S_W | N_WBC_ FL_W | 0.8664 | >-0.3236 | 19.3 | 75.4 | 80.7 | 24.6 | 0.01704 | 0.005615 | - 14.5295 |
| D_Neu_F S_W | N_WBC_ FL_P | 0.8662 | >-0.4636 | 18.9 | 78.8 | 81.1 | 21.2 | 0.00197 4 | 0.005558 | -9.7945 |
| D_Lym_S S_CV | N_WBC_ FL_P | 0.8658 | >-0.3382 | 15.4 | 77.1 | 84.6 | 22.9 | 2.39855 | 0.005559 | - 9.92309 |
| D_Neu_F L_CV | N_WBC_ FL_W | 0.8658 | >-0.4616 | 22 | 78.8 | 78 | 21.2 | 7.08073 2 | 0.005672 | - 13.5356 |
| D_Lym_S S_W | N_WBC_ FL_P | 0.8653 | >-0.4896 | 18.5 | 79.2 | 81.5 | 20.8 | - 0.00966 | 0.005711 | - 8.29573 |
| D_Neu_S S_CV | N_WBC_ FL_P | 0.8652 | >-0.488 | 17.7 | 78.8 | 82.3 | 21.2 | 2.74170 9 | 0.005487 | - 10.4557 |
| D_Mon_F S_CV | N_WBC_ FL_P | 0.8652 | >-0.3608 | 17.3 | 76.8 | 82.7 | 23.2 | 6.00571 | 0.005646 | - 10.4104 |
| D_Lym_F S_W | N_WBC_ FL_P | 0.865 | >-0.3783 | 16.5 | 78 | 83.5 | 22 | 0.00270 9 | 0.005519 | - 9.25755 |
| D_Lym_F L_W | N_WBC_ FL_P | 0.865 | >-0.5399 | 19.7 | 79.7 | 80.3 | 20.3 | - 0.00026 | 0.005642 | -8.6188 |

(continued)

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Mon_F S_W | N_WBC_ FL_P | 0.8649 | >-0.4258 | 18.5 | 77.7 | 81.5 | 22.3 | 0.00367 | 0.005577 | - 10.0621 |
| D_Neu_S S_CV | N_WBC_ FS_W | 0.8644 | >-0.3638 | 16.1 | 77.1 | 83.9 | 22.9 | 7.23886 2 | 0.014847 | - 20.5074 |
| D_Mon_F S_P | N_WBC_ FL_P | 0.8642 | >-0.4899 | 18.1 | 78.2 | 81.9 | 21.8 | 0.00112 9 | 0.005557 | - 10.1635 |
| D_Mon_S S_P | N_WBC_ FL_P | 0.8641 | >-0.5185 | 18.9 | 78.6 | 81.1 | 21.4 | 0.00186 6 | 0.005572 | - 8.98996 |
| D Lym F LFS_Area | N_WBC_ SS_CV | 0.8621 | >-0.7682 | 19.3 | 78 | 80.7 | 22 | - 0.00987 | 5.776472 | - 3.25323 |
| D_Mon_S S_W | N_WBC_SSFS_Are a | 0.8601 | >-0.3137 | 19.7 | 78.1 | 80.3 | 21.9 | 0.07686 4 | 0.000389 | - 10.0191 |
| D_Neu_F L_W | N_WBC_ SS_W | 0.8599 | >-0.345 | 20.5 | 79.2 | 79.5 | 20.8 | 0.01889 3 | 0.002014 | - 6.94407 |
| D_Mon_F L_W | N_WBC_ FL_W | 0.8598 | >-0.4152 | 20.5 | 77.3 | 79.5 | 22.7 | 0.00606 2 | 0.005532 | - 12.6313 |
| D_Neu_S S_W | N_WBC_ FLSS_Ar ea | 0.8591 | >-0.4606 | 22.4 | 82.2 | 77.6 | 17.8 | 0.02286 7 | 0.00046 | - 11.5731 |
| D_Lym_F L_CV | N_WBC_ FS_W | 0.8574 | >-0.5365 | 18.1 | 78.4 | 81.9 | 21.6 | 1.65469 4 | 0.014542 | - 15.8172 |
| D_Lym_F S_P | N_WBC_ FL_W | 0.8569 | >-0.2206 | 17.7 | 73.7 | 82.3 | 26.3 | - 0.00835 | 0.00635 | - 2.88296 |
| D_Neu_S S_W | N_WBC_ FLFS_Ar ea | 0.8568 | >-0.3983 | 22.8 | 80.1 | 77.2 | 19.9 | 0.02121 5 | 0.000718 | - 12.4156 |
| D_Mon_S S_P | N_WBC_ FS_W | 0.8567 | >-0.3097 | 13 | 73.9 | 87 | 26.1 | 0.01056 3 | 0.014429 | - 17.0284 |
| D_Mon_F L_P | N_WBC_ FL_W | 0.8567 | >-0.279 | 19.3 | 75.6 | 80.7 | 24.4 | - 0.00456 | 0.007118 | - 8.28179 |
| D_Lym_F L_CV | N_WBC_ FL_W | 0.8561 | >-0.4087 | 19.7 | 76.7 | 80.3 | 23.3 | 3.10848 3 | 0.005871 | - 12.1627 |
| D_Neu_F S_CV | N_WBC_ FS_W | 0.8561 | >-0.4705 | 18.5 | 78.4 | 81.5 | 21.6 | 8.11679 | 0.014838 | - 17.8989 |
| D_Neu_F L_CV | N_WBC_ FLFS_Ar ea | 0.8554 | >-0.2988 | 20.5 | 78.4 | 79.5 | 21.6 | 12.4466 6 | 0.00074 | - 12.9756 |
| D_Lym_S S_CV | N_WBC_ FS_W | 0.8553 | >-0.4695 | 20.1 | 78 | 79.9 | 22 | - 5.02489 | 0.016686 | - 14.3509 |
| D_Lym_F S_P | N_WBC_ FS_W | 0.8552 | >-0.5437 | 20.1 | 80.9 | 79.9 | 19.1 | - 0.00118 | 0.015105 | - 14.3338 |
| D_Lym_S S_W | N_WBC_ FS_W | 0.8547 | >-0.5325 | 16.9 | 77.5 | 83.1 | 22.5 | - 0.00395 | 0.015256 | - 15.4806 |
| D_Mon_F S_P | N_WBC_ FS_W | 0.8545 | >-0.3277 | 14.6 | 73.9 | 85.4 | 26.1 | 0.00229 9 | 0.014816 | - 18.4725 |
| D_Lym_F L_W | N_WBC_ FS_W | 0.8544 | >-0.4289 | 15 | 75 | 85 | 25 | 0.00216 4 | 0.014712 | 15.9104 |
| D_Neu_F L_P | N_WBC_ FLFS_Ar ea | 0.8543 | >-0.2689 | 19.3 | 75.8 | 80.7 | 24.2 | 0.01505 | 0.000723 | - 13.8319 |
| D_Lym_F L_P | N_WBC_ FS_W | 0.8541 | >-0.4731 | 17.3 | 78 | 82.7 | 22 | - 0.00205 | 0.015055 | - 14.0581 |
| D_Neu_F S_P | N_WBC_ FS_W | 0.8539 | >-0.4641 | 18.1 | 75 | 81.9 | 25 | - 0.00207 | 0.015265 | - 11.7859 |

(continued)

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Neu_S S_P | N_WBC_ FLSS_Ar ea | 0.8534 | >-0.2119 | 16.5 | 75.8 | 83.5 | 24.2 | 0.02131 6 | 0.000431 | - 12.9215 |
| D_Neu_F S_W | N_WBC_ FS_W | 0.8532 | >-0.5611 | 22 | 82.6 | 78 | 17.4 | 0.00236 4 | 0.014944 | - 16.8254 |
| D_Lym_F S_CV | N_WBC_ FS_W | 0.8531 | >-0.5418 | 16.5 | 76.3 | 83.5 | 23.7 | 1.65155 1 | 0.014884 | - 15.7511 |
| D_Lym_S S_P | N_WBC_ FS_W | 0.853 | >-0.3093 | 14.2 | 73.7 | 85.8 | 26.3 | 0.02331 | 0.015324 | - 18.0114 |
| D_Mon_F S_W | N_WBC_ FS_W | 0.8529 | >-0.226 | 13 | 73.8 | 87 | 26.2 | 0.00293 9 | 0.015052 | - 16.6586 |
| D_Mon_S S_CV | N_WBC_ SS_P | 0.8523 | >-0.4661 | 23.2 | 81.5 | 76.8 | 18.5 | 22.1032 | 0.008872 | - 19.1657 |
| D_Lym_F S_CV | N_WBC_ FL_W | 0.8521 | >-0.2181 | 15 | 72 | 85 | 28 | 5.98726 2 | 0.006007 | 12.3894 |
| D_Mon_F S_CV | N_WBC_ FL_W | 0.8519 | >-0.345 | 18.1 | 74.2 | 81.9 | 25.8 | 7.84187 2 | 0.006329 | - 13.6012 |
| D_Mon_F S_W | N_WBC_ FL_W | 0.8519 | >-0.4024 | 19.7 | 75.1 | 80.3 | 24.9 | 0.00433 1 | 0.0062 | - 12.8722 |
| D_Lym_F S_W | N_WBC_ FS_W | 0.8515 | >-0.5317 | 15.7 | 75.4 | 84.3 | 24.6 | 0.00147 3 | 0.014929 | - 15.7581 |
| D_Neu_F S_CV | N_WBC_ FL_W | 0.8513 | >-0.2677 | 19.3 | 73.7 | 80.7 | 26.3 | 6.67101 5 | 0.006009 | -12.968 |
| D_Mon_F S_CV | N_WBC_ FS_W | 0.8512 | >-0.2534 | 13.8 | 73.8 | 86.2 | 26.2 | 4.15317 | 0.0152 | -16.821 |
| D_Mon_F L_P | N_WBC_ FS_W | 0.8507 | >-0.5529 | 18.5 | 78.2 | 81.5 | 21.8 | - 0.00027 | 0.015248 | - 15.4303 |
| D_Neu_F L_P | N_WBC_ FLSS_Ar ea | 0.8507 | >-0.2724 | 21.3 | 75.4 | 78.7 | 24.6 | 0.01475 4 | 0.00044 | - 12.1366 |
| D_Neu_S S_P | N_WBC_ FLFS_Ar ea | 0.8504 | >-0.2879 | 21.3 | 78 | 78.7 | 22 | 0.01980 9 | 0.000682 | - 13.6663 |

Table 13-2. Efficacy of PCT (procalcitonin) in the prior art, and parameters of the DIFF channel alone for identification of a bacterial infection and a viral infection

| Infection marker parameter | ROC_AUC | Determination threshold | False positive rate | True positive rate | True negative rate | False negative rate |
|---|---|---|---|---|---|---|
| PCT | 0.851 | 0.554 | 7.9% | 67.3% | 92.1% | 32.7% |
| D_Neu_SS_W | 0.733 | 259.275 | 24.4% | 60.2% | 75.6% | 39.8% |
| D_Neu_FL_W | 0.836 | 206.183 | 20.1% | 75.0% | 79.9% | 25.0% |
| D_Neu_FS_W | 0.601 | 611.240 | 34.6% | 56.4% | 65.4% | 43.6% |

From comparison between Table 13-2 and Table 13-1, it can be seen that a combination of a parameter of the WNB channel with a parameter of the DIFF channel is comparable to or better than PCT for diagnostic efficacy in identification bewteen bacterial infection and viral infection; and the combination is better than parameters of the DIFF channel alone. The infection marker parameters provided in the disclosure can be used to effectively determine infection type of the subject.

Example 8. Identification between infectious inflammation and non-infectious inflammation

515 blood samples were subjected to blood routine tests by using the BC-6800 Plus blood cell analyzer produced by SHENZHEN MINDRAY BIO-MEDICAL ELECTRONICS CO., LTD. in accordance with the steps of example 1 of the disclosure, and identification of infectious inflammation was performed based on scattergrams by using the aforementioned method. Among them, there were 399 infectious inflammation samples, that is, positive samples, and 116 non-infectious inflammation samples, that is, negative samples.

Inclusion criteria for these cases: adult ICU patients with acute inflammation or with suspected acute inflammation. Exclusion criteria: pregnant people, myelosuppressed people on chemotherapy, people on immunosuppressant treatment, patients with hematologic diseases.

For the infectious inflammation samples: there was evidence of bacterial and/or viral infection; and there was inflammation (meeting any of the following was sufficient)

1. Local inflammatory manifestations or systemic inflammatory response manifestations
2. Tissue damage: damage caused by physical or chemical factors such as high temperature, low temperature, radioactive substances, and ultraviolet rays
3. Mechanical damage: damage caused by chemicals such as strong acids, alkalis, etc
4. Tissue necrosis: tissue necrosis and damage caused by ischemia or hypoxia
5. Allergy: abnormal state of the body's immune response, such as autoimmune diseases

For the non-infectious inflammation samples: inflammatory responses caused by physical, chemical, and other factors, which met both (1) and (2):

(1) No evidence of bacterial infection
(2) Presence of inflammation (meeting any of the following was sufficient)

1. Local inflammatory manifestations or systemic inflammatory response manifestations
2. Tissue damage: damage caused by physical or chemical factors such as high temperature, low temperature, radioactive substances, and ultraviolet rays
3. Mechanical damage: damage caused by chemicals such as strong acids, alkalis, etc
4. Tissue necrosis: tissue necrosis and damage caused by ischemia or hypoxia
5. Allergy: abnormal state of the body's immune response, such as autoimmune diseases

Table 14-1 shows infection marker parameters used and their corresponding diagnostic efficacy, wherein each infection marker parameter is calculated by the function Y = A * X1 + B * X2 + C based on the first leukocyte parameter and the second leukocyte parameter in Table 14-1, where Y represents the infection marker parameter, X1 represents the first leukocyte parameter, X2 represents the second leukocyte parameter, and A, B, and C are constants.

Table 14-1 Efficacy of different infection marker parameters for diagnosis of infectious inflammation

| First leukocyte parameter | Second leukocyte parameter | ROC_ AUC | Determina tion threshold | False positive rate% | True positive rate% | True negative rate% | False negative rate% | A | B | C |
|---|---|---|---|---|---|---|---|---|---|---|
| D_Mon_S S_W | N_WBC_ FL_W | 0.9567 | >1.1354 | 4.3 | 86.6 | 95.7 | 13.4 | 0.0502 68 | 0.00676 4 | -16.063 |
| D_Neu_F L_W | N_WBC_ FL_W | 0.9428 | >0.8374 | 10.3 | 86.3 | 89.7 | 13.7 | 0.0106 98 | 0.00667 8 | - 13.8067 |
| D_Mon_S S_W | N_WBC_ SS_W | 0.9402 | >0.8676 | 7.8 | 85.3 | 92.2 | 14.7 | 0.0592 27 | 0.00357 8 | - 9.11875 |
| D_Mon_F S_W | N_WBC_ FL_W | 0.9392 | >0.6632 | 12.9 | 87.6 | 87.1 | 12.4 | 0.0080 01 | 0.00704 1 | - 15.0172 |
| D_Neu_F L_CV | N_WBC_ FL_W | 0.9384 | >0.7823 | 12.1 | 86.5 | 87.9 | 13.5 | 7.2362 37 | 0.00703 2 | -15.448 |
| D_Neu_F LSS_Area | N_WBC_ FL_W | 0.9381 | >0.6836 | 12.9 | 88.1 | 87.1 | 11.9 | 0.0022 63 | 0.00581 9 | 11.8421 |
| D_Neu_S S_W | N_WBC_ FL_W | 0.9379 | >0.9833 | 9.5 | 85 | 90.5 | 15 | 0.0135 4 | 0.00692 5 | - 15.4621 |
| D_Mon_F L_W | N_WBC_ FL_W | 0.9378 | >0.9432 | 11.2 | 85.3 | 88.8 | 14.7 | 0.0099 43 | 0.00666 8 | - 15.6428 |
| D_Neu_S S_CV | N_WBC_ FL_W | 0.9376 | >0.8006 | 12.9 | 87.1 | 87.1 | 12.9 | 10.375 38 | 0.00695 3 | - 19.3873 |
| D_Mon_S S_W | N_WBC_ FS_W | 0.9373 | >0.7776 | 9.5 | 85.8 | 90.5 | 14.2 | 0.0555 08 | 0.00908 1 | - 12.6417 |
| D_Neu_F L_P | N_WBC_ FL_W | 0.9372 | >0.6652 | 12.9 | 87.8 | 87.1 | 12.2 | 0.0079 25 | 0.00658 1 | 14.9808 |
| D_Mon_S S_P | N_WBC_ FL_W | 0.9359 | >0.6845 | 12.9 | 87.9 | 87.1 | 12.1 | 0.0321 02 | 0.00688 1 | - 18.7606 |
| D_Mon_S S_W | N_WBC_ SS_CV | 0.9346 | >0.7522 | 10.3 | 87.4 | 89.7 | 12.6 | 0.0690 27 | 6.19575 9 | - 12.3696 |
| D_Lym_F LSS_Area | N_WBC_ FL_W | 0.9338 | >0.8268 | 12.9 | 87.4 | 87.1 | 12.6 | 0.0108 2 | 0.00775 8 | - 10.2089 |
| D_Neu_S S_P | N_WBC_ FL_W | 0.9336 | >0.836 | 11.2 | 86.3 | 88.8 | 13.7 | 0.0115 68 | 0.00698 | - 16.2005 |
| D_Mon_F S_P | N_WBC_ FL_W | 0.9308 | >0.9073 | 10.3 | 83.8 | 89.7 | 16.2 | 0.0029 59 | 0.00713 2 | - 16.0463 |
| D_Neu_F LFS_Area | N_WBC_ FL_W | 0.93 | >0.8245 | 12.1 | 85.1 | 87.9 | 14.9 | 0.0009 36 | 0.00628 7 | - 11.7164 |
| D_Mon_F L_P | N_WBC_ FL_W | 0.9298 | >0.6486 | 14.7 | 86.4 | 85.3 | 13.6 | 3.52E-05 | 0.00729 | 12.5637 |
| D_Mon_S S_W | N_WBC_ FL_P | 0.9298 | > 1.0435 | 9.5 | 83.2 | 90.5 | 16.8 | 0.0446 99 | 0.00375 1 | - 8.99638 |
| D_Lym_F LFS_Area | N_WBC_ FL_W | 0.9294 | >1.1419 | 15.5 | 85.9 | 84.5 | 14.1 | 0.0051 5 | 0.00685 9 | - 10.0614 |
| D_Neu_F S_CV | N_WBC_ FL_W | 0.9293 | >0.665 | 12.9 | 86 | 87.1 | 14 | 3.0346 07 | 0.00710 8 | - 13.1494 |
| D_Neu_F S_W | N_WBC_ FL_W | 0.929 | >0.7682 | 12.9 | 85.5 | 87.1 | 14.5 | 0.0020 67 | 0.00711 9 | - 13.3604 |
| D_Neu_F S_P | N_WBC_ FL_W | 0.9262 | >0.6876 | 14.7 | 86 | 85.3 | 14 | 0.0002 71 | 0.00710 2 | - 12.6268 |
| D_Mon_S S_W | N_WBC_ FS_CV | 0.926 | >0.7254 | 10.3 | 87.1 | 89.7 | 12.9 | 0.0615 23 | 11.2668 4 | -12.835 |

Table 14-2. Efficacy of PCT (procalcitonin) in the prior art, and parameters of the DIFF channel alone for identification between infectious inflammation and non-infectious inflammation

| Infection marker parameter | ROC_AUC | Determination threshold | False positive rate | True positive rate | True negative rate | False negative rate |
|---|---|---|---|---|---|---|
| PCT | 0.855 | 0.44 | 32.1% | 89.6% | 67.9% | 10.4% |
| D_Neu_SSC_W | 0.744 | 290.101 | 7.8% | 45.7% | 92.2% | 54.3% |
| D_Neu_SFL_W | 0.836 | 220.534 | 14.7% | 67.3% | 85.3% | 32.7% |
| D_Neu_FSC_W | 0.557 | 563.910 | 37.9% | 51.3% | 62.1% | 48.7% |

From comparison between Table 14-2 and Table 14-1, it can be seen that a combination of a parameter of the WNB channel with a parameter of the DIFF channel has better diagnostic efficacy than PCT or the parameters of DIFF channel alone in identification between bacterial infection and viral infection. The infection marker parameters provided in the disclosure can be used to effectively determine infectious inflammation.

Example 9 Evaluation of therapeutic effect on sepsis

Blood samples of 28 patients receiving treatment on sepsis were subjected to blood routine tests by using the BC-6800 Plus blood cell analyzer produced by SHENZHEN MINDRAY BIO-MEDICAL ELECTRONICS CO., LTD. in accordance with the steps of example 1, and evaluation of therapeutic effect on sepsis was performed based on scattergrams by using the aforementioned method. Specifically, the 28 patients diagnosed with sepsis were treated with antibiotics, blood samples from the patients were subjected to blood routine tests 5 days later and combination parameters of the WNB channel and the DIFF channel were obtained according to the aforementioned method. Based on therapeutic effects over 5 days, the patients were divided into effective group and ineffective group and the patients with clinical significant improvement of symptoms were divided into the effective group, otherwise divided into the ineffective group. Among them, 11 patients belonged to the ineffective group and 17 patients belonged to the effective group.

Table 15 shows the combination of DIFF + WNB dual channel parameters "N_WBC_FL_W" and "D_Neu_FE_W" as an infection marker parameter for determining therapeutic effect on sepsis. The physical meaning of the two-parameter combination is to combine distribution width of internal nucleic acid content of WBC particles of the first detection channel and distribution width of internal nucleic acid content of neutrophils of the second detection channel.

The infection marker parameter was obtained from the two-parameter combination through the function

Y = 0.00623272 × N_WBC_FL_W + 0.01806527 × D_Neu_FL_W - 16.84312131, where Y represents the infection marker parameter.

Table 15

| Parameters for evaluation of therapeutic effect on sepsis | ROC_AUC | Diagnostic threshold | False positive rate | True positive rate | True negative rate | False negative rate |
|---|---|---|---|---|---|---|
| Combination parameter | 0.888 | -0.5564 | 17.6% | 81.8% | 82.4% | 18.2% |

FIGS. 21A-21D visually show detection results of efficacy on sepsis using a combination of the two parameters "N_WBC_FL_W" and "D_Neu_FL_W" as the infection marker parameter.

Table 16 shows the combination of DIFF + WNB dual channel parameters "N_WBC_FL_W" and "D_Neu_FL_CV" as an infection marker parameter for determining therapeutic effect on sepsis. The physical meaning of the two-parameter combination is to combine distribution width of internal nucleic acid content of WBC particles of the first detection channel and dispersion degree of internal nucleic acid content of neutrophils of the second detection channel.

The infection marker parameter was obtained from the two-parameter combination through the function

Y = 0.00688519 × N_WBC_FL_W + 11.27099282 × D_Neu_FL_CV - 19.2998686, where Y represents the infection marker parameter.

Table 16

| Parameters for evaluation of therapeutic effect on sepsis | ROC_AUC | Diagnostic threshold | False positive rate | True positive rate | True negative rate | False negative rate |
|---|---|---|---|---|---|---|
| Combination parameter | 0.850 | -0.042 | 11.8% | 72.7% | 88.2% | 27.3% |

FIGS. 22A-22D visually show detection results of efficacy on sepsis using a combination of the two parameters "N_WBC_FL_W" and "D_Neu_FL_CV" as the infection marker parameter.

Example 10 Count value combined with parameters for diagnosis of sepsis

1,748 blood samples were subjected to blood routine tests by using the BC-6800 Plus blood cell analyzer produced by SHENZHEN MINDRAY BIOMEDICAL ELECTRONICS CO., LTD. in accordance with the steps similar to example 3 of the disclosure, and diagnosis of sepsis was performed based on the scattergram by using the aforementioned method. Among them, there were 506 sepsis samples, that is, positive samples, and 1,242 non-sepsis samples, that is, negative samples.

Inclusion criteria for these 1,748 cases: adult ICU patients with acute infection or with suspected acute infection. Exclusion criteria: pregnant people, myelosuppressed people on chemotherapy, people on immunosuppressant treatment, patients with hematologic diseases.

Table 17 shows infection marker parameters used and their corresponding diagnostic efficacy, and FIGS. 24 show ROC curves corresponding to the infection marker parameters in Table 17. In Table 17:

$$\text{Combination parameter 1} = -0.61535116 * \text{Mon\#} + 0.00766353 * \text{N_WBC_FL_W} - 15.04738706;$$

$$\text{Combination parameter 2} = -0.03077968 * \text{HGB} + 0.08933918 * \text{N_WBC_FL_W} - 5.72270269;$$

$$\text{Combination parameter 3} = -0.00395999 * \text{PLT} + 0.00606333 * \text{N_WBC_FL_W} - 11.55000862.$$

.

Table 17 Efficacy of different infection marker parameters for diagnosis of sepsis

| Infection marker parameter | ROC_AUC | Determinati on threshold | False positive rate | True positive rate | True negative rate | False negative rate |
|---|---|---|---|---|---|---|
| Combination parameter 1 | 0.8826 | >-0.9689 | 18.7% | 80.2% | 81.3% | 19.8% |
| Combination parameter 2 | 0.8808 | >-0.8956 | 17.7% | 77.8% | 82.3% | 22.2% |
| Combination parameter 3 | 0.8801 | >-0.9222 | 17.1% | 79.6% | 82.9% | 20.4% |

From comparison between Table 11-2 and Table 17, a combination parameter of a monocyte count, or a hemoglobin value, or a platelet count combined with a parameter of the WNB channel has better diagnostic performance in diagnosis of sepsis than PCT or DIFF channel alone. It shows that the count value of leukocytes and platelets as well as the hemoglobin concentration of red blood cells in blood routine test can be used as the first leukocyte parameter, which is combined with the second leukocyte parameter to calculate the infection characteristic parameters for diagnosis of sepsis.

Table 18. Illustration of the statistical methods and testing methods used in this example by taking three parameters as examples

| Infection marker parameter | Positive sample Mean ± SD | Negative sample Mean ± SD | F value | P value |
|---|---|---|---|---|
| Combination parameter 1 | 0.55 ± 1.87 | -2.36 ± 1.64 | -1017.29 | < 0.0001 |
| Combination parameter 2 | 0.35 ± 1.98 | -2.17 ± 1.40 | -1098.71 | < 0.0001 |
| Combination parameter 3 | 0.39 ± 1.92 | -2.18 ± 1.45 | -1093.70 | < 0.0001 |

As can be seen from Table 18, these parameters are analyzed by Welch test, and there is a significant statistical difference between the two groups ($p < 0.0001$).

The features or combinations thereof mentioned above in the description, accompanying drawings, and claims can be combined with each other arbitrarily or used separately as long as they are meaningful within the scope of the disclosure and do not contradict each other. The advantages and features described with reference to the blood cell analyzer provided by the embodiment of the disclosure are applicable in a corresponding manner to the use of the blood cell analysis method and infection marker parameters provided by the embodiment of the disclosure, and vice versa.

The foregoing description merely relates to the preferred embodiments of the disclosure, and is not intended to limit the scope of patent of the disclosure. All equivalent variations made by using the content of the specification and the accompanying drawings of the disclosure from the concept of the disclosure, or the direct/indirect applications of the contents in other related technical fields all fall within the scope of patent protection of the disclosure.

## Claims

1. A blood cell analyzer, **characterized in that** the blood cell analyzer comprises:

   a sample aspiration device configured to aspirate a blood sample of a subject to be tested;
   a sample preparation device configured to prepare a first test sample containing a part of the blood sample to be tested, a first hemolytic agent, and a first staining agent for leukocyte classification, and to prepare a second test sample containing another part of the blood sample to be tested, a second hemolytic agent and a second staining agent for identifying nucleated red blood cells;
   an optical detection device comprising a flow cell, a light source and an optical detector, wherein the flow cell is configured to allow for the first test sample and the second test sample to pass therethrough respectively, the light source is configured to respectively irradiate with light the first test sample and the second test sample passing through the flow cell, and the optical detector is configured to detect first optical information and second optical information generated by the first test sample and second test sample under irradiation when passing through the flow cell respectively; and
   a processor configured to:

      calculate at least one first leukocyte parameter of at least one first target particle population in the first test sample from the first optical information,
      calculate at least one second leukocyte parameter of at least one second target particle population in the second test sample from the second optical information, wherein at least one of the first leukocyte parameter and the second leukocyte parameter comprises a cell characteristic parameter,
      calculate an infection marker parameter for evaluating an infection status of the subject based on the at least one first leukocyte parameter and the at least one second leukocyte parameter, and
      output the infection marker parameter.

2. The blood cell analyzer of claim 1, **characterized in that**, the at least one first leukocyte parameter comprises one or more of cell characteristic parameters of monocyte population, neutrophil population and lymphocyte population in the first test sample; and/or

   the at least one second leukocyte parameter comprises one or more of cell characteristic parameters of lymphocyte population, neutrophil population and leukocyte population in the second test sample;
   preferably, the at least one first leukocyte parameter comprises one or more of cell characteristic parameters of monocyte population and neutrophil population in the first test sample, and the at least one second leukocyte parameter comprises one or more of cell characteristic parameters of neutrophil population and leukocyte population in the second test sample.

3. The blood cell analyzer of claim 1 or 2, **characterized in that**, the at least one first leukocyte parameter comprises one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of the first target particle population, and an area of a distribution region of the first target particle population in a two-dimensional scattergram generated by two light intensities selected from forward scatter intensity, side scatter intensity and fluorescence intensity, and a volume of a distribution region of the first target particle population in a three-dimensional scattergram generated by forward scatter intensity, side scatter intensity and fluorescence intensity; and/or
the at least one second leukocyte parameter comprises one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of the second target particle population, and an area of a distribution region of the second target particle population in a two-dimensional scattergram generated by two light intensities selected from forward scatter intensity, side scatter intensity and fluorescence intensity, and a volume of a distribution region of the second target particle population in a three-dimensional scattergram generated by forward scatter intensity, side scatter intensity and fluorescence intensity.

4. The blood cell analyzer of claim 3, **characterized in that**, the at least one first leukocyte parameter is selected from one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of monocyte population in the first test sample, and an area of a distribution region of monocyte population in the first test sample in a two-dimensional scattergram generated by two light intensities selected from forward scatter intensity, side scatter intensity and fluorescence intensity, and a volume of a distribution region of monocyte population in the first test sample in a three-dimensional scattergram generated by forward scatter intensity, side scatter intensity and fluorescence intensity; and/or
the at least one second leukocyte parameter is selected from one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of leukocyte population in the second test sample, and an area of a distribution region of a leukocyte population in the second test sample in a two-dimensional scattergram generated by two light intensities selected from forward scatter intensity, side scatter intensity and fluorescence intensity, and a volume of a distribution region of a leukocyte population in the second test sample in a three-dimensional scattergram generated by forward scatter intensity, side scatter intensity and fluorescence intensity.

5. The blood cell analyzer of claim 4, **characterized in that**, the at least one first leukocyte parameter is selected from the side scatter intensity distribution width of monocyte population in the first test sample, and the at least one second leukocyte parameter is selected from the fluorescence intensity distribution width of leukocyte population in the second test sample;
calculating an infection marker parameter for evaluating an infection status of the subject based on the at least one first leukocyte parameter and the at least one second leukocyte parameter comprises:
calculating the infection marker parameter for evaluating the infection status of the subject based on the side scatter intensity distribution width of monocyte population in the first test sample and the fluorescence intensity distribution width of leukocyte population in the second test sample.

6. The blood cell analyzer of any one of claims 1 to 5, **characterized in that**, the processor is further configured to: output prompt information indicating that the infection marker parameter is abnormal when a value of the infection marker parameter is beyond a preset range.

7. The blood cell analyzer of any one of claims 1 to 6, **characterized in that**, the processor is further configured to output prompt information indicating the infection status of the subject based on the infection marker parameter.

8. The blood cell analyzer of any one of claims 1 to 7, **characterized in that**, the infection marker parameter is used for early prediction of sepsis in the subject.

9. The blood cell analyzer of claim 8, **characterized in that**, the processor is further configured to output prompt information indicating that the subject is likely to progress to sepsis within a certain period of time starting from when the blood sample to be tested is collected, if the infection marker parameter satisfies a first preset condition.

10. The blood cell analyzer of claim 9, **characterized in that**, the certain period of time is not greater than 48 hours, preferably not greater than 24 hours.

11. The blood cell analyzer of any one of claims 8 to 10, **characterized in that**, the at least one first leukocyte parameter is selected from a side scatter intensity distribution width of monocyte population in the first test sample, and the at least one second leukocyte parameter is selected from a fluorescence intensity distribution width or a side scatter intensity distribution width of leukocyte population in the second test sample;
calculating an infection marker parameter for evaluating an infection status of the subject based on the at least one first leukocyte parameter and the at least one second leukocyte parameter comprises:

    calculating the infection marker parameter for evaluating the infection status of the subject based on the side scatter intensity distribution width of monocyte population in the first test sample and the fluorescence intensity distribution width of leukocyte population in the second test sample, or
    calculating the infection marker parameter for evaluating the infection status of the subject based on the side scatter intensity distribution width of monocyte population in the first test sample and the side scatter intensity distribution width of leukocyte population in the second test sample.

12. The blood cell analyzer of any one of claims 1 to 7, **characterized in that**, the infection marker parameter is used for diagnosis of sepsis in the subject.

13. The blood cell analyzer of claim 12, **characterized in that**, the processor is further configured to output prompt information indicating that the subject has sepsis when the infection marker parameter satisfies a second preset condition.

14. The blood cell analyzer of claim 12 or 13, **characterized in that**, the at least one first leukocyte parameter is selected from a side scatter intensity distribution width of monocyte population in the first test sample or a side scatter intensity distribution center of gravity of neutrophil population in the first test sample, and the at least one second leukocyte parameter is selected from a fluorescence intensity distribution width of leukocyte population in the second test sample;
calculating an infection marker parameter for evaluating an infection status of the subject based on the at least one first leukocyte parameter and the at least one second leukocyte parameter comprises:

    calculating the infection marker parameter for evaluating the infection status of the subject based on the side scatter intensity distribution width of monocyte population in the first test sample and the fluorescence intensity distribution width of leukocyte population in the second test sample, or
    calculating the infection marker parameter for evaluating the infection status of the subject based on the side scatter intensity distribution center of gravity of neutrophil population in the first test sample and the fluorescence intensity distribution width of leukocyte population in the second test sample.

15. The blood cell analyzer of any one of claims 1 to 7, **characterized in that**, the infection marker parameter is used for identification between common infection and severe infection in the subject.

16. The blood cell analyzer of claim 15, **characterized in that**, the processor is further configured to output prompt information indicating that the subject has severe infection when the infection marker parameter satisfies a third preset condition.

17. The blood cell analyzer of claim 15 or 16, **characterized in that**, the at least one first leukocyte parameter is selected from a side scatter intensity distribution width or a forward scatter intensity distribution width of monocyte population in the first test sample, and the at least one second leukocyte parameter is selected from a fluorescence intensity distribution width of leukocyte population in the second test sample;
calculating an infection marker parameter for evaluating an infection status of the subject based on the at least one first leukocyte parameter and the at least one second leukocyte parameter comprises:

calculating the infection marker parameter for evaluating the infection status of the subject based on the side scatter intensity distribution width of monocyte population in the first test sample and the fluorescence intensity distribution width of leukocyte population in the second test sample, or
calculating the infection marker parameter for evaluating the infection status of the subject based on the forward scatter intensity distribution width of monocyte population in the first test sample and the fluorescence intensity distribution width of leukocyte population in the second test sample.

**18.** The blood cell analyzer according to any one of claims 1 to 7, **characterized in that**, the subject is an infected patient, particularly a patient suffering from severe infection or sepsis, and the infection marker parameter is used for monitoring the infection status of the subject.

**19.** The blood cell analyzer of claim 18, **characterized in that**, the processor is further configured to monitor a progression in the infection status of the subject according to the infection marker parameter.

**20.** The blood cell analyzer of claim 19, **characterized in that**, the processor is further configured to:

obtain multiple values of the infection marker parameter, which are obtained by multiple tests, in particular at least three tests of a blood sample from the subject at different time points; and
determine whether the infection status of the subject is improving or not according to a changing trend of the multiple values of the infection marker parameter obtained by the multiple tests, preferably, when the multiple values of the infection marker parameter obtained by the multiple tests gradually tend to decrease, output prompt information indicating that the infection status of the subject is improving.

**21.** The blood cell analyzer of any one of claims 18 to 20, **characterized in that**, the at least one first leukocyte parameter is selected from a side scatter intensity distribution width of monocyte population in the first test sample, and the at least one second leukocyte parameter is selected from a fluorescence intensity distribution width of leukocyte population in the second test sample;
calculating an infection marker parameter for evaluating an infection status of the subject based on the at least one first leukocyte parameter and the at least one second leukocyte parameter comprises:
calculating the infection marker parameter for evaluating the infection status of the subject based on the side scatter intensity distribution width of monocyte population in the first test sample and the fluorescence intensity distribution width of leukocyte population in the second test sample.

**22.** The blood cell analyzer of any one of claims 1 to 7, **characterized in that**, the subject is a patient with sepsis who has received a treatment, and the infection marker parameter is used for an analysis of sepsis prognosis of the subject; preferably, the processor is further configured to determine whether sepsis prognosis of the subject is good or not according to the infection marker parameter.

**23.** The blood cell analyzer of any one of claims 1 to 7, **characterized in that**, the infection marker parameter is used for identification between bacterial infection and viral infection in the subject,
preferably, the processor is further configured to determine whether an infection type of the subject is a viral infection or a bacterial infection according to the infection marker parameter.

**24.** The blood cell analyzer of any one of claims 1 to 7, **characterized in that**, the infection marker parameter is used for identification between infectious inflammation and non-infectious inflammation in the subject,
preferably, the processor is further configured to determine whether the subject has an infectious inflammation or a non-infectious inflammation according to the infection marker parameter.

**25.** The blood cell analyzer of any one of claims 1 to 7, **characterized in that**, the subject is a patient with sepsis who is receiving medication, and the infection marker parameter is used for evaluation of therapeutic effect on sepsis in the subject.

**26.** The blood cell analyzer of any one of claims 1 to 25, **characterized in that**, the processor is further configured to obtain a respective leukocyte count of the first test sample and the second test sample based on the first optical information and the second optical information before calculating at least one first leukocyte parameter of at least one first target particle population in the first test sample from the first optical information and at least one second leukocyte parameter of at least one second target particle population in the second test sample from the second optical information, and output a retest instruction to retest the blood sample of the subject when any one of the leukocyte counts is less than a preset threshold, wherein a measurement amount of the sample to be retested based on the retest instruction is greater than a measurement amount of the sample to be tested to obtain the optical information; and

the processor is further configured to calculate at least another first leukocyte parameter of at least another first target particle population in the first test sample from first optical information obtained by the retest, and at least another second leukocyte parameter of at least another second target particle population in the second test sample from second optical information obtained by the retest, and to obtain an infection marker parameter for evaluating the infection status of the subject based on the at least another first leukocyte parameter and the at least another second leukocyte parameter.

**27.** The blood cell analyzer of any one of claims 1 to 25, **characterized in that**, the processor is further configured to: skip outputting a value of the infection marker parameter, or output a value of the infection marker parameter and simultaneously output prompt information indicating that the value of the infection marker parameter is unreliable, when a preset characteristic parameter of at least one of the first target particle population and the second target particle population satisfies a fourth preset condition.

**28.** The blood cell analyzer of claim 27, **characterized in that**, the processor is further configured to:
skip outputting a value of the infection marker parameter, or output a value of the infection marker parameter and simultaneously output prompt information indicating that the value of the infection marker parameter is unreliable, when a total number of particles of at least one of the first target particle population and the second target particle population is less than a preset threshold, and/or when at least one of the first target particle population and the second target particle population overlaps with another particle populations.

**29.** The blood cell analyzer of any one of claims 1 to 25, **characterized in that**, the processor is further configured to: skip outputting a value of the infection marker parameter, or output a value of the infection marker parameter and simultaneously output prompt information indicating that the value of the infection marker parameter is unreliable, when the subject suffers from a hematological disorder or there are abnormal cells, especially blast cells, in the blood sample to be tested, such as when it is determined that there are abnormal cells, especially blast cells, in the blood sample to be tested based on at least one of the first optical information and the second optical information.

**30.** The blood cell analyzer of any one of claims 1 to 25, **characterized in that**, calculating at least one first leukocyte parameter of at least one first target particle population in the first test sample from the first optical information and at least one second leukocyte parameter of at least one second target particle population in the second test sample from the second optical information, wherein at least one of the first leukocyte parameter and the second leukocyte parameter comprises a cell characteristic parameter, and calculating an infection marker parameter for evaluating an infection status of the subject based on the at least one first leukocyte parameter and the at least one second leukocyte parameter, by the processor, comprises:

calculating a plurality of first leukocyte parameters of at least one first target particle population in the first test sample from the first optical information and a plurality of second leukocyte parameters of at least one second target particle population in the second test sample from the second optical information;
obtaining a plurality of sets of infection marker parameters for evaluating the infection status of the subject based on the plurality of first leukocyte parameters and the plurality of second leukocyte parameters;
assigning a priority for each set of infection marker parameters of the plurality of sets of infection marker parameters;
calculating a credibility of each set of infection marker parameters of the plurality of sets of infection marker parameters, selecting at least one set of infection marker parameters from the plurality of sets of infection marker parameters based on respective priority and credibility of the plurality of sets of infection marker parameters so as to obtain the infection marker parameter; or according to respective priority of the plurality of sets of infection marker parameters, successively calculating respective credibility of the plurality of sets of infection marker parameters and determining whether the credibility reaches a corresponding credibility threshold, and when the credibility of a current set of infection marker parameters reaches the corresponding credibility threshold, obtaining the infection marker parameter based on said set of infection marker parameters and stopping calculation and determination.

**31.** The blood cell analyzer of claim 30, **characterized in that**, the processor is further configured to:

calculate the credibility of each set of infection marker parameters of the plurality of sets of infection marker parameters, and determine whether the credibility of each set of infection marker parameters reaches a corresponding credibility threshold;
use the set(s) of infection marker parameters, whose respective credibility reaches the corresponding credibility threshold among the plurality of sets of infection marker parameters, as candidate set(s) of infection marker parameters; and
select at least one candidate set of infection marker parameters from the candidate set(s) of infection marker parameters according to respective priority of the candidate set(s) of infection marker parameters, preferably select a set of infection marker parameters with the highest priority, so as to obtain the infection marker parameter.

**32.** The blood cell analyzer of any one of claims 1 to 25, **characterized in that**, calculating at least one first leukocyte parameter of at least one first target particle population in the first test sample from the first optical information and at least one second leukocyte parameter of at least one second target particle population in the second test sample from the second optical information, wherein at least one of the first leukocyte parameter and the second leukocyte parameter comprises a cell characteristic parameter, and calculating an infection marker parameter for evaluating an infection status of the subject based on the at least one first leukocyte parameter and the at least one second leukocyte parameter, by the processor, comprises:

calculating a plurality of first leukocyte parameters of at least one first target particle population in the first test sample from the first optical information and a plurality of second leukocyte parameters of at least one second target particle population in the second test sample from the second optical information,
obtaining a plurality of sets of infection marker parameters for evaluating the infection status of the subject based on the plurality of first leukocyte parameters and the plurality of second leukocyte parameters,
calculating a credibility of each set of infection marker parameters of the plurality of sets of infection marker parameters, selecting at least one set of infection marker parameters from the plurality of sets of infection marker parameters based on respective credibility of the plurality of sets of infection marker parameters so as to obtain the infection marker parameter.

**33.** The blood cell analyzer of any one of claims 1 to 25, **characterized in that**, calculating at least one first leukocyte parameter of at least one first target particle population in the first test sample from the first optical information and at least one second leukocyte parameter of at least one second target particle population in the second test sample from the second optical information, wherein at least one of the first leukocyte parameter and the second leukocyte parameter comprises a cell characteristic parameter, and calculating an infection marker parameter for evaluating an infection status of the subject based on the at least one first leukocyte parameter and the at least one second leukocyte parameter, by the processor, comprises:

determining whether the blood sample to be tested has an abnormality that affects the evaluation of the infection status based on the first optical information and the second optical information;
when it is determined that the blood sample to be tested has an abnormality that affects the evaluation of the infection status, obtaining at least one first leukocyte parameter of at least one first target particle population unaffected by the abnormality from the first optical information, and obtain at least one second leukocyte parameter of at least one second target particle population unaffected by the abnormality from the second optical information, respectively, and obtaining the infection marker parameter based on the at least one first leukocyte parameter and the at least one second leukocyte parameter.

**34.** The blood cell analyzer of any one of claims 1 to 33, **characterized in that**, the processor is further configured to combine the at least one first leukocyte parameter and the at least one second leukocyte parameter as the infection marker parameter using a linear function.

**35.** The blood cell analyzer of any one of claims 1 to 34, **characterized in that**, the processor is further configured to select the at least one first leukocyte parameter and the at least one second leukocyte parameter and obtain the infection marker parameter based on the selected at least one first leukocyte parameter and at least one second leukocyte parameter such that a diagnostic efficacy of the infection marker parameter is greater than 0.5, preferably greater than 0.6, particularly preferably greater than 0.8.

**36.** A blood cell analyzer, **characterized in that** the blood cell analyzer comprises:

a sample aspiration device configured to aspirate a blood sample to be tested of a subject;

a sample preparation device configured to prepare a first test sample containing a part of the blood sample to be tested, a first hemolytic agent, and a first staining agent for leukocyte classification, and to prepare a second test sample containing another part of the blood sample to be tested, a second hemolytic agent and a second staining agent for identifying nucleated red blood cells;
an optical detection device comprising a flow cell, a light source and an optical detector, wherein the flow cell is configured to allow the first test sample and the second test sample to pass therethrough respectively, the light source is configured to respectively irradiate with light the first test sample and the second test sample passing through the flow cell, and the optical detector is configured to detect first optical information and second optical information generated by the first test sample and second test sample under irradiation when passing through the flow cell respectively; and
a processor configured to:

receive a mode setting instruction,
when the mode setting instruction indicates that a blood routine test mode is selected, control the measurement device to perform an optical measurement on a respective first measurement amount of the first test sample and the second test sample to obtain first optical information of the first test sample and second optical information of the second test sample, respectively, and obtain and output blood routine parameters based on said first optical information and said second optical information,
when the mode setting instruction indicates that a sepsis test mode is selected, control the measurement device to perform an optical measurement on a respective second measurement amount of the first test sample and the second test sample, the respective second measurement amount being greater than the respective first measurement amount, to obtain first optical information of the first test sample and second optical information of the second test sample, respectively, calculate at least one first leukocyte parameter of at least one first target particle population in the first test sample from said first optical information, calculate at least one second leukocyte parameter of at least one second target particle population in the second test sample from said second optical information, obtain an infection marker parameter for evaluating an infection status of the subject based on the at least one first leukocyte parameter and the at least one second leukocyte parameter, and output the infection marker parameter.

**37.** A method for evaluating an infection status of a subject, **characterized in that** the method comprises:

collecting a blood sample to be tested from the subject;
preparing a first test sample containing a part of the blood sample to be tested, a first hemolytic agent, and a first staining agent for leukocyte classification and preparing a second test sample containing another part of the blood sample to be tested, a second hemolytic agent, and a second staining agent for identifying nucleated red blood cells;
passing particles in the first test sample through an optical detection region irradiated with light one by one, to obtain first optical information generated by the particles in the first test sample after being irradiated with light;
passing particles in the second test sample through the optical detection region irradiated with light one by one, to obtain second optical information generated by the particles in the second test sample after being irradiated with light;
calculating at least one first leukocyte parameter of at least one first target particle population in the first test sample from the first optical information and calculating at least one second leukocyte parameter of at least one second target particle population in the second test sample from the second optical information, wherein at least one of the first leukocyte parameter and the second leukocyte parameter comprises a cell characteristic parameter;
calculating an infection marker parameter based on the at least one first leukocyte parameter and the at least one second leukocyte parameter; and
evaluating the infection status of the subject based on the infection marker parameter.

**38.** The method of claim 37, **characterized in that**, the at least one first leukocyte parameter comprises one or more of cell characteristic parameters of monocyte population, neutrophil population and lymphocyte population in the first test sample; and/or

the at least one second leukocyte parameter comprises one or more of cell characteristic parameters of monocyte population, neutrophil population and leukocyte population in the second test sample;
preferably, the at least one first leukocyte parameter comprises one or more of cell characteristic parameters of monocyte population and neutrophil population in the first test sample, and the at least one second leukocyte parameter comprises one or more of cell characteristic parameters of neutrophil population and leukocyte population in the second test sample.

**39.** The method of claim 37 or 38, **characterized in that**, the at least one first leukocyte parameter comprises one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of the first target particle population, and an area of a distribution region of the first target particle population in a two-dimensional scattergram generated by two light intensities selected from forward scatter intensity, side scatter intensity and fluorescence intensity, and a volume of a distribution region of the first target particle population in a three-dimensional scattergram generated by forward scatter intensity, side scatter intensity and fluorescence intensity; and/or
the at least one second leukocyte parameter comprises one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of the second target particle population, and an area of a distribution region of the second target particle population in a two-dimensional scattergram generated by two light intensities selected from forward scatter intensity, side scatter intensity and fluorescence intensity, and a volume of a distribution region of the second target particle population in a three-dimensional scattergram generated by forward scatter intensity, side scatter intensity and fluorescence intensity.

**40.** The method of claim 39, **characterized in that**, the at least one first leukocyte parameter is selected from one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of monocyte population in the first test sample, and an area of a distribution region of monocyte population in the first test sample in a two-dimensional scattergram generated by two light intensities selected from forward scatter intensity, side scatter intensity and fluorescence intensity, and a volume of a distribution region of monocyte population in the first test sample in a three-dimensional scattergram generated by forward scatter intensity, side scatter intensity and fluorescence intensity; and/or
the at least one second leukocyte parameter is selected from one or more of following parameters: a forward scatter intensity distribution width, a forward scatter intensity distribution center of gravity, a forward scatter intensity distribution coefficient of variation, a side scatter intensity distribution width, a side scatter intensity distribution center of gravity, a side scatter intensity distribution coefficient of variation, a fluorescence intensity distribution width, a fluorescence intensity distribution center of gravity, a fluorescence intensity distribution coefficient of variation of leukocyte population in the second test sample, and an area of a distribution region of leukocyte population in the second test sample in a two-dimensional scattergram generated by two light intensities selected from forward scatter intensity, side scatter intensity and fluorescence intensity, and a volume of a distribution region of leukocyte population in the second test sample in a three-dimensional scattergram generated by forward scatter intensity, side scatter intensity and fluorescence intensity.

**41.** The method of claim 40, **characterized in that**, the at least one first leukocyte parameter is selected from the side scatter intensity distribution width of monocyte population in the first test sample, and the at least one second leukocyte parameter is selected from the fluorescence intensity distribution width of leukocyte population in the second test sample;
calculating the infection marker parameter for evaluating the infection status of the subject based on the at least one first leukocyte parameter and the at least one second leukocyte parameter comprises:
calculating the infection marker parameter for evaluating the infection status of the subject based on the side scatter intensity distribution width of monocyte population in the first test sample and the fluorescence intensity distribution width of leukocyte population in the second test sample.

**42.** The blood cell analyzer of any one of claims 37 to 41, **characterized in that**, the method further comprises:
performing on the subject an early prediction of sepsis, a diagnosis of sepsis, an identification between common infection and severe infection, a monitoring of the infection status, an analysis of sepsis prognosis, an evaluation of therapeutic effect on sepsis, an identification between bacterial infection and viral infection, or an identification between non-infectious inflammation and infectious inflammation based on the infection marker parameter.

**43.** The method of claim 42, **characterized in that**, evaluating the infection status of the subject based on the infection marker parameter comprises:
outputting prompt information indicating that the subject is likely to progress to sepsis within a certain period of time starting from when the blood sample to be tested is collected; preferably, the certain period of time is not greater than 48 hours, in particular not greater than 24 hours, if the infection marker parameter satisfies a first preset condition.

**44.** The method of claim 43, **characterized in that**, the at least one first leukocyte parameter is selected from a side scatter intensity distribution width of monocyte population in the first test sample, and the at least one second leukocyte parameter is selected from a fluorescence intensity distribution width or a side scatter intensity distribution width of leukocyte population in the second test sample;
calculating an infection marker parameter for evaluating the infection status of the subject based on the at least one first leukocyte parameter and the at least one second leukocyte parameter comprises:

calculating the infection marker parameter for evaluating the infection status of the subject based on the side scatter intensity distribution width of monocyte population in the first test sample and the fluorescence intensity distribution width of leukocyte population in the second test sample, or
calculating the infection marker parameter for evaluating the infection status of the subject based on the side scatter intensity distribution width of monocyte population in the first test sample and the side scatter intensity distribution width of leukocyte population in the second test sample.

**45.** The method of claim 42, **characterized in that**, evaluating the infection status of the subject based on the infection marker parameter comprises:
outputting prompt information indicating that the subject has sepsis, when the infection marker parameter satisfies a second preset condition.

**46.** The method of claim 45, **characterized in that**, the at least one first leukocyte parameter is selected from a side scatter intensity distribution width of monocyte population in the first test sample or a side scatter intensity distribution center of gravity of neutrophil population in the first test sample, and the at least one second leukocyte parameter is selected from a fluorescence intensity distribution width of leukocyte population in the second test sample;
calculating an infection marker parameter for evaluating the infection status of the subject based on the at least one first leukocyte parameter and the at least one second leukocyte parameter comprises:

calculating the infection marker parameter for evaluating the infection status of the subject based on the side scatter intensity distribution width of monocyte population in the first test sample and the fluorescence intensity distribution width of leukocyte population in the second test sample, or
calculating the infection marker parameter for evaluating the infection status of the subject based on the side scatter intensity distribution center of gravity of neutrophil population in the first test sample and the fluorescence intensity distribution width of leukocyte population in the second test sample.

**47.** The method of claim 42, **characterized in that**, evaluating the infection status of the subject based on the infection marker parameter comprises:
outputting prompt information indicating that the subject has severe infection, when the infection marker parameter satisfies a third preset condition.

**48.** The method of claim 47, **characterized in that**, the at least one first leukocyte parameter is selected from a side scatter intensity distribution width or a forward scatter intensity distribution width of monocyte population in the first test sample, and the at least one second leukocyte parameter is selected from a fluorescence intensity distribution width of leukocyte population in the second test sample;
calculating an infection marker parameter for evaluating the infection status of the subject based on the at least one first leukocyte parameter and the at least one second leukocyte parameter comprises:

calculating the infection marker parameter for evaluating the infection status of the subject based on the side scatter intensity distribution width of monocyte population in the first test sample and the fluorescence intensity distribution width of leukocyte population in the second test sample, or
calculating the infection marker parameter for evaluating the infection status of the subject based on the forward scatter intensity distribution width of monocyte population in the first test sample and the fluorescence intensity distribution width of leukocyte population in the second test sample.

**49.** The method of claim 42, **characterized in that**, the subject is an infected patient, in particular a patient suffering from severe infection or sepsis; and
evaluating the infection status of the subject based on the infection marker parameter comprises: monitoring a progression in the infection status of the subject according to the infection marker parameter.

**50.** The method of claim 49, **characterized in that**, monitoring a progression in the infection status of the subject according to the infection marker parameter comprises:

obtaining multiple values of the infection marker parameter, which are obtained by multiple tests, in particular at least three tests of a blood sample from the subject at different time points;
determining whether the infection status of the subject is improving or not according to a changing trend of the multiple values of the infection marker parameter obtained by the multiple tests, preferably, when the multiple values of the infection marker parameter obtained by the multiple tests gradually tend to decrease, outputting prompt information indicating that the infection status of the subject is improving.

**51.** The method of claim 49 or 50, **characterized in that**, the at least one first leukocyte parameter is selected from a side scatter intensity distribution width of monocyte population in the first test sample, and the at least one second leukocyte parameter is selected from a fluorescence intensity distribution width of leukocyte population in the second test sample;
calculating an infection marker parameter for evaluating the infection status of the subject based on the at least one first leukocyte parameter and the at least one second leukocyte parameter comprises:
calculating the infection marker parameter for evaluating the infection status of the subject based on the side scatter intensity distribution width of monocyte population in the first test sample and the fluorescence intensity distribution width of leukocyte population in the second test sample.

**52.** The method of claim 42, **characterized in that**, the subject is a patient with sepsis who has received a treatment; and evaluating the infection status of the subject based on the infection marker parameter comprises: determining whether sepsis prognosis of the subject is good or not according to the infection marker parameter.

**53.** The method of claim 42, **characterized in that**, evaluating the infection status of the subject based on the infection marker parameter comprises:

determining whether an infection type of the subject is a viral infection or a bacterial infection according to the infection marker parameter; or
determining whether the subject has an infectious inflammation or a non-infectious inflammation according to the infection marker parameter.

**54.** The method of claim 42, **characterized in that**, the subject is a patient with sepsis who is receiving medication, and evaluating the infection status of the subject based on the infection marker parameter comprises: evaluating a therapeutic effect on sepsis of the subject according to the infection marker parameter.

**55.** The method of any one of claims 37 to 54, **characterized in that**, the method further comprises:
skipping outputting a value of the infection marker parameter, or outputting a value of the infection marker parameter and simultaneously output prompt information indicating that the value of the infection marker parameter is unreliable, when a preset characteristic parameter of at least one of the first target particle population and the second target particle population satisfies a fourth preset condition.

**56.** The method of claim 55, **characterized in that**, the method further comprises:
skipping outputting a value of the infection marker parameter, or output a value of the infection marker parameter and simultaneously outputting prompt information indicating that the value of the infection marker parameter is unreliable, when a total number of particles of at least one of the first target particle population and the second target particle population is less than a preset threshold, and/or, when at least one of the first target particle population and the second target particle population overlaps with another particle populations.

**57.** The method of any one of claims 37 to 56, **characterized in that**, the method further comprises:

skipping outputting a value of the infection marker parameter, or outputting a value of the infection marker parameter and simultaneously outputting prompt information indicating that the value of the infection marker parameter is unreliable, when the subject suffers from a hematological disorder or there are abnormal cells, especially blast cells, in the blood sample to be tested, such as when it is determined that there are abnormal cells, especially blast cells, in the blood sample to be tested based on at least one of the first optical information and the second optical information.

**58.** An infection marker parameter for use in evaluating an infection status of a subject, wherein the infection marker parameter is obtained by:

calculating at least one first leukocyte parameter of at least one first target particle population obtained by flow cytometry detection of a first test sample containing a part of a blood sample to be tested from the subject, a first hemolytic agent, and a first staining agent for leukocyte classification;
calculating at least one second leukocyte parameter of at least one second target particle population obtained by flow cytometry detection of a second test sample containing another part of the blood sample to be tested, a second hemolytic agent, and a second staining agent for identifying nucleated red blood cells, wherein at least one of the first leukocyte parameter and the second leukocyte parameter comprises a cell characteristic parameter; and
calculating the infection marker parameter based on the at least one first leukocyte parameter and the at least one second leukocyte parameter.

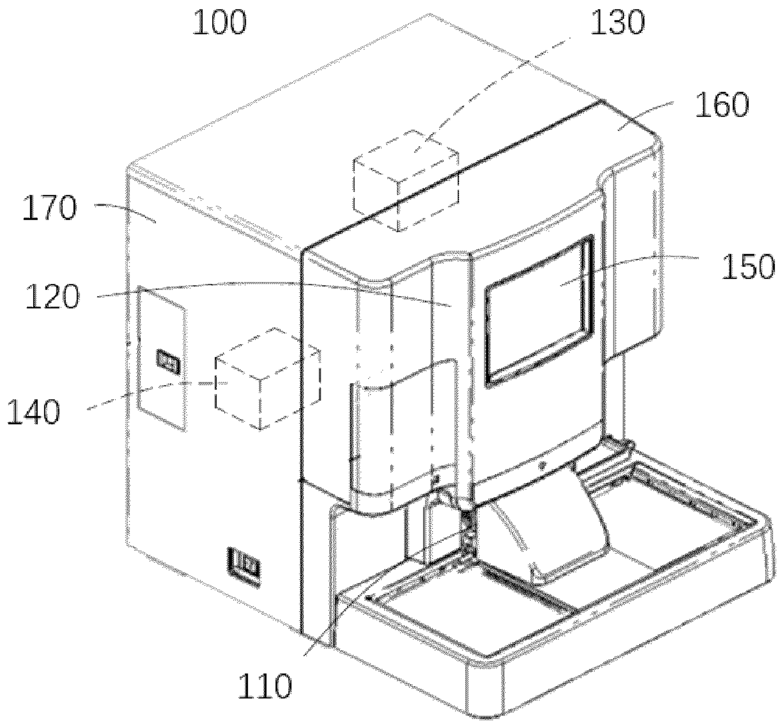


*FIG. 1*

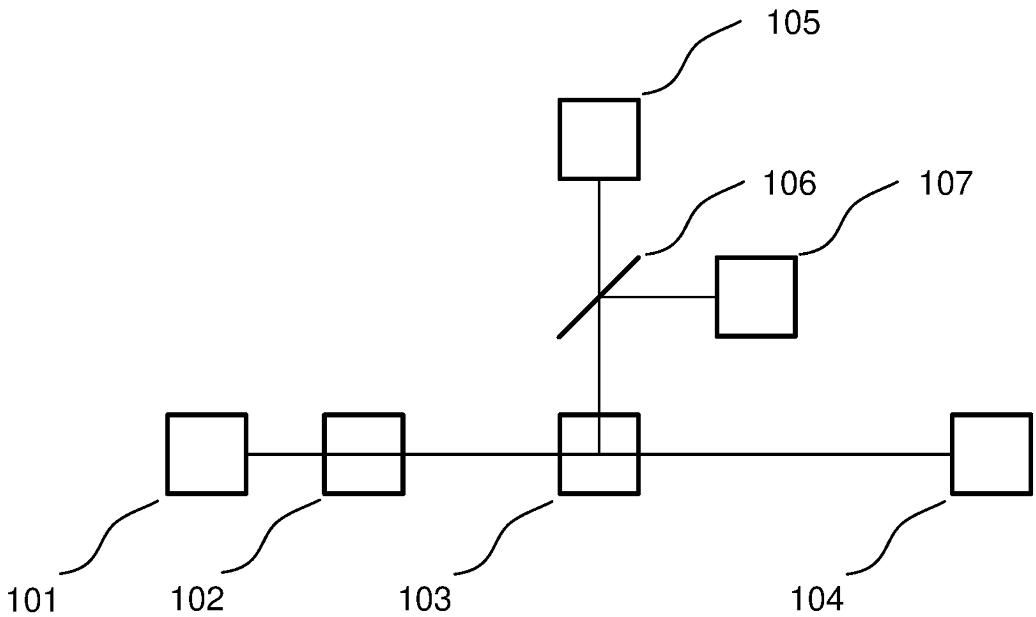


*FIG. 2*

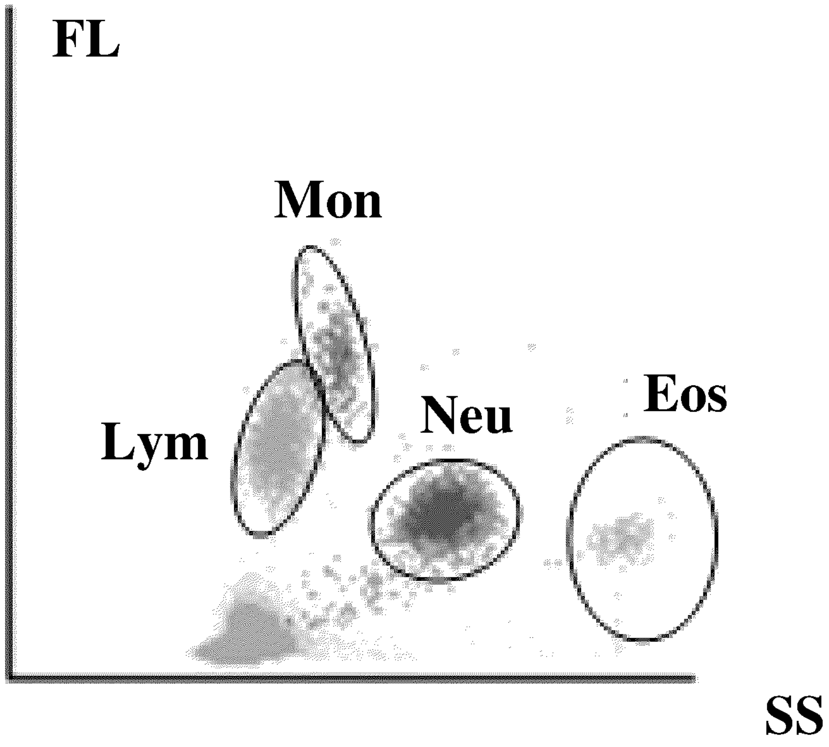


*FIG. 3*

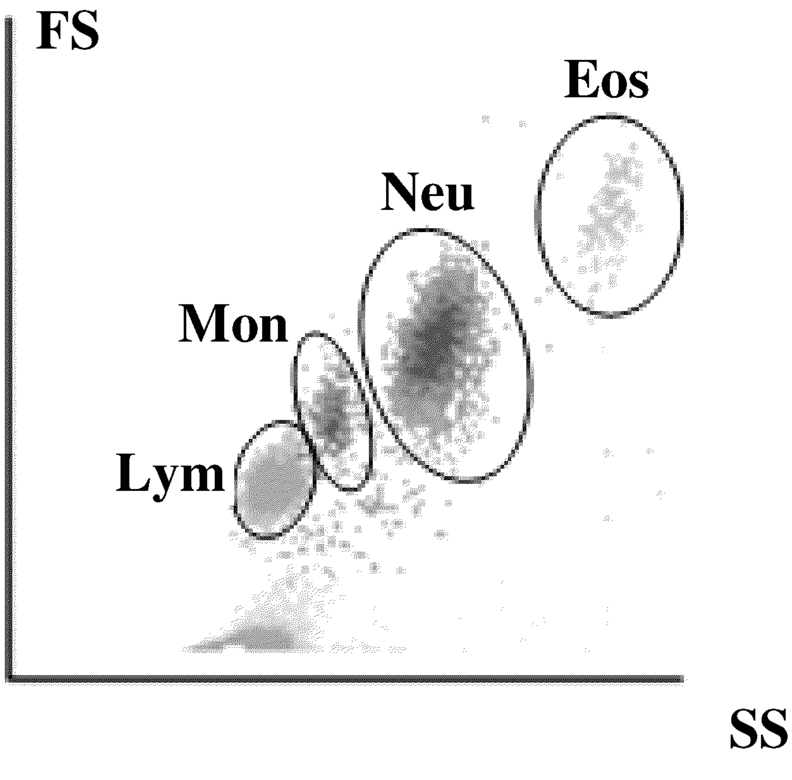


*FIG. 4*

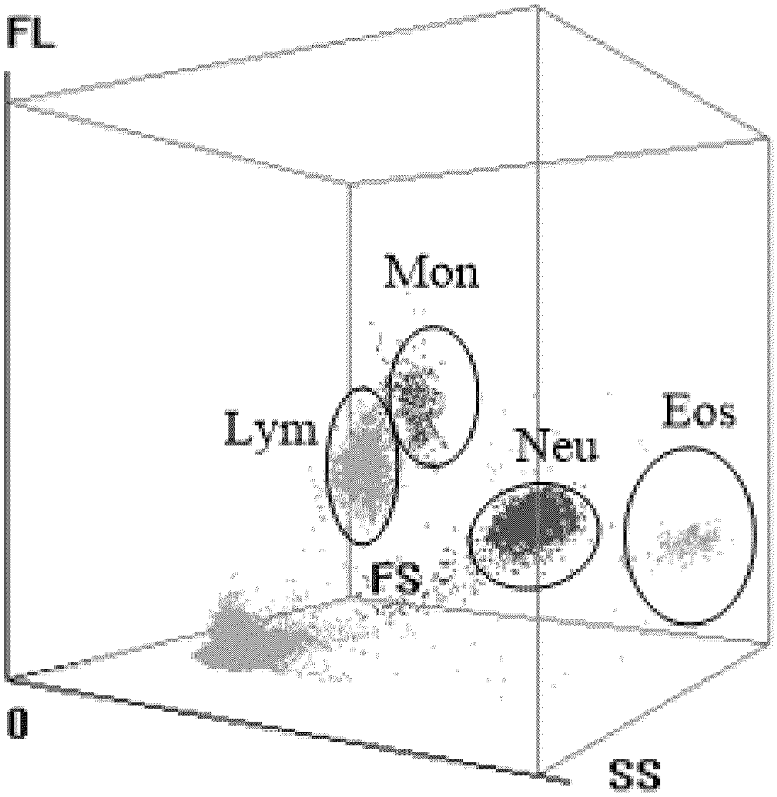


*FIG. 5*

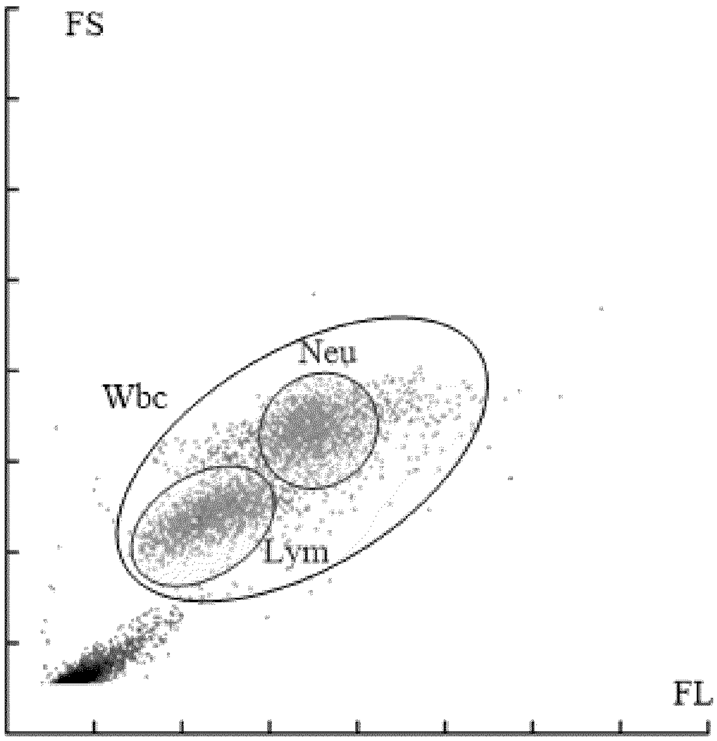


*FIG. 6*

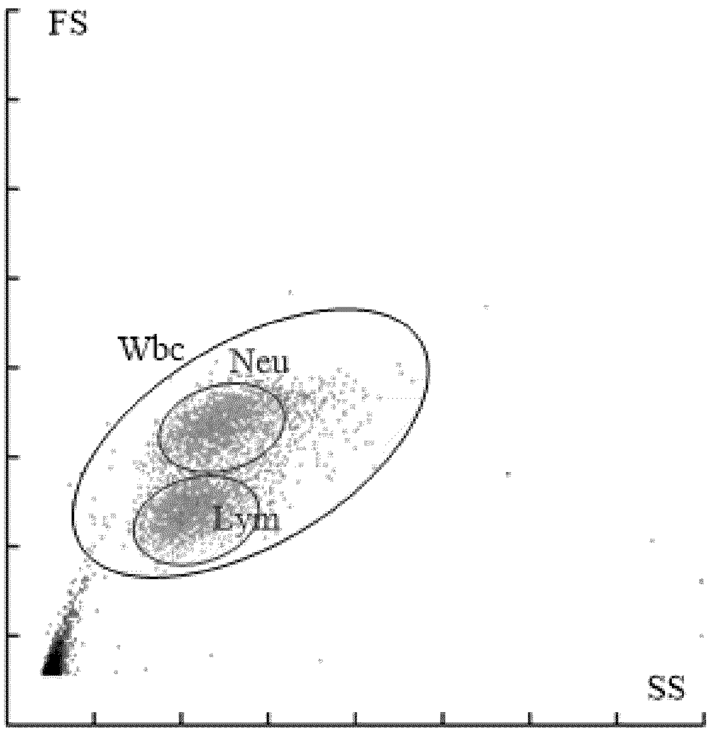


*FIG. 7*

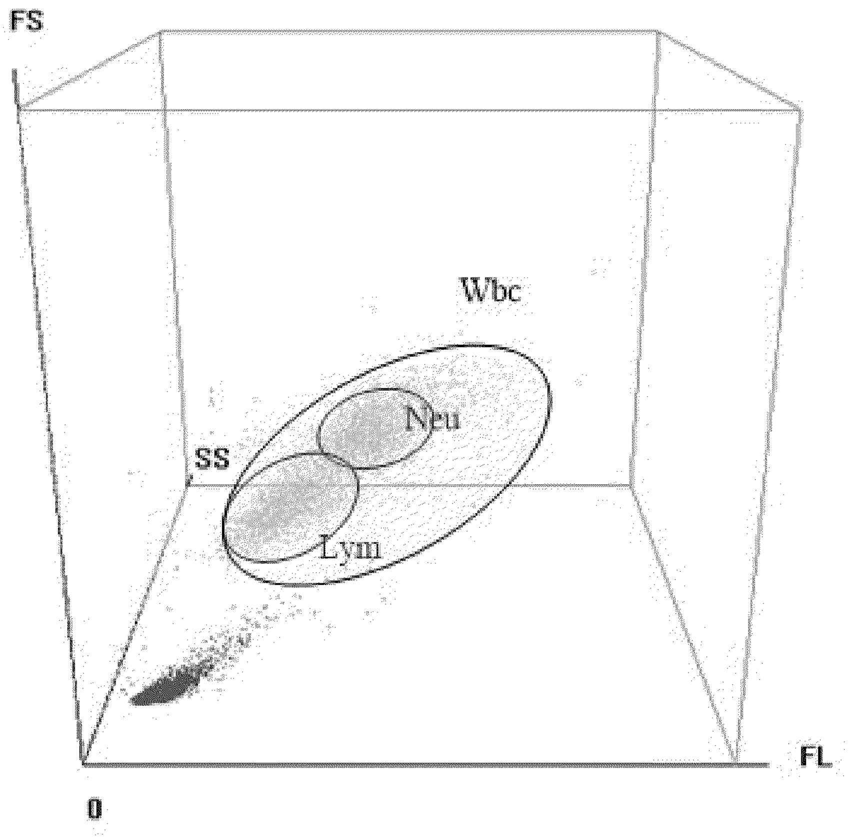


*FIG. 8*

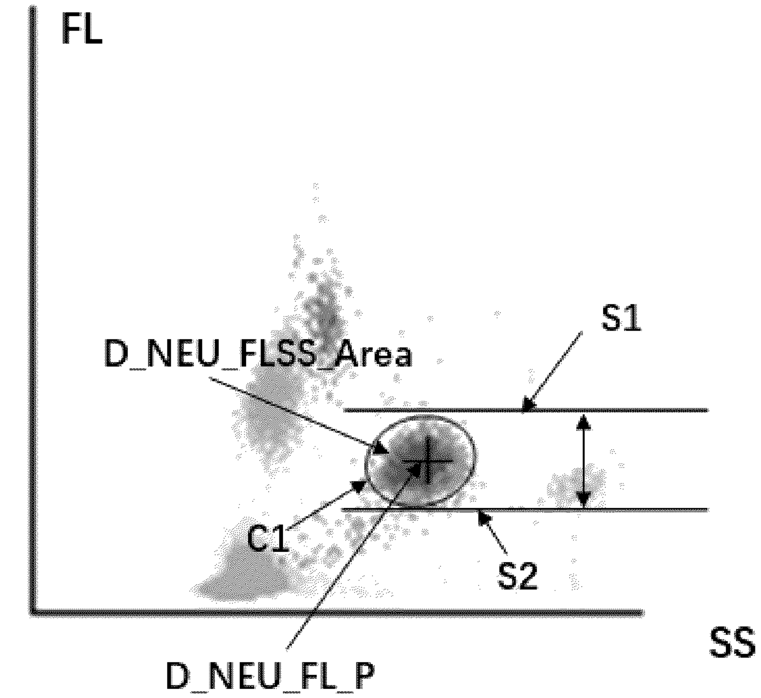
FL
SS
S1
S2
D_NEU_FLSS_Area
C1
D_NEU_FL_P

*FIG. 9*

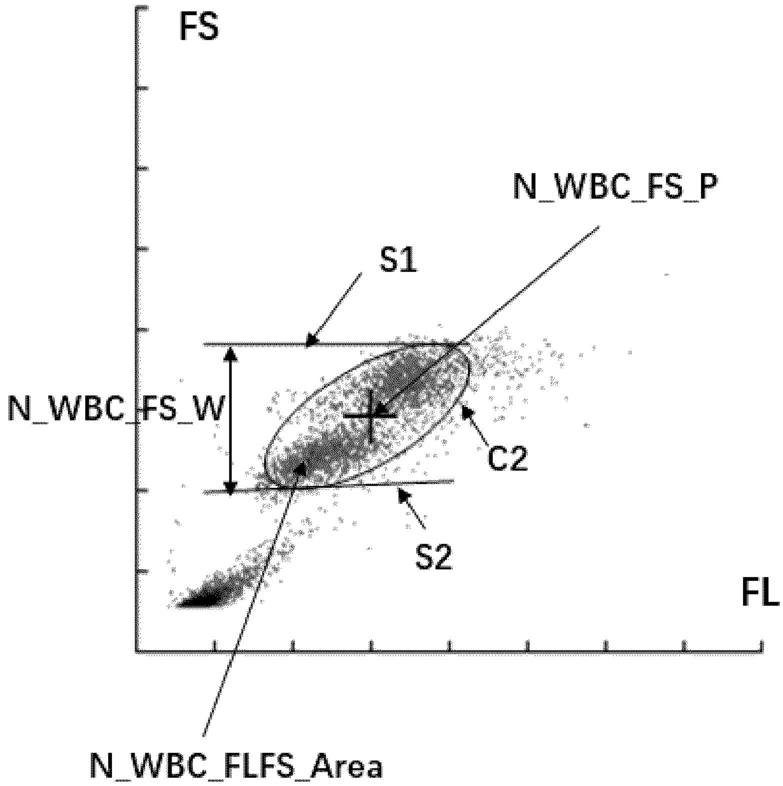
FS
FL
N_WBC_FS_P
S1
N_WBC_FS_W
C2
S2
N_WBC_FLFS_Area

*FIG. 10*

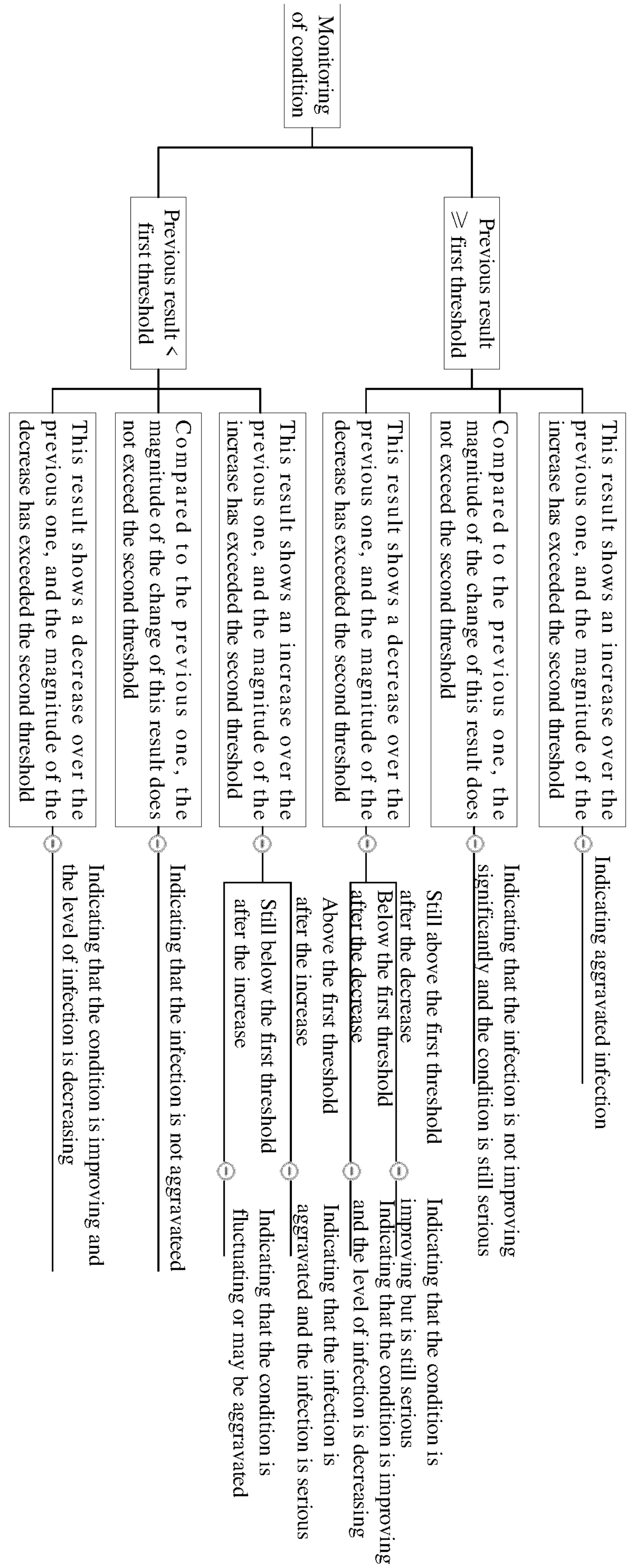
Monitoring of condition
Previous result ≥ first threshold
Previous result < first threshold
This result shows an increase over the previous one, and the magnitude of the increase has exceeded the second threshold
Indicating aggravated infection
Compared to the previous one, the magnitude of the change of this result does not exceed the second threshold
Indicating that the infection is not improving significantly and the condition is still serious
This result shows a decrease over the previous one, and the magnitude of the decrease has exceeded the second threshold
Still above the first threshold after the decrease
Indicating that the condition is improving but is still serious
Below the first threshold after the decrease
Indicating that the condition is improving and the level of infection is decreasing
This result shows an increase over the previous one, and the magnitude of the increase has exceeded the second threshold
Above the first threshold after the increase
Indicating that the infection is aggravated and the infection is serious
Still below the first threshold after the increase
Indicating that the condition is fluctuating or may be aggravated
Compared to the previous one, the magnitude of the change of this result does not exceed the second threshold
Indicating that the infection is not aggravated
This result shows a decrease over the previous one, and the magnitude of the decrease has exceeded the second threshold
Indicating that the condition is improving and the level of infection is decreasing

*FIG. 11*

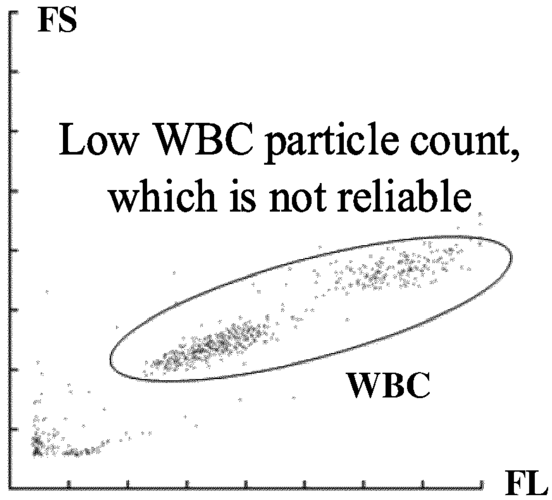


*FIG. 12*

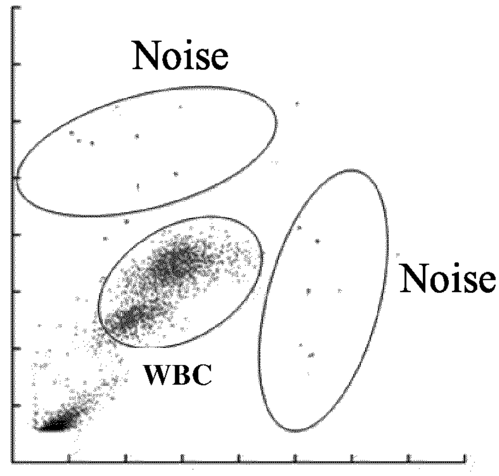


*FIG. 13*

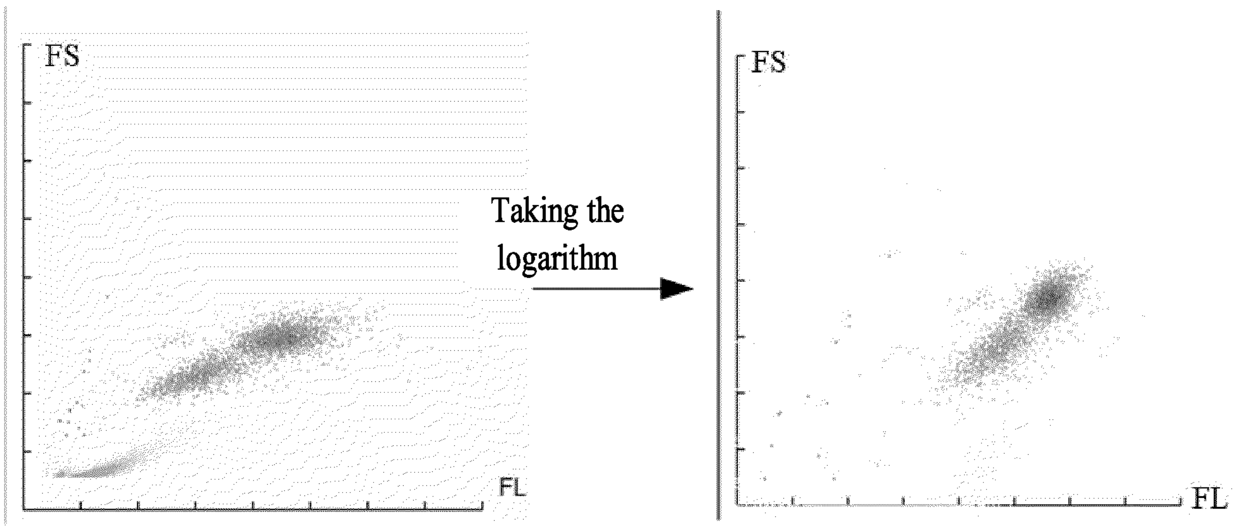


*FIG. 14*

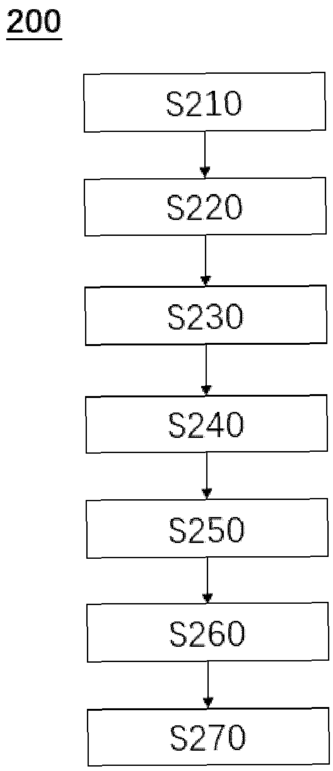
200
S210
S220
S230
S240
S250
S260
S270

*FIG. 15*

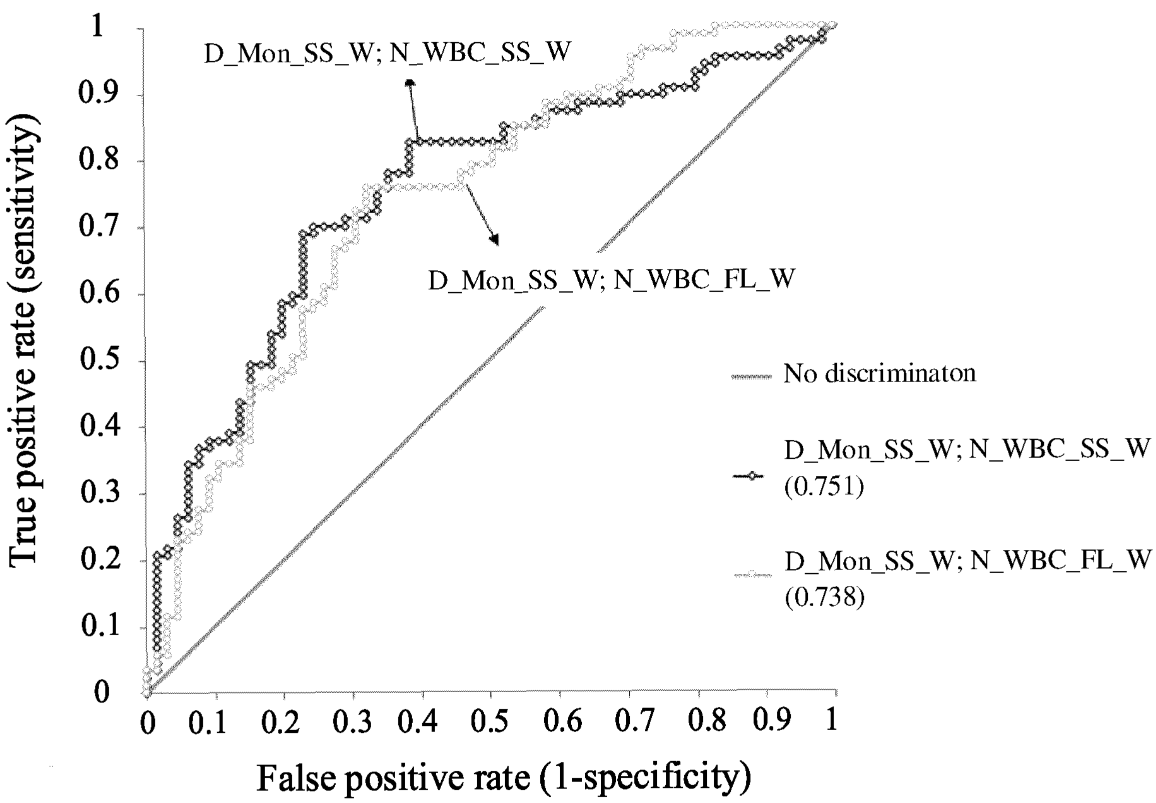
True positive rate (sensitivity)
False positive rate (1-specificity)
1
0.9
0.8
0.7
0.6
0.5
0.4
0.3
0.2
0.1
0
0 0.1 0.2 0.3 0.4 0.5 0.6 0.7 0.8 0.9 1
D_Mon_SS_W; N_WBC_SS_W
D_Mon_SS_W; N_WBC_FL_W
No discriminaton
D_Mon_SS_W; N_WBC_SS_W (0.751)
D_Mon_SS_W; N_WBC_FL_W (0.738)

*FIG. 16*

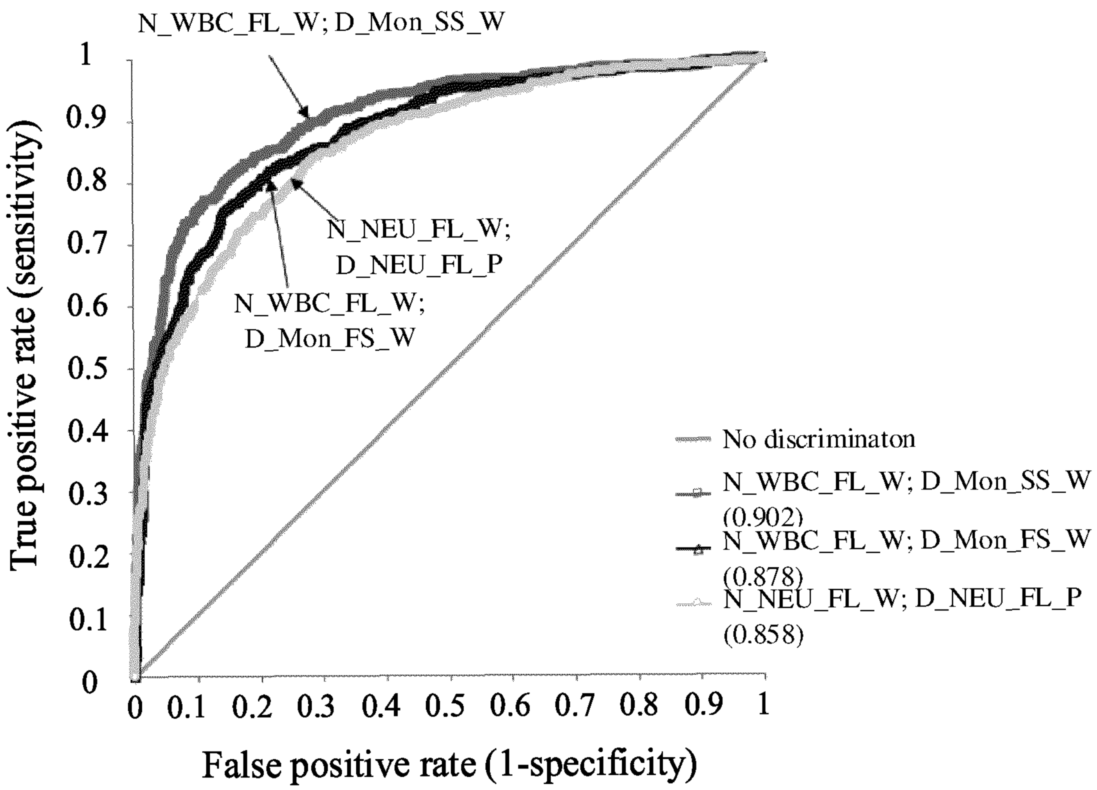
N_WBC_FL_W; D_Mon_SS_W
N_NEU_FL_W;
D_NEU_FL_P
N_WBC_FL_W;
D_Mon_FS_W
True positive rate (sensitivity)
False positive rate (1-specificity)
0 0.1 0.2 0.3 0.4 0.5 0.6 0.7 0.8 0.9 1
No discriminaton
N_WBC_FL_W; D_Mon_SS_W (0.902)
N_WBC_FL_W; D_Mon_FS_W (0.878)
N_NEU_FL_W; D_NEU_FL_P (0.858)

*FIG. 17*

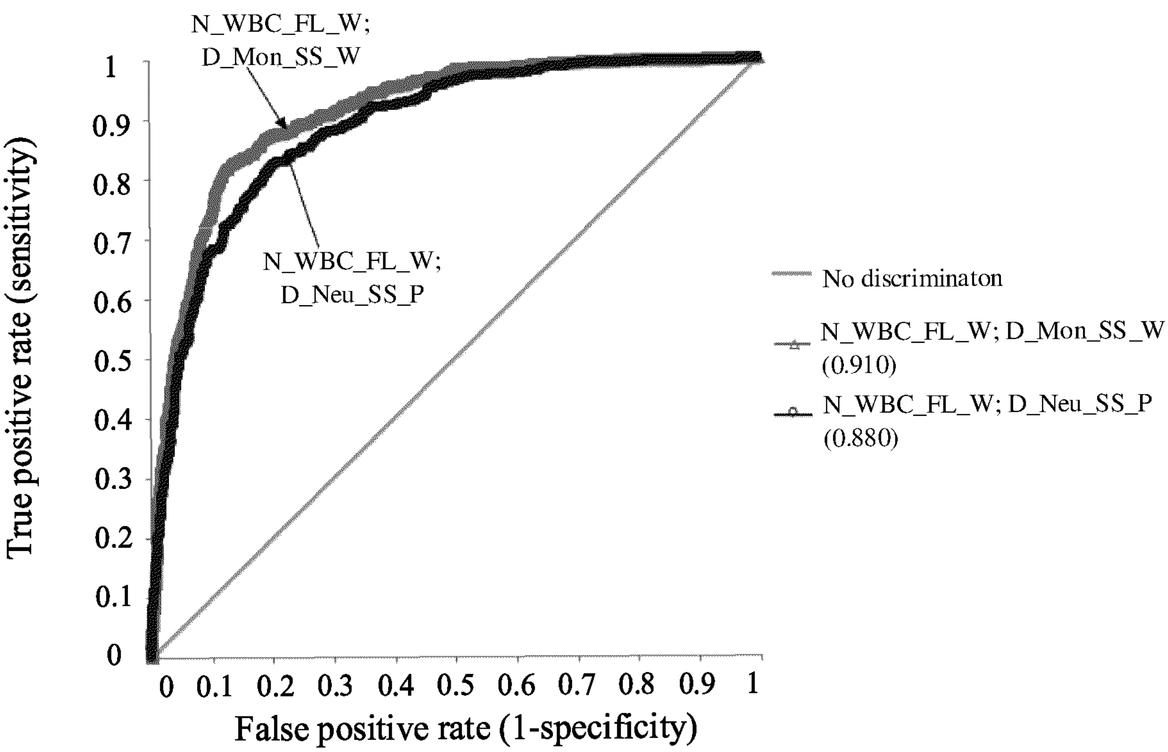
N_WBC_FL_W;
D_Mon_SS_W
N_WBC_FL_W;
D_Neu_SS_P
True positive rate (sensitivity)
False positive rate (1-specificity)
0 0.1 0.2 0.3 0.4 0.5 0.6 0.7 0.8 0.9 1
No discriminaton
N_WBC_FL_W; D_Mon_SS_W (0.910)
N_WBC_FL_W; D_Neu_SS_P (0.880)

*FIG. 18*

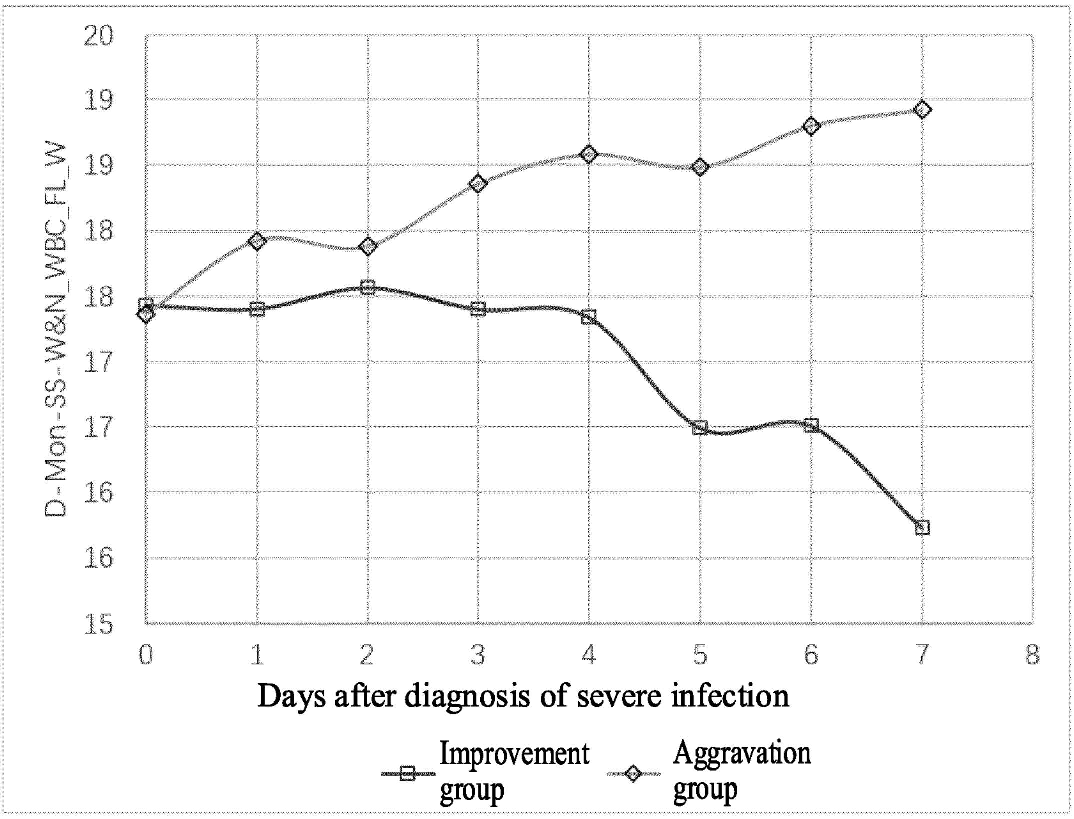
20
19
19
18
18
17
17
16
16
15
D-Mon-SS-W&N_WBC_FL_W
0
1
2
3
4
5
6
7
8
Days after diagnosis of severe infection
Improvement group
Aggravation group

*FIG. 19*

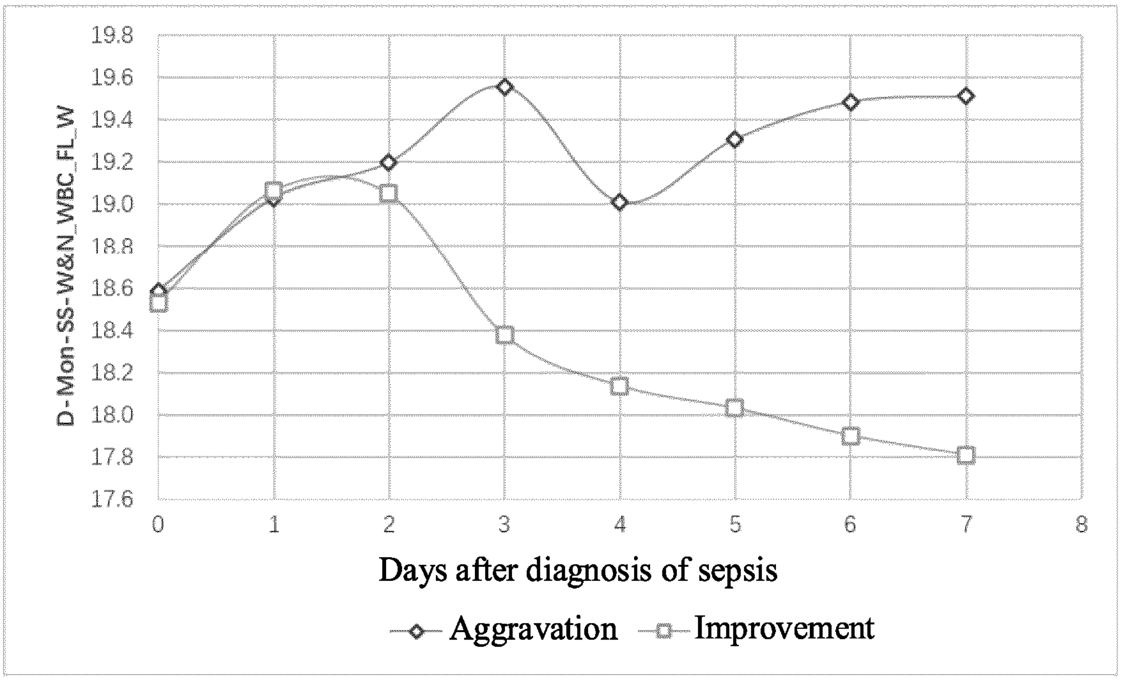
19.8
19.6
19.4
19.2
19.0
18.8
18.6
18.4
18.2
18.0
17.8
17.6
D-Mon-SS-W&N_WBC_FL_W
0
1
2
3
4
5
6
7
8
Days after diagnosis of sepsis
Aggravation
Improvement

*FIG. 20*

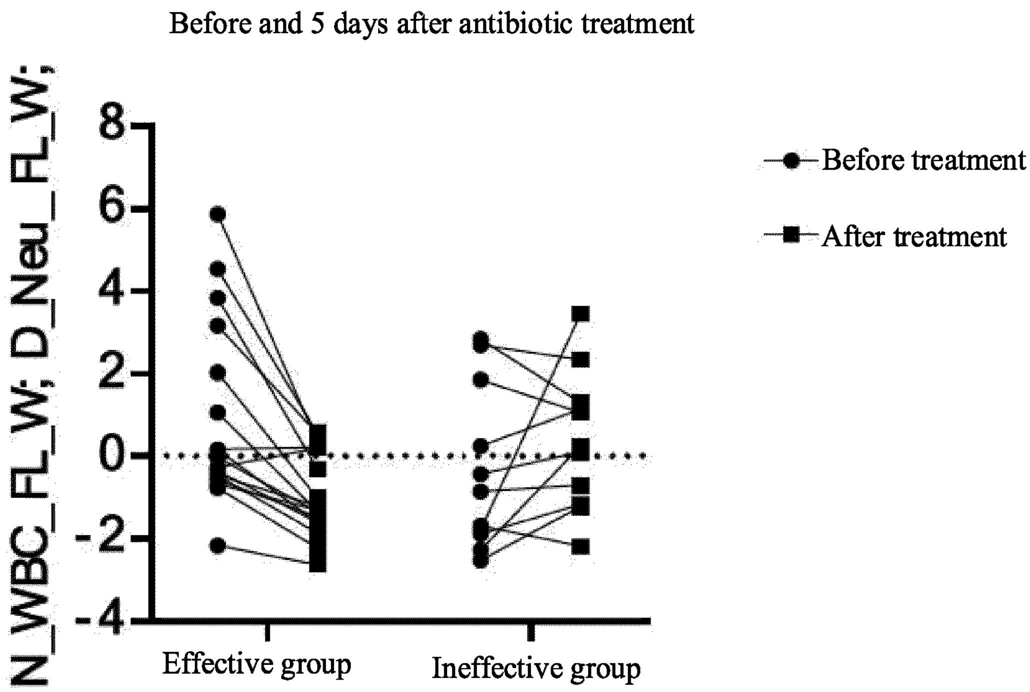


*FIG. 21A*

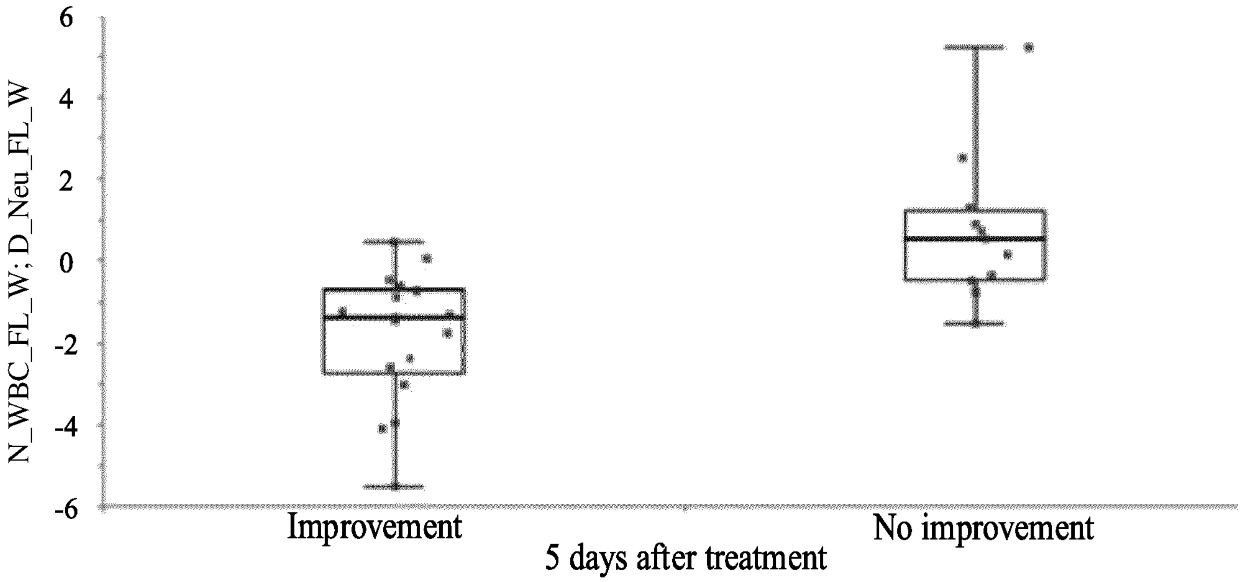


*FIG. 21B*

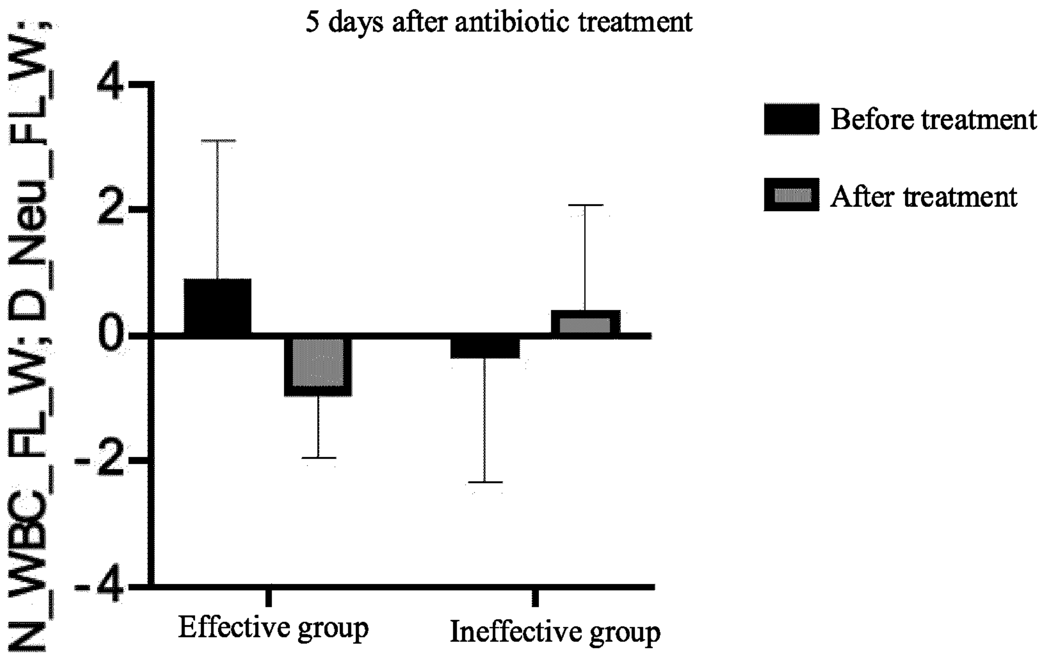


*FIG. 21C*

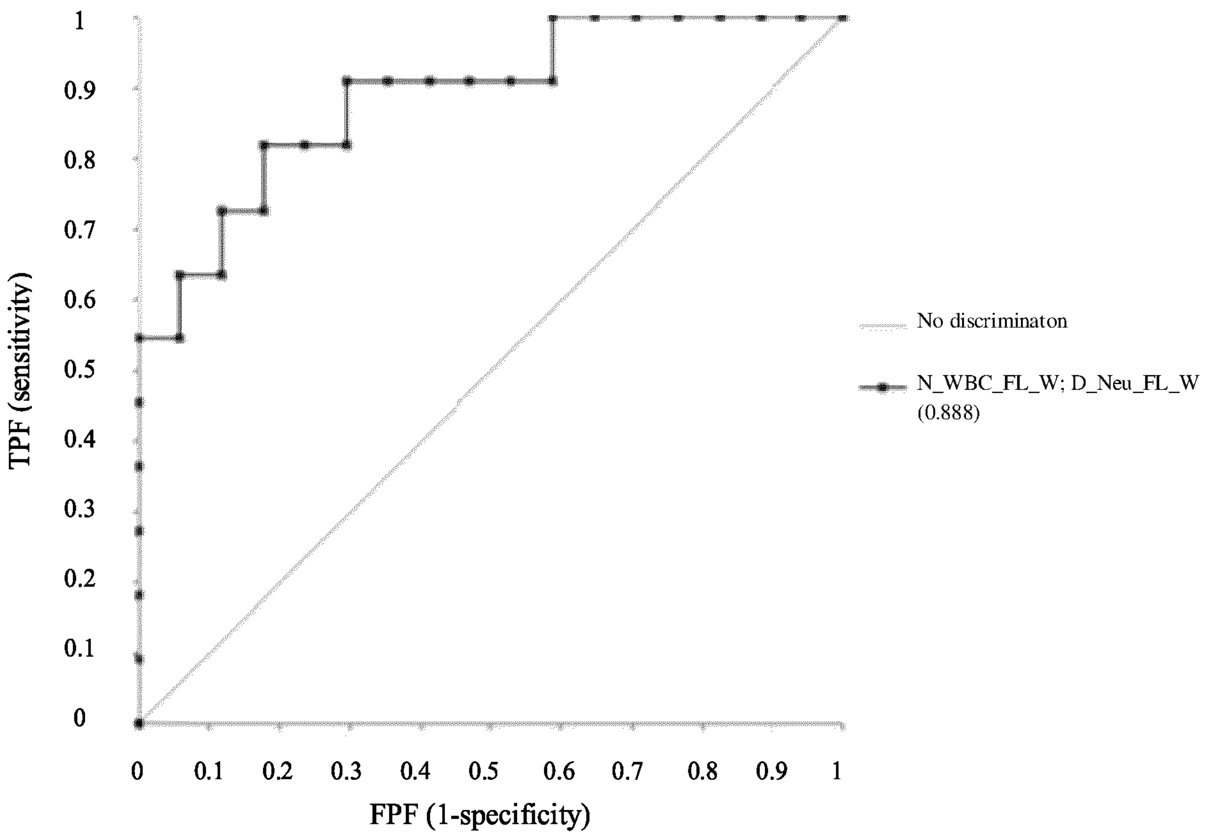


*FIG. 21D*

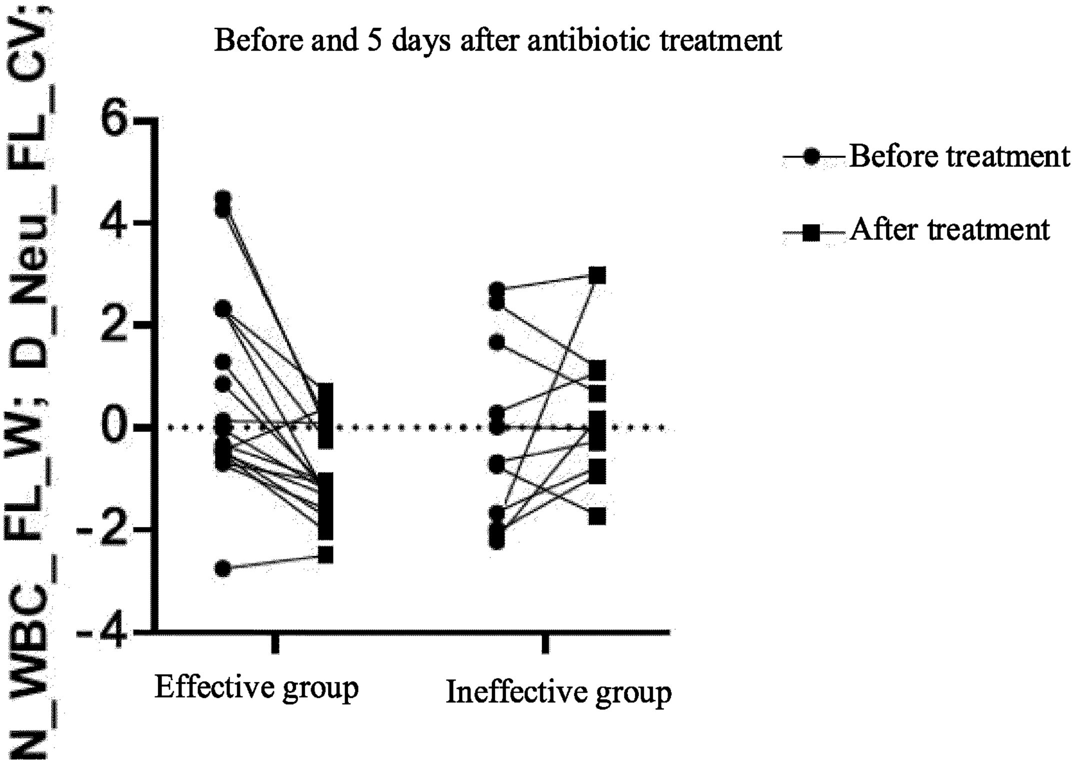


*FIG. 22A*

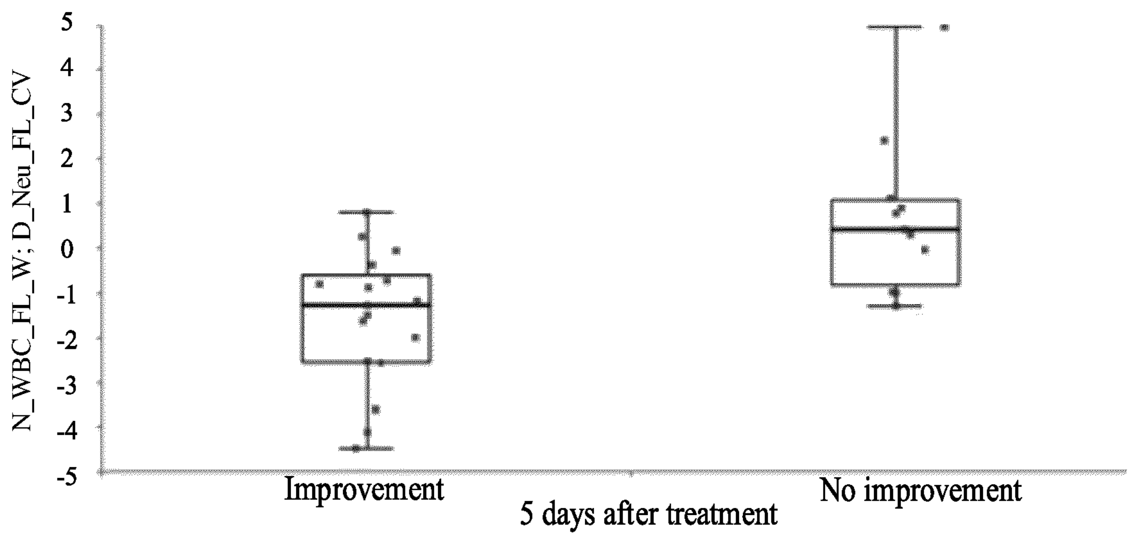


*FIG. 22B*

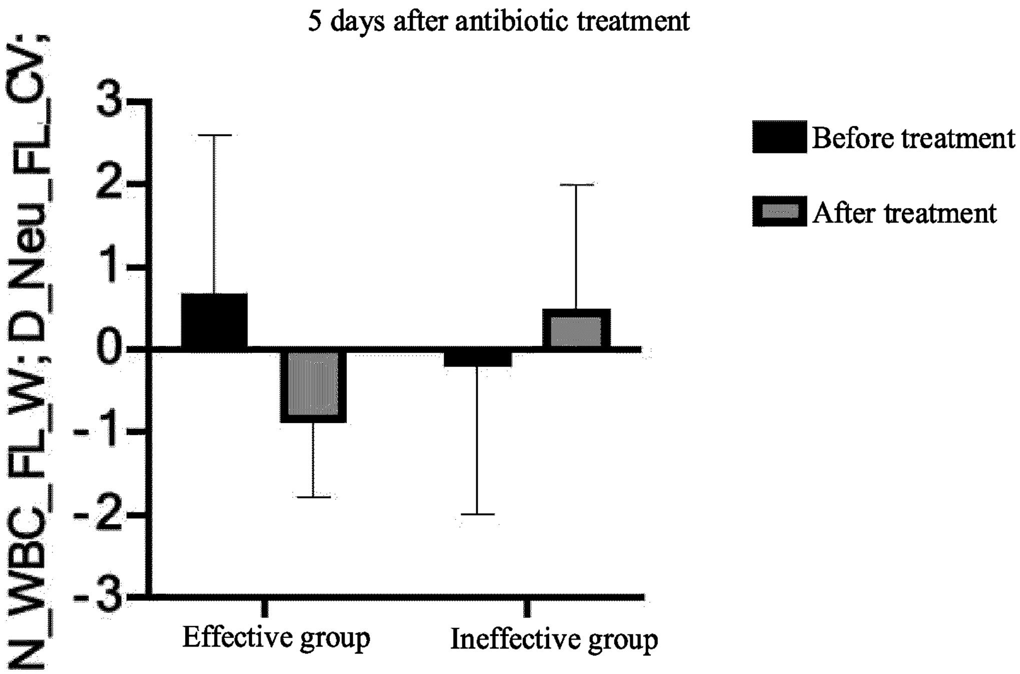


*FIG. 22C*

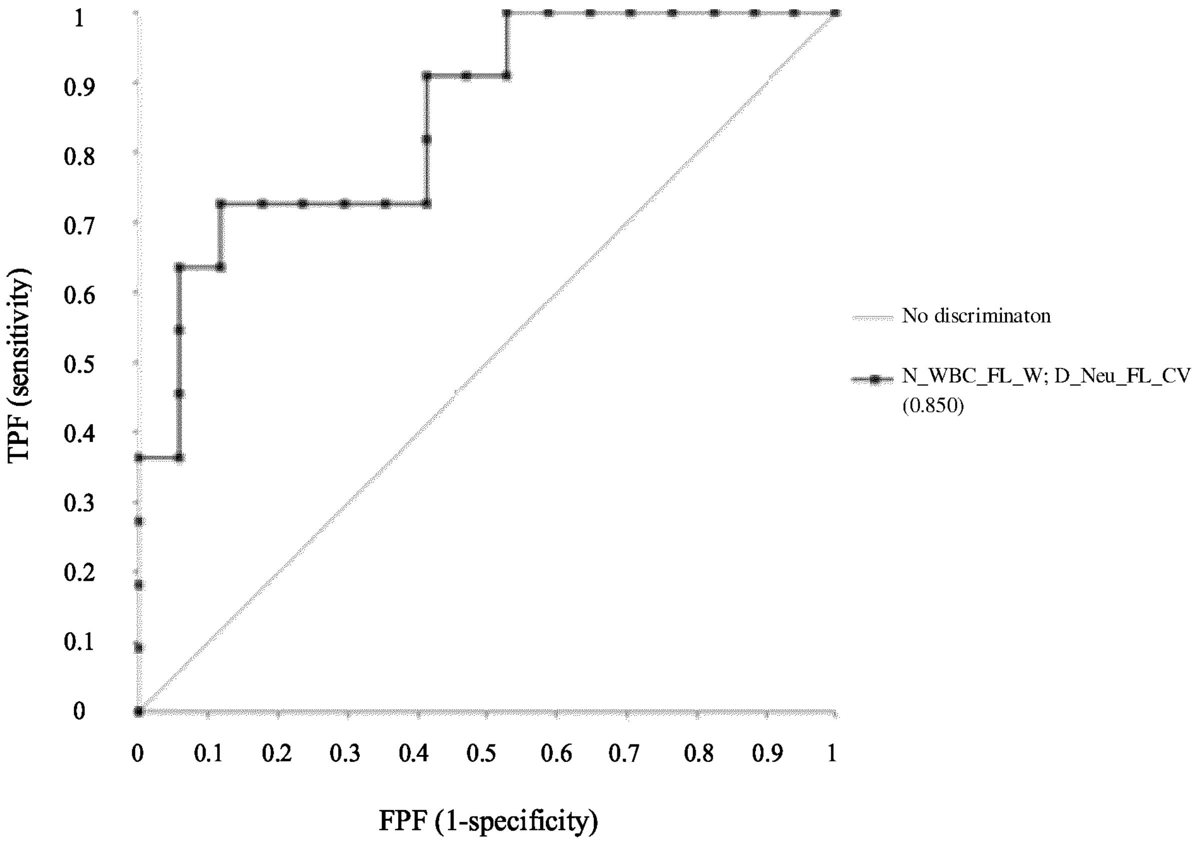


*FIG. 22D*

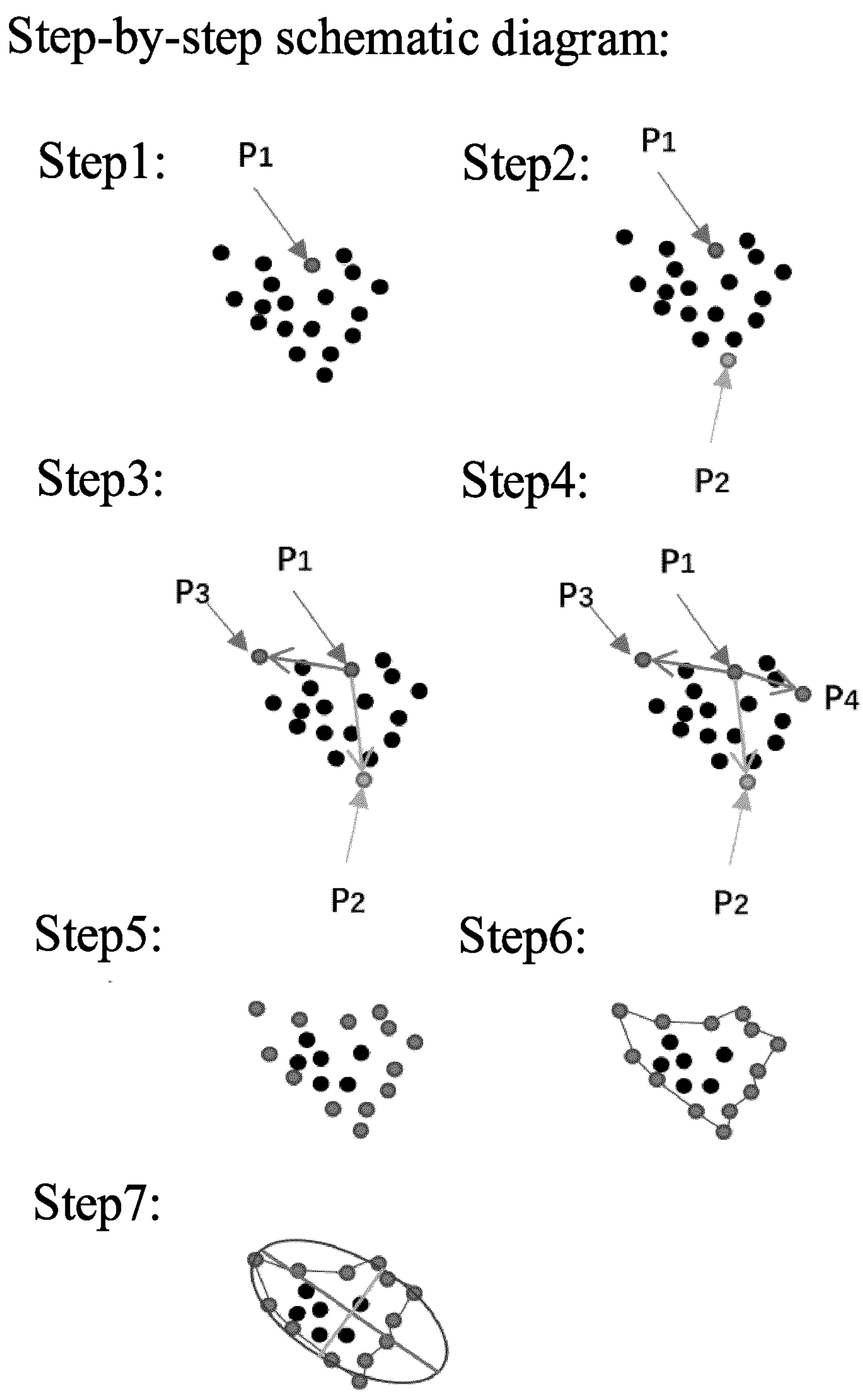
Step-by-step schematic diagram:
Step1:
P1
Step2:
P1
P2
Step3:
P1
P3
P2
Step4:
P1
P3
P4
P2
Step5:
Step6:
Step7:

*FIG. 23*

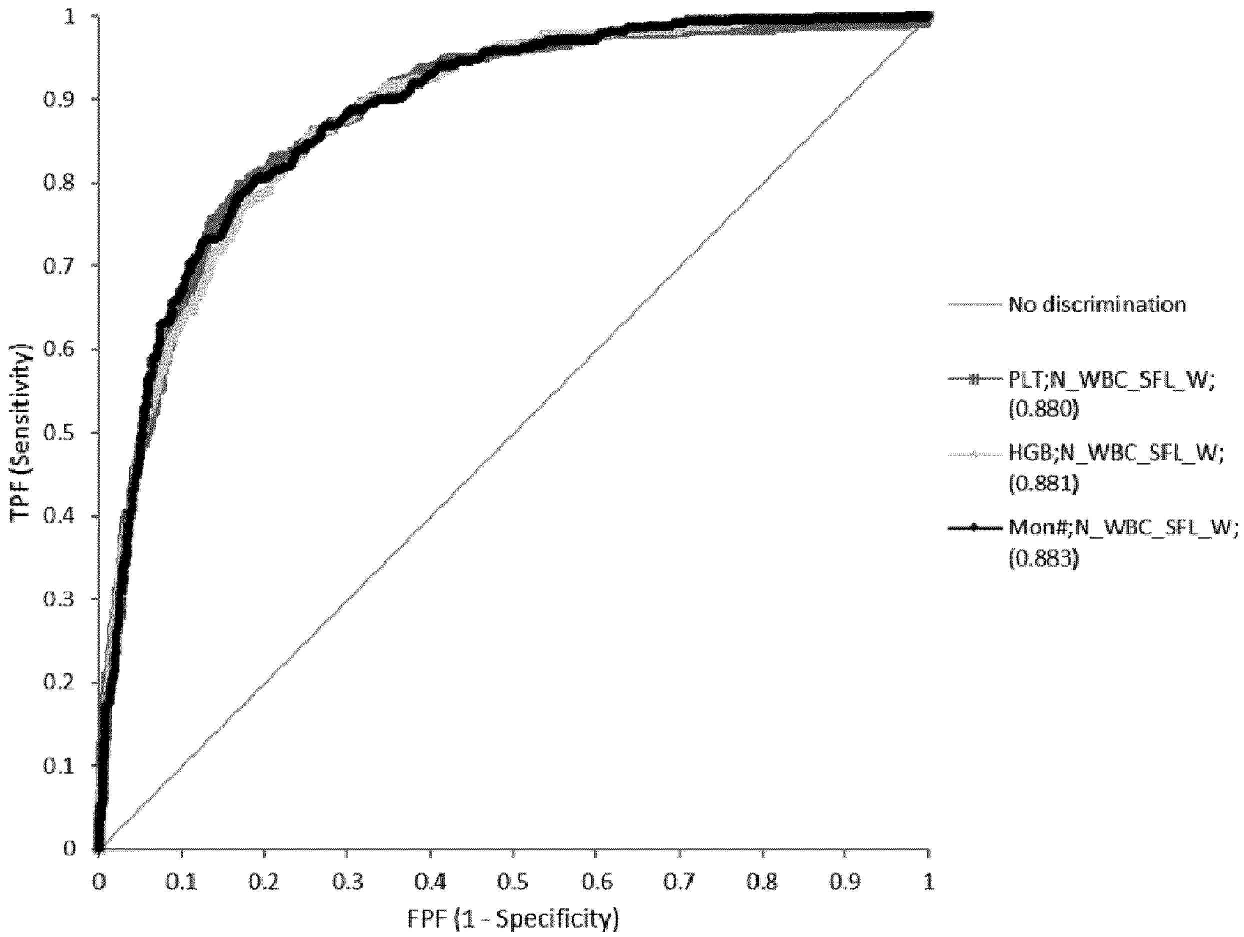
1
0.9
0.8
0.7
0.6
0.5
0.4
0.3
0.2
0.1
0
TPF (Sensitivity)
0
0.1
0.2
0.3
0.4
0.5
0.6
0.7
0.8
0.9
1
FPF (1 - Specificity)
No discrimination
PLT;N_WBC_SFL_W; (0.880)
HGB;N_WBC_SFL_W; (0.881)
Mon#;N_WBC_SFL_W; (0.883)

*FIG. 24*

## INTERNATIONAL SEARCH REPORT

International application No.
**PCT/CN2022/144177**

**A. CLASSIFICATION OF SUBJECT MATTER**

G01N 35/00(2006.01)i;A61B5/153(2006.01)i

According to International Patent Classification (IPC) or to both national classification and IPC

**B. FIELDS SEARCHED**

Minimum documentation searched (classification system followed by classification symbols)

IPC:G01N A61B

Documentation searched other than minimum documentation to the extent that such documents are included in the fields searched

Electronic data base consulted during the international search (name of data base and, where practicable, search terms used)

CNABS; CNTXT; VEN; JPABS; USTXT; EPTXT; WOTXT; CNKI; Web of Science; IEEE: 迈瑞, 祁欢, 张晓梅, 潘世耀, 李进, 吴传健, 叶燚, 血, 细胞, 白细胞, 红细胞, 光, 激光, 染色剂, 染料, 淋巴细胞, 单核细胞Mon, 中性粒细胞, 嗜酸性粒细胞, 嗜碱性粒细胞, 感染, 分类, 参数, 体积, 染色程度, 细胞内容物大小, 细胞含量, blood, cell, white blood cell, leu?ocyte, red blood cell, erythrocyte, light, laser, stain, coloring agent, colorant, M-60LD, M-6FD, M-6LN, M-6FN, Lym, lymphocyte, monocyte, Mon, neutrophilic granulocyte, Neu, eosinophil?, Eos, basophilic cell, basophilic granulocyte, Baso, infect, class+, sort, assort, parameter?, volume, colora+, entocyte, cellular contents, cellularity

**C. DOCUMENTS CONSIDERED TO BE RELEVANT**

| Category* | Citation of document, with indication, where appropriate, of the relevant passages | Relevant to claim No. |
|---|---|---|
| X | US 5559037 A (ABBOTT LABORATORIES) 24 September 1996 (1996-09-24)<br>description, columns 2, 3, 5 and 6 | 1, 2, 6-10, 12, 13, 15, 16, 18-20, 22, 25, 29, 34-38, 57, 58 |
| A | WO 2011140042 A1 (ABBOTT LABORATORIES et al.) 10 November 2011 (2011-11-10)<br>entire document | 1-58 |
| A | CN 113125392 A (SHENZHEN MINDRAY BIO-MEDICAL ELECTRONICS CO., LTD.) 16 July 2021 (2021-07-16)<br>entire document | 1-58 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 March 2023** | **24 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.
**PCT/CN2022/144177**

| Patent document cited in search report | | | Publication date (day/month/year) | Patent family member(s) | Publication date (day/month/year) |
|---|---|---|---|---|---|
| US | 5559037 | A | 24 September 1996 | None | |
| WO | 2011140042 | A1 | 10 November 2011 | None | |
| CN | 113125392 | A | 16 July 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019206300 A1
- CN 101750274 A


### Non-patent literature cited in the description


- **CROUSER E** ; **PARRILLO J** ; **SEYMOUR C et al.** Improved Early Detection of Sepsis in the ED With a Novel Monocyte Distribution Width Biomarker.. *CHEST.*, 2017, vol. 152 (3), 518-526